# EUROPÄISCHE PATENTSCHRIFT

(11) **EP 3 555 153 B1**
(45) Veröffentlichungstag und Bekanntmachung des Hinweises auf die Patenterteilung: **09.12.2020**
(21) Anmeldenummer: 17825806.7
(22) Anmeldetag: 15.12.2017
(51) Int. Cl.: C08F 220/06, C08F 20/06, C08F 2/30, C08J 5/18, C11D 3/37, B32B 27/30

(54) **MEHRSCHICHTFOLIEN, VERFAHREN ZU IHRER HERSTELLUNG UND DEREN VERWENDUNG**
MULTI-LAYER FILMS, METHOD FOR ITS MANUFACTURE AND ITS USE
FEUILLES MULTICOUCHES, LEUR PROCÉDÉ DE PRODUCTION ET D'UTILISATION

(30) Priorität: 16.12.2016 EP 16204778; 06.09.2017 EP 17189675
(43) Veröffentlichungstag der Anmeldung: 23.10.2019
(73) Patentinhaber: BASF SE, 67056 Ludwigshafen am Rhein (DE)
(72) Erfinder: MEISE, Markus, 67056 Ludwigshafen (DE); FUCHS, Yannick, 67056 Ludwigshafen (DE); WITTELER, Helmut, 67056 Ludwigshafen (DE); GARCIA MARCOS, Alejandra, 67056 Ludwigshafen (DE); DETERING, Juergen, 67056 Ludwigshafen (DE); SCHMIDT-HANSBERG, Benjamin, 67056 Ludwigshafen (DE)
(86) Internationale Anmeldenummer: PCT/EP2017/083127
(87) Internationale Veröffentlichungsnummer: WO 2018/109200

(56) Entgegenhaltungen:
- WO-A1-01/00781
- WO-A1-2015/000970
- WO-A1-2017/158002
- US-A1- 2006 257 596
- LEV BROMBERG: "Polyether-Modified Poly(acrylic acid): Synthesis and Applications", INDUSTRIAL & ENGINEERING CHEMISTRY RESEARCH, Bd. 37, Nr. 11, 1. November 1998 (1998-11-01), Seiten 4267-4274, XP055139606, ISSN: 0888-5885, DOI: 10.1021/ie980358s
- LEV BROMBERG: "Novel Family of Thermogelling Materials via C-C Bonding between Poly(acrylic acid) and Poly(ethylene oxide)- b -poly(propylene oxide)- b -poly(ethylene oxide)", THE JOURNAL OF PHYSICAL CHEMISTRY B, Bd. 102, Nr. 11, 1. März 1998 (1998-03-01) , Seiten 1956-1963, XP055113924, ISSN: 1520-6106, DOI: 10.1021/jp9803687

## Beschreibung

### HINTERGRUND DER ERFINDUNG

Die vorliegende Erfindung betrifft eine Mehrschichtfolie, die wenigstens eine Schicht umfasst, die eine Polymerzusammensetzung enthält oder aus einer Polymerzusammensetzung besteht, die durch radikalische Polymerisation einer Monomerzusammensetzung erhältlich ist, die wenigstens ein Monomer A) enthält, das ausgewählt ist unter α,β-ethylenisch ungesättigten Mono- und Dicarbonsäuren, Salzen α,β-ethylenisch ungesättigter Mono- und Dicarbonsäuren, Anhydriden α,β-ethylenisch ungesättigter Mono- und Dicarbonsäuren und Mischungen davon, wobei die radikalische Polymerisation in Gegenwart wenigstens einer Polyetherkomponente erfolgt. Die Erfindung betrifft weiterhin ein Verfahren zur Herstellung einer solchen Mehrschichtfolie, diverse Verwendungen einer solchen Mehrschichtfolie und speziell eine Umhüllung oder Beschichtung für eine Waschmittel-, Reinigungsmittel- oder Geschirrspülmittelportion, die eine solche Mehrschichtfolie umfasst oder daraus besteht, sowie Waschmittel, Reinigungsmittel oder Geschirrspülmittel, die eine solche Mehrschichtfolie umfassen.

### STAND DER TECHNIK

Es ist bekannt, wasserlösliche Folien aus Polyvinylalkohol zur portionsweisen Verpackung von flüssigen, gelförmigen und festen Wasch- und Reinigungsmitteln zu verwenden. Die Polyvinylalkoholfolie löst sich zu Beginn des Wasch- und Reinigungsprozesses auf und setzt die Wasch- und Reinigungsmittel frei, so dass diese ihre Wirkung entfalten können. Die Vorteile der portionsweise verpackten Wasch- und Reinigungsmittel (sogenannte single dose units oder mono dose units) für den Verbraucher sind vielfältig. Dazu zählen die Vermeidung von Fehldosierungen, die bequeme Handhabung, und dass der Verbraucher nicht physisch mit den Inhaltsstoffen der Wasch- und Reinigungsmittel in Kontakt kommt. Dazu zählen weiterhin auch ästhetische Aspekte, die zu einer Bevorzugung der portionsweise verpackten Wasch- und Reinigungsmittel führen. Aktuelle Dosierungsformen können eine Vielzahl von separat formulierten Wirk- und Hilfsstoffen enthalten, die im Reinigungsprozess individuell freigesetzt werden. Solche Mehrkammersysteme gestatten beispielsweise das Trennen von nicht kompatiblen Inhaltsstoffen und damit die Gestaltung von neuen Formulierungskonzepten. Der Anteil der Polyvinylalkoholfolie an dem Gesamtgewicht der Wasch- oder Reinigungsmittelportion (single dose unit) beträgt je nach Anwendung zwischen 2 und 20 Gew.-%.

Ein Nachteil der Polyvinylalkoholfolien ist, dass sie nur als Verpackungsmaterial dienen und keinerlei Beitrag zur Wasch- und Reinigungsleistung liefern. Es besteht ganz allgemein ein Bedarf an Polymerfolien, die nicht nur bestimmte Inhaltsstoffe freisetzen, sondern selbst einen aktiven Beitrag leisten. Speziell besteht ein Bedarf an wasch- und reinigungsaktiven Polymerfolien.

Lev Bromberg beschreibt im Journal of Physical Chemistry B (1998), 102, 11, 1956-1963 ein Material mit thermoreversibler Gelbildung, zu dessen Herstellung man Acrylsäure in Gegenwart eines PEO-PPO-PEO-Blockcopolymers polymerisiert. Die Reaktion erfolgt in Abwesenheit externer Lösungsmittel, um einen hohen Anteil an Verzweigung und Vernetzung in den erhaltenen Produkten zu erzielen. Diese sind weder wasserlöslich noch transparent. Als mögliche Einsatzbereiche für diese Polymere werden nur ganz allgemein die Pharmazie und die Nahrungsergänzung genannt (S. 1956, linke Spalte, "Introduction").

Lev Bromberg beschreibt in Ind. Eng. Chem. Res. 1998, 37, 4267-4274 Polyethermodifizierte Polyacrylsäuren, wobei konkret teilneutralisierte Acrylsäure in Gegenwart eines PEO-PPO-PEO-Blockcopolymers polymerisiert wird.

WO 2005/012378 beschreibt wässrige Dispersionen von wasserlöslichen Polymeren von anionischen Monomeren und deren Verwendung als Verdickungsmittel für wässrige Systeme. Zu ihrer Herstellung werden anionische Monomere in Gegenwart von zwei wasserlöslichen Polymeren aus verschiedenen Klassen polymerisiert, wobei es sich unter anderem auch um Polyalkylenglykole handeln kann. Beispiel 4 (Seite 19, Zeilen 14-27) betrifft die Polymerisation von Acrylsäure in Gegenwart von zwei verschiedenen Polypropylenglykolen und von Maltodextrin. Die Dispersionen werden unter anderem in personal-care-Produkten sowie in Wasch- und Reinigungsmitteln eingesetzt. Ein Einsatz in Form von Folien ist nicht beschrieben.

WO 2015/000969 beschreibt die Verwendung einer gelförmigen Polymerzusammensetzung, erhältlich durch ein Verfahren, bei dem man
a) eine Monomerzusammensetzung M1) bereitstellt, die aus
   A) wenigstens einer α,β-ethylenisch ungesättigten Säure und
   B) 0 bis 0,1 Gew.-%, bezogen auf das Gesamtgewicht der Monomerzusammensetzung M1), vernetzend wirkenden Monomeren, die zwei oder mehr als zwei polymerisierbare α,β-ethylenisch ungesättigte Doppelbindungen pro Molekül aufweisen,
      besteht,
b) die in Schritt a) bereitgestellte Monomerzusammensetzung M1) einer radikalischen Polymerisation in Gegenwart wenigstens einer Polyetherkomponente PE) unterzieht, die ausgewählt ist unter Polyetherolen mit einem zahlenmittleren Molekulargewicht von wenigstens 200 g/mol und deren Mono- und Di-(C₁-C₆-alkyl)ethern, Polyethergruppen-haltigen Tensiden und Mischungen davon,

in Formulierungen für die maschinelle Geschirrreinigung. Ein Einsatz in Form von Folien ist wiederum nicht beschrieben.

WO 2015/000971 beschreibt die Verwendung einer gelförmigen Polymerzusammensetzung, wie sie in der WO 2015/000969 beschrieben ist, für weitere Verwendungen, jedoch nicht in Form von Folien.

WO 2015/000970 beschreibt ein Verfahren zur Herstellung einer festen Polymerzusammensetzung, insbesondere in Form einer Folie oder in Form einer festen Beschichtung auf einem Substrat oder in Teilchenform, bei dem man
a) eine Monomerzusammensetzung M1) bereitstellt, die
   A) wenigstens eine α,β-ethylenisch ungesättigte Carbonsäure, und
   B) weniger als 0,1 Gew.-%, bezogen auf das Gesamtgewicht der Monomerzusammensetzung M1) vernetzend wirkende Monomere, die zwei oder mehr als zwei polymerisierbare α,β-ethylenisch ungesättigte Doppelbindungen pro Molekül aufweisen,
      enthält, und
b) die in Schritt a) bereitgestellte Monomerzusammensetzung M1) einer radikalischen Polymerisation in Gegenwart wenigstens einer Polyetherkomponente PE) unterzieht, die ausgewählt ist unter Polyetherolen mit einem zahlenmittleren Molekulargewicht von wenigstens 200 g/mol und deren Mono- und Di-(C₁-C₆-alkyl)ethern, Polyethergruppen-haltigen Tensiden und Mischungen davon.

WO 01/00781 beschreibt eine Wirkstoffportionspackung, umfassend wenigstens eine wasch-, reinigungs- oder spülaktive Zubereitung und eine die wasch-, reinigungs- oder spülaktive Zubereitung ganz oder teilweise umschließende Umfassung, worin die Umfassung unter Wasch-, Reinigungs- oder Spülbedingungen löslich ist und wenigstens eine Einzelkomponente der wasch-, reinigungs- oder spülaktiven Zubereitung gebunden enthält. Es ist nicht beschrieben, dass das Material der Umfassung selbst aktiv am Wasch- oder Reinigungsvorgang teilnimmt.

Die nicht vorveröffentlichte Patentanmeldung WO 2017/158002 betrifft eine einlagige wasch- und reinigungsaktive Polymerfolie, enthaltend eine oder bestehend aus einer Polymerzusammensetzung P1), erhältlich durch radikalische Polymerisation einer Monomerzusammensetzung M1), die wenigstens ein Monomer A) enthält, ausgewählt unter α,β-ethylenisch ungesättigten Carbonsäuren, Salzen α,β-ethylenisch ungesättigter Carbonsäuren und Mischungen davon, in Gegenwart wenigstens eines (C₈-C₁₈-Alkyl)polyoxyalkylenethers mit im Mittel 3 bis 12 Alkylenoxideinheiten pro Molekül. Beschrieben ist weiterhin ein Verfahren zur Herstellung einer solchen wasch- und reinigungsaktiven Polymerfolie, die Verwendung einer solchen Polymerfolie und eine Umhüllung oder Beschichtung für eine Wasch- oder Reinigungsmittelportion, die eine solche Polymerfolie umfasst oder daraus besteht. Mehrlagige Polymerfolien sind nicht beschrieben.

Die US 2011/0301070 beschreibt einen wasserlöslichen Streifen, der einen filmförmigen Täger, wenigstens einen Wirkstoff und wenigstens ein Mittel enthält, das ausgewählt ist unter wärmeerzeugenden Mitteln und Zersetzungsbeschleunigern. Der filmförmige Träger enthält ein wasserlösliches Polymer, das den Träger befähigt, sich in Wasser aufzulösen und dabei den/die Wirkstoff(e) freizusetzen. Die Wirkstoffe und Mittel können auf den filmförmigen Träger aufgetragen oder in diesen eingearbeitet werden. Als geeignete wasserlösliche Polymere werden eine Vielzahl verschiedener Acrylatpolymere, Polyvinylalkohole und Polysaccharide genannt. Der wasserlösliche Streifen kann teilweise oder vollständig mit einer entfernbaren Schutzbeschichtung versehen sein, um Ihn vor seinem Einsatz vor Sauerstoff und/oder Wasser zu schützen.

Die EP 0 957 158 A1 beschreibt einen blattähnlichen Gegenstand zum Waschen, der eine dünne Schicht einer phosphatfreien, tensidhaltigen Reinigerzusammensetzung umfasst, die auf beiden Oberflächen wasserlösliche Blätter aufweist. Die wasserlöslichen Blätter können wasserlösliche Filme oder Textilien aus wasserlöslichen Polymerfasern umfassen. Als geeignete wasserlösliche Polymere werden unter anderem Polyvinylalkohole, Polyvinylpyrrolidone, Pullulan, Polyacrylamide, Poly(meth)acrylsäuren, Polyethylenoxide, Carboxymethylcellulose und Hydroxyalkylcellulosen genannt.

Es ist bekannt, Mehrschichtfolien bereitzustellen, die einen Schichtverbund aus wenigstens zwei Folienlagen aufweisen.

Die WO 2010/069553 beschreibt eine Mehrschichtfolie, umfassend einen zumindest spülbaren, thermoplastischen Schichtverbund aus
A) wenigstens einer durch Einwirkung von Wasser zumindest zerkleinerbaren, gegen kaltes Wasser resistenten oder darin zögerlich auflösbaren Schicht basierend auf wenigstens einem zumindest teilverseiften Polyvinylacetat und
B) wenigstens einer kaltwasserlöslichen Schicht basierend auf wenigstens einem zumindest teilverseiften Polyvinylacetat und wenigstens einer wasserlöslichkeitsverstärkenden Substanz ausgewählt aus der Gruppe umfassend biologisch abbaubare Polymere, Tenside, anorganische Pigmente und Füllstoffe.

Unter einem spülbaren Schichtverbund wird verstanden, dass daraus resultierende Verpackungen bei Spülung mit Wasser, z.B. einer Toilettenspülung, keine Verstopfungen in Abflüssen verursachen. Sie dienen als Schutzverpackungen für unterschiedlichste Güter, wie Waschmittel oder Spülmittel, die in Einzelportionen (z.B. in Form von Tabs) verpackt sind, und für Hygieneartikel wie Tampons oder Damenbinden, die zusammen mit der spülbaren Verpackung zum Einsatz kommen. Nach dem Entfernen der Verpackung zum Gebrauch dieser Artikel kann die Verpackung durch einfache Wasserspülung mit Hilfe einer Toilettenspülung entsorgt werden.

Die US 7,727,946 beschreibt ein Verfahren zur Herstellung funktionalisierter Filme für Reinigungsprodukte, wobei ein wasserlöslicher Film eine Beschichtung aus einer Zusammensetzung trägt, die eine bestimmte Funktion ausübt. Dazu wird auf wenigstens einer Seite des wasserlöslichen Films schrittweise eine wässrige Lösung eines funktionellen Materials aufgetragen, um eine mehrschichtige Beschichtung auf dem Film zu erzeugen. Dazu lässt man jeweils die aufgetragene Schicht zumindest teilweise trocknen, bevor die nächste Schicht aufgetragen wird. Jede Schicht kann unterschiedliche funktionelle Materialien mit reinigenden Eigenschaften, Barriere-Eigenschaften und/oder die Löslichkeit modifizierenden Eigenschaften enthalten. Zusätzlich enthält die wässrige Lösung ein Mittel, das die Löslichkeit des wasserlöslichen Films temporär verringert, so dass dieser zwar benetzt wird, sich aber nicht auflöst oder quillt. Die einzelnen Schichten werden vorzugsweise durch ein Druckverfahren, wie Flexographie, aufgetragen. Als geeignete filmbildende Polymere werden Polyvinylalkohole, Polyvinylpyrrolidone, Polyalkylenoxide, Polyacrylamide, Polyacrylsäuren, Cellulose, Celluloseether, Celluloseesters, Celluloseamide, Polyvinylacetate, Polycarbonsäuren und deren Salze, Polyaminosäuren, Polyamide, Polyacrylamide, Malein-/Acrylsäure-Copolymere, Polysaccharide und Mischungen davon genannt. Besonders bevorzugt werden Polyvinylalkoholfilme eingesetzt, die kommerziell unter der Bezeichnung Monosol M8630 erhältlich sind. Als Mittel, die die Löslichkeit des wasserlöslichen Films temporär verringern, werden Salze, wie Natriumsulfat, Natriumcitrat, etc. eingesetzt. Es ist nicht beschrieben, dass die funktionellen Materialien zusammen mit filmbildenden Polymeren aufgetragen werden. Wohl beschrieben ist jedoch, nach dem Auftrag der letzten Schicht der funktionellen Materialien ein weiteres filmbildendes Polymer, z.B. einen Polyvinylalkohol, aufzubringen.

Der vorliegenden Erfindung liegt die Aufgabe zugrunde, eine Mehrschichtfolie bereitzustellen, die wenigstens eine funktionelle Schicht, insbesondere wenigstens eine Schicht die über dispergierende, belagsinhibierende, emulgierende und/oder tensidische Eigenschaften verfügt. Diese funktionelle Schicht sollte gleichzeitig wasserlöslich sein. Die übrigen Schichten sollten diese funktionelle Schicht stabilisieren und/oder eigene funktionelle Eigenschaften aufweisen. Für Anwendungen, in denen es auf die Wasserlöslichkeit der Mehrschichtfolie kritisch ankommt, sollte diese unter den angestrebten Anwendungsbedingungen wasserlöslich sein.

Für eine Verwendung in Wasch-, Reinigungs- und Geschirrspülanwendungen sollte die Mehrschichtfolie wenigstes eine der folgenden Eigenschaften aufweisen:
- Wenigstens eine Schicht der Mehrschichtfolie soll eine filmbildende Polymerzusammensetzung aufweisen, die über dispergierende, belagsinhibierende, emulgierende und/oder tensidische Eigenschaften verfügt und somit zur Wasch- und Reinigungsleistung beiträgt.
- Sie soll mit möglichst vielen verschiedenen Inhaltsstoffen von Wasch-, Reinigungs- und Geschirrspülmitteln kompatibel sein.
- Sie soll sich zur Herstellung von lagerstabilen Formulierungen eignen. Dabei soll die Mehrschichtfolie sowohl gegenüber externen Einwirkungen, wie z.B. Luft oder Luftfeuchtigkeit, als auch gegenüber internen Einwirkungen, wie z.B. die eingebetteten oder umhüllten Inhaltsstoffe, hinreichend stabil sein. Des Weiteren sollen auch die in die Mehrschichtfolie eingebetteten und/oder von der Mehrschichtfolie umhüllten Inhaltsstoffe gegenüber einem Verlust ihrer Eigenschaften stabilisiert werden.
- Es soll möglich sein, dass wenigstens eine Schicht der Mehrschichtfolie wenigstens einen Inhaltsstoff enthält, der beim Wasch-, Reinigungs- oder Geschirrspülvorgang freigesetzt wird. Dabei handelt es sich bevorzugt um wasserlösliche oder wasserdispergierbare Inhaltsstoffe. Vorzugsweise soll diese Freisetzung kontrolliert und insbesondere in einer bestimmten Phase des Wasch- oder Reinigungsvorgangs erfolgen.
- Die erfindungsgemäße Mehrschichtfolie soll sich auch als Umhüllung oder Teil der Umhüllung einer Waschmittel-, Reinigungsmittel- oder Geschirrspülmittelportion eignen. Es soll möglich sein, dass die umhüllten Inhaltsstoffe beim Wasch-, Reinigungs- oder Geschirrspülvorgang freigesetzt werden. Vorzugsweise soll auch diese Freisetzung kontrolliert und insbesondere in einer bestimmten Phase des Wasch- oder Reinigungsvorgangs erfolgen.
- Die Mehrschichtfolien sollen sich zur Herstellung einer Vielzahl verschiedener Formulierungen eignen. Dabei soll es zum einen möglich sein, dass die Mehrschichtfolien als solche bereits das Endprodukt darstellen. Des Weiteren soll es möglich sein, das die Mehrschichtfolie ein integraler Bestandteil einer komplexeren Formulierung ist. Dabei kann es sich z.B. um Beutel, wie Pouches (liquid tabs) oder um verpresste Formkörper, wie Tabletten ("Tabs"), Blöcke, Briketts, oder um Mehrkammersysteme, etc. handeln.

Überraschenderweise wurde nun gefunden, dass es möglich ist, Mehrschichtfolien mit vorteilhaften physiko-chemischen Eigenschaften und/oder mit auf den jeweiligen Einsatzzweck zugeschnittenen Anwendungseigenschaften bereitzustellen, wenn diese wenigstens eine Schicht umfassen, die eine Polymerzusammensetzung enthält oder aus einer Polymerzusammensetzung besteht, die durch radikalische Polymerisation einer Monomerzusammensetzung erhältlich ist, die wenigstens ein Monomer enthält, das ausgewählt ist unter α,β-ethylenisch ungesättigten Mono- und Dicarbonsäuren, Salzen α,β-ethylenisch ungesättigter Mono- und Dicarbonsäuren, Anhydriden α,β-ethylenisch ungesättigter Mono- und Dicarbonsäuren und Mischungen davon, wobei die radikalische Polymerisation in Gegenwart wenigstens einer Polyetherkomponente erfolgt.

### ZUSAMMENFASSUNG DER ERFINDUNG

Ein erster Gegenstand der Erfindung ist eine Mehrschichtfolie, umfassend wenigstens eine Schicht, enthaltend eine oder bestehend aus einer Polymerzusammensetzung P1), erhältlich durch radikalische Polymerisation einer Monomerzusammensetzung M1), die wenigstens ein Monomer A) enthält, das ausgewählt ist unter α,β-ethylenisch ungesättigten Mono- und Dicarbonsäuren, Salzen α,β-ethylenisch ungesättigter Mono- und Dicarbonsäuren, Anhydriden α,β-ethylenisch ungesättigter Mono- und Dicarbonsäuren und Mischungen davon, in Gegenwart wenigstens einer Polyetherkomponente PE), die ausgewählt ist unter Polyetherolen mit einem zahlenmittleren Molekulargewicht von wenigstens 200 g/mol, Mono- und Di-(C₁-C₆-alkyl)ethern solcher Polyetherole, Polyethergruppen-haltigen Tensiden und Mischungen davon.

In einer bevorzugten Ausführungsform erfolgt die Herstellung der Mehrschichtfolie durch ein Verfahren, bei dem man auf ein Trägermaterial wenigstens eine fließfähige zur Folienbildung befähigte Zusammensetzung aufträgt, wobei das Trägermaterial und/oder die wenigstens eine fließfähige Zusammensetzung eine Polymerzusammensetzung P1) enthält oder aus einer Polymerzusammensetzung P1) besteht, die wie zuvor und im Folgenden definiert ist.

Ein weiterer Gegenstand der Erfindung ist ein Verfahren zur Herstellung einer Mehrschichtfolie, wie zuvor und im Folgenden definiert, bei dem man
a1) auf ein Trägermaterial eine erste fließfähige zur Folienbildung befähigte Zusammensetzung unter Erhalt einer ersten Schicht aufträgt,
a2) gegebenenfalls die auf das Trägermaterial aufgetragene erste Schicht einer Viskositätserhöhung unterzieht,
a3) auf die in Schritt a1) oder die in Schritt a2) erhaltene erste Schicht eine zweite fließfähige zur Folienbildung befähigte Zusammensetzung unter Erhalt einer zweiten Schicht aufträgt,
a4) gegebenenfalls die zweite Schicht einer Viskositätserhöhung unterzieht,
a5) gegebenenfalls den Schritt a3) mit einer weiteren zur Folienbildung befähigten Zusammensetzung unter Erhalt einer weiteren Schicht wiederholt und gegebenenfalls anschließend den Schritt a4) wiederholt, wobei die Schritte a3) und a4) einfach oder mehrfach wiederholt werden können,
a6) gegebenenfalls die auf das Trägermaterial aufgetragenen Schichten einer weiteren Viskositätserhöhung unterzieht,
a7) gegebenenfalls die erhaltene Mehrschichtfolie von dem Trägermaterial ablöst,
mit der Maßgabe, dass die fließfähigen Zusammensetzungen jeweils eine zur Folienbildung befähigte Komponente enthalten, die unabhängig voneinander ausgewählt ist unter wenigstens einer Polymerzusammensetzung P1), wenigstens einem Polymer P2) oder einer Mischung davon, und mit der Maßgabe, dass wenigstens eine der fließfähigen Zusammensetzungen und/oder das Trägermaterial eine Polymerzusammensetzung P1) enthält oder aus einer Polymerzusammensetzung P1) besteht, die wie zuvor und im Folgenden definiert ist.

Die Herstellung der Mehrschichtfolie kann auch durch ein Laminierungsverfahren erfolgen. Beim Laminieren werden zwei oder mehrere Schichten der Mehrschichtfolie flächig miteinander verklebt. Erfolgt die Herstellung der Mehrschichtfolie ausschließlich durch Laminierung, werden alle Schichten der Mehrschichtfolie flächig miteinander verklebt. Dabei kann die Laminierung sukzessiv (Schicht für Schicht) erfolgen oder es werden Laminate, die bereits aus mehreren Schichten bestehen, miteinander verbunden.

Die Herstellung der Mehrschichtfolie kann auch durch ein nass-in-nass-Auftragsverfahren erfolgen. Weiterhin können zur Herstellung der Mehrschichtfolie Kombinationen der zuvor genannten Herstellungsverfahren eingesetzt werden.

Vorzugsweise erfolgt die Herstellung einer Polymerzusammensetzung P1), wie zuvor und im Folgenden definiert, indem man
A) eine Monomerzusammensetzung M1) bereitstellt, die wenigstens ein Monomer A) enthält, das ausgewählt ist unter α,β-ethylenisch ungesättigten Mono- und Dicarbonsäuren, Salzen α,β-ethylenisch ungesättigter Mono- und Dicarbonsäuren, Anhydriden α,β-ethylenisch ungesättigter Mono- und Dicarbonsäuren und Mischungen davon ,
B) die in Schritt A) bereitgestellte Monomerzusammensetzung M1) einer radikalischen Polymerisation in Gegenwart wenigstens einer Polyetherkomponente PE), die ausgewählt ist unter Polyetherolen mit einem zahlenmittleren Molekulargewicht von wenigstens 200 g/mol, Mono- und Di-(C₁-C₆-alkyl)ethern solcher Polyetherole, Polyethergruppen-haltigen Tensiden und Mischungen davon, und gegebenenfalls in Gegenwart wenigstens eines Zusatzstoffes unterzieht.

Für den Fall, dass die in Schritt B) erhaltene Polymerzusammensetzung Anhydridfunktionen enthält, können diese gewünschtenfalls einer teilweisen oder vollständigen Hydrolyse unterworfen werden, und/oder für den Fall, dass die in Schritt B) erhaltene Polymerzusammensetzung Säurefunktionen enthält, können diese gewünschtenfalls einer teilweisen oder vollständigen Neutralisation unterworfen werden.

Ein weiterer Gegenstand der Erfindung ist die Verwendung einer Mehrschichtfolie, wie zuvor und im Folgenden definiert, oder erhältlich durch ein Verfahren, wie zuvor und im Folgenden definiert,
- als Wasch- und Reinigungsmittel,
- zur zumindest teilweisen Beschichtung oder Umhüllung von Wasch- und Reinigungsmitteln,
- als Geschirrspülmittel oder als Klarspüler,
- zur zumindest teilweisen Beschichtung oder Umhüllung von Geschirrspülmitteln oder zur zumindest teilweisen Beschichtung oder Umhüllung von Klarspülern,
- als Hygieneprodukte,
- zur zumindest teilweisen Beschichtung oder Umhüllung von Hygieneprodukten,
- als Desinfektionsmittel,
- zur zumindest teilweisen Beschichtung oder Umhüllung von Desinfektionsmitteln,
- zur zumindest teilweisen Beschichtung oder Umhüllung von Körperpflegemitteln,
- zur zumindest teilweisen Beschichtung oder Umhüllung von Körperreinigungsmitteln,
- zur zumindest teilweisen Beschichtung oder Umhüllung von kosmetischen Mitteln,
- als pharmazeutische Mittel,
- zur zumindest teilweisen Beschichtung oder Umhüllung von pharmazeutischen Mitteln,
- als Pflanzenschutzmittel,
- zur zumindest teilweisen Beschichtung oder Umhüllung von Pflanzenschutzmitteln,
- in Köderfallen,
- zur zumindest teilweisen Beschichtung oder Umhüllung von Köderfallen,
- als Lebens- oder Futtermittelverpackungen,
- als Netzmittel,
- zur zumindest teilweisen Beschichtung oder Umhüllung von Netzmitteln,
- als Verpackung für Textilien,
- als Kaschierfolien,
- in Verbundsystemen (Laminaten), wie Verbundglas.

Eine spezielle Ausführungsform der Erfindung ist die Verwendung einer Mehrschichtfolie, wie zuvor und im Folgenden definiert, oder erhältlich durch ein Verfahren, wie zuvor und im Folgenden definiert, als Waschmittel oder als Reinigungsmittel oder als Geschirrspülmittel.

Eine weitere spezielle Ausführungsform der Erfindung ist die Verwendung einer Mehrschichtfolie, wie zuvor und im Folgenden definiert, oder erhältlich durch ein Verfahren, wie zuvor und im Folgenden definiert, zur zumindest teilweisen Umhüllung eines flüssigen oder festen Wasch-, Reinigungs- oder Geschirrspülmittels.

Ein weiterer Gegenstand der Erfindung ist eine Umhüllung oder Beschichtung für eine Waschmittel-, Reinigungsmittel- oder Geschirrspülmittelportion, umfassend oder bestehend aus einer Mehrschichtfolie, wie zuvor und im Folgenden definiert, oder erhältlich durch ein Verfahren, wie zuvor und im Folgenden definiert.

Ein weiterer Gegenstand der Erfindung ist ein Wasch- oder Reinigungsmittel, umfassend:
A) wenigstens eine Umhüllung und/oder Beschichtung, enthaltend eine oder bestehend aus einer Mehrschichtfolie, wie zuvor und im Folgenden definiert, oder erhältlich durch ein Verfahren, wie zuvor und im Folgenden definiert,
B) wenigstens ein Tensid,
C) gegebenenfalls wenigstens einen Builder,
D) gegebenenfalls wenigstens ein Bleichsystem,
E) gegebenenfalls wenigstens einen weiteren Zusatzstoff, der vorzugsweise ausgewählt ist unter Enzymen, Enzymstabilisatoren, Basen, Korrosionsinhibitoren, Entschäumern und Schauminhibitoren, Farbstoffen, Duftstoffen, Füllstoffen, Tablettierhilfsmitteln, Desintegrationsmitteln, Verdickern, Löslichkeitsvermittlern, organischen Lösemitteln, Elektrolyten, pH-Stellmitteln, Parfümträgern, Bitterstoffen, Fluoreszenzmitteln, Hydrotropen, Antiredepositionsmitteln, optischen Aufhellern, Vergrauungsinhibitoren, Einlaufverhinderern, Knitterschutzmitteln, Farbübertragungsinhibitoren, antimikrobiellen Wirkstoffen, Antioxidantien, Anti-Vergilbungsmitteln, Korrosionsinhibitoren, Antistatika, Bügelhilfsmitteln, Phobier- und Imprägniermitteln, Quell- und Schiebefestmitteln und UV-Absorbern, und
F) gegebenenfalls Wasser.

Ein weiterer Gegenstand der Erfindung ist ein Geschirrspülmittel, umfassend:
Ga) wenigstens eine Umhüllung und/oder Beschichtung, enthaltend eine oder bestehend aus einer erfindungsgemäße(n) Mehrschichtfolie,
Gb) gegebenenfalls wenigstens einen Komplexbildner,
Gc) wenigstens einen Builder und/oder Co-Builder,
Gd) wenigstens ein nichtionisches Tensid,
Ge) gegebenenfalls wenigstens eine Komponente, ausgewählt unter Bleichmitteln, Bleichaktivatoren und Bleichkatalysatoren,
Gf) gegebenenfalls wenigstens ein Enzym,
Gg) gegebenenfalls wenigstens einen weiteren Zusatzstoff, der vorzugsweise ausgewählt ist unter anionischen oder zwitterionischen Tensiden, Alkaliträgern, polymeren Dispergiermitteln, Korrosionsinhibitoren, Entschäumern und Schauminhibitoren, Farbstoffen, Duftstoffen, Bitterstoffen, Füllstoffen, Tablettensprengmitteln, organischen Lösungsmitteln, Tablettierhilfsmitteln, Disintegrationsmitteln, Verdickern und Löslichkeitsvermittlern,
Gh) gegebenenfalls Wasser.

### DETAILLIERTE BESCHREIBUNG DER ERFINDUNG

Unter einer "Mehrschichtfolie" wird im Rahmen der Erfindung ein Folienverbund verstanden, bei dem wenigstens zwei Folien mit einem wesentlichen Teil ihrer Fläche dauerhaft vollflächig verbunden sind. Darunter wird verstanden, dass wenigstens zwei Folien zu wenigstens 50% ihrer Fläche dauerhaft vollflächig verbunden sind. Wenn zwei unterschiedlich große Folien miteinander verbunden sind, so ist zumindest die Folie mit der kleineren Fläche zu wenigstens 50% ihrer Fläche dauerhaft vollflächig verbunden. Somit unterscheiden sich die erfindungsgemäßen Mehrschichtfolien von bekannten Folien für Wasch- und Reinigungsmittelportionen, bei denen eine einzelne Folie oder 2 oder mehrere Folien durch wenigstens eine Schweißnaht miteinander verbunden sind. Die letztgenannten Folien sind zu höchstens 10% ihrer Fläche dauerhaft vollflächig miteinander verbunden.

Der Begriff "Mehrschichtfolie" bezeichnet im Rahmen der vorliegenden Erfindung ein selbsttragendes, flächiges Gebilde, das wenigstens zwei Folienschichten aufweist. Die maximale Dicke der erfindungsgemäßen Mehrschichtfolien beträgt vorzugsweise höchstens 30 mm, besonders bevorzugt höchstens 20 mm, insbesondere höchstens 15 mm. Es versteht sich, dass die maximale Dicke der erfindungsgemäßen Mehrschichtfolien von deren Einsatzgebiet abhängt. Mehrschichtfolien zur Umhüllung oder Beschichtung für eine Waschmittel-, Reinigungsmittel- oder Geschirrspülmittelportion weisen vorzugsweise eine Dicke von höchstens 1500 µm, besonders bevorzugt höchstens 1000 µm, auf. Mehrschichtfolien, die selbst als Waschmittel oder als Reinigungsmittel oder als Geschirrspülmittel dienen, weisen vorzugsweise eine Dicke von höchstens 30 mm, besonders bevorzugt höchstens 20 mm, auf.

Außerdem ist die Dicke der erfindungsgemäßen Mehrschichtfolien im Verhältnis zur Länge und Breite klein. Vorzugsweise ist die Dicke der Mehrschichtfolien um einen Faktor von wenigstens 2, besonders bevorzugt von wenigstens 5, insbesondere von wenigstens 10 kleiner als die Länge der größten Längsachse. In einer speziellen Ausführung ist die Dicke der Mehrschichtfolien um einen Faktor von wenigstens 20, spezieller wenigstens 50, noch spezieller wenigstens 100, ganz speziell wenigstens 500 kleiner als die Länge der größten Längsachse. Im Prinzip ist der obere Wert für die größte Längsausdehnung der erfindungsgemäßen Mehrschichtfolien unkritisch. Die erfindungsgemäßen Mehrschichtfolien lassen sich z.B. in Form von Folienrollen herstellen, wobei die größte Länge auch im Bereich von 100 m und darüber liegen kann.

Die erfindungsgemäßen Mehrschichtfolien weisen eine im Wesentlichen zweidimensionale Ausdehnung auf. Die Länge und/oder Breite der Folie beträgt in der Regel mindestens 5 mm und bevorzugt mindestens 10 mm. Die maximale Länge und/oder Breite der Folie ist in der Regel unkritisch und kann je nach Anwendungsbereich im Millimeter-, Zentimeter- oder Meterbereich liegen.

Die erfindungsgemäßen oder nach dem erfindungsgemäßen Verfahren hergestellten Mehrschichtfolien eignen sich als solche für einen Einsatz als Wasch-, Reinigungs- und Geschirrspülmittel. Zu diesem Zweck können einzelne Komponenten eines Wasch-, Reinigungs- oder Geschirrspülmittels oder auch ein vollständiges Wasch-, Reinigungs- oder Geschirrspülmittel in Form einer Mehrschichtfolie formuliert sein. Ein Wasch-, Reinigungs- oder Geschirrspülmittel in Form einer Mehrschichtfolie löst sich zu Beginn und/oder im Verlauf der jeweiligen Anwendung (z. B. im Wasch- oder Spülwasser) auf, setzt somit die Inhaltsstoffe der Wasch-, Reinigungs- und Geschirrspülmittel frei und trägt in aufgelöster Form aufgrund der dispergierenden, belagsinhibierenden, emulgierenden und tensidischen Eigenschaften der enthaltenen Polymerzusammensetzung P1) und gegebenenfalls weiterer aktiver Schichten zur Wasch- und Reinigungsleistung in erheblichem Maße bei.

Die erfindungsgemäßen oder nach dem erfindungsgemäßen Verfahren hergestellten Mehrschichtfolien eignen sich auch zur portionsweisen Verpackung von flüssigen, gelförmigen und festen Wasch-, Reinigungs- und Geschirrspülmitteln. Sie lösen sich zu Beginn und/oder im Verlauf der jeweiligen Anwendung (z. B. im Wasch- oder Spülwasser) auf, setzen somit die Inhaltsstoffe der Wasch-, Reinigungs- und Geschirrspülmittel frei und tragen in aufgelöster Form aufgrund der enthaltenen Polymerzusammensetzung P1) und gegebenenfalls weiterer aktiver Schichten zur Wasch- und Reinigungsleistung in erheblichem Maße bei. Im Bereich der Wasch- und Reinigungsmittel dienen die Mehrschichtfolien zur Erzielung von dispergierenden, belagsinhibierenden, emulgierenden und tensidischen Eigenschaften. Im Bereich der Geschirrspülmittel und speziell des "automatic dishwashing" (ADW) dienen die Mehrschichtfolien zusätzlich zur Verbesserung der Klarspülleistung und des Trocknungsprozesses.

Unter den Begriffen "Waschmittelportion", "Reinigungsmittelportion" und "Geschirrspülmittelportion" wird im Rahmen der vorliegenden Erfindung eine für einen in einer wässrigen Phase stattfindenden Wasch-, Reinigungs- oder Geschirrspülvorgang ausreichende Menge eines Waschmittels oder eines Reinigungsmittels oder eines Geschirrspülmittels verstanden. Dies kann beispielsweise ein maschineller Waschvorgang sein, wie er mit handelsüblichen Waschmaschinen durchgeführt wird. Dies kann beispielsweise auch ein maschineller Geschirrspülvorgang sein, wie er mit handelsüblichen Geschirrspülmaschinen durchgeführt wird und als "automatic dishwashing" (ADW) bezeichnet wird. Erfindungsgemäß wird unter diesem Begriff auch eine Wirkstoffportion für einen Handwaschgang oder einen von Hand durchgeführten Reinigungs- oder Geschirrspülvorgang verstanden (wie er z. B. im Handwaschbecken, einer Spüle oder in einer Schüssel durchgeführt wird). Die erfindungsgemäßen Mehrschichtfolien werden bevorzugt zur Herstellung von Wirkstoffportionen für maschinelle Wasch-, Reinigungs- oder Geschirrspülvorgänge eingesetzt.

Im Rahmen dieser Anmeldung werden Verbindungen, die sowohl von Acrylsäure als auch von Methacrylsäure oder von Gemischen davon abgeleitet sein können, teilweise durch Einfügen der Silbe "(meth)" in die von der Acrylsäure abgeleitete Verbindung bezeichnet.

Die oben und nachstehend genannten organischen Reste der Variablen stellen eine individuelle Aufzählung individueller Gruppenmitglieder dar. Der Präfix Cₙ-Cₘ bezeichnet die mögliche Anzahl der Kohlenstoffatome in der jeweiligen Gruppe.

Wird der Begriff "Alkyl" ohne Präfix (Cₙ-Cₘ) verwendet, so steht er für einen linearen oder (ab 3 Kohlenstoffatomen) verzweigten gesättigten aliphatischen Rest, der im Allgemeinen 1 bis 40 Kohlenstoffatome ("C₁-C₄₀-Alkyl"), vorzugsweise 1 bis 30 Kohlenstoffatome ("C₁-C₃₀-Alkyl") aufweist.

Im Rahmen der vorliegenden Erfindung steht C₁-C₄-Alkyl für einen linearen oder verzweigten Alkylrest mit 1 bis 4 Kohlenstoffatomen. Beispiele für C₁-C₄-Alkyl sind Methyl, Ethyl, n-Propyl, Isopropyl, n-Butyl, sec-Butyl, Isobutyl und tert-Butyl.

C₁-C₇-Alkyl steht für einen linearen oder verzweigten Alkylrest mit 1 bis 7 Kohlenstoffatomen. Beispiele für C₁-C₇-Alkyl sind, zusätzlich zu den bei C₁-C₄-Alkyl genannten, Pentyl, 1-Methylbutyl, 2-Methylbutyl, 3-Methylbutyl, 2,2-Dimethylpropyl, 1-Ethylpropyl, 1,1-Dimethylpropyl, 1,2-Dimethylpropyl, Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, Heptyl und deren Konstitutionsisomere.

C₁-C₈-Alkyl steht für einen linearen oder verzweigten Alkylrest mit 1 bis 8 Kohlenstoffatomen. Beispiele für C₁-C₈-Alkyl sind, zusätzlich zu den bei C₁-C₇-Alkyl genannten, Octyl, 2-Ethylhexyl und deren Konstitutionsisomere.

C₁-C₁₀-Alkyl steht für einen linearen oder verzweigten Alkylrest mit 1 bis 10 Kohlenstoffatomen. Beispiele für C₁-C₁₀-Alkyl sind, zusätzlich zu den bei C₁-C₈-Alkyl genannten, Nonyl, Decyl, 2-Propylheptyl und deren Konstitutionsisomere.

C₁-C₂₀-Alkyl steht für einen linearen oder verzweigten Alkylrest mit 1 bis 20 Kohlenstoffatomen. Beispiele für C₁-C₂₀-Alkyl sind, zusätzlich zu den bei C₁-C₁₀-Alkyl genannten, Undecyl, Dodecyl, Tridecyl, Tetradecyl, Pentadecyl, Hexadecyl, Heptadecyl, Octadecyl, Nonadecyl, Eicosyl und deren Konstitutionsisomere.

C₁-C₃₀-Alkyl steht für einen linearen oder verzweigten Alkylrest mit 1 bis 30 Kohlenstoffatomen. Beispiele für C₁-C₃₀-Alkyl sind, zusätzlich zu den bei C₁-C₂₀-Alkyl genannten, Henicosyl, Docosyl, Tricosyl, Tetracosyl, Pentacosyl, Hexacosyl, Heptacosyl, Octacosyl, Nonacosyl, Triacontyl und deren Konstitutionsisomere.

C₁-C₄₀-Alkyl steht für einen linearen oder verzweigten Alkylrest mit 1 bis 40 Kohlenstoffatomen. Beispiele für C₁-C₄₀-Alkyl sind, zusätzlich zu den bei C₁-C₃₀-Alkyl genannten, die höheren Homologen mit 31 bis 40 Kohlenstoffatomen. Beispiele für C₈-C₂₂-Alkyl sind Octyl, 2-Ethylhexyl und deren Konstitutionsisomere.

C₈-C₁₈-Alkyl steht für einen linearen oder verzweigten Alkylrest mit 8 bis 18 Kohlenstoffatomen. Geeignete C₈-C₁₈-Alkyle sind Octyl, 2-Ethylhexyl, Nonyl, Decyl, 2-Propylheptyl, Undecyl, Dodecyl, Tridecyl, Tetradecyl, Pentadecyl, Hexadecyl, Heptadecyl, Octadecyl, Nonadecyl, Eicosyl, Henicosyl, Docosyl, Tricosyl, Tetracosyl und deren Konstitutionsisomere. In einer bevorzugten Ausführungsform handelt es sich um überwiegend lineare C₈-C₁₈-Alkylreste, wie sie auch in natürlichen oder synthetischen Fettalkoholen sowie Oxoalkoholen vorkommen.

C₁₂-C₁₈-Alkyl steht für einen linearen oder verzweigten Alkylrest mit 12 bis 18 Kohlenstoffatomen. Geeignete C₁₂-C₁₈-Alkyle sind Dodecyl, Tridecyl, Tetradecyl, Pentadecyl, Hexadecyl, Heptadecyl, Octadecyl, Nonadecyl, Eicosyl, Henicosyl, Docosyl, Tricosyl, Tetracosyl und deren Konstitutionsisomere. In einer bevorzugten Ausführungsform handelt es sich um überwiegend lineare C₁₂-C₁₈-Alkylreste, wie sie auch in natürlichen oder synthetischen Fettalkoholen sowie Oxoalkoholen vorkommen.

Im Rahmen der vorliegenden Anmeldung steht der Ausdruck C₉-C₁₁-Alkohole für ein Gemisch, das Alkohole mit 9 Kohlenstoffatomen und Alkohole mit 11 Kohlenstoffatomen enthält. C₁₂-C₁₄-Alkohole stehen für ein Gemisch, das Alkohole mit 12 Kohlenstoffatomen und Alkohole mit 14 Kohlenstoffatomen enthält. C₁₃-C₁₅-Alkohole stehen für ein Gemisch, das Alkohole mit 13 Kohlenstoffatomen und Alkohole mit 15 Kohlenstoffatomen enthält. C₁₂-C₁₈-Alkohole stehen für ein Gemisch, das Alkohole mit 12 Kohlenstoffatomen, Alkohole mit 14 Kohlenstoffatomen, Alkohole mit 16 Kohlenstoffatomen und Alkohole mit 18 Kohlenstoffatomen enthält.

Wird der Begriff "Alkenyl" ohne Präfix (Cₙ-Cₘ) verwendet, so steht er für einen linearen oder verzweigten einfach ungesättigten (d.h. eine C-C-Doppelbindung enthaltenden) aliphatischen Rest, der im Allgemeinen 2 bis 40 Kohlenstoffatome ("C₂-C₄₀-Alkenyl"), vorzugsweise 2 bis 30 Kohlenstoffatome ("C₂-C₃₀-Alkenyl") aufweist.

Beispiele für C₂-C₃-Alkenyl sind Ethenyl, 1-Propenyl, 2-Propenyl oder 1-Methylethenyl. Beispiele für C₂-C₄-Alkenyl sind, zusätzlich zu den für C₂-C₃-Alkenyl genannten, 1-Butenyl, 2-Butenyl, 3-Butenyl, 1-Methyl-1-propenyl, 2-Methyl-1-propenyl, 1-Methyl-2-propenyl oder 2-Methyl-2-propenyl. Beispiele für C₂-C₆-Alkenyl sind, zusätzlich zu den für C₂-C₄-Alkenyl genannten, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl, 1-Ethyl-2-methyl-2-propenyl und dergleichen. Beispiele für C₂-C₁₀-Alkenyl sind, zusätzlich zu den für C₂-C₆-Alkenyl genannten, 1-Heptenyl, 2-Heptenyl, 3-Heptenyl, 1-Octenyl, 2-Octenyl, 3-Octenyl, 4-Octenyl, 1-Nonenyl, 2-Nonenyl, 3-Nonenyl, 4-Nonenyl, 1-Decenyl, 2-Decenyl, 3-Decenyl, 4-Decenyl, 5-Decenyl und dergleichen.

Wird der Begriff "Cycloalkyl" ohne Präfix (Cₙ-Cₘ) verwendet, so steht er für einen gesättigten monocyclischen cycloaliphatischen Rest, der im Allgemeinen 3 bis 10 Kohlenstoffatome ("C₃-C₁₀-Cycloalkyl"), vorzugsweise 3 bis 8 Kohlenstoffatome ("C₃-C₈-Cycloalkyl") und selbstverständlich keine Heteroatome als Ringglieder aufweist (d.h. alle Ringglieder sind Kohlenstoffatome).

Beispiele für C₃-C₄-Cycloalkyl sind Cyclopropyl und Cyclobutyl. Beispiele für C₃-C₅-Cycloalkyl sind Cyclopropyl, Cyclobutyl und Cyclopentyl. Beispiele für C₃-C₆-Cycloalkyl sind Cyclopropyl, Cyclobutyl, Cyclopentyl und Cyclohexyl. Beispiele für C₃-C₇-Cycloalkyl sind Cyclopropyl, Cyclobutyl, Cyclopentyl, Cyclohexyl und Cycloheptyl. Beispiele für C₃-C₈-Cycloalkyl sind Cyclopropyl, Cyclobutyl, Cyclopentyl, Cyclohexyl, Cycloheptyl und Cyclooctyl. Beispiele für C₃-C₁₀-Cycloalkyl sind Cyclopropyl, Cyclobutyl, Cyclopentyl, Cyclohexyl, Cycloheptyl, Cyclooctyl, Cyclononyl und Cyclodecyl.

"Aryl" ist ein mono-, bi- oder polycyclischer carbocyclischer aromatischer Rest ohne Heteroatome als Ringglieder. Ein monocyclischer aromatischer Rest ist Phenyl. In bicyclischen Arylresten sind zwei aromatische Ringe miteinander kondensiert; d.h. sie teilen zwei benachbarte Kohlenstoffatome als Ringglieder. Beispiele für bicyclische Arylgruppen sind 1- und 2-Naphthyl. In polycyclischen Arylgruppen sind drei oder mehr Ringe kondensiert. Beispiele für polycyclische Arylgruppen sind Phenanthrenyl, Anthracenyl, Tetracenyl, 1H-Benzo[a]phenalenyl, Pyrenyl und dergleichen. Im Rahmen der vorliegenden Anmeldung umfasst der Begriff "Aryl" aber auch bi- oder polycyclic Reste, in denen nicht alle Ringe aromatisch sind; Voraussetzung ist, dass wenigstens ein Ring aromatisch ist. Beispiele hierfür sind Indanyl, Indenyl, Tetralinyl, 6,7,8,9-Tetrahydro-5H-benzo[7]annulenyl, Fluorenyl, 9,10-Dihydroanthracenyl, 9,10-Dihydrophenanthrenyl, 1H-Benzo[a]phenalenyl und dergleichen. Die Arylgruppe hat in der Regel 6 bis 30, insbesondere 6 bis 20, speziell 6 bis 10 Kohlenstoffatome als Ringglieder.

Wird der Begriff "Heterocycloalkyl" ohne Präfix (Cₙ-Cₘ) und ohne Angabe der Heteroringatome verwendet, so steht er für einen gesättigten monocyclischen heterocyclischen Rest, der im Allgemeinen 3 bis 8 Ringglieder und wenigstens ein Heteroatom und/oder heteroatomhaltige Gruppe, vorzugsweise 1, 2, 3 oder 4 Heteroatome und/oder heteroatomhaltige Gruppen als Ringglieder enthält. Das Heteroatom und die heteroatomhaltige Gruppe sind ausgewählt unter N, O, S, NO, SO und SO₂.

Beispiele hierfür sind Oxiran-2-yl, Thiiran-2-yl, Aziridin-1-yl, Aziridin-2-yl, Oxetan-2-yl, Oxetan-3-yl, Thietan-2-yl, Thietan-3-yl, 1-Oxothietan-2-yl, 1-Oxothietan-3-yl, 1,1-Dioxothietan-2-yl, 1,1-Dioxothietan-3-yl, Azetidin-1-yl, Azetidin-2-yl, Azetidin-3-yl, Tetrahydrofuran-2-yl, Tetrahydrofuran-3-yl, Tetrahydrothien-2-yl, Tetrahydrothien-3-yl, 1-Oxotetrahydrothien-2-yl, 1,1-Dioxotetrahydrothien-2-yl, 1-Oxotetrahydrothien-3-yl, 1,1-Dioxotetrahydrothien-3-yl, Pyrrolidin-1-yl, Pyrrolidin-2-yl, Pyrrolidin-3-yl, Pyrazolidin-1-yl, Pyrazolidin-3-yl, Pyrazolidin-4-yl, Pyrazolidin-5-yl, Imidazolidin-1-yl, Imidazolidin-2-yl, Imidazolidin-4-yl, Oxazolidin-2-yl, Oxazolidin-3-yl, Oxazolidin-4-yl, Oxazolidin-5-yl, Isoxazolidin-2-yl, Isoxazolidin-3-yl, Isoxazolidin-4-yl, Isoxazolidin-5-yl, Thiazolidin-2-yl, Thiazolidin-3-yl, Thiazolidin-4-yl, Thiazolidin-5-yl, Isothiazolidin-2-yl, Isothiazolidin-3-yl, Isothiazolidin-4-yl, Isothiazolidin-5-yl, 1,2,4-Oxadiazolidin-2-yl, 1,2,4-Oxadiazolidin-3-yl, 1,2,4-Oxadiazolidin-4-yl, 1,2,4-Oxadiazolidin-5-yl, 1,2,4-Thiadiazolidin-2-yl, 1,2,4-Thiadiazolidin-3-yl, 1,2,4-Thiadiazolidin-4-yl, 1,2,4-Thiadiazolidin-5-yl, 1,2,4-Triazolidin-1-yl, 1,2,4-Triazolidin-3-yl, 1,2,4-Triazolidin-4-yl, 1,3,4-Oxadiazolidin-2-yl, 1,3,4-Oxadiazolidin-3-yl, 1,3,4-Thiadiazolidin-2-yl, 1,3,4-Thiadiazolidin-3-yl, 1,3,4-Triazolidin-1-yl, 1,3,4-Triazolidin-2-yl, 1,3,4-Triazolidin-3-yl, Tetrahydropyran-2-yl, Tetrahydropyran-3-yl, Tetrahydropyran-4-yl, 1,3-Dioxan-2-yl, 1,3-Dioxan-4-yl, 1,3-Dioxan-5-yl, 1,4-Dioxan-2-yl, Piperidin-1-yl, Piperidin-2-yl, Piperidin-3-yl, Piperidin-4-yl, Hexahydropyridazin-1-yl, Hexahydropyridazin-3-yl, Hexahydropyridazin-4-yl, Hexahydropyrimidin-1-yl, Hexahydropyrimidin-2-yl, Hexahydropyrimidin-4-yl, Hexahydropyrimidin-5-yl, Piperazin-1-yl, Piperazin-2-yl, 1,3,5-Hexahydrotriazin-1-yl, 1,3,5-Hexahydrotriazin-2-yl, 1,2,4-Hexahydrotriazin-1-yl, 1,2,4-Hexahydrotriazin-2-yl, 1,2,4-Hexahydrotriazin-3-yl, 1,2,4-Hexahydrotriazin-4-yl, 1,2,4-Hexahydrotriazin-5-yl, 1,2,4-Hexahydrotriazin-6-yl, Morpholin-2-yl, Morpholin-3-yl, Morpholin-4-yl, Thiomorpholin-2-yl, Thiomorpholin-3-yl, Thiomorpholin-4-yl, 1-Oxothiomorpholin-2-yl, 1-Oxothiomorpholin-3-yl, 1-Oxothiomorpholin-4-yl, 1,1-Dioxothiomorpholin-2-yl, 1,1-Dioxothiomorpholin-3-yl, 1,1-Dioxothiomorpholin-4-yl, Azepan-1-, -2-, -3- oder -4-yl, Oxepan-2-, -3-, -4- oder -5-yl, Hexahydro-1,3-diazepinyl, Hexahydro-1,4-Diazepinyl, Hexahydro-1,3-oxazepinyl, Hexahydro-1,4-oxazepinyl, Hexahydro-1,3-dioxepinyl, Hexahydro-1,4-dioxepinyl,
Oxocanyl, Thiocanyl, Azocanyl, [1,3]Diazocanyl, [1,4]Diazocanyl, [1,5]Diazocanyl, [1,5]Oxazocanyl und ergleichen.

Wird der Begriff "Heteroaryl" oder "Hetaryl" ohne Präfix (Cₙ-Cₘ) und ohne Angabe der Heteroringatome verwendet, so steht er für einen aromatischen monocyclischen heterocyclischen Rest, der 5 oder 6 Ringglieder und wenigstens ein Heteroatom und/oder heteroatomhaltige Gruppe, vorzugsweise 1, 2, 3 oder 4 Heteroatome und/oder heteroatomhaltige Gruppen als Ringglieder enthält. Das Heteroatom und die heteroatomhaltige Gruppe sind ausgewählt unter N, O, S, NO, SO und SO₂.

Beispiele hierfür sind 2-Furyl, 3-Furyl, 2-Thienyl, 3-Thienyl, 1-Pyrrolyl, 2-Pyrrolyl, 3-Pyrrolyl, 1-Pyrazolyl, 3-Pyrazolyl, 4-Pyrazolyl, 5-Pyrazolyl, 1-Imidazolyl, 2-Imidazolyl, 4-Imidazolyl, 5-Imidazolyl, 2-Oxazolyl, 4-Oxazolyl, 5-Oxazolyl, 3-Isoxazolyl, 4-Isoxazolyl, 5-Isoxazolyl, 2-Thiazolyl, 4-Thiazolyl, 5-Thiazolyl, 3-Isothiazolyl, 4-Isothiazolyl, 5-Isothiazolyl, 1,3,4-Triazol-1-yl, 1,3,4-Triazol-2-yl, 1,3,4-Triazol-3-yl, 1,2,3-Triazol-1-yl, 1,2,3-Triazol-2-yl, 1,2,3-Triazol-4-yl, 1,2,5-Oxadiazol-3-yl, 1,2,3-Oxadiazol-4-yl, 1,2,3-Oxadiazol-5-yl, 1,3,4-Oxadiazol-2-yl, 1,2,5-Thiadiazol-3-yl, 1,2,3-Thiadiazol-4-yl, 1,2,3-Thiadiazol-5-yl, 1,3,4-Thiadiazol-2-yl, 2-Pyridinyl, 3-Pyridinyl, 4-Pyridinyl, 1-Oxopyridin-2-yl, 1-Oxopyridin-3-yl, 1-Oxopyridin-4-yl, 3-Pyridazinyl, 4-Pyridazinyl, 2-Pyrimidinyl, 4-Pyrimidinyl, 5-Pyrimidinyl, 2-Pyrazinyl, 1,3,5-Triazin-2-yl, 1,2,4-Triazin-3-yl, 1,2,4-Triazin-5-yl, 1,2,3,4-Tetrazin-1-yl, 1,2,3,4-Tetrazin-2-yl, 1,2,3,4-Tetrazin-5-yl und dergleichen.

Monoolefine sind Alkene; d.h. sie sind lineare oder verzweigte aliphatische, einfach ungesättigte Kohlenwasserstoffe mit nur einer C-C-Doppelbindung. Wird der Begriff ohne Präfix (Cₙ-Cₘ) verwendet, so steht er für einen linearen oder verzweigten einfach ungesättigten (d.h. eine C-C-Doppelbindung enthaltenden) aliphatischen Kohlenwasserstoff, der im Allgemeinen 2 bis 40 Kohlenstoffatome ("C₂-C₄₀-Monoolefin" bzw. "C₂-C₄₀-Alken"), vorzugsweise 2 bis 30 Kohlenstoffatome ("C₂-C₃₀-Monoolefin" bzw. "C₂-C₃₀-Alken"), insbesondere 2 bis 10 Kohlenstoffatome ("C₂-C₁₀-Monoolefin" bzw. "C₂-C₃₀-Alken") aufweist. Beispiele für C₂-C₁₀-Monoolefine sind Ethen, Propen, But-1-en, But-2-en, Isobuten, Pent-1-en, Pent-2-en, 2-Methyl-but-1-en, 2-Methyl-but-2-en, 3-Methyl-but-1-en, 3-Methyl-but-2-en, 2,2-Dimethylprop-1-en, Hex-1-en, Hex-2-en, Hex-3-en, Hept-1-en, Hept-2-en, Hept-3-en, Oct-1-en, Oct-2-en, Oct-3-en, Oct-4-en, Non-1-en, Non-2-en, Non-3-en, Non-4-en, Dec-1-en, Dec-2-en, Dec-3-en, Dec-4-en, Dec-5-en und deren Stellungsisomere.

Nichtaromatische Kohlenwasserstoffe mit wenigstens zwei konjugierten Doppelbindungen bezeichnen sowohl aliphatische als auch cycloaliphatische ungesättigte Kohlenwasserstoffe mit wenigstens zwei konjugierten Doppelbindungen. Bei den cycloaliphatische ungesättigten Kohlenwasserstoffen mit wenigstens zwei konjugierten Doppelbindungen handelt es sich entweder um solche, die nicht die durch die Ringgröße vorgegebene maximale Anzahl an konjugierten C-C-Doppelbindungen enthalten, oder um solche, die zwar die durch die Ringgröße vorgegebene maximale Anzahl an konjugierten C-C-Doppelbindungen enthalten, aber nicht der Hückel-Regel entsprechen; sei es weil sie homoaromatisch, antiaromatisch oder ein nichtaromatisches Polyen sind.
Aliphatische Kohlenwasserstoffe mit wenigstens zwei konjugierten Doppelbindungen enthalten in der Regel 4 bis 20 Kohlenstoffatome. Beispiele für aliphatische Kohlenwasserstoffe mit wenigstens zwei konjugierten Doppelbindungen sind 1,3-Butadien, 1,3-Pentadien, 1,3-Hexadien, 2,4-Hexadien,1,3,5-Hexatrien, 1,3-Heptadien, 2,4-Heptadien, 1,3,4-Heptatrien, 1,3-Octadien, 2,4-Octadien, 3,5-Octadien, 1,3,5-Octatrien, 2,4,6-Octatrien, 1,3,5,7-Octattetraen und dergleichen.

Cycloaliphatische Kohlenwasserstoffe mit wenigstens zwei konjugierten Doppelbindungen enthalten in der Regel 4 bis 20 Kohlenstoffatome als Ringglieder. Beispiele sind 1,3-Cyclopentadien, 1,3-Cyclohexadien, 1,3-Cycloheptadien, 1,3,5-Cycloheptatrien, 1,3-Cyclootadien, 1,3,5-Cyclootatrien, 1,3,5,7-Cyclooctatetraen und dergleichen.

Alkanole sind Monohydroxyalkane, d.h. Verbindungen R-OH, worin R für einen linearen oder verzweigten Alkylrest, wie oben definiert, steht. Wird der Begriff ohne Präfix (Cₙ-Cₘ) verwendet, so steht er für ein C₁-C₃₀-Alkanol. Beispiele für C₁-C₃-Alkanole sind Methanol, Ethanol, n-Propanol und Isopropanol. Beispiele für C₁-C₄-Alkanole sind, zusätzlich zu den für C₁-C₃-Alkanole genannten, n-Butanol, sec-Butanol, Isobutanol und tert-Butanol. Beispiele für C₁-C₂₀-Alkanole sind, zusätzlich zu den für C₁-C₄-Alkanole genannten, Pentanol, Hexanol, Heptanol, Octanol, 2-Ethylhexanol, Nonanol, Decanol, 2-Propylheptanol, Undecanol, Laurylalkohol, Tridecanol, Myristylalkohol, Pentadecanol, Palmitylalkohol, Heptadecanol, Stearylalkohol, Nonadecanol, Eicosanol sowie deren Stellungs- und Konstitutionsisomere. Beispiele für C₁-C₃₀-Alkanole sind, zusätzlich zu den für C₁-C₂₀-Alkanole genannten, die höheren Homologen mit 21 bis 30 Kohlenstoffatomen sowie deren Stellungs- und Konstitutionsisomere.

Alkandiole sind Dihydroxyalkane, d.h. Alkane, in denen zwei Wassrtstoffatome durch OH-Gruppen substituiert sind, wobei zwischen den beiden Hydroxygruppen wenigstens zwei Kohlenstoffatome liegen müssen (d.h. Hydrate sind nicht von diesem Begriff umfasst). Wird der Begriff ohne Präfix (Cₙ-Cₘ) verwendet, so steht er für ein C₂-C₃₀-Alkandiol. Beispiele für C₂-C₃-Alkandiole sind Ethylenglycol (1,2-Ethandiol), 1,2-Propandiol und 1,3-Propandiol. Beispiele für C₂-C₄-Alkandiole sind, zusätzlich zu den für C₂-C₃-Alkandiole genannten, 1,2-Butandiol, 1,3-Butandiol und 1,4-Butandiol. Beispiele für C₂-C₆-Alkandiole sind, zusätzlich zu den für C₂-C₄-Alkandiole genannten, 1,5-Pentandiol und 1,6-Hexandiol. Beispiele für C₂-C₂₀-Alkandiole sind, zusätzlich zu den für C₂-C₆-Alkandiole genannten, , 1,7-Heptandiol, 1,8-Octandiol, 1,9-Nonandiol, 1,10-Decandiol, 1,11-Undecandiol, 1,12-Dodecandiol, 1,13-Tridecandiol, 1,14-Tetradecandiol, 1,15-Pentadecandiol, 1,16-Hexadecandiol, 1,17-Heptadecandiol, 1,18-Octadecandiol, 1,19-Nonadecandiol, 1,20-Eisosandiol. Beispiele für C₂-C₃₀-Alkandiole sind, zusätzlich zu den für C₂-C₂₀-Alkandiole genannten, die höheren Homologen mit 21 bis 30 Kohlenstoffatomen.

Im Rahmen der vorliegenden Anmeldung steht der Ausdruck C₉C₁₁-Alkohole für ein Gemisch, das Alkohole mit 9 Kohlenstoffatomen und Alkohole mit 11 Kohlenstoffatomen enthält. C₁₂C₁₄-Alkohole stehen für ein Gemisch, das Alkohole mit 12 Kohlenstoffatomen und Alkohole mit 14 Kohlenstoffatomen enthält. C₁₃C₁₅-Alkohole stehen für ein Gemisch, das Alkohole mit 13 Kohlenstoffatomen und Alkohole mit 15 Kohlenstoffatomen enthält. C₁₂C₁₈-Alkohole stehen für ein Gemisch, das Alkohole mit 12 Kohlenstoffatomen, Alkohole mit 14 Kohlenstoffatomen, Alkohole mit 16 Kohlenstoffatomen und Alkohole mit 18 Kohlenstoffatomen enthält.

### Polymerzusammensetzung P1)

Die Herstellung der Polymerzusammensetzung P1) erfolgt durch radikalische Polymerisation der Monomerzusammensetzung M1) in Gegenwart wenigstens einer Polyetherkomponente PE). Dabei werden spezielle Polymerzusammensetzungen P1) mit vorteilhaften Eigenschaften erhalten. Ohne an eine Theorie gebunden zu sein, können sich zwischen dem wachsenden Polymer und der Polyetherkomponente Wasserstoffbrücken ausbilden und die Eigenschaften der erhaltenen Polymerzusammensetzung beeinflussen. So lassen sich Polymerzusammensetzungen P1) mit einem hohen Gehalt an der Polyetherkomponente erzielen, wie sie durch Mischung des separat hergestellten Polymers mit der Polyetherkomponente nicht hergestellt werden können. Ein radikalischer Polymerabbau findet dabei vorteilhafterweise nicht statt.

Zur Herstellung der erfindungsgemäßen Mehrschichtfolien werden vorzugsweise Polymerzusammensetzungen P1) mit einer niedrigen Glasübergangstemperatur T_{G} eingesetzt. Vorzugsweise weisen die zur Herstellung der erfindungsgemäßen Mehrschichtfolien eingesetzten Polymerzusammensetzungen P1) eine Glasübergangstemperatur T_{G} im Bereich von 0 bis 80 °C, vorzugsweise von 0 bis 60 °C, insbesondere von 0 bis 30° C, auf.

Die im Rahmen dieser Anmeldung beschriebenen Glasübergangstemperaturen (Tg) können mittels Differential Scanning Calorimetry (DSC) bestimmt werden.

In einer bevorzugten Ausführung liegen die zur Herstellung der erfindungsgemäßen wasch- und reinigungsaktiven Polymerfolien eingesetzten Polymerzusammensetzungen P1) in Form einer transparenten Folie vor.

### Monomerzusammensetzung M1)

### Monomer A)

Die zur Herstellung der Polymerzusammensetzung P1) eingesetzte Monomerzusammensetzung M1) enthält wenigstens ein Monomer A), das ausgewählt ist unter α,β-ethylenisch ungesättigten Mono- und Dicarbonsäuren, Salzen α,β-ethylenisch ungesättigter Mono- und Dicarbonsäuren, Anhydriden α,β-ethylenisch ungesättigter Mono- und Dicarbonsäuren und Mischungen davon.

In einer speziellen Ausführungsform besteht die Monomerzusammensetzung M1) nur aus α,β-ethylenisch ungesättigten Carbonsäuren, Salzen α,β-ethylenisch ungesättigter Carbonsäuren und Mischungen davon.

Die α,β-ethylenisch ungesättigte Carbonsäure ist vorzugsweise ausgewählt unter Acrylsäure, Methacrylsäure, Ethacrylsäure Maleinsäure, Fumarsäure, Itaconsäure, α-Chloracrylsäure, Crotonsäure, Citraconsäure, Mesaconsäure, Glutaconsäure und Aconitsäure. Geeignete Salze der zuvor genannten Säuren sind insbesondere die Natrium-, Kalium- und Ammoniumsalze sowie die Salze mit Aminen. Die Monomere A) können als solche oder als Mischungen untereinander eingesetzt werden. Die angegebenen Gewichtsanteile beziehen sich sämtlich auf die Säureform.

Bevorzugt wird die wenigstens eine α,β-ethylenisch ungesättigte Carbonsäure in nicht neutralisierter Form zur Polymerisation eingesetzt. Werden die α,β-ethylenisch ungesättigten Carbonsäuren in teilweise neutralisierter Form zur Polymerisation eingesetzt, so sind die Säuregruppen bevorzugt zu höchstens 50 Mol-%, besonders bevorzugt zu höchstens 30 Mol-% neutralisiert. Die teilweise oder vollständige Neutralisation kann auch während der Polymerisation oder nach Abschluss der Polymerisation erfolgen.

Geeignete Basen zur Neutralisation der α,β-ethylenisch ungesättigten Carbonsäuren, wie auch der im Folgenden genannten ungesättigten Sulfonsäuren und Phosphonsäuren sind Alkalimetallhydroxide, wie NaOH und KOH, Erdalkalimetallhydroxide, wie Ca(OH)₂, Mg(OH)₂, Ammoniak und Aminbasen. Bevorzugte Amine sind Alkanolamine, wie Etanolamin, Diethanolamin und Triethanolamin. Gewünschtenfalls kann eine teilweise oder vollständige Neutralisation der Säuregruppen auch im Anschluss an die Polymerisation erfolgen.

Besonders bevorzugt ist das Monomer A) ausgewählt unter Acrylsäure, Methacrylsäure, Maleinsäure, Fumarsäure, Itaconsäure, Salzen der zuvor genannten Carbonsäuren und Mischungen davon.

Insbesondere ist das Monomer A) ausgewählt unter Acrylsäure, Methacrylsäure, Salzen der Acrylsäure, Salzen der Methacrylsäure und Mischungen davon.

In einer speziellen Ausführungsform wird als Monomer A) ausschließlich Acrylsäure eingesetzt.

Das Monomer A) wird vorzugsweise in einer Menge von 50 bis 100 Gew.-%, besonders bevorzugt 60 bis 100 Gew.-%, bezogen auf das Gesamtgewicht der Monomerzusammensetzung M1), eingesetzt.

In einer bevorzugten Ausführungsform besteht die Monomerzusammensetzung M1) zu mindestens 50 Gew-%, bevorzugt zu mindestens 80 Gew.-%, insbesondere zu mindestens 90 Gew.-%, bezogen auf das Gesamtgewicht der Monomerzusammensetzung M1), aus Acrylsäure und/oder Acrylsäuresalzen.

### Monomer B)

Die Monomerzusammensetzung M1) kann zusätzlich zu den Monomeren A) wenigstens ein Monomer B) enthalten, das ausgewählt ist unter ungesättigten Sulfonsäuren, Salzen ungesättigter Sulfonsäuren, ungesättigten Phosphonsäure, Salzen ungesättigter Phosphonsäuren und Mischungen davon.

Das Monomer B) ist vorzugsweise ausgewählt unter 2-Acrylamido-2-methylpropansulfonsäure, Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäure, Vinylphosphonsäure, Allylphosphonsäure, Salzen der zuvor genannten Säuren sowie Mischungen davon.

Bevorzugt als Monomer B) ist 2-Acrylamido-2-methylpropansulfonsäure.

Geeignete Salze der zuvor genannten Säuren sind insbesondere die Natrium-, Kalium- und Ammoniumsalze sowie die Salze mit Aminen. Die Monomere B) können als solche oder als Mischungen untereinander eingesetzt werden. Die angegebenen Gewichtsanteile beziehen sich sämtlich auf die Säureform.

Bevorzugt besteht die Monomerzusammensetzung M1) dann zu mindestens 50 Gew-%, besonders bevorzugt zu mindestens 80 Gew.-%, insbesondere zu mindestens 90 Gew.-%, bezogen auf das Gesamtgewicht der Monomerzusammensetzung M1), aus Monomeren A) und B). Wenn die Monomerzusammensetzung M1) wenigstens ein Monomer B) enthält, so wird dieses vorzugsweise in einer Menge von 0,1 bis 50 Gew.-%, besonders bevorzugt 1 bis 25 Gew.-%, bezogen auf das Gesamtgewicht der Monomerzusammensetzung M1), eingesetzt.

### Monomere C)

Die Monomerzusammensetzung M1) kann zusätzlich wenigstens ein weiteres von den säuregruppenhaltigen Monomeren und deren Salzen verschiedenes Monomer (= Monomer C) enthalten.

Die Monomerzusammensetzung M1) kann somit folgende

Monomerzusammensetzungen aufweisen: A) oder A) + B) oder A) + C) oder A) + B) + C).

Bevorzugt enthält die Monomerzusammensetzung M1) zusätzlich wenigstens ein Monomer C), ausgewählt unter
C1) Stickstoffheterocyclen mit einer radikalisch polymerisierbaren α,β-ethylenisch ungesättigten Doppelbindung,
C2) Verbindungen der allgemeinen Formeln (I.a) und (I.b) 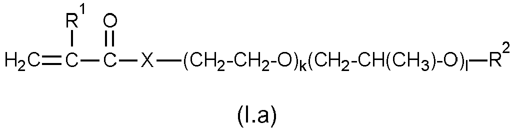 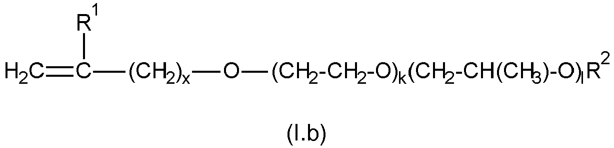 worin
   die Reihenfolge der Alkylenoxideinheiten beliebig ist,
   - x: für 0, 1 oder 2 steht,
   - k und l: unabhängig voneinander für eine ganze Zahl von 0 bis 100 stehen, wobei die Summe aus k und l mindestens 2 beträgt, vorzugsweise mindestens 5 beträgt,
   - R¹: für Wasserstoff oder C₁-C₈-Alkyl steht,
   - R²: für Wasserstoff, C₁-C₃₀-Alkyl, C₂-C₃₀-Alkenyl oder C₅-C₈-Cycloalkyl steht, und
   - X: für O oder eine Gruppe der Formel NR³ steht, worin R³ für H, Alkyl, Alkenyl, Cycloalkyl, Heterocycloalkyl, Aryl oder Hetaryl steht;
C3) Vinylaromaten,
C4) ungesättigten Kohlenwasserstoffen, die ausgewählt sind unter C₂-C₁₀-Monoolefinen und nichtaromatischen Kohlenwasserstoffen mit wenigstens zwei konjugierten Doppelbindungen,
C5) Estern α,β-ethylenisch ungesättigter Mono- und Dicarbonsäuren mit C₁-C₃₀-Alkanolen,
C6) Verbindungen mit einer radikalisch polymerisierbaren α,β-ethylenisch ungesättigten Doppelbindung und wenigstens einer kationogenen und/oder kationischen Gruppe pro Molekül,
C7) Estern von Vinylalkohol oder Allylalkohol mit C₁-C₃₀-Monocarbonsäuren,
C8) Estern α,β-ethylenisch ungesättigter Mono- und Dicarbonsäuren mit C₂-C₃₀-Alkandiolen, Amiden α,β-ethylenisch ungesättigter Mono- und Dicarbonsäuren mit C₂-C₃₀-Aminoalkoholen mit einer primären oder sekundären Aminogruppe,
C9) Amidgruppen-haltigen Monomeren, die von I.a), C6 und C8) verschieden sind;
C10) α,β-ethylenisch ungesättigten Nitrilen,
C11) Vinylhalogeniden, Vinylidenhalogeniden,
C12) ethylenisch ungesättigten Monomeren mit Harnstoffgruppen,
   und Mischungen aus zwei oder mehr als zwei der zuvor genannten Monomere C1) bis C12).

### Monomer C1)

Bevorzugte Stickstoffheterocyclen mit einer radikalisch polymerisierbaren α,β-ethylenisch ungesättigten Doppelbindung C1) sind ausgewählt unter N-Vinylimidazol (1-Vinylimidazol), von N-Vinylimidazol verschiedenen vinyl- und allylsubstituierten Stickstoffheterocyclen und Mischungen davon.

Aus den Aminstickstoffen der zuvor genannten Verbindungen lassen sich entweder durch Protonierung mit Säuren oder durch Quaternisierung mit Alkylierungsmitteln geladene kationische Gruppen erzeugen. Geeignete Monomere C1) sind auch die durch Protonierung oder Quaternisierung von 1-Vinylimidazol und davon verschiedenen vinyl- und allylsubstituierten Stickstoffheterocyclen erhaltenen Verbindungen. Zur Protonierung geeignete Säuren sind z. B. Carbonsäuren, wie Milchsäure, oder Mineralsäuren, wie Phosphorsäure, Schwefelsäure und Salzsäure. Zur Quaternisierung geeignete Alkylierungsmittel sind C₁-C₄-Alkylhalogenide oder Di-(C₁-C₄-alkyl)sulfate, wie Ethylchlorid, Ethylbromid, Methylchlorid, Methylbromid, Dimethylsulfat und Diethylsulfat. Eine Protonierung oder Quaternisierung kann im Allgemeinen sowohl vor als auch nach der Polymerisation erfolgen. Bevorzugt erfolgt eine Protonierung oder Quaternisierung nach der Polymerisation. Beispiele für solche geladenen Monomere C1) sind quaternisierte Vinylimidazole, insbesondere 3-Methyl-1-vinylimidazoliumchlorid,
-methosulfat und -ethosulfat.

Bevorzugte Monomere C1) sind weiterhin von Vinylimidazolen verschiedene vinyl- und allylsubstituierte Stickstoffheterocyclen, ausgewählt unter 2-Vinylpyridin, 4-Vinylpyridin, 2-Allylpyridin, 4-Allylpyridin, 2-Vinylpiperidin, 4-Vinylpiperidin und den durch Protonierung oder durch Quaternisierung erhaltenen Salzen davon.

Insbesondere enthält die Monomerzusammensetzung M1) wenigstens ein Comonomer C1), ausgewählt unter 1-Vinylimidazol, 2-Vinylpyridin, 4-Vinylpyridin, 2-Allylpyridin, 4-Allylpyridin und den durch Protonierung oder durch Quaternisierung erhaltenen Salzen davon. Speziell enthält die Monomerzusammensetzung M1) als Comonomer C1) 1-Vinylimidazol.

### Monomer C2)

Die Monomerzusammensetzung M1) kann zusätzlich wenigstens ein Monomer C2) enthalten, ausgewählt unter Verbindungen der allgemeinen Formeln (I.a) und (I.b), wie zuvor definiert.

In den Formeln I.a) und I.b) steht k vorzugsweise für eine ganze Zahl von 1 bis 500, besonders bevorzugt 2 bis 400, insbesondere 3 bis 250. Bevorzugt steht I für eine ganze Zahl von 0 bis 100.

Bevorzugt steht R¹ in der Formel I.a) für Wasserstoff, Methyl, Ethyl, n-Propyl, Isopropyl, n-Butyl, sec.-Butyl, tert.-Butyl, n-Pentyl oder n-Hexyl, insbesondere für Wasserstoff, Methyl oder Ethyl.

Vorzugsweise steht R² in den Formeln I.a) und I.b) für n-Octyl, 1,1,3,3-Tetramethylbutyl, Ethylhexyl, n-Nonyl, n-Decyl, n-Undecyl, Tridecyl, Myristyl, Pentadecyl, Palmityl, Heptadecyl, Octadecyl, Nonadecyl, Arrachinyl, Behenyl, Lignocerenyl, Cerotinyl, Melissinyl, Palmitoleinyl, Oleyl, Linolyl, Linolenyl, Stearyl, Lauryl.

Vorzugsweise steht X in der Formel I.a) für O oder NH, insbesondere für O.

Besonders bevorzugt enthält die Monomerzusammensetzung M1) wenigstens ein Monomer C2), das ausgewählt ist unter Verbindungen der allgemeinen Formeln (I.a1) und (I.b1) 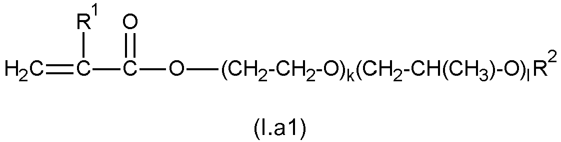 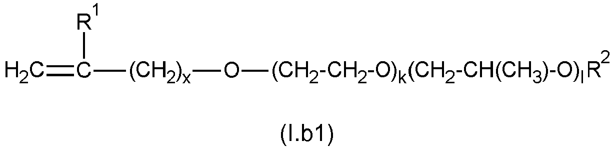 worin
die Reihenfolge der Alkylenoxideinheiten beliebig ist,
- x: für 0, 1 oder 2 steht,
- k und l: unabhängig voneinander für eine ganze Zahl von 0 bis 100 stehen, wobei die Summe aus k und l mindestens 2 beträgt, vorzugsweise mindestens 5 beträgt,
- R¹: für Wasserstoff oder Methyl steht,
- R²: für Wasserstoff, C₁-C₄-Alkyl steht,

In den Formeln I.a1) und I.b1) steht k vorzugsweise für eine ganze Zahl von 1 bis 100, besonders bevorzugt 2 bis 50, insbesondere 3 bis 30. Bevorzugt steht I für eine ganze Zahl von 0 bis 50.

Vorzugsweise steht R² in den Formeln I.a1) und I.b1) für Wasserstoff, Methyl, Ethyl, n-Propyl, Isopropyl, n-Butyl, sec.-Butyl oder tert.-Butyl.

In der Formel I.b1) steht x vorzugsweise für 1 oder 2.

Geeignete Polyetheracrylate I.a) bzw. I.a1) sind z. B. die Polykondensationsprodukte der zuvor genannten α,β-ethylenisch ungesättigten Mono- und/oder Dicarbonsäuren und deren Säurechloriden, -amiden und -anhydriden mit Polyetherolen. Geeignete Polyetherole können leicht durch Umsetzung von Ethylenoxid, 1,2-Propylenoxid und/oder Epichlorhydrin mit einem Startermolekül, wie Wasser oder einem kurzkettigen Alkohol R²-OH hergestellt werden. Die Alkylenoxide können einzeln, alternierend nacheinander oder als Mischung eingesetzt werden. Die Polyetheracrylate I.a1) können allein oder in Mischungen zur Herstellung der erfindungsgemäß eingesetzten Polymere verwendet werden.

Geeignete Allylalkoholalkoxilate I.b) bzw. I.b1) sind z. B. die Veretherungsprodukte von Allylchlorid mit entsprechenden Polyetherolen. Geeignete Polyetherole können leicht durch Umsetzung von Ethylenoxid, 1,2-Propylenoxid und/oder Epichlorhydrin mit einem Starteralkohol R²-OH hergestellt werden. Die Alkylenoxide können einzeln, alternierend nacheinander oder als Mischung eingesetzt werden. Die Allylalkoholalkoxilate I.b) können allein oder in Mischungen zur Herstellung der erfindungsgemäß eingesetzten Polymere verwendet werden.

Speziell wird als Monomer C2) Methyldiglycolacrylat, Methyldiglycolmethacrylat, Ethyldiglycolacrylat oder Ethyldiglycolmethacrylat eingesetzt. Bevorzugt ist Ethyldiglycolacrylat.

### Monomer C3)

Die Monomerzusammensetzung M1) kann zusätzlich wenigstens ein Monomer C3) enthalten, ausgewählt unter Vinylaromaten. Bevorzugte Vinylaromaten C3) sind Styrol, 2-Methylstyrol, 4-Methylstyrol, 2-(n-Butyl)styrol, 4-(n-Butyl)styrol, 4-(n-Decyl)styrol und Mischungen davon. Besonders bevorzugt sind Styrol und 2-Methylstyrol, insbesondere Styrol.

### Monomer C4)

Die Monomerzusammensetzung M1) kann zusätzlich wenigstens einen ungesättigten Kohlenwasserstoff C4) enthalten, ausgewählt unter C₂-C₁₀-Monoolefinen und nichtaromatischen Kohlenwasserstoffen mit wenigstens zwei konjugierten Doppelbindungen.

Beispiele für C₂-C₁₀-Monoolefine sind Ethen, Propen, But-1-en, But-2-en, Isobuten, Pent-1-en, Pent-2-en, 2-Methyl-but-1-en, 2-Methyl-but-2-en, 3-Methyl-but-1-en, 3-Methyl-but-2-en, 2,2-Dimethylprop-1-en, Hex-1-en, Hex-2-en, Hex-3-en, Hept-1-en, Hept-2-en, Hept-3-en, Oct-1-en, Oct-2-en, Oct-3-en, Oct-4-en, Non-1-en, Non-2-en, Non-3-en, Non-4-en, Dec-1-en, Dec-2-en, Dec-3-en, Dec-4-en, Dec-5-en und deren Stellungsisomere sowie ungesättigt terminierte Oligomere und Polymere der o.g. Olefine, insbesondere der α-Olefine (Ethen, Propen, But-1-en, Pent-1-en, Hex-1-en, Hept-1-en, Oct-1-en, Non-1-en, Dec-1-en)

Nichtaromatische Kohlenwasserstoffe mit wenigstens zwei konjugierten Doppelbindungen bezeichnen sowohl aliphatische als auch cycloaliphatische ungesättigte Kohlenwasserstoffe mit wenigstens zwei konjugierten Doppelbindungen. Bei den cycloaliphatische ungesättigten Kohlenwasserstoffen mit wenigstens zwei konjugierten Doppelbindungen handelt es sich entweder um solche, die nicht die durch die Ringgröße vorgegebene maximale Anzahl an konjugierten C-C-Doppelbindungen enthalten, oder um solche, die zwar die durch die Ringgröße vorgegebene maximale Anzahl an konjugierten C-C-Doppelbindungen enthalten, aber nicht der Hückel-Regel entsprechen; sei es weil sie homoaromatisch, antiaromatisch oder ein nichtaromatisches Polyen sind.

Aliphatische Kohlenwasserstoffe mit wenigstens zwei konjugierten Doppelbindungen enthalten in der Regel 4 bis 20 Kohlenstoffatome. Beispiele für aliphatische Kohlenwasserstoffe mit wenigstens zwei konjugierten Doppelbindungen sind 1,3-Butadien, 1,3-Pentadien, Isopren, 1,3-Hexadien, 2,4-Hexadien,1,3,5-Hexatrien, 1,3-Heptadien, 2,4-Heptadien, 1,3,4-Heptatrien, 1,3-Octadien, 2,4-Octadien, 3,5-Octadien, 1,3,5-Octatrien, 2,4,6-Octatrien, 1,3,5,7-Octattetraen und dergleichen.

Cycloaliphatische Kohlenwasserstoffe mit wenigstens zwei konjugierten Doppelbindungen enthalten in der Regel 4 bis 20 Kohlenstoffatome als Ringglieder. Beispiele sind 1,3-Cyclopentadien, 1,3-Cyclohexadien, 1,3-Cycloheptadien, 1,3,5-Cycloheptatrien, 1,3-Cyclootadien, 1,3,5-Cyclootatrien, 1,3,5,7-Cyclooctatetraen und dergleichen.

Bevorzugte Monomere C4) sind Ethen, Propen, Buten, Isobuten, Diisobuten, Isopren, 1,3-Butadien und Mischungen davon.

### Monomer C5)

Die Monomerzusammensetzung M1) kann zusätzlich wenigstens ein Monomer C5) enthalten, ausgewählt unter Estern α,β-ethylenisch ungesättigter Mono- und Dicarbonsäuren mit C₁-C₃₀-Alkanolen.

Geeignete Ester α,β-ethylenisch ungesättigter Mono- und Dicarbonsäuren mit C₁-C₃₀-Alkanolen sind z. B. Methyl(meth)acrylat, Methylethacrylat, Ethyl(meth)acrylat, Ethylethacrylat, n-Propyl(meth)acrylat, Isopropyl(meth)acrylat, n-Butyl(meth)acrylat, tert.-Butyl(meth)acrylat, tert.-Butylethacrylat, n-Pentyl(meth)acrylat, n-Hexyl(meth)acrylat, n-Heptyl(meth)acrylat, n-Octyl(meth)acrylat,1,1,3,3-Tetramethylbutyl(meth)acrylat, Ethylhexyl(meth)acrylat, n-Nonyl(meth)acrylat, n-Decyl(meth)acrylat, n-Undecyl(meth)acrylat, Tridecyl(meth)acrylat, Myristyl(meth)acrylat, Pentadecyl(meth)acrylat, Palmityl(meth)acrylat, Heptadecyl(meth)acrylat, Nonadecyl(meth)acrylat, Arrachinyl(meth)acrylat, Behenyl(meth)acrylat, Lignocerenyl(meth)acrylat, Cerotinyl(meth)acrylat, Melissinyl(meth)acrylat, Palmitoleinyl(meth)acrylat, Oleyl(meth)acrylat, Linolyl(meth)acrylat, Linolenyl(meth)acrylat, Stearyl(meth)acrylat, Lauryl(meth)acrylat und Mischungen davon.

### Monomer C6)

Die Monomerzusammensetzung M1) kann zusätzlich wenigstens ein Monomer C6) enthalten, ausgewählt unter Verbindungen mit einer radikalisch polymerisierbaren α,β-ethylenisch ungesättigten Doppelbindung und wenigstens einer kationogenen und/oder kationischen Gruppe pro Molekül,

Bevorzugt handelt es sich bei den kationogenen und/oder kationischen Gruppen der Monomere C6) um stickstoffhaltige Gruppen, wie primäre, sekundäre und tertiäre Aminogruppen sowie quaternäre Ammoniumgruppen. Vorzugsweise handelt es sich bei den stickstoffhaltigen Gruppen um tertiäre Aminogruppen oder quaternäre Ammoniumgruppen. Geladene kationische Gruppen lassen sich aus den Aminstickstoffen entweder durch Protonierung oder durch Quaternisierung mit Säuren oder Alkylierungsmitteln erzeugen. Dazu zählen z. B. Carbonsäuren, wie Milchsäure, oder Mineralsäuren, wie Phosphorsäure, Schwefelsäure und Salzsäure, oder als Alkylierungsmittel C₁-C₄-Alkylhalogenide oder -sulfate, wie Ethylchlorid, Ethylbromid, Methylchlorid, Methylbromid, Dimethylsulfat und Diethylsulfat. Eine Protonierung oder Quaternisierung kann im Allgemeinen sowohl vor als auch nach der Polymerisation erfolgen.

Vorzugsweise sind die Monomere C6) ausgewählt unter Estern α,β-ethylenisch ungesättigter Mono- und Dicarbonsäuren mit Aminoalkoholen, welche am Aminstickstoff mono- oder dialkyliert sein können, Amiden α,β-ethylenisch ungesättigter Mono- und Dicarbonsäuren mit Diaminen, welche mindestens eine primäre oder sekundäre Aminogruppe aufweisen, N,N-Diallylamin, N,N-Diallyl-N-alkylaminen und deren Derivaten und Mischungen davon.

Die Ester von α,β-ethylenisch ungesättigten Mono- und Dicarbonsäuren mit Aminoalkoholen, welche am Aminstickstoff mono- oder dialkyliert sein können, leiten sich bevorzugt von C₂-C₁₂-Aminoalkoholen, welche am Aminstickstoff C₁-C₈-mono- oder -dialkyliert sind. Als Säurekomponente dieser Ester eignen sich z. B. Acrylsäure, Methacrylsäure, Fumarsäure, Maleinsäure, Itaconsäure, Crotonsäure, Maleinsäureanhydrid, Monobutylmaleat und Gemische davon. Bevorzugt werden als Säurekomponente Acrylsäure, Methacrylsäure und deren Gemische eingesetzt.

Bevorzugte Monomere C6) sind N-Methylaminoethyl(meth)acrylat, N-Ethylaminoethyl(meth)acrylat, N-(n-Propyl)aminoethyl(meth)acrylat, N-(tert.-Butyl)aminoethyl(meth)acrylat, N,N-Dimethylaminomethyl(meth)acrylat, N,N-Dimethylaminoethyl(meth)acrylat, N,N-Diethylaminomethyl(meth)acrylat, N,N-Diethylaminoethyl(meth)acrylat, N,N-Dimethylaminopropyl(meth)acrylat, N,N-Diethylaminopropyl(meth)acrylat und N,N-Dimethylaminocyclohexyl(meth)acrylat.

Geeignete Monomere C6) sind weiterhin die Amide der zuvor genannten α,β-ethylenisch ungesättigten Mono- und Dicarbonsäuren mit Diaminen, welche mindestens eine primäre oder sekundäre Aminogruppe aufweisen. Bevorzugt sind Diamine, die eine tertiäre und eine primäre oder sekundäre Aminogruppe aufweisen.

Bevorzugt als Monomere C6) sind z. B. N-[tert.-Butylaminoethyl](meth)acrylamid, N-[2-(Dimethylamino)ethyl]acrylamid, N-[2-(Dimethylamino)ethyl]methacrylamid, N-[3-(Dimethylamino)propyl]acrylamid, N-[3-(Dimethylamino)propyl]methacrylamid, N-[4-(Dimethylamino)butyl]acrylamid, N-[4-(Dimethylamino)butyl]methacrylamid, N-[2-(Diethylamino)ethyl]acrylamid, N-[4-(Dimethylamino)cyclohexyl]acrylamid und N-[4-(Dimethylamino)cyclohexyl]methacrylamid.

### Monomer C7)

Die Monomerzusammensetzung M1) kann zusätzlich wenigstens ein Monomer C7) enthalten, ausgewählt unter Estern von Vinylalkohol oder Allylalkohol mit C₁-C₃₀-Monocarbonsäuren.

Geeignete Ester von Vinylalkohol mit C₁-C₃₀-Monocarbonsäuren sind z. B. die Ester von Vinylalkohol mit C₁-C₃₀-Monocarbonsäuren wie Essigsäure, Propionsäure, n-Butansäure, 2-Methylpropansäure, n-Pentansäure, 2,2-Dimethylpropansäure, n-Hexansäure, n-Heptansäure, n-Octansäure, 2,2,4,4-Tetramethylpentansäure, 2-Ethylhexansäure, n-Nonansäure, n-Decansäure, n-Undecansäure, Tridecansäure, Myristinsäure, Pentadecansäure, Palmitinsäure, Heptadecansäure, Octadecansäure, Nonadecansäure, Arachinsäure, Behensäure, Lignocerinsäure, Cerotinsäure, Melissinsäure, Palmitoleinsäure, Ölsäure, Linolsäure, Linolensäure, Stearinsäure, Laurinsäure.

### Monomer C8)

Die Monomerzusammensetzung M1) kann zusätzlich wenigstens ein Monomer C8) enthalten, ausgewählt unter Estern α,β-ethylenisch ungesättigter Mono- und Dicarbonsäuren mit C₂-C₃₀-Alkandiolen und Amiden α,β-ethylenisch ungesättigter Mono- und Dicarbonsäuren mit C₂-C₃₀-Aminoalkoholen mit einer primären oder sekundären Aminogruppe.

Geeignete Ester α,β-ethylenisch ungesättigter Mono- und Dicarbonsäuren mit C₂-C₃₀-Alkandiolen sind 2-Hydroxyethylacrylat, 2-Hydroxyethylmethacrylat, 2-Hydroxyethylethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat, 3-Hydroxy-2-ethylhexylmethacrylat, etc.

Geeignete Amide α,β-ethylenisch ungesättigter Mono- und Dicarbonsäuren mit C₂-C₃₀-Aminoalkoholen mit einer primären oder sekundären Aminogruppe sind 2-Hydroxyethylacrylamid, 2-Hydroxyethylmethacrylamid, 2-Hydroxyethylethacrylamid, 2-Hydroxypropylacrylamid, 2-Hydroxypropylmethacrylamid, 3-Hydroxypropylacrylamid, 3-Hydroxypropylmethacrylamid, 3-Hydroxybutylacrylamid, 3-Hydroxybutylmethacrylamid, 4-Hydroxybutylacrylamid, 4-Hydroxybutylmethacrylamid, 6-Hydroxyhexylacrylamid, 6-Hydroxyhexylmethacrylamid, 3-Hydroxy-2-ethylhexylacrylamid und 3-Hydroxy-2-ethylhexylmethacrylamid.

### Monomer C9)

Die Monomerzusammensetzung M1) kann zusätzlich wenigstens ein Monomer C9) enthalten, ausgewählt unter Amidgruppen-haltigen Monomeren, die von I.a, C6) und C8) verschieden sind.

Geeignete amidgruppenhaltige Monomere C9) sind Verbindungen der allgemeinen Formel (V) 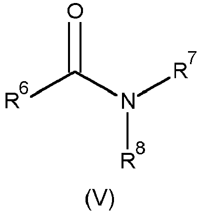 wobei
einer der Reste R⁶ bis R⁸ für eine Gruppe der Formel CH₂=CR⁹- mit R⁹ = H oder C₁-C₄-Alkyl steht und die übrigen Reste R⁶ bis R⁸ unabhängig voneinander für H, Alkyl, Cycloalkyl, Heterocycloalkyl, Aryl oder Hetaryl stehen,
wobei R⁶ und R⁷ gemeinsam mit der Amidgruppe, an die sie gebunden sind, auch für ein Lactam mit 5 bis 8 Ringatomen stehen können,
wobei R⁷ und R⁸ gemeinsam mit dem Stickstoffatom, an das sie gebunden sind, auch für einen fünf- bis siebengliedrigen Heterocyclus stehen können.

Bevorzugt sind die Monomere C9) ausgewählt unter primären Amiden α,β-ethylenisch ungesättigter Monocarbonsäuren, N-Vinylamiden gesättigter Monocarbonsäuren, N-Vinyllactamen, N-Alkyl- und N,N-Dialkylamiden α,β-ethylenisch ungesättigter Monocarbonsäuren und Mischungen davon.

Bevorzugte Monomere C9) sind N-Vinyllactame und deren Derivate, die z. B. einen oder mehrere C₁-C₆-Alkylsubstituenten, wie Methyl, Ethyl, n-Propyl, Isopropyl, n-Butyl, sec.-Butyl, tert.-Butyl, etc. aufweisen können. Dazu zählen z. B. N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam etc.

Besonders bevorzugt werden N-Vinylpyrrolidon und/oder N-Vinylcaprolactam eingesetzt.

Geeignete Monomere C9) sind weiterhin Acrylsäureamid und Methacrylsäureamid.

Geeignete N-Alkyl- und N,N-Dialkylamide α,β-ethylenisch ungesättigter Monocarbonsäuren sind beispielsweise Methyl(meth)acrylamid, Methylethacrylamid, Ethyl(meth)acrylamid, Ethylethacrylamid, n-Propyl(meth)acrylamid, Isopropyl(meth)-acrylamid, n-Butyl(meth)acrylamid, tert.-Butyl(meth)acrylamid, tert.-Butylethacrylamid, n-Pentyl(meth)acrylamid, n-Hexyl(meth)acrylamid, n-Heptyl(meth)acrylamid, n-Octyl(meth)acrylamid,1,1,3,3-Tetramethylbutyl(meth)acrylamid, Ethylhexyl(meth)acrylamid, n-Nonyl(meth)acrylamid, n-Decyl(meth)acrylamid, n-Undecyl(meth)acrylamid, Tridecyl(meth)acrylamid, Myristyl(meth)acrylamid, Pentadecyl(meth)acrylamid, Palmityl(meth)acrylamid, Heptadecyl(meth)acrylamid, Nonadecyl(meth)acrylamid, Arrachinyl(meth)acrylamid, Behenyl(meth)acrylamid, Lignocerenyl(meth)acrylamid, Cerotinyl(meth)acrylamid, Melissinyl(meth)acrylamid, Palmitoleinyl(meth)acrylamid, Oleyl(meth)acrylamid, Linolyl(meth)acrylamid, Linolenyl(meth)acrylamid, Stearyl(meth)acrylamid, Lauryl(meth)acrylamid, N-Methyl-N-(n-octyl)(meth)acrylamid, N,N-Di-(n-octyl)(meth)acrylamid und Mischungen davon.

Als Monomere C9) geeignete offenkettige N-Vinylamidverbindungen sind beispielsweise N-Vinylformamid, N-Vinyl-N-methylformamid, N-Vinylacetamid, N-Vinyl-N-methylacetamid, N-Vinyl-N-ethylacetamid, N-Vinylpropionamid, N-Vinyl-N-methylpropionamid, N-Vinyl-butyramid und Mischungen davon. Bevorzugt wird N-Vinylformamid eingesetzt.

### Monomer C10)

Die Monomerzusammensetzung M1) kann zusätzlich wenigstens ein Monomer C10) enthalten, ausgewählt unter α,β-ethylenisch ungesättigten Nitrilen.

Geeignete α,β-ethylenisch ungesättigte Nitrile sind Acrylnitril oder Methacrylnitril.

### Monomer C11)

Die Monomerzusammensetzung M1) kann zusätzlich wenigstens ein Monomer C11) enthalten, ausgewählt unter Vinylhalogeniden und Vinylidenhalogeniden.

Geeignete Vinylhalogenide und Vinylidenhalogeniden sind Vinylchlorid, Vinylidenchlorid, Vinylfluorid, Vinylidenfluorid und Mischungen davon.

### Monomer C12)

Die Monomerzusammensetzung M1) kann zusätzlich wenigstens ein Monomer C12) enthalten, ausgewählt unter ethylenisch ungesättigten Monomeren mit Harnstoffgruppen.

Geeignete Monomere C12) mit Harnstoffgruppen sind N-vinylharnstoff, N-Allylharnstoff oder Derivative von Imidazolidin-2-on. Diese umfassen N-Vinyl- und
N-Allylimidazolidin-2-on, N-Vinyloxyethylimidazolidin-2-on,
N-(2-(meth)acrylamidoethyl)imidazolidin-2-on,
N-(2-(meth)acryloxyethyl)imidazolidin-2-on (d.h., 2-Ureido(meth)acrylat),
N-[2-((meth)acryloxyacetamido)ethyl]imidazolidin-2-on, etc.

In einer besonderen Ausführungsform enthält die Monomerzusammensetzung M1) Acrylsäure und gegebenenfalls wenigstens ein Comonomer, das ausgewählt ist unter von Acrylsäure verschiedenen α,β-ethylenisch ungesättigten Mono- oder Dicarbonsäuren, Salzen, Anhydriden, Estern und Amiden solcher von Acrylsäure verschiedenen α,β-ethylenisch ungesättigten Mono- oder Dicarbonsäuren, olefinisch ungesättigten Sulfonsäuren, Salzen olefinisch ungesättigter Sulfonsäuren, Stickstoffheterocyclen mit einer radikalisch polymerisierbaren α,β-ethylenisch ungesättigten Doppelbindung, C₂-C₁₀-Monoolefinen, nichtaromatischen Kohlenwasserstoffen mit wenigstens zwei konjugierten Doppelbindungen, Vinylaromaten, N-Vinyllactamen und Mischungen davon.

In einer speziellen Ausführungsform enthält die Monomerzusammensetzung M1) Acrylsäure und gegebenenfalls wenigstens ein Comonomer, das ausgewählt ist unter Isobuten, Diisobuten, Methacrylsäure, 2-Acrylamido-2-methylpropansulfonsäure, Maleinsäure, Maleinsäureanhydrid, Itaconsäure, N-Vinylpyrrolidon, N-Vinylcaprolactam, N-Vinylimidazol, Styrol und Mischungen davon.

In einer ganz speziellen Ausführungsform enthält die Monomerzusammensetzung M1) Acrylsäure und gegebenenfalls wenigstens ein Comonomer, das ausgewählt ist unter Methacrylsäure, 2-Acrylamido-2-methylpropansulfonsäure und Mischungen davon.

Insbesondere besteht die Monomerzusammensetzung M1) zu mindestens 80 Gew-%, bevorzugt zu mindestens 90 Gew.-%, insbesondere zu mindestens 95 Gew.-%, bezogen auf das Gesamtgewicht der Monomerzusammensetzung M1), aus Acrylsäure.

Die Monomerzusammensetzung M1) kann die weiteren Monomere C1) bis C12) jeweils vorzugsweise in einer Menge von 0 bis 30 Gew.-%, besonders bevorzugt 0 bis 20 Gew.-%, insbesondere 0 bis 10 Gew.-%, bezogen auf das Gesamtgewicht der Monomerzusammensetzung M1), enthalten. Wenn die Monomerzusammensetzung M1) wenigstens ein Monomer ausgewählt unter C1) bis C12) enthält, so jeweils vorzugsweise in einer Menge von 0,1 bis 30 Gew.-%, besonders bevorzugt 1 bis 20 Gew.-%, insbesondere 1,5 bis 10 Gew.-%, bezogen auf das Gesamtgewicht der Monomerzusammensetzung M1).

In einer speziellen Ausführung enthält die Monomerzusammensetzung M1) außer den Monomeren A) und B) keine weiteren Comonomere.

Noch spezieller enthält die Monomerzusammensetzung M1) außer Acrylsäure keine weiteren Comonomere.

Die Polymerzusammensetzung P1) enthält im Wesentlichen unvernetzte Polymere. Die zur Herstellung der erfindungsgemäßen Polymerzusammensetzung P1) eingesetzte Monomerzusammensetzung M1) enthält somit insbesondere keine zugesetzten, vernetzend wirkenden Monomeren. Vernetzend wirkende Monomere im Sinne der Erfindung sind Verbindungen mit zwei oder mehr als zwei polymerisierbaren ethylenisch ungesättigten Doppelbindungen pro Molekül.

Bevorzugt enthält die Monomerzusammensetzung M1), bezogen auf das Gesamtgewicht, weniger als 0,1 Gew.-%, bevorzugter weniger als 0,05 Gew.-%, insbesondere weniger als 0,001 Gew.-% vernetzend wirkenden Monomere, die zwei oder mehr als zwei radikalisch polymerisierbare α,β-ethylenisch ungesättigte Doppelbindungen pro Molekül aufweisen.

In einer speziellen Ausführungsform enthält die Monomerzusammensetzung M1) keine vernetzend wirkenden Monomere, die zwei oder mehr als zwei polymerisierbare α,β-ethylenisch ungesättigte Doppelbindungen pro Molekül aufweisen.

### Polyetherkomponente PE)

Geeignet als Polyetherkomponente PE) sind Polyetherole mit einem zahlenmittleren Molekulargewicht von wenigstens 200 g/mol und deren Mono- und Di-(C₁-C₆-alkyl)ether.

Geeignete Polyetherole und deren Mono- und Di-(C₁-C₆-alkyl)ether können linear oder verzweigt, vorzugsweise linear sein. Geeignete Polyetherole und deren Mono- und Di-(C₁-C₆-alkyl)ether weisen im Allgemeinen ein zahlenmittleres Molekulargewicht im Bereich von etwa 200 bis 100000 g/mol, bevorzugt 300 bis 50000 g/mol, besonders bevorzugt 500 bis 40000 g/mol, auf. Geeignete Polyetherole sind beispielsweise wasserlösliche oder wasserdispergierbare nichtionische Polymere, die Alkylenoxid-Wiederholungseinheiten aufweisen. Vorzugsweise beträgt der Anteil an Alkylenoxid-Wiederholungseinheiten mindestens 30 Gew.-%, bezogen auf das Gesamtgewicht der Verbindung. Geeignete Polyetherole sind Polyalkylenglycole, wie Polyethylenglycole, Polypropylenglycole, Polytetrahydrofurane und Alkylenoxidcopolymere. Geeignete Alkylenoxide zur Herstellung von Alkylenoxidcopolymeren sind z. B. Ethylenoxid, Propylenoxid, Epichlorhydrin, 1,2- und 2,3-Butylenoxid. Geeignet sind beispielsweise Copolymerisate aus Ethylenoxid und Propylenoxid, Copolymerisate aus Ethylenoxid und Butylenoxid sowie Copolymerisate aus Ethylenoxid, Propylenoxid und mindestens einem Butylenoxid. Die Alkylenoxidcopolymere können die Alkylenoxideinheiten statistisch verteilt oder in Form von Blöcken einpolymerisiert enthalten. Vorzugsweise beträgt in den Ethylenoxid/Propylenoxid-Copolymeren der Anteil an von Ethylenoxid abgeleiteten Wiederholungseinheiten 40 bis 99 Gew.-%. Besonders bevorzugt als Polyetherkomponente PE) sind Ethylenoxid-Homopolymere und Ethylenoxid/Propylenoxid-Copolymere.

Geeignet als Polyetherkomponente PE) sind weiterhin die Mono- und Di-(C₁-C₂-alkyl)ether der zuvor beschriebenen Polyetherole. Bevorzugt sind Polyalkylenglycolmonomethylether und Polyalkylenglycoldimethylether.

Geeignet als Polyetherkomponente PE) sind weiterhin Polyethergruppen-haltige Tenside. Geeignet sind allgemein nichtionische und ionische Tenside, die wenigstens eine unpolare und wenigstens eine polare Gruppe aufweisen und die eine Polyethergruppe umfassen.

Die Polyethergruppen-haltigen Tenside PE) sind vorzugsweise ausgewählt unter Alkylpolyoxyalkylenether, Arylpolyoxyalkylenether, Alkylarylpolyoxyalkylenether, alkoxylierte tierische und/oder pflanzliche Fette und/oder Öle, Fettaminalkoxylate, Fettsäureamidalkoxylate, Fettsäurediethanolamidalkoxylate, Polyoxyethylensorbitanfettsäureester, Alkylpolyethersulfate, Arylpolyethersulfate, Alkylarylpolyethersulfate, Alkylpolyethersulfonate, Arylpolyethersulfonate, Alkylarylpolyethersulfonate, Alkylpolyetherphosphateate, Arylpolyetherphosphate, Alkylarylpolyetherphosphate, Glycerinethersulfonate, Glycerinethersulfate, Monoglycerid(ether)sulfate, Fettsäureamidethersulfate, Polyoxyalkylensorbitanfettsäureestern und Mischungen davon.

Zu den bevorzugten nichtionischen Polyethergruppen-haltigen Tensiden PE) gehören beispielsweise:
- Alkylpolyoxyalkylenether, die sich von niedermolekularen C₃-C₆-Alkoholen oder von C₇-C₃₀-Fettalkoholen ableiten. Dabei kann die Etherkomponente aus Ethylenoxideinheiten, Propylenoxideinheiten, 1,2-Butylenoxideinheiten, 1,4-Butylenoxideinheiten und statistischen Copolymeren und Blockcopolymeren davon abgeleitet sein. Geeignete nichtionische Tenside umfassen unter anderem Tenside der allgemeinen Formel (VI)

   R¹⁰-O-(CH₂CH₂O)ₓ-(CHR¹¹CH₂O)_{y}-R¹² (VI),

   worin R¹⁰ ein linearer oder verzweigter Alkylrest mit 6 bis 22 C-Atomen ist,
   R¹¹ und R¹² unabhängig voneinander Wasserstoff oder ein linearer oder verzweigter Alkylrest mit 1 bis 10 C-Atomen oder H sind, wobei R¹² bevorzugt Methyl ist, und
   x und y unabhängig voneinander 0 bis 300 sind. Bevorzugt ist x = 1 bis 100 und y = 0 bis 30.

   Dazu zählen speziell auch Fettalkoholalkoxylate und Oxoalkoholalkoxylate, wie iso-Tridecylalkohol- und Oleylalkoholpolyoxyethylenether.
- Hydroxylgruppen-haltige Tenside der allgemeinen Formel (VII)

   R¹³-O-(CH₂CH₂O)ₛ-(CH₂CH₂CH₂O)ₜ-(CH₂CH₂CH₂CH₂O)ᵤ-(CH₂CHR¹⁴O)ᵥ-CH₂CH(OH)R¹⁵ ( VII)

   wobei
   in den Verbindungen der Formel (VII) die Reihenfolge der Alkylenoxideinheiten beliebig ist,
   s, t, u und v unabhängig voneinander für eine ganze Zahl von 0 bis 500 stehen, wobei die Summe aus s, t, u und v > 0 ist,
   R¹³ und R¹⁵ unabhängig voneinander für einen geradkettigen oder verzweigten, gesättigten C₁-C₄₀-Alkylrest oder einen ein- oder mehrfach ungesättigten C₂-C₄₀-Alkenylrest stehen, und
   R¹⁴ ausgewählt ist unter Methyl, Ethyl, n-Propyl, Isopropyl oder n-Butyl.

In den Verbindungen der allgemeinen Formel (VII) steht die Summe aus s, t, u und v vorzugsweise für einen Wert von 10 bis 300, besonders bevorzugt von 15 bis 200 und insbesondere von 20 bis 150.

Bevorzugt stehen t und u für 0. Dann steht die Summe aus s und v vorzugsweise für einen Wert von 10 bis 300, besonders bevorzugt von 15 bis 200 und insbesondere von 20 bis 150.

In den Verbindungen der allgemeinen Formel (VII) stehen vorzugsweise R¹³ und R¹⁵ unabhängig voneinander für einen geradkettigen oder verzweigten, gesättigten C₂-C₃₀-Alkylrest. Dabei können R¹³ und R¹⁵ auch für Mischungen verschiedener Alkylreste stehen.

In den Verbindungen der allgemeinen Formel (VII) steht R¹⁴ vorzugsweise für Methyl oder Ethyl, insbesondere für Methyl.

Eine bevorzugte Ausführung sind Hydroxylgruppen-haltige Tenside der allgemeinen Formel (VII.1)

R¹³-O-(CH₂CH₂O)ₛ-(CH₂CH(CH₃)O)ᵥ-CH₂CH(OH)R¹⁵ (VII.1)

wobei
die Reihenfolge der -(CH₂CH₂O)- und der (CH₂CH(CH₃)O)-Einheiten beliebig ist,
s und v unabhängig voneinander für eine ganze Zahl von 0 bis 500 stehen, wobei die Summe aus s und v > 0 ist, und
R¹³ und R¹⁵ unabhängig voneinander für einen geradkettigen, gesättigten C₁-C₃₀-Alkylrest oder einen verzweigten, gesättigten C₃-C₃₀-Alkylrest oder einen ein- oder mehrfach ungesättigten C₂-C₃₀-Alkenylrest stehen.

In den Verbindungen der allgemeinen Formel (VII.1) steht die Summe aus s und v vorzugsweise für einen Wert von 10 bis 300, besonders bevorzugt von 15 bis 200 und insbesondere von 20 bis 150.

Zur Gruppe dieser nichtionischen Tenside zählen beispielsweise Hydroxymischether der allgemeinen Formel (C₆₋₂₂-Alkyl)-CH(OH)CH₂O-(EO)₂₀₋₁₂₀-(C₂₋₂₆-Alkyl).
- Alkoholpolyoxyalkylenester der allgemeinen Formel (VIII)

   R¹⁶-O-(CH₂CH₂O)ₚ-(CH₂CHR¹⁷O)_{q}-C(=O)R¹⁸ (VIII)

   wobei
   in den Verbindungen der Formel (VIII) die Reihenfolge der Alkylenoxideinheiten beliebig ist,
   p und q unabhängig voneinander für eine ganze Zahl von 0 bis 500 stehen, wobei die Summe aus p und q > 0 ist,
   R¹⁶ und R¹⁸ unabhängig voneinander für einen geradkettigen oder verzweigten, gesättigten C₁-C₄₀-Alkylrest oder einen ein- oder mehrfach ungesättigten C₂-C₄₀-Alkenylrest stehen, und
   R¹⁷ ausgewählt ist unter Methyl, Ethyl, n-Propyl, Isopropyl oder n-Butyl.

In den Verbindungen der allgemeinen Formel (VIII) steht die Summe aus p und q vorzugsweise für einen Wert von 10 bis 300, besonders bevorzugt von 15 bis 200 und insbesondere von 20 bis 150.

In den Verbindungen der allgemeinen Formel (VIII) stehen vorzugsweise R¹⁶ und R¹⁸ unabhängig voneinander für einen geradkettigen oder verzweigten, gesättigten C₄-C₃₀-Alkylrest. Dabei können R¹⁶ und R¹⁸ auch für Mischungen verschiedener Alkylreste stehen.

In den Verbindungen der allgemeinen Formel (VIII) steht R¹⁷ vorzugsweise für Methyl oder Ethyl, insbesondere für Methyl.

Dazu zählt beispielsweise Laurylalkoholpolyoxyethylenacetat.
- Alkylarylalkoholpolyoxyethylenether, z. B. Octylphenol-polyoxyethylenether,
- alkoxylierte tierische und/oder pflanzliche Fette und/oder Öle, beispielsweise Maisölethoxylate, Rizinusölethoxylate, Talgfettethoxylate,
- Alkylphenolalkoxylate, wie beispielsweise ethoxyliertes iso-Octyl-, Octyl- oder Nonylphenol, Tributylphenolpolyoxyethylenether,
- Fettaminalkoxylate, Fettsäureamid- und Fettsäurediethanolamidalkoxylate, insbesondere deren Ethoxylate,
- Polyoxyalkylensorbitanfettsäureester.

Ein Beispiel für ein Alkylpolyethersulfat ist Natriumdodecylpoly(oxyethylen)sulfat (Natriumlaurylethersulfat, SLES). Ein bevorzugter kommerziell erhältlicher modifizierter Fettalkoholpolyglycolether ist ein beidseitig endständig CₓH₂ₓ₊₁/C_{y}H_{2y+1}-terminiertes Polyethylenoxid mit einer freien OH-Gruppe und x, y = 6 - 14.

### Polymer P2)

Die erfindungsgemäße Mehrschichtfolie umfasst wenigstens eine Schicht, die eine Polymerzusammensetzung P1) enthält oder aus einer Polymerzusammensetzung P1) besteht. Bevorzugt umfasst die erfindungsgemäße Mehrschichtfolie wenigstens eine weitere Schicht, die wenigstens ein Polymer P2) enthält oder aus wenigstens einem Polymer P2) besteht, das von den in der Polymerzusammensetzung P1) enthaltenen Polymeren verschieden ist.

In einer bevorzugten Ausführungsform sind die einzelnen Schichten der erfindungsgemäßen Mehrschichtfolien wasserlöslich oder wasserdispergierbar. Je nach Einsatzgebiet der erfindungsgemäßen Mehrschichtfolien kann es vorteilhaft sein, wenn die einzelnen Schichten eine bestimmte Löslichkeit in Wasser aufweisen. So kann es beispielsweise gewünscht sein, dass verschiedene Schichten eine unterschiedliche Löslichkeit in Wasser aufweisen. Auch kann es z.B. gewünscht sein, dass eine außenliegende Oberflächenschicht weniger stark wasserlöslich ist, um zu verhindern, dass es bei hoher Luftfeuchte und/oder hoher Kontaktfeuchte (z.B. Handfeuchte) zum Verblocken und/oder einer teilweisen Auflösung kommt. Alternativ dazu kann es aber auch gewünscht sein, dass eine außenliegende Oberflächenschicht stark wasserlöslich ist, um einen darin befindlichen oder damit ummantelten Wirkstoff bei Kontakt mit Wasser schnell freizusetzen. Eine solche Folie kann dann zum Schutz vor unerwünschtem Wasserkontakt eine wasserunlösliche Umverpackung aufweisen.

Je nach Einsatzgebiet der erfindungsgemäßen Mehrschichtfolien kann es weiterhin vorteilhaft sein, wenn die einzelnen Schichten eine temperaturabhängige Löslichkeit in Wasser aufweisen.

Die erfindungsgemäße Mehrschichtfolie umfasst vorzugsweise wenigstens eine weitere Schicht, die wenigstens ein Polymer P2) enthält oder aus wenigstens einem Polymer P2) besteht, das ausgewählt ist unter
- natürlichen und modifizierten Polysacchariden,
- Homo- und Copolymeren, die Wiederholungseinheiten enthalten, die sich von Vinylalkohol, Vinylestern, alkoxilierten Vinylalkoholen oder Mischungen davon ableiten,
- Homo- und Copolymeren, die wenigstens ein Monomer einpolymerisiert enthalten, das ausgewählt ist unter N-Vinylpyrrolidon, N-Vinylcaprolactam, N-Vinylimidazol, 2-Vinylpyridin, 4-Vinylpyridin, Salzen der drei letztgenannten Monomere, Vinylpyridin-N-oxid, N-carboxymethyl-4-vinylpyridiumhalogeniden und Mischungen davon,
- Homo- und Copolymeren der Acrylsäure und/oder Methacrylsäure, insbesondere Copolymeren, die wenigstens ein Acrylsäuremonomer, ausgewählt unter Acrylsäure, Acrylsäuresalzen und Mischungen davon und wenigstens ein Maleinsäuremonomer, ausgewählt unter Maleinsäure, Maleisäureanhydrid, Maleinsäuresalzen und Mischungen davon, einpolymerisiert enthalten,
- Copolymeren, die wenigstens ein (Meth)acrylsäuremonomer, ausgewählt unter Acrylsäure, Methacrylsäure, ihren Salzen und Mischungen davon und wenigstens ein hydrophobes Monomer, ausgewählt unter C₁-C₈-Alkylestern der (Meth)acrylsäure, C₂-C₁₀-Olefinen, Styrol und α-Methylstyrol einpolymerisiert enthalten,
- Copolymeren, die wenigstens ein Maleinsäuremonomer, ausgewählt unter Maleinsäure, Maleinsäureanhydrid, Maleinsäuresalzen und Mischungen davon und wenigstens ein C₂-C₈-Olefin einpolymerisiert enthalten,
- Homo- und Copolymeren des Acrylamids und/oder Methacrylamids,
- Polyaminosäuren,
- wasserlöslichen oder wasserdispergierbaren Polyamiden,
- Polyalkylenglykolen, Mono- oder Diethern von Polyalkylenglykolen, und
- Mischungen davon.

Die erfindungsgemäße Mehrschichtfolie umfasst besonders bevorzugt wenigstens eine weitere Schicht, die wenigstens ein Polymer P2) enthält oder aus wenigstens einem Polymer P2) besteht, das ausgewählt ist unter
- Celluloseethern und Celluloseestern,
- Homo- und Copolymeren, die Wiederholungseinheiten enthalten, die sich von Vinylalkohol, Vinylestern, alkoxylierten Vinylalkoholen oder Mischungen davon ableiten,
- Polymeren, ausgewählt unter Polyvinylpyrrolidon-Homopolymeren, Polyvinylimidazol-Homopolymeren, Copolymeren, die Vinylpyrrolidon und Vinylimidazol einpolymerisiert enthalten, Polyvinylpyridin-N-oxid, Poly-N-carboxymethyl-4-vinylpyridiumhalogeniden,
- Mischungen davon.

Die erfindungsgemäße Mehrschichtfolie umfasst insbesondere wenigstens eine weitere Schicht, die wenigstens ein Polymer P2) enthält oder aus wenigstens einem Polymer P2) besteht, das ausgewählt ist unter Cellulosederivaten, vorzugsweise Carboxyalkylcellulosen und Salzen davon, Sulfoalkylcellulosen und Salzen davon, sauren Schwefelsäureestersalzen von Cellulose, Alkylcellulosen, Hydroxyalkylcellulosen, (Hydroxyalkyl)alkylcellulosen und Mischung aus zwei oder mehr dieser Cellulosederivate.

Als Polymere P2) geeignete Polysaccharide sind natürliche Polysaccharide, wie z.B. Cellulose, Hemicellulose, Xyloglucan, Glykogen, Stärke (Amylose und Amylopektin), Dextran, Pektine, Inulin, Xanthan, Chitin, Callose, thermisch, hydrloytisch oder enzymatisch abgebaute Stärke z.B. Maltodextrin etc.

Bevorzugte modifizierte Polysaccharide sind z.B. Celluloseether, Celluloseester, Celluloseamide, etc.

Celluloseether sind Derivate der Cellulose, die durch teilweise oder vollständige Substitution der Wasserstoff-Atome in den Hydroxy-Gruppen der Cellulose entstehen. Celluloseether aus der Umsetzung von Cellulose mit mehr als einem Veretherungsmittel werden auch als Cellulose-Mischether bezeichnet.

Bevorzugte Celluloseether sind ausgewählt unter Alkylcellulosen, Hydroxyalkylcellulosen, (Hydroxyalkyl)alkylcellulosen, Carboxyalkylcellulosen und Salzen davon, (Carboxyalkyl)alkylcellulosen und Salzen davon, (Carboxyalkyl)(hydroxyalkyl)cellulosen und Salzen davon, (Carboxyalkyl)(hydroxyalkyl)alkylcellulosen und Salzen, Sulfoalkylcellulosen und Salzen davon.

Bevorzugt als Carboxyalkylrest sind der Carboxymethylrest und der Carboxyethylrest. Besonders bevorzugt als Carboxyalkylrest ist der Carboxymethylrest. Bevorzugt als Sulfoalkylrest sind der Sulfomethylrest und der Sulfoethylrest. Besonders bevorzugt als Sulfoalkylrest ist der Sulfomethylrest. Bevorzugte Salze sind die Natrium-, Kalium-, Calcium- und Ammoniumsalze.

Besonders bevorzugte Celluloseether sind ausgewählt unter Carboxymethylcellulose, Carboxyethylcellulose, Methylcellulose, Ethylcellulose, n-Propylcellulose, Ethylmethylcellulose, Hydroxyethylcellulose, Hydroxypropylcellulose, Hydroxybutylcellulose, Hydroxyethylmethylcellulose, Hydroxypropylmethylcellulose, Hydroxyethylethylcellulose, Hydroxypropylethylcellulose, Carboxymethylmethylcellulose, Carboxymethylethylcellulose, Carboxymethylhydroxyethylcellulose, Carboxymethylhydroxyethylmethylcellulose, Carboxymethylhydroxyethylethylcellulose, Sulfomethylcellulose und Sulfoethylcellulose. Dabei können die Carboxyalkylreste und die Sulfoalkylreste auch in Salzform vorliegen.

Celluloseester sind Derivate der Cellulose, die durch Veresterung der Hydroxygruppen mit Säuren, entstehen. Bevorzugt sind die Schwefelsäureester der Cellulose. In einer speziellen Ausführungsform wird die Schwefelsäure nur einer teilweisen Veresterung unterzogen, so dass die resultierenden Schwefelsäureester noch freie Säuregruppen oder deren Salze aufweisen. Besonders bevorzugt werden saure Schwefelsäureestersalze von Cellulose eingesetzt. Diese zeichnen sich durch ihre vergrauungsinhibierende Wirkung aus.

Bevorzugte modifizierte Polysaccharide sind ausgewählt unter Methylcellulose, Ethylcellulose, Propylcellulose, Methyl/Ethylcellulose, Ethyl/Propylcellulose, Carboxymethylcellulose, Salzen der Carboxymethylcellulose, Hydroxyethylcellulose, Hydroxypropylcellulose, Hydroxyethylmethylcellulose, Hydroxyethylethylcellulose, Hydroxypropylmethylcellulose, Hydroxypropylethylcellulose, etc.

In einer weiteren bevorzugten Ausführungsform sind die Polymere P2) ausgewählt unter Homo- und Copolymeren, die Wiederholungseinheiten enthalten, die sich von Vinylalkohol, Vinylestern, alkoxilierten Vinylalkoholen oder Mischungen davon ableiten.

Geeignete Vinylester (Vinylacylate) sind allgemein die Ester des Vinylalkohols mit C₁-C₁₅-Carbonsäuren, bevorzugt C₁-C₈-Carbonsäuren, besonders bevorzugt C₁-C₄-Carbonsäuren. Bevorzugte Vinylacylate sind Vinylacetat, Vinyl-n-propionat, Vinyl-n-butyrat, Vinyl-2-ethylhexanoat, Vinyllaurat, etc. Besonders bevorzugt ist Vinylacetat.

Teilweise oder vollständig verseifte (hydrolysierte) Polyvinylacetate (PVA) werden im Allgemeinen als "Polyvinylalkohol (PVOH)" bezeichnet. Teilverseifte Polyvinylacetate werden durch unvollständige Hydrolyse von Polyvinylacetaten gewonnen, d.h. das teilverseifte Polymer weist sowohl Estergruppen als auch Hydroxylgruppen auf. Die Verseifung der Polyvinylacetate kann in an sich bekannter Weise im Alkalischen oder Sauren, d.h. unter Zugabe von Säure oder Base, erfolgen.

Die anwendungstechnischen Eigenschaften von Polyvinylalkoholen werden unter anderem vom Polymerisationsgrad und dem Hydrolysegrad (Grad der Verseifung) bestimmt. Mit steigendem Verseifungsgrad nimmt dabei die Wasserlöslichkeit ab. Polyvinylalkohole mit Hydrolysegraden bis ca. 90 mol% sind im Allgemeinen kaltwasserlöslich. Polyvinylalkohole mit Hydrolysegraden von ca. 90 bis ca. 99,9 mol% sind im Allgemeinen nicht mehr kaltwasserlöslich, wohl aber heißwasserlöslich.

Als Polymere P2) geeignete Polyvinylalkohole weisen vorzugsweise einen Verseifungsgrad von 50 bis 99,9 mol-%, besonders bevorzugt von 70 bis 99 mol-%, insbesondere von 80 bis 98 mol-%, auf.

Als Polymere P2) geeignete Polyvinylalkohole weisen vorzugsweise ein gewichtsmittleres Molekulargewicht von 10000 bis 300000 g/mol, besonders bevorzugt von 15000 bis 250000 g/mol, auf.

Als Polymere P2) geeignete Polyvinylalkohole weisen vorzugsweise eine Viskosität von 2 bis 120 mPa s, besonders bevorzugt von 7 bis 70 mPa s und insbesondere von 15 bis 60 mPa s, gemessen nach DIN 53015 an einer 4%igen Lösung in Wasser, auf.

In einer weiteren bevorzugten Ausführungsform sind die Polymere P2) ausgewählt unter Homo- und Copolymeren, die wenigstens ein Monomer einpolymerisiert enthalten, das ausgewählt ist unter N-Vinylpyrrolidon, N-Vinylcaprolactam, N-Vinylimidazol, 2-Vinylpyridin, 4-Vinylpyridin, Salzen der drei letztgenannten Monomere, Vinylpyridin-N-oxid, N-carboxymethyl-4-vinylpyridiumhalogeniden und Mischungen davon.

N-Vinylimidazol, 2-Vinylpyridin und 4-Vinylpyridin können durch Protonierung oder Quaternisierung in die entsprechenden Salze überführt werden. Geeignete Säuren sind z. B. Mineralsäuren, wie Schwefelsäure, Salzsäure und Phosphorsäure, sowie Carbonsäuren. Zur Quaternisierung geeignete Alkylierungsmittel sind C₁-C₄-Alkylhalogenide oder C₁-C₄-Alkylsulfate, wie Ethylchlorid, Ethylbromid, Methylchlorid, Methylbromid, Dimethylsulfat und Diethylsulfat.

Bevorzugt sind Polyvinylpyrrolidon-Homopolymere und Copolymere, die N-Vinylpyrrolidon und ein weiteres davon verschiedenes ethylenisch ungesättigtes Monomer einpolymerisiert enthalten. Geeignete N-Vinylpyrrolidon-Copolymere sind ganz allgemein neutrale, anionische, kationische und amphotere Polymere.

Besonders bevorzugte N-Vinylpyrrolidon-Copolymere sind ausgewählt unter Copolymeren aus N-Vinylpyrrolidon und Vinylacetat, Copolymeren aus N-Vinylpyrrolidon und Vinylpropionat, Copolymeren aus N-Vinylpyrrolidon, Vinylacetat und Vinylpropionat, Copolymeren aus N-Vinylpyrrolidon und Vinylacrylat, Copolymeren aus N-Vinylpyrrolidon, Ethylmethacrylat und Methacrylsäure, Copolymeren aus N-Vinylpyrrolidon und N-Vinylimidazol und deren durch Protonierung und/oder Quaternisierung erhaltenen Derivaten, Copolymeren aus N-Vinylpyrrolidon und Dimethylaminoethyl-methacrylat und deren durch Protonierung und/oder Quaternisierung erhaltenen Derivaten, Copolymeren aus N-Vinylpyrrolidon, N-Vinylcaprolactam und N-Vinylimidazol und deren durch Protonierung und/oder Quaternisierung erhaltenen Derivaten.

In einer weiteren bevorzugten Ausführungsform sind die Polymere P2) ausgewählt unter Homo- und Copolymeren der Acrylsäure und/oder Methacrylsäure.

In einer ersten speziellen Ausführung der Homo- und Copolymere der Acrylsäure und/oder Methacrylsäure wird als Polymer P2) ein Acrylsäure-Homopolymer eingesetzt. Acrylsäure-Homopolymere P2) weisen vorzugsweise ein zahlenmittleres Molekulargewicht im Bereich von 800 bis 70000 g/mol, besonders bevorzugt von 900 bis 50000 g/mol, insbesondere von 1000 bis 20000 g/mol, speziell 1000 bis 10000 g/mol, auf. Der Begriff Acrylsäure-Homopolymer umfaßt dabei auch Polymere, in denen die Carbonsäuregruppen teilweise oder vollständig neutralisiert vorliegen. Dazu zählen Acrylsäure-Homopolymere, in denen die Carbonsäuregruppen teilweise oder vollständig in Form von Alkalimetallsalzen oder Ammoniumsalzen vorliegen. Bevorzugt sind Acrylsäure-Homopolymere, in denen die Carbonsäuregruppen protoniert sind oder in denen die Carbonsäuregruppen teilweise oder vollständig in Form von Natriumsalzen vorliegen. Als Polymere P2) besonders geeignete Homopolymere der Acrylsäure sind die Sokalan ® PA Marken der BASF SE.

In einer zweiten speziellen Ausführung der Homo- und Copolymere der Acrylsäure und/oder Methacrylsäure wird als Polymer P2) ein Copolymer eingesetzt, das wenigstens ein Acrylsäuremonomer, ausgewählt unter Acrylsäure, Acrylsäuresalzen und Mischungen davon und wenigstens ein Maleinsäuremonomer, ausgewählt unter Maleinsäure, Maleisäureanhydrid, Maleinsäuresalzen und Mischungen davon, einpolymerisiert enthält. Diese weisen vorzugsweise ein zahlenmittleres Molekulargewicht im Bereich von 2500 bis 150000 g/mol, besonders bevorzugt von 2800 bis 70000 g/mol, insbesondere von 2900 bis 50000 g/mol, spezieller 3000 bis 30000 g/mol, auf. Umfasst sind dabei auch Copolymere, in denen die Carbonsäuregruppen teilweise oder vollständig neutralisiert vorliegen. Dazu können entweder zur Polymerisation Monomere in Salzform eingesetzt werden oder das resultierende Copolymer wird einer teilweisen oder vollständigen Neutralisation unterzogen. Bevorzugt sind Copolymere, in denen die Carbonsäuregruppen protoniert sind oder teilweise oder vollständig in Form von Alkalimetallsalzen oder Ammoniumsalzen vorliegen. Bevorzugt als Alkalimetallsalze sind die Natrium- oder Kaliumsalze, speziell die Natriumsalze.

Bevorzugte Polymere P2) sind Copolymere von Maleinsäure (bzw. Maleinsäuremonomeren) und Acrylsäure (bzw. Acrylsäuremonomeren) im Gewichtsverhältnis 10:90 bis 95:5, besonders bevorzugt solche im Gewichtsverhältnis 30:70 bis 90:10.

Bevorzugte Polymere P2) sind weiterhin Terpolymere aus Maleinsäure (bzw. Maleinsäuremonomeren), Acrylsäure (bzw. Acrylsäuremonomeren) und einem Vinylester einer C₁-C₃-Carbonsäure im Gewichtsverhältnis von 10 (Maleinsäure) : 90 (Acrylsäure + Vinylester) bis 95 (Maleinsäure) : 10 (Acrylsäure + Vinylester). Das Gewichtsverhältnis von Acrylsäure zu Vinylester liegt vorzugsweise in einem Bereich von 30:70 bis 70:30.

Besonders geeignete Polymere P2) auf der Basis von Acrylsäuremonomeren und Maleinsäuremonomeren sind die entsprechenden Sokalan ® CP - Marken der BASF SE.
In einer dritten speziellen Ausführung der Homo- und Copolymere der Acrylsäure und/oder Methacrylsäure wird als Polymer P2) ein Copolymer, das wenigstens ein (Meth)acrylsäuremonomer, ausgewählt unter (Meth)acrylsäure, (Meth)acrylsäuresalzen und Mischungen davon und wenigstens ein hydrophobes Monomer enthält. Das hydrophobe Monomer ist insbesondere ausgewählt unter C₁-C₈-Alkylestern der (Meth)acrylsäure wie z.B. die Methyl-, Ethyl-, n- und iso-Propyl-, n-Butyl-und 2-Ethylhexylester der (Meth)acrylsäure und C₂-C₁₀-Olefinen wie z.B. Ethen, Propen, 1,2-Buten, Isobuten, Disobuten, Styrol und α-Methylstyrol.
In einer weiteren bevorzugten Ausführungsform wird als Polymer P2) ein Copolymer von wenigstens einem Maleinsäuremonomer, ausgewählt unter Maleinsäure, Maleinsäureanhydrid, Maleinsäuresalzen und Mischungen davon mit wenigstens einem C₂-C₈-Olefin eingesetzt. Geeignet sind dabei auch Copolymere, die wenigstens ein Maleinsäuremonomer, ausgewählt unter Maleinsäure, Maleinsäureanhydrid, Maleinsäuresalzen und Mischungen davon, wenigstens ein C₂-C₈-Olefin und wenigstens ein weiteres davon verschiedenes Comonomer einpolymerisiert enthalten.

Besonders bevorzugt sind Copolymere, die wenigstens ein Maleinsäuremonomer, ausgewählt unter Maleinsäure, Maleinsäureanhydrid, Maleinsäuresalzen und Mischungen davon und wenigstens ein C₂-C₈-Olefin als alleinige Monomere einpolymerisiert enthalten. Diese weisen vorzugsweise ein zahlenmittleres Molekulargewicht im Bereich von 3000 bis 150000 g/mol, besonders bevorzugt von 5000 bis 70000 g/mol, insbesondere von 8000 bis 50000 g/mol, spezieller 10000 bis 30000 g/mol, auf. Umfaßt sind dabei auch Copolymere, in denen die Carbonsäuregruppen teilweise oder vollständig neutralisiert vorliegen. Dazu können entweder zur Polymerisation Maleinsäuresalze eingesetzt werden oder das resultierende Copolymer wird einer teilweisen oder vollständigen Neutralisation unterzogen. Bevorzugt sind Copolymere, in denen die Carbonsäuregruppen protoniert sind oder teilweise oder vollständig in Form von Alkalimetallsalzen oder Ammoniumsalzen vorliegen. Bevorzugt als Alkalimetallsalze sind die Natrium- oder Kaliumsalze, speziell die Natriumsalze.

Eine spezielle Ausführung sind Copolymere von Maleinsäure mit C₂-C₈-Olefinen im Molverhältnis 40:60 bis 80:20, wobei Copolymere von Maleinsäure mit Ethylen, Propylen, Isobuten, Diisobuten oder Styrol besonders bevorzugt sind. Besonders geeignete polymere carbonsäuregruppenhaltige Verbindungen auf der Basis von Olefinen und Maleinsäure sind ebenfalls die entsprechenden Sokalan ® CP - Marken der BASF SE.

Eine weitere bevorzugte Ausführungsform sind Copolymere, die wenigstens ein Maleinsäuremonomer, ausgewählt unter Maleinsäure, Maleinsäureanhydrid, Maleinsäuresalzen und Mischungen davon, wenigstens ein C₂-C₈-Olefin und wenigstens ein Acrylsäuremonomer, ausgewählt unter Acrylsäure, Acrylsäuresalzen und Mischungen davon, einpolymerisiert enthalten.

Eine weitere bevorzugte Ausführungsform sind Copolymere, die wenigstens ein Maleinsäuremonomer, ausgewählt unter Maleinsäure, Maleinsäureanhydrid, Maleinsäuresalzen und Mischungen davon, wenigstens ein C₂-C₈-Olefin und wenigstens einen Ester der (Meth)acrylsäure einpolymerisiert enthalten. Der Ester der (Meth)acrylsäure ist dann insbesondere ausgewählt unter C₁-C₈-Alkylestern der (Meth)acrylsäure wie z.B. die Methyl-, Ethyl-, n- und iso-Propyl-, n-Butyl-und 2-Ethylhexylester der (Meth)acrylsäure.

In einer weiteren bevorzugten Ausführungsform sind die Polymere P2) ausgewählt unter Homo- und Copolymeren die wenigstens ein Monomer einpolymerisiert enthalten, das ausgewählt ist unter Acrylamid, Methacrylamid und Mischungen davon. Bevorzugt sind diese Polymere P2) wasserlöslich oder wasserdispergierbar. Insbesondere sind diese Polymere P2) wasserlöslich.

In einer speziellen Ausführungsform sind die Polymere P2) ausgewählt unter Homopolymeren des Acrylamids oder Methacrylamids.

In einer weiteren speziellen Ausführungsform sind die Polymere P2) ausgewählt unter Copolymeren des Acrylamids und/oder Methacrylamids. Diese enthalten wenigstens ein Comonomer einpolymerisiert, das ausgewählt ist unter von Acrylamid und Methacrylamid verschiedenen hydrophilen Monomeren (A1), monoethylenisch ungesättigten, amphiphilen Monomeren (A2) sowie weiteren ethylenisch ungesättigten Monomeren (A3).

Geeignete hydrophile, monoethylenisch ungesättigte Monomere (A1) sind neutrale Monomere, wie N-Methyl(meth)acrylamid, N,N'-Dimethyl(meth)acrylamid oder N-Methylol(meth)acrylamid, Hydroxy- und/oder Ethergruppen umfassende Monomere, wie beispielsweise Hydroxyethyl(meth)acrylat, Hydroxypropyl(meth)acrylat, Allylalkohol, Hydroxyvinylethylether, Hydroxyvinylpropylether, Hydroxyvinylbutylether, Polyethylenglykol(meth)acrylat, N-Vinylformamid, N-Vinylacetamid, N-Vinylpyrrolidon oder N-Vinylcaprolactam sowie Vinylester, wie beispielsweise Vinylformiat oder Vinylacetat. N-Vinylderivate können nach Polymerisation zu Vinylamin-Einheiten, Vinylester zu Vinylalkohol-Einheiten hydrolysiert werden. Geeignete hydrophile, monoethylenisch ungesättigte Monomere (A1) sind weiterhin Monomere, welche mindestens eine saure Gruppe bzw. deren Salze umfassen. Dazu zählen Acrylsäure, Methacrylsäure, Crotonsäure, Itaconsäure, Maleinsäure, Fumarsäure, Vinylsulfonsäure, Allylsulfonsäure, 2-Acrylamido-2-methylpropansulfonsäure, 2-Methacrylamido-2-methylpropansulfonsäure, 2-Acrylamidobutansulfonsäure, 3-Acrylamido-3-methylbutansulfonsäure, 2-Acrylamido-2,4,4-trimethylpentansulfonsäure, Vinylphosphonsäure, Allylphosphonsäure, N-(Meth)acrylamidoalkylphosphonsäuren (Meth)acryloyloxyalkylphosphonsäuren und Salze und Mischungen davon. Bei den weiteren, monoethylenisch ungesättigten, hydrophilen Monomeren kann es sich um hydrophile, kationische Monomere handeln. Geeignete kationische Monomere (A1c) umfassen insbesondere Ammoniumgruppen aufweisende Monomere, insbesondere Ammoniumderivate von N-(ω-Aminoalkyl)(meth)acrylamiden oder ω-Aminoalkyl(meth)acrylestern.

Bei den amphiphilen Monomeren (A2) handelt es sich um monoethylenisch ungesättigte Monomere, welche mindestens eine hydrophile Gruppe und mindestens eine, bevorzugt terminale hydrophobe Gruppe aufweisen.

Bei den Monomeren (A3) kann es sich beispielsweise um monoethylenisch ungesättigte Monomere handeln, welche einen hydrophoberen Charakter haben als die hydrophilen Monomere (A1) und die dementsprechend nur in geringem Maße wasserlöslich sind. Beispiele derartiger Monomere umfassen N-Alkyl- und N,N,'-Dialkyl(meth)acrylamide, wobei die Anzahl der Kohlenstoffatome in den Alkylresten zusammen mindestens 3, bevorzugt mindestens 4 beträgt. Beispiele derartiger Monomere umfassen N-Butyl(meth)acrylamid, N-Cyclohexyl(meth)acrylamid oder N-Benzyl(meth)acrylamid.

In einer weiteren bevorzugten Ausführungsform sind die Polymere P2) ausgewählt unter Polyaminosäuren. Geeignete Polyaminosäuren sind prinzipiell Verbindungen, die wenigstens eine Aminosäure, wie Asparaginsäure, Glutaminsäure, Lysin, Glycin, etc. einpolymerisiert enthalten. Zu den Polyaminosäuren zählen auch die durch polymeranaloge Umsetzung, wie Veresterung, Amidierung, etc. erhältlichen Derivate. Bevorzugte Polyaminosäuren sind Polyasparaginsäure, Polyasparaginsäurederivate, Polyglutaminsäure, Polyglutaminsäurederivate und Mischungen davon.

Polyasparaginsäure kann z.B. durch alkalische Hydrolyse von Polysuccinimid (PSI, Anhydropolyasparaginsäure) hergestellt werden. Polysuccinimid kann durch thermische Kondensation der Asparaginsäure oder aus Ammoniak und Maleinsäure hergestellt werden. Polyasparaginsäure kann z.B. als biologisch abbaubares Komplexierungsmittel und Cobuilder in Wasch- und Reinigungsmitteln eingesetz werden.

Polyaminosäuren mit tensidischen Eigenschaften können erhalten werden, indem die freien Carbonsäuregruppen der Polyasparaginsäure oder Polyglutaminsäure zumindest teilweise in N-Alkylamide und/oder in Ester überführt werden. Polyasparaginsäureamide können auch durch Umsetzung von Polysuccinimid mit Aminen hergestellt werden. Zur Herstellung von Hydroxyethylaspartamiden kann die Ringöffnung von Polysuccinimid mit Ethanolamin durchgeführt werden. Die DE 37 00 128 A und EP 0 458 079 A beschreiben die nachfolgende Veresterung derartiger Hydroxyethylderivate mit Carbonsäurederivaten. Copolymere Polyasparaginsäureester sind, wie in DE 195 45 678 A beschrieben, durch Kondensation von Monoalkylestern der Malein- oder der Fumarsäure unter Ammoniakzugabe erhältlich. In DE 195 45 678 A ist weiterhin beschrieben, daß copolymere Polyasparaginsäureester durch Umsetzung von Polysuccinimid mit Alkoholen und einer sich gegebenenfalls anschließenden Hydrolyse zugänglich sind. Je nach Veresterungsgrad und Hydrophobie der Alkoholkomponente zeichnen sich Polyasparaginsäureester neben ihrer biologischen Abbaubarkeit durch hervorragende Eigenschaften als Stabilisatoren für O/W- und W/O-Emulsionen, als schaumstabilisierendes und schaumverstärkendes Cotensid in Wasch- und Reinigungsmitteln und als Komplexierungsmittel für Metallkationen aus.

In einer weiteren bevorzugten Ausführungsform sind die Polymere P2) ausgewählt unter Polyalkylenglykolen sowie Mono- oder Diethern von Polyalkylenglykolen. Bevorzugte Polyalkylenglykole weisen ein zahlenmittleres Molekulargewicht im Bereich von 1000 bis 4000000 g/mol, besonders bevorzugt von 1500 bis 1000000 g/mol, auf.

Geeignete Polyalkylenglykole und deren Mono- oder Diether können linear oder verzweigt, vorzugsweise linear, sein. Geeignete Polyalkylenglykole sind beispielsweise wasserlösliche oder wasserdispergierbare nichtionische Polymere, die Alkylenoxid-Wiederholungseinheiten aufweisen. Vorzugsweise beträgt der Anteil an Alkylenoxid-Wiederholungseinheiten mindestens 30 Gew.-%, bevorzugt mindestens 50 Gew.-% insbesondere wenigstens 75 Gew.-%, bezogen auf das Gesamtgewicht der Verbindung. Geeignete Polyalkylenglycole sind Polyethylenglycole, Polypropylenglycole, Polytetrahydrofurane und Alkylenoxidcopolymere. Geeignete Alkylenoxide zur Herstellung von Alkylenoxidcopolymeren sind z. B. Ethylenoxid, Propylenoxid, Epichlorhydrin, 1,2- und 2,3-Butylenoxid. Geeignet sind beispielsweise Copolymerisate aus Ethylenoxid und Propylenoxid, Copolymerisate aus Ethylenoxid und Butylenoxid sowie Copolymerisate aus Ethylenoxid, Propylenoxid und mindestens einem Butylenoxid. Die Alkylenoxidcopolymere können die Alkylenoxideinheiten statistisch verteilt oder in Form von Blöcken einpolymerisiert enthalten. Vorzugsweise beträgt in den Ethylenoxid/Propylenoxid-Copolymeren der Anteil an von Ethylenoxid abgeleiteten Wiederholungseinheiten 40 bis 99 Gew.-%. Besonders bevorzugt sind Ethylenoxid-Homopolymere und Ethylenoxid/Propylenoxid-Copolymere.

Geeignete Mono- und Diether von Polyalkylenglykolen sind die Mono-(C₁-C₁₈-alkyl)ether und Di-(C₁-C₁₈-alkyl)ether. Bevorzugte Mono- und Diether von Polyalkylenglykolen sind die Mono-(C₁-C₆-alkyl)ether und Di-(C₁-C₆-alkyl)ether. Speziell bevorzugt sind die Mono-(C₁-C₂-alkyl)ether und Di-(C₁-C₂-alkyl)ether. Insbesondere bevorzugt sind Polyalkylenglycolmonomethylether und Polyalkylenglycoldimethylether.

Polymermischungen eignen sich beispielsweise zur Einstellung der mechanischen Eigenschaften und/oder der Auflösungseigenschaften der erfindungsgemäßen Mehrschichtfolien. Dabei können sich die in der Polymermischung eingesetzten Polymere hinsichtlich ihrer chemischen Zusammensetzung und/oder hinsichtlich ihrer physiko-chemischen Eigenschaften unterscheiden.

In einer speziellen Ausführungsform umfasst die erfindungsgemäße Mehrschichtfolie wenigstens eine Schicht, die eine Mischung aus 2 oder mehr Polymeren enthält. Geeignete Mischungen können 2 oder mehr verschiedene Polymerzusammensetzungen P1) oder wenigstens eine Polymerzusammensetzung P1) und wenigstens ein Polymer P2) oder 2 oder mehr verschiedene Polymere P2) enthalten.

In einer ersten Ausführungsform wird eine Polymermischung eingesetzt, die 2 oder mehr Polymere enthält, die sich hinsichtlich ihrer chemischen Zusammensetzung unterscheiden. In einer zweiten Ausführungsform wird eine Polymermischung eingesetzt, die 2 oder mehr Polymere enthält, die sich hinsichtlich ihres Molekulargewichts unterscheiden. Nach dieser zweiten Ausführungsform wird beispielsweise eine Polymermischung eingesetzt, die wenigstens zwei Polymere P2) enthält, die Wiederholungseinheiten enthalten, die sich von Vinylalkohol ableiten.

### Charakterisierung der Mehrschichtfolie

Die erfindungsgemäße Mehrschichtfolie besteht vorzugsweise aus 2 bis 20 Schichten, besonders bevorzugt 2 bis 15 Schichten, insbesondere 2 bis 10 Schichten. Dazu zählen speziell Mehrschichtfolien, die aus 2, 3, 4, 5, 6, 7 oder 8 Schichten bestehen. Dabei können die Schichten alle unterschiedlich zusammengesetzt sein oder zwei oder mehr als zwei der Schichten können die gleiche Zusammensetzung aufweisen. Die Zusammensetzung der einzelnen Schichten ist dabei abhängig vom Einsatzbereich der erfindungsgemäßen Mehrschichtfolie.

Bevorzugt weisen die erfindungsgemäßen Mehrschichtfolien pro Schicht ein Gesamtpolymergewicht (d.h. an allen enthaltenen Komponenten P1) und P2)) im Bereich von 0,1 bis 100 mg / cm² Folie, besonders bevorzugt von 1 bis 80 mg /cm² Folie, auf.
Wie zuvor ausgeführt, ist die Schichtdicke der erfindungsgemäßen Mehrschichtfolien in weiteren Bereichen variabel und abhängig vom Einsatzbereich der erfindungsgemäßen Mehrschichtfolien.

Bevorzugt weisen die erfindungsgemäßen Mehrschichtfolien zur Umhüllung oder Beschichtung eines Wasch-, Reiniguns- oder Geschirrspülmittels pro Schicht eine Schichtdicke im Bereich von 0,5 bis 500 µm, bevorzugt von 1 bis 250 µm, auf.

Bevorzugt weisen erfindungsgemäße Zweischichtfolien zur Umhüllung oder Beschichtung eines Wasch-, Reinigungs- oder Geschirrspülmittels eine Gesamtschichtdicke im Bereich von 1 bis 1000 µm, bevorzugt von 2 bis 750 µm, auf.

Bevorzugt weisen erfindungsgemäße Dreischichtfolien zur Umhüllung oder Beschichtung eines Wasch-, Reinigungs- oder Geschirrspülmittels eine Gesamtschichtdicke im Bereich von 1,5 bis 1500 µm, bevorzugt von 2 bis 1250 µm, auf.

Wie zuvor ausgeführt, weisen Mehrschichtfolien, die selbst als Waschmittel oder als Reinigungsmittel oder als Geschirrspülmittel fungieren, vorzugsweise eine Dicke von höchstens 30 mm, besonders bevorzugt höchstens 25 mm, auf.

Die erfindungsgemäßen Mehrschichtfolien zeichnen sich durch gute mechanische Eigenschaften aus. Diese zeigen sich beispielsweise bei Zugversuche an Folienstreifen der Mehrschichtfolien, wie sie in den Normen EN ISO 527-1 und ASTM D882-12 beschrieben sind. Die EN ISO 527-1 (aktuelle ISO-Version Februar 2012) ist eine europäische Norm für Kunststoffe zur Bestimmung der Zugeigenschaften, welche durch einen Zugversuch mit einer Zugprüfmaschine ermittelt werden. Für diese Versuche kann eine gängige Vorrichtung, z.B. eine Universalprüfmaschine der Zwick GmbH, Modell TMTC-FR2.5TN.D09 eingesetzt werden. Zur Erzielung einheitlicher Testbedingungen können die Mehrschichtfolien zunächst einer mehrtägigen Lagerung im Gleichgewicht mit der Umgebungsfeuchte (35-40% relative Feuchte bei 20-25°C) unterzogen werden.

Die Zugfestigkeit ist eine Werkstoffeigenschaft, die die maximale mechanische Zugspannung angibt, die der Werkstoff aushält, bevor er bricht/reißt. Bevorzugt weisen die erfindungsgemäßen Mehrschichtfolien eine Zugfestigkeit im Bereich von 3 bis 40 N/mm² auf.

Die Dehnung (Elongation) ist eine dimensionslose Größe, die in Prozent angegeben wird. Bevorzugt weisen die erfindungsgemäßen Mehrschichtfolien eine Dehnung von 20 bis 500 % auf.

### Herstellung der Mehrschichtfolien

Die erfindungsgemäßen Mehrschichtfolien weisen wenigstens eine Schicht auf, die eine Polymerzusammensetzung P1) enthält oder aus einer Polymerzusammensetzung P1) besteht.

Vorzugsweise erfolgt die Herstellung der Polymerzusammensetzung P1), indem man
A) eine Monomerzusammensetzung M1) bereitstellt, die wenigstens ein Monomer A) enthält, das ausgewählt ist unter α,β-ethylenisch ungesättigten Mono- und Dicarbonsäuren, Salzen α,β-ethylenisch ungesättigter Mono- und Dicarbonsäuren, Anhydriden α,β-ethylenisch ungesättigter Mono- und Dicarbonsäuren und Mischungen davon,
B) die in Schritt A) bereitgestellte Monomerzusammensetzung M1) einer radikalischen Polymerisation in Gegenwart wenigstens einer Polyetherkomponente PE), die ausgewählt ist unter Polyetherolen mit einem zahlenmittleren Molekulargewicht von wenigstens 200 g/mol, Mono- und Di-(C₁-C₆-alkyl)ethern solcher Polyetherole, Polyethergruppen-haltigen Tensiden und Mischungen davon, und gegebenenfalls in Gegenwart wenigstens eines Zusatzstoffes unterzieht.

Bezüglich der in Schritt A) bereitgestellten Monomerzusammensetzung wird auf die zuvor genannten geeigneten und bevorzugten Monomere A) sowie die optionalen Comonomere B) und C) in vollem Umfang Bezug genommen.

Die radikalische Polymerisation der Monomerzusammensetzung M1) in Schritt B) wird vorzugsweise im Zulaufverfahren durchgeführt. Dabei werden im Allgemeinen zumindest die Monomere in flüssiger Form dem Reaktionsansatz zudosiert. Monomere die unter den Dosierbedingungen flüssig sind, können dem Reaktionsansatz ohne Zugabe eines Lösungsmittels LM1) zugeführt werden, ansonsten werden die Monomere als Lösung in einem geeigneten Lösungsmittel LM1) eingesetzt. Selbstverständlich können auch in fester Form vorliegende Monomere eingesetzt werden.

Die radikalische Polymerisation zur Herstellung der Polymerzusammensetzung P1) kann in Gegenwart eines Lösungsmittels LM1) erfolgen, das ausgewählt ist unter Wasser, C₁-C₆-Alkanolen, von PE) verschiedenen Polyolen, deren Mono- und Dialkylethern und Mischungen davon. Geeignete Polyole und deren Mono- und Dialkylether umfassen auch Alkylenglycolmono(C₁-C₄-alkyl)ether, Alkylenglycoldi(C₁-C₄-alkyl)ether, Oligoalkylenglycole und deren Mono(C₁-C₄-alkyl)ether und Di(C₁-C₄-alkyl)ether.

Das Lösungsmittel LM1) ist vorzugsweise ausgewählt unter Wasser, Methanol, Ethanol, n-Propanol, Isopropanol, n-Butanol, Ethylenglycol, Ethylenglycolmono(C₁-C₄-alkyl)ethern, Ethylenglycoldi(C₁-C₄-alkyl)ethern, 1,2-Propylenglycol, 1,2-Propylenglycol-mono(C₁-C₄-alkyl)ethern, 1,2-Propylenglycoldi(C₁-C₄-alkyl)ethern, Glycerin, Polyglycerinen, Oligoalkylenglycolen mit einem zahlenmittleren Molekulargewicht von weniger als 1000 g/mol und Mischungen davon.

Geeignete Oligoethylenglycole sind unter den CTFA-Bezeichnungen PEG-6, PEG-8, PEG-12, PEG-6-32, PEG-20, PEG-150, PEG-200, PEG-400, PEG-7M, PEG-12M und PEG-115M kommerziell erhältlich. Dazu zählen speziell die Pluriol E ® Marken der BASF SE. Geeignete Alkylpolyalkylenglycole sind die entsprechenden Pluriol A ...E ® Marken der BASF SE.

Das Lösungsmittel LM1) ist besonders bevorzugt ausgewählt unter Wasser, Ethanol, n-Propanol, Isopropanol, Ethylenglycol, Diethylenglycol, Triethylenglycol, 1,2-Propylenglycol, 1,2-Dipropylenglycol und Mischungen davon.

In einer speziellen Ausführungsform wird als Lösungsmittel LM1) Wasser oder ein Gemisch aus Wasser und wenigstens einem von Wasser verschieden Lösungsmittel LM1) eingesetzt, ausgewählt unter Ethanol, n-Propanol, Isopropanol, Ethylenglycol, Diethylenglycol, Triethylenglycol, 1,2-Propylenglycol, 1,2-Dipropylenglycol und Mischungen davon.

In einer speziellen Ausführungsform erfolgt die radikalische Polymerisation in Schritt B) in Gegenwart eines Lösungsmittels LM1), das zu wenigstens 50 Gew.-%, vorzugsweise zu wenigstens 75 Gew.-%, speziell zu wenigstens 90 Gew.-%, bezogen auf das Gesamtgewicht des Lösungsmittels LM1), aus Wasser besteht. Insbesondere erfolgt die radikalische Polymerisation in Schritt B) in Gegenwart eines Lösungsmittels LM1), das vollständig aus Wasser besteht.

Bevorzugt erfolgt die radikalische Polymerisation in Schritt B) in Zulauf-Fahrweise, wobei Zuläufe, die wenigstens eine α,β-ethylenisch ungesättigte Carbonsäure enthalten, kein Lösungsmittel LM1) enthalten.

Die Dosierraten des Monomerzulaufs/der Monomerzuläufe sowie etwaiger weiterer Zuläufe (Initiator, Regler, etc.) werden vorzugsweise so gewählt, dass die Polymerisation mit der gewünschten Umsatzrate aufrechterhalten wird. Die Zugabe der einzelnen Zuläufe kann dabei kontinuierlich, periodisch, mit konstanter oder wechselnder Dosierrate, im Wesentlichen zeitgleich oder zeitversetzt erfolgen. Vorzugsweise erfolgt die Zugabe aller Zuläufe zum Reaktionsansatz kontinuierlich.

Bevorzugt werden zur radikalischen Polymerisation die Monomerzusammensetzung M1) und die Polyetherkomponente PE) in einem Gewichtsverhältnis von 0,5 : 1 bis 5 : 1, besonders bevorzugt von 0,7 : 1 bis 3 : 1, eingesetzt.

Sofern zur Herstellung der Polymerzusammensetzung P1) ein Lösungsmittel LM1) eingesetzt wird, liegt das Gewichtsverhältnis der Polyetherkomponente PE) zur Komponente LM1) vorzugsweise im Bereich von 0,1 : 1 bis 5 : 1, besonders bevorzugt von 0,5 : 1 bis 3 : 1.

Bevorzugt erfolgt die radikalische Polymerisation in Schritt B) bei einer Temperatur im Bereich von 20 bis 95 °C, besonders bevorzugt von 30 bis 90 °C, insbesondere von 40 bis 80 °C.

Die radikalische Polymerisation in Schritt B) kann in Gegenwart wenigstens eines Zusatzstoffes erfolgen. Geeignete Zusatzstoffe sind beispielsweise Korrosionsinhibitoren, Entschäumer und Schauminhibitoren, Farbstoffe, Duftstoffe, Bitterstoffe, Verdicker, Löslichkeitsvermittler, organische Lösemittel, Elektrolyte, antimikrobielle Wirkstoffe, Antioxidantien, UV-Absorber und Mischungen davon.

Bevorzugt umfasst die radikalische Polymerisation in Schritt B) des Verfahrens
B1) Bereitstellung einer Vorlage, die wenigstens einen Teil der Polyetherkomponente PE), gegebenenfalls wenigstens einen Teil des Reglers R) und, falls die Polymerisation in Gegenwart eines Lösungsmittels LM1) erfolgt, gegebenenfalls wenigstens einen Teil von LM1) enthält;
B2) Zugabe der Monomerzusammensetzung M1) in einem Zulauf oder in mehreren Zuläufen sowie Zugabe eines Zulaufs, der den Radikalstarter S), gelöst in einem Teil der wenigstens einen Polyetherkomponente PE) und/oder des Lösungsmittels LM1) enthält und gegebenenfalls Zugabe eines Zulaufs der die Menge des Reglers R) enthält, die nicht in der Vorlage eingesetzt wird,
B3) gegebenenfalls Nachpolymerisierung der in Schritt B2) erhaltenen Reaktionsmischung.

Üblicherweise wird die Vorlage vor der Zugabe der Zuläufe unter Rühren auf die Polymerisationstemperatur erwärmt.

Bevorzugt werden die einzelnen Reaktanden simultan in getrennten Zuläufen zugegeben, wobei die Flussraten der Zuläufe in der Regel über den Zeitraum der Zugabe möglichst konstant gehalten werden.

Bevorzugt beträgt die Menge an Polyetherkomponente PE) in der Vorlage (Schritt B1)) 30 bis 100 Gew.-%, besonders bevorzugt 65 bis 100 Gew.-% und insbesondere 80 bis 100 Gew.-% bezogen auf das Gesamtgewicht der zur Polymerisation eingesetzten Polyetherkomponente PE).

Bevorzugt liegt der Gehalt an Lösungsmittel LM1) in der Vorlage bei maximal 70 Gew.-%, bezogen auf das Gesamtgewicht der in der Vorlage befindlichen Einsatzstoffe. Bevorzugt liegt der Gehalt an Lösungsmittel in der Vorlage bei maximal 40 Gew.-%, insbesondere bei maximal 35 Gew.-%, bezogen auf das Gesamtgewicht der in der Vorlage befindlichen Einsatzstoffe. Die Lösungsmittelmenge ändert sich über den gesamten Verlauf des Verfahrens in der Regel nur um wenige Gewichtsprozente. Üblicherweise werden Lösungsmittel LM1) verwendet, die einen Siedepunkt bei Normaldruck (1 bar) von unter 240 °C aufweisen.

In einer speziellen Variante enthält die Vorlage kein Lösungsmittel. Dieses wird erst in Schritt B2) über wenigstens einen der Zuläufe zugegeben. In einer ganz speziellen Variante wird kein Lösungsmittel vorgelegt sowie über den gesamten Verlauf des Verfahrens kein Lösungsmittel zugegeben.

In einer weiteren speziellen Variante wird das Lösungsmittel vollständig vorgelegt.

In einer weiteren speziellen Variante enthält die Vorlage keinen Regler. Falls ein Regler eingesetzt wird, wird dieser erst in Schritt B2) über wenigstens einen der Zuläufe zugegeben.

Die Zugabe der Zuläufe in Schritt B2) erfolgt über einen Zeitraum der in vorteilhafter Weise so gewählt wird, dass die bei der exothermen Polymerisationsreaktion entstehende Reaktionswärme ohne größeren technischen Aufwand, z. B. ohne die Verwendung eines Rückflusskühlers, abgeführt werden kann. Üblicherweise erfolgt die Zugabe der Zuläufe über einen Zeitraum von 1 bis 10 Stunden. Bevorzugt erfolgt die Zugabe der Zuläufe über einen Zeitraum von 2 bis 8 Stunden, besonders bevorzugt über 2 bis 6 Stunden.

In einer alternativen Ausführung erfolgt die radikalische Polymerisation in Schritt B) des Verfahrens kontinuierlich. Dann erfolgt die Zugabe der Monomerzusammensetzung M1), der Polyetherkomponente PE), wenigstens eines Initiators, gegebenenfalls wenigstens eines Reglers R) und gegebenenfalls wenigstens eines Lösungsmittels LM1) in den Reaktor in Form von einem flüssigen Strom oder vorzugsweise von wenigstens zwei flüssigen Strömen. In der Regel enthält der den Initiator enthaltende Strom im Allgemeinen nicht auch den Regler. Werden wenigstens zwei flüssige Ströme eingesetzt, so werden diese in üblicher Weise unter Erhalt des Reaktionsgemischs vermischt. Die Polymerisation kann einstufig oder in zwei oder mehr als zwei, d. h. in 2, 3, 4, 5 oder mehr Stufen, erfolgen. In einer geeigneten Ausführungsform wird im Falle einer mehrstufigen Polymerisation zwischen wenigstens zwei der Polymerisationsstufen wenigstens ein zusätzlicher Strom zugemischt. Dabei kann es sich um einen monomerhaltigen Strom, initiatorhaltigen Strom, lösungsmittelhaltigen Strom, reglerhaltigen Strom, eine Mischung daraus und/oder um einen beliebigen anderen Stoffstrom handeln.

Während der radikalischen Polymerisation werden in der Regel das optional eingesetzte Lösungsmittel und/oder etwaig entstehende Kondensationsprodukte nicht abgeführt. D. h. während der Polymerisation findet üblicherweise kein oder ein im Rahmen der technischen Möglichkeiten nur sehr geringer Stoffaustausch mit der Umgebung statt.

Die Polymerisation kann in der Regel bei Umgebungsdruck oder vermindertem oder erhöhtem Druck erfolgen. Bevorzugt wird die Polymerisation bei Umgebungsdruck durchgeführt.

Die Polymerisation erfolgt in der Regel bei konstanter Temperatur, kann aber auch bei Bedarf während der Polymerisation variiert werden. Bevorzugt wird die Polymerisationstemperatur über den gesamten Reaktionszeitraum, d. h. der Schritte B2) und B3), möglichst konstant gehalten. Je nachdem welche Einsatzstoffe im erfindungsgemäßen Verfahren eingesetzt werden, bewegt sich die Polymerisationstemperatur üblicherweise im Bereich von 20 bis 95 °C. Bevorzugt bewegt sich die Polymerisationstemperatur im Bereich von 30 bis 90 °C und insbesondere im Bereich von 40 bis 80 °C. Sofern die Polymerisation nicht unter erhöhtem Druck durchgeführt wird und der Reaktionsmischung wenigstens ein optionales Lösungsmittel LM1) zugesetzt wurde, bestimmt das Lösungsmittel bzw. Lösungsmittelgemisch durch die entsprechenden Siedetemperaturen die maximale Reaktionstemperatur.

Die Polymerisation kann in Abwesenheit oder in Gegenwart eines Inertgases erfolgen. Üblicherweise wird die Polymerisation in Anwesenheit eines Inertgases durchgeführt. Unter Inertgas wird in der Regel ein Gas verstanden, welches unter den gegebenen Reaktionsbedingungen keine Reaktion mit den an der Reaktion beteiligten Edukten, Reagenzien, Lösungsmitteln oder den entstehenden Produkten eingeht.

Falls die Polymerisation in Gegenwart eines Lösungsmittels durchgeführt wird, so ist dieses ausgewählt unter den zuvor beschriebenen Lösungsmitteln LM1).

Zur Herstellung der Polymerisate können die Monomeren mit Hilfe von Radikale bildenden Initiatoren, im Nachfolgenden auch als Radikalstarter oder Starter bezeichnet, polymerisiert werden. Als Radikalstarter (Initiatoren) für die radikalische Polymerisation kommen grundsätzlich alle Radikalstarter in Frage, die im Reaktionsmedium, wie es zum Zeitpunkt ihrer Zugabe vorherrscht, im Wesentlichen löslich sind und bei den gegebenen Reaktionstemperaturen eine ausreichende Aktivität besitzen, um die Polymerisation zu starten. In das erfindungsgemäße Verfahren kann ein einzelner Radikalstarter oder eine Kombination wenigstens zweier Radikalstarter eingesetzt werden. Im letzteren Fall können die wenigstens zwei Radikalstarter im Gemisch oder vorzugsweise getrennt, gleichzeitig oder nacheinander, z. B. zu unterschiedlichen Zeitpunkten im Reaktionsverlauf, eingesetzt werden.

Als Radikalstarter für die radikalische Polymerisation können die hierfür üblichen Peroxo- und/oder Azo-Verbindungen eingesetzt werden, beispielsweise Wasserstoffperoxid, Alkali- oder Ammoniumperoxodisulfate (wie z. B. Natriumperoxodisulfat), Diacetylperoxid, Dibenzoylperoxid, Succinylperoxid, Di-tert.-butylperoxid, tert.-Butylperoxybenzoat, tert.-Butylperoxypivalat, tert.-Butylperoxyneodecanoat, tert.-Butylperoxy-2-ethylhexanoat, tert.-Butylperoxymaleinat, Cumolhydroperoxid, Diisopropylperoxidicarbamat, Bis-(o-toluoyl)-peroxid, Didecanoylperoxid, Dioctanoylperoxid, tert.-Butylperoctoat, Dilauroylperoxid, tert.-Butylperisobutyrat, tert.-Butylperacetat, Di-tert.-amylperoxid, tert.-Butylhydroperoxid, 2,2'-Azo-bis-isobutyronitril, 2,2'-Azo-bis-(2-amidinopropan)dihydrochlorid (= Azo-bis(2-methylpropionamidin)dihydrochloride), Azobis(2,4-dimethylvaleronitril) oder 2,2'-Azo-bis-(2-methyl-butyronitril).

Geeignet sind auch Initiatormischungen oder Redox-Initiator-Systeme, wie z. B. Ascorbinsäure/Eisen(II)sulfat/Natriumperoxodisulfat, tert.-Butylhydroperoxid/Natriumdisulfit, tert.-Butylhydroperoxid/Natriumhydroxymethansulfinat, H₂O₂/Cu^{I}.

In dem erfindungsgemäßen Verfahren bewegt sich die Menge an eingesetztem Initiatorsystem (Starter) im Bereich von 0,01 bis 10 pphm, bevorzugt im Bereich von 0,1 bis 5 pphm, besonders bevorzugt im Bereich von 0,2 bis 2 pphm und insbesondere im Bereich von 0,3 bis 1,5 pphm (parts per hundred monomer = Gewichtsteile pro hundert Gewichtsteile Monomer).

Im erfindungsgemäßen Verfahren wird der Radikalstarter in der Regel als Lösung in einem Lösungsmittel bereitgestellt, das wenigstens eines der zuvor genannten Lösungsmittel LM1) und gegebenenfalls zusätzlich wenigstens einen Polyether der Polyetherkomponente PE) umfasst.

Die Polymerisation kann ohne Einsatz eines Reglers (Polymerisationsregler) oder in Gegenwart wenigstens eines Reglers erfolgen. Als Regler werden allgemein Verbindungen mit hohen Übertragungskonstanten bezeichnet, die Kettenübertragungsreaktionen beschleunigen und damit eine Herabsetzung des Polymerisationsgrades der resultierenden Polymere bewirken. Bei den Reglern kann man zwischen mono-, bi- oder polyfunktionalen Reglern unterscheiden je nach Anzahl der funktionellen Gruppen im Molekül, die zu einer oder mehreren Kettenübertragungsreaktionen führen können. Geeignete Regler werden beispielsweise ausführlich beschrieben von K. C. Berger und G. Brandrup in J. Brandrup, E. H. Immergut, Polymer Handbook, 3. Aufl., John Wiley & Sons, New York, 1989, S. II/81 - II/141.

Als Regler eignen sich beispielsweise Aldehyde wie Formaldehyd, Acetaldehyd, Propionaldehyd, n-Butyraldehyd, Isobutyraldehyd.

Ferner können als Regler Ameisensäure, ihre Salze oder Ester, wie Ammoniumformiat, 2,5-Diphenyl-1-hexen, Hydroxylammoniumsulfat und Hydroxylammoniumphosphat eingesetzt werden.

Weitere geeignete Regler sind Allylverbindungen, wie z. B. Allylalkohol, funktionalisierte Allylether, wie Allylethoxylate, Alkylallylether, oder Glycerinmonoallylether.

Bevorzugt werden als Regler Verbindungen eingesetzt, die Schwefel in gebundener Form enthalten. Verbindungen dieser Art sind beispielsweise anorganische Hydrogensulfite, Disulfite und Dithionite oder organische Sulfide, Disulfide, Polysulfide, Sulfoxide und Sulfone. Dazu zählen Di-n-butylsulfid, Di-n-octylsulfid, Diphenylsulfid, Thiodiglykol, Ethylthioethanol, Diisopropyldisulfid, Di-n-butyldisulfid, Di-n-hexyldisulfid, Diacetyldisulfid, Diethanolsulfid, Di-t-butyltrisulfid, Dimethylsulfoxid, Dialkylsulfid, Dialkyldisulfid und/oder Diarylsulfid. Geeignet als Polymerisationsregler sind weiterhin Thiole (Verbindungen, die Schwefel in Form von SH-Gruppen enthalten, auch als Mercaptane bezeichnet). Bevorzugt sind als Regler mono-, bi- und polyfunktionale Mercaptane, Mercaptoalkohole und/oder Mercaptocarbonsäuren. Beispiele für diese Verbindungen sind Allylthioglykolate, Ethylthioglykolat, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Thioessigsäure, Thioharnstoff und Alkylmercaptane wie n-Butylmercaptan, n-Hexylmercaptan oder n-Dodecylmercaptan. Beispiele für bifunktionale Regler, die zwei Schwefelatome in gebundener Form enthalten sind bifunktionale Thiole wie z. B. Dimercaptopropansulfonsäure (Natriumsalz), Dimercaptobernsteinsäure, Dimercapto-1-propanol, Dimercaptoethan, Dimercaptopropan, Dimercaptobutan, Dimercaptopentan, Dimercaptohexan, Ethylenglykol-bis-thioglykolate und Butandiolbis-thioglykolat. Beispiele für polyfunktionale Regler sind Verbindungen, die mehr als zwei Schwefel in gebundener Form enthalten. Beispiele hierfür sind trifunktionale und/oder tetrafunktionale Mercaptane.

Besonders bevorzugt ist der Regler ausgewählt unter Mercaptoethanol, Mercaptoessigsäure, Mercaptopropionsäure, Ethylhexylthioglycolat und Natriumhydrogensulfit.

Bevorzugt als Regler sind weiterhin hypophosphorige Säure (Phosphinsäure) und Salze der hypophosphorigen Säure. Ein bevorzugtes Salz der hypophosphorigen Säure ist das Natriumsalz.

Wird in dem erfindungsgemäßen Verfahren ein Regler eingesetzt, so beträgt die Menge üblicherweise 1 bis 40 pphm ("parts per hundred monomer", d.h. Gewichtsteile bezogen auf hundert Gewichtsteile Monomerzusammensetzung). Bevorzugt liegt die in dem erfindungsgemäßen Verfahren eingesetzte Menge an Reglern im Bereich von 3 bis 30 pphm, besonders bevorzugt im Bereich von 5 bis 25 pphm. Es ist auch möglich, die Polymerisation ohne Zusatz eines Reglers durchzuführen.

Üblicherweise wird der Regler in Schritt B2) vollständig über einen der Zuläufe kontinuierlich zur Polymerisationsmischung zugegeben. Es ist jedoch auch möglich, den Regler entweder vollständig zur Vorlage, d.h. vor der eigentlichen Polymerisation, zuzugeben oder es wird nur ein Teil des Reglers in der Vorlage vorgelegt und der Rest in Schritt B2) über einen der Zuläufe kontinuierlich zur Polymerisationsmischung zugegeben. Die Zugabe des Reglers kann dabei jeweils ohne oder mit Lösungsmittel LM1) erfolgen.

Die Menge des Reglers und die Art wie dieser zur Reaktionsmischung zugegeben wird, haben einen starken Einfluss auf das mittlere Molekulargewicht der Polymerzusammensetzung P1). Wenn kein Regler oder nur eine geringe Menge Regler eingesetzt wird und/oder wenn die Zugabe überwiegend vor der Polymerisation erfolgt, führt dies in der Regel zu höheren mittleren Molekulargewichten des gebildeten Polymers. Werden hingegen größere Menge Regler verwendet und/oder findet die Zugabe des Reglers größtenteils während der Polymerisation statt (Schritt B2)), führt dies in der Regel zu einem kleineren mittleren Molekulargewicht.

Um unerwünschte Schaumbildung bei der Synthese, beim Transport (z. B. beim Pumpen) und Lagerung sowie bei der Folienherstellung zu vermeiden bzw. zu reduzieren, können Entschäumer und Schauminhibitoren eingesetzt werden. Prinzipiell kommen alle bekannten Schauminhibitoren oder Entschäumer in Betracht. Zu nennen sind hier beispielsweise (1) ölbasierte Systeme auf Basis von Mineralöl oder Pflanzenöl, die zusätzlich noch Wachse oder Kieselsäurepartikel enthalten können, (2) wasserbasierte Systeme, in denen Öl und Wachse dispergiert vorliegen, (3) silikonbasierte Systeme (Polysiloxane), eingesetzt z. B. in wasserlöslicher Form, als Öl oder wasserbasierte Emulsion (4) EO/PO basierte Polyalkoxylate, (5) Alkylpolyacrylate, (6) Fettsäuren und Fettsäureester, speziell Mono- und Diglyceride von Fettsäuren, (8) Fettalkoholalkoxylate, (9) Entschäumer aus der Klasse der Phosphorsäureester und deren Salze, wie Natrium(C₆-C₂₀-alkyl)phosphate, z. B. Natriumoctylphosphat oder Tri(C₁-C₂₀-alkyl)phosphate, z. B. Tributylphosphat und (10) Metallseifen, wie Aluminumstearat oder Calciumoleat.

Die Polysiloxane (Polydimethylsiloxane) können auch in modifizierter Form, z. B. alkylgruppenmodifiziert oder polyethergruppenmodifiziert, verwendet werden. Diese werden bevorzugt eingesetzt.

Bevorzugt wird die nach Beendigung der Polymerisation (Schritt B3)) erhaltene Polymerzusammensetzungen P1) in ein geeignetes Gefäß transferiert und gegebenenfalls direkt auf Umgebungstemperatur (20 °C) abgekühlt.

Die auf diese Weise erhaltenen Polymerzusammensetzungen P1) eignen sich vorteilhaft zur Herstellung von Mehrschichtfolien, z. B. für den Einsatz als Wasch- oder Reinigungsmittel oder als Umhüllung eines flüssigen Wasch- oder Reinigungsmittels. Die Herstellung von Mehrschichtfolien und von Umhüllungen auf deren Basis wird im Folgenden noch näher beschrieben.

Das gewichtsmittlere Molekulargewicht M_{w} der erfindungsgemäßen Polymerzusammensetzung P1) wurde mittels Gelpermeationschromatographie (GPC) in wässriger Lösung unter Verwendung von neutralisierter Polyacrylsäure als Polymerstandard bestimmt. Bei dieser Art der Molekulargewichtsbestimmung werden die Komponenten der Polymerzusammensetzung P1) erfasst, welche die Monomere M1) einpolymerisiert enthalten. Die Polymerzusammensetzung P1) weist vorzugsweise ein gewichtsmittleres Molekulargewicht von 2000 bis 100000 g/mol, bevorzugt von 3000 bis 80000 g/mol, auf.

Die Polymerzusammensetzung P1) verfügt über eine zur Folienbildung geeignete ausreichend niedrige Glasübergangstemperatur T_{G}. Vorzugsweise weisen die Polymerzusammensetzungen P1) eine Glasübergangstemperatur T_{G} im Bereich von 0 bis 80 °C, besonders bevorzugt von 0 bis 60 °C, insbesondere von 0 bis 30 °C, auf.

Die Polymerzusammensetzung P1) weist vor ihrem Einsatz zur Folienherstellung (d. h. bevor sie eine Trocknung durchläuft) vorzugsweise einen Gehalt an Säuregruppen von mehr als 1 mmol/g, besonders bevorzugt von mehr als 1,3 mmol/g auf. Die Polymerzusammensetzung P1) weist vorzugsweise vor ihrem Einsatz zur Folienherstellung einen Gehalt an Säuregruppen von höchstens 15 mmol/g auf. Die Polymerzusammensetzung P1) weist vor ihrem Einsatz zur Folienherstellung insbesondere einen Gehalt an Säuregruppen von 1,5 mmol/g bis 10 mmol/g auf.

In einer bevorzugten Ausführungsform liegen die Säuregruppen der erfindungsgemäßen Polymerzusammensetzung P1) in nicht neutralisierter Form vor.

Wie eingangs erwähnt, kann die Herstellung der Mehrschichtfolie durch ein Laminierungsverfahren erfolgen. Laminierungsverfahren, bei denen zwei oder mehrere Folienschichten flächig miteinander verklebt werden, sind dem Fachmann bekannt. Beim Laminieren werden zwei oder mehr als zwei Folien unter erhöhtem Druck und/oder erhöhter Temperatur miteinander verpresst. Wie ebenfalls eingangs erwähnt, kann die Herstellung der Mehrschichtfolie auch durch ein nass-in-nass-Auftragsverfahren erfolgen. Weiterhin können zur Herstellung der Mehrschichtfolie auch Kombinationen der zuvor genannten Herstellungsverfahren sowie des im Folgenden beschriebenen Auftragsverfahrens eingesetzt werden.

In einer bevorzugten Ausführungsform erfolgt die Herstellung der Mehrschichtfolie durch ein Verfahren, bei dem man auf ein Trägermaterial wenigstens eine fließfähige zur Folienbildung befähigte Zusammensetzung aufträgt, wobei das Trägermaterial und/oder die wenigstens eine fließfähige Zusammensetzung eine Polymerzusammensetzung P1) enthält oder aus einer Polymerzusammensetzung P1) besteht, die wie zuvor und im Folgenden definiert ist.

Ein weiterer Gegenstand der Erfindung ist ein Verfahren zur Herstellung einer Mehrschichtfolie wie zuvor definiert, bei dem man
a1) auf ein Trägermaterial eine erste fließfähige zur Folienbildung befähigte Zusammensetzung unter Erhalt einer ersten Schicht aufträgt,
a2) gegebenenfalls die auf das Trägermaterial aufgetragene erste Schicht einer Viskositätserhöhung unterzieht,
a3) auf die in Schritt a1) oder die in Schritt a2) erhaltene erste Schicht eine zweite fließfähige zur Folienbildung befähigte Zusammensetzung unter Erhalt einer zweiten Schicht aufträgt,
a4) gegebenenfalls die zweite Schicht einer Viskositätserhöhung unterzieht,
a5) gegebenenfalls den Schritt a3) mit einer weiteren zur Folienbildung befähigten Zusammensetzung unter Erhalt einer weiteren Schicht wiederholt und gegebenenfalls anschließend den Schritt a4) wiederholt, wobei die Schritte a3) und a4) einfach oder mehrfach wiederholt werden können,
a6) gegebenenfalls die auf das Trägermaterial aufgetragenen Schichten einer weiteren Viskositätserhöhung unterzieht,
a7) gegebenenfalls die erhaltene Mehrschichtfolie von dem Trägermaterial ablöst,
mit der Maßgabe, dass die fließfähigen Zusammensetzungen jeweils eine zur Folienbildung befähigte Komponente enthalten, die unabhängig voneinander ausgewählt ist unter wenigstens einer Polymerzusammensetzung P1), wenigstens einem Polymer P2) oder einer Mischung davon, und mit der Maßgabe, dass wenigstens eine der fließfähigen Zusammensetzungen und/oder das Trägermaterial eine Polymerzusammensetzung P1) enthält oder aus einer Polymerzusammensetzung P1) besteht, die wie in einem der vorhergehenden Ansprüche definiert ist.

In einer speziellen Ausführung kann das Auftragen von zwei oder mehr als zwei der fließfähigen Zusammensetzungen auch teilweise oder vollständig simultan erfolgen. Dazu kann z.B. mit dem Auftrag der (n+1)sten Zusammensetzung begonnen werden, bevor der Auftrag der n-ten Zusammensetzung vollständig beendet ist.

In einer weiteren speziellen Ausführung wird zur Herstellung der Mehrschichtfolie von einem Trägermaterial ausgegangen, das bereits die erste Folienschicht und gegebenenfalls auch bereits weitere Folienschichten der Mehrschichtfolie umfasst. Mit anderen Worten wird in Schritt a1) ein Trägermaterial eingesetzt, das bereits die erste Folienschicht und gegebenenfalls weitere Folienschichten der Mehrschichtfolie umfasst. In diesem Falle bildet das Trägermaterial einen Teil der Mehrschichtfolie und verbleibt nach dem Auftragen aller weiterer Schichten in der Mehrschichtfolie. Das heißt, die auf das Trägermaterial aufgetragenen weiteren Schichten werden nicht anschließend wieder von dem Trägermaterial abgelöst. Nach dieser Ausführungsform entfällt somit Schritt a7) des oben beschriebenen Verfahrens.

Die Viskosität der fließfähigen Zusammensetzung wird an die technischen Anforderungen des Herstellverfahrens angepasst und wird u.a. durch die Konzentration der zur Folienbildung befähigten Komponenten, den Lösemittelgehalt (Wasser), den zugegebenen Additiven und die Temperatur bestimmt.

Die Auftragung der fließfähigen, zur Folienbildung befähigten Zusammensetzungen in den Schritten a1), a3) und a5) erfolgt in der Regel mittels üblicher Verfahren, beispielsweise mittels Verfahren, die ausgewählt sind unter Luft-Rakel-Beschichtung, Rakelbeschichtung, Luftmesserbeschichtung, Quetschbeschichtung, Imprägnierbeschichtung, Tauchbeschichtung, Umkehrwalzenbeschichtung, Transferwalzenbeschichtung, Gravurbeschichtung, "Kiss-Coating", Gießbeschichtung, Kaskadengießbeschichtung, "Slide-Coating", Vorhanggießbeschichtung, ein- und mehrlagige Schlitzdüsenbeschichtung, Spraybeschichtung, Spinbeschichtung oder Druckverfahren, wie Hoch-, Tief-, Rotationstief-, Flexo-, Offset-, Inkjet-, Buch-, Tampon-, Heißsiegel- oder Sieb-Druckverfahren. Die Auftragung kann dabei auch kontinuierlich oder semikontinuierlich erfolgen, beispielsweise wenn das Trägermaterial beweglich ist, beispielsweise ein sich permanent oder zeitweise bewegendes Band ist.

Geeignet als Trägermaterial sind zum einen alle Materialien, die ein einfaches Ablösen der fertigen Mehrschichtfolie ermöglichen. Dazu zählen z.B. Glas, Metalle, wie verzinktes Stahlblech oder Edelstahl, Polymere, wie Silikone oder Polyethylenterephthalat, polymerbeschichtetes Papier, wie Silikonpapier, etc. Geeignet als Trägermaterial sind zum anderen einlagige oder mehrlagige Polymerfolien, die als Folienschichten in der erfindungsgemäßen Mehrschichtfolie verbleiben. Bezüglich der Zusammensetzung dieser Trägermaterialien wird auf die Offenbarung zu Polymerzusammensetzungen P1) und Polymeren P2) Bezug genommen.

Die Viskositätserhöhung in den Schritten a2), a4) und a6) kann mittels üblicher Verfahren erfolgen und hängt in der Regel davon ab, in welcher Form die fließfähigen, zur Folienbildung befähigten Zusammensetzungen in den Schritten a1), a3) und a5) aufgetragen wurde. Wurde sie beispielsweise als Schmelze aufgetragen, so erfolgt eine Viskositätserhöhung in der Regel schon beim Abkühlen. Das Abkühlen kann durch einfaches Stehenlassen oder durch aktives Abkühlen, wie Abkühlung des Trägermaterials, Begasen mit einem kühlen Gas(strahl), Abkühlen in einem Kühlraum/Kühlschrank und dergleichen erfolgen. Wurde die fließfähige, zur Folienbildung befähigte Zusammensetzung in Form einer Lösung oder Dispersion aufgetragen, ist es in der Regel erforderlich, wenigstens einen Teil des Lösungsmittels zu entfernen, was beispielsweise durch einfaches Stehenlassen, Trocknung mit Luftstrahl oder Heißluftstrahl, Trocknung in Trockenschränken, Erwärmen des Trägermaterials, Anlegen eines Vakuums, gegebenenfalls unter gleichzeitiger Wärmezufuhr, IR-Bestrahlung, Mikrowellenbestrahlung, beispielsweise in einem entsprechenden Ofen, und dergleichen erfolgen kann. Sollte die Zusammensetzung härtbar sein, beispielsweise weil die darin enthaltenen Polymere noch nicht umgesetzte polymerisierbare/kondensierbare Gruppen enthalten, kann die Viskositätserhöhung alternativ oder zusätzlich dadurch erfolgen, dass das Polymer gehärtet wird. Die zur Härtung geeigneten Maßnahmen hängen von den enthaltenen polymerisierbaren/kondensierbaren Gruppen ab. So werden ethylenisch ungesättigte, vernetzbare Gruppen insbesondere durch UV-Strahlung gehärtet; kondensierbare Gruppen hingegen härten in der Regel entweder durch Stehenlassen oder bei Wärmezufuhr aus. Die Wärmezufuhr kann wiederum wie oben beschrieben erfolgen, also beispielsweise durch Einstrahlen von Warm- oder Heißluft oder anderen warmen oder heißen Gasen, Trocknung in Trockenschränken, Erwärmen des Trägermaterials, IR-Bestrahlung und dergleichen. Es besteht außerdem die Möglichkeit die aufgetragene Lösung oder Dispersion durch ein Abkühlen zu Gelieren, im Sinne eines über makroskopische Dimensionen ausgdehnten physikalischen Netzwerkes, was ebenfalls eine Viskositätserhöhung zur Folge hat.

In einer speziellen Ausführung erfolgt der Auftrag der fließfähigen, zur Folienbildung befähigten Zusammensetzungen für zwei oder mehr als zwei der die Mehrschichtfolie bildenden Schichten nach einem nass-in-nass-Auftragsverfahren. Der Auftrag in a3), a5) etc. kann somit nass-in-nass erfolgen, d.h. auf die in Schritt a1), a3) und/oder a5) etc. aufgetragene Schicht kann die nächste Schicht auch aufgetragen werden, ohne dass zuvor ein expliziter Schritt zur Viskositätserhöhung durchgeführt wurde. Dies gilt insbesondere dann, wenn die Schicht, auf welche die nächste Polymerschicht aufgetragen wird, ausreichend dünn ist, so dass sie auch ohne explizites Stehenlassen, Trocknen, Erwärmen, Härten etc. ausreichend verfestigt bis die nächste Schicht aufgetragen wird und es nicht zu einer völligen Durchmischung mit den Komponenten der nächsten Schicht kommt. Dies gilt auch, wenn die beiden Schichten, d.h. diejenige, auf die aufgetragen wird, und die darauf aufgetragene Schicht, keine starke Tendenz zur Vermischung haben, beispielsweise weil die eine Schicht auf einer wässrigen Polymerlösung/-dispersion und die andere auf einer hydrophoben organischen Lösung/Dispersion oder einer hydrophoben Schmelze beruht.

Bei den in den Schritten a1), a3), a5) etc. aufgetragenen Polymeren handelt es sich um filmbildende Polymere.

In einer besonderen Ausführungsform können nach den Schritten a1), a2), a3), a4), a5) und/oder a6) auch eine oder mehrere Schichten aufgetragen werden, die keine filmbildende Polymere enthalten. Hierbei handelt es sich insbesondere um Schichten, die Komponenten (funktionelle Materialien) enthalten, die in Zusammenhang mit dem gewünschten Verwendungszweck der Mehrschichtfolie stehen. Soll die Folie beispielsweise in oder als Waschmittel oder als Umhüllung von Waschmitteln dienen, können diese optionalen weiteren Schichten Tenside, Builder, Cobuilder, Bleichmittel, Enzyme, Enzymstabilisatoren, Vergrauungsinhibitoren, optische Aufheller, Duftstoffe, Bitterstoffe, Farbstoffe etc. enthalten. Diese Komponenten können, wie auch die Polymerschichten, in Lösung/Dispersion oder Schmelze aufgetragen werden. Geeignete Auftragungstechniken sind auch hier die zuvor genannten.

Auch dem Auftrag dieser Schichten kann sich ein Schritt zur Viskositätserhöhung anschließen, oder die Auftragung der nächsten Schicht kann nass-in-nass erfolgen. Es gilt analog das oben Gesagte.

Für den Fall, dass die zuvor beschriebenen Schichten aufgetragen werden, die zwar keine filmbildende Polymere, aber Komponenten enthalten, die in Zusammenhang mit dem gewünschten Verwendungszweck der Mehrschichtfolie stehen, kann nach den Schritten a1), a2), a3), a4), a5) und/oder a6), insbesondere nach den Schritten a1), a3) und/oder a5), die Polymerschicht geprägt oder gestanzt werden, so dass Einwölbungen entstehen, in die sich die später aufgetragenen funktionellen Materialien in größeren Mengen ablagern können. Dies kann mittels üblicher Präge-, Druck-, Stempel- und Stanzwerkzeuge erfolgen.

Das erfindungsgemäße Verfahren erlaubt die Herstellung von Mehrschichtfolien ohne ein aufwändiges Laminatverfahren, bei dem die einzelnen Folien miteinander verbunden werden müssen. Selbstverständlich können zur Herstellung der erfindungsgemäßen Mehrschichtfolien auch, wie zuvor beschrieben, zwei oder mehr als zwei Folienschichten durch Laminieren miteinander verbunden werden. So können zur Bereitstellung von mehrlagigen Polymerfolien, die als Trägermaterial zum Auftragen weiterer Folienschichten dienen, zwei oder mehr als zwei Folienschichten durch Laminieren miteinander verbunden werden.

Zur Bereitstellung der in den Schritten a1), a3), a5) etc. aufgetragenen Zusammensetzungen wird beispielsweise eine zur Folienbildung befähigte Komponente, die ausgewählt ist unter wenigstens einer Polymerzusammensetzung P1), wenigstens einem Polymer P2) oder einer Mischung davon, gegebenenfalls nach Zugabe wenigstens eines Zusatzstoffes, aufgeschmolzen oder in einem geeigneten Lösungsmittel oder Lösungsmittelgemisch gelöst, die so erhaltene fließfähige Zusammensetzung zu einer Schicht ausgegossen und gegebenenfalls das Lösungsmittel oder Lösungsmittelgemisch durch Verdampfen entfernt.

Geeignete Lösungsmittel und Lösungsmittelgemische sind die zuvor als Komponente LM1) beschriebenen, worauf hier in vollem Umfang Bezug genommen wird. Das Lösungsmittel ist besonders bevorzugt ausgewählt unter Wasser, Ethanol, n-Propanol, Isopropanol, Ethylenglycol, Diethylenglycol, 1,2-Propylenglycol, 1,2-Dipropylenglycol und Mischungen davon. In einer speziellen Ausführungsform wird als Lösungsmittel Wasser oder ein Gemisch aus Wasser und wenigstens einem von Wasser verschiedenen Lösungsmittel eingesetzt, ausgewählt unter Ethanol, n-Propanol, Isopropanol, Ethylenglycol, Diethylenglycol, 1,2-Propylenglycol, 1,2-Dipropylenglycol und Mischungen davon.

In einer speziellen Ausführungsform der vorliegenden Erfindung wird eine erste zweilagige Folie im Sinne einer Laminierung mit einer zweiten zweilagigen Folie zusammengeführt.

Bevorzugt umfasst die erste zweilagige Folie eine Schicht S1), die eine Polymerzusammensetzung P1) enthält oder aus einer Polymerzusammensetzung P1) besteht und eine Schicht Schicht S2), die wenigstens ein Polymer P2) enthält oder aus wenigstens einem Polymer P2) besteht. Die erste zweilagige Folie kann durch die Schritte a1) bis a4), ggf. nach dem Trocknen der zweiten Schicht, im Sinne einer Laminierung mit einer zweiten zweilagigen Folie zusammengeführt werden.

Die zweite zweilagige Folie kann ebenfalls nach den Schritten (a) bis (d), wie zuvor beschrieben, oder in einer parallel geschalteten Anlage simultan hergestellt werden. Wird die gleiche Zusammensetzung für die sich berührenden Lagen der beiden Folien verwendet, besteht die auf diesem Weg über Laminierung hergestellte Mehrlagenfolie aus drei Lagen. Sind dann die äußeren Lagen chemisch unterschiedlich, so hat die resultierende Mehrschichtfolie drei chemisch unterschiedliche Lagen. Sind auch die äußeren Lagen chemisch gleich, so hat die resultierende Mehrschichtfolie nur zwei chemisch unterschiedliche Lagen.

In einer weiteren Ausführungsform der vorliegenden Erfindung wird eine zweilagige Folie in zwei Hälften geschnitten und anschließend die beiden erhaltenen Folienhälften laminiert. Beim Einsatz einer üblichen Maschine zur Herstellung von Folienbahnen kann diese mittig in Maschinenrichtung geschnitten, aufeinandergelegt und dann laminiert werden. Auch in dieser Ausführungsform kann die Herstellung der zweilagigen Folie durch die Schritte a1) bis a4) und ggf. Trocknen der zweiten Schicht erfolgen. Bei dieser Ausführungsform besteht auch die Möglichkeit, die chemisch identische Grenzfläche aufeinander zu laminieren, um effektiv eine Mehrschichtfolie aus drei Lagen zu erhalten, wobei die beiden äußeren Lagen chemisch gleich sind.

Der Vorteil der beiden oben genannten Ausführungsformen der vorliegenden Erfindung besteht in einer deutlich beschleunigten Trocknung durch die reduzierte Schichtdicke, die direkt mit einer erhöhten Produktionsgeschwindigkeit zusammenhängt. Ohne auf die Theorie beschränkt zu sein, ist der Stofftransport des Lösemittels durch den Film bei konstantem Diffusionskoeffizient proportional zu 1/Filmdicke.

Eine spezielle Ausführung ist ein Verfahren zur Herstellung einer erfindungsgemäßen Mehrschichtfolie, die wenigstens einen Zusatzstoff enthält. Dabei kann eine einzelne Schicht oder können mehrere aber nicht alle der Schichten oder alle Schichten jeweils einen oder mehr als einen Zusatzstoff enthalten. Alternativ oder zusätzlich ist es möglich, dass zwischen wenigstens zwei Schichten wenigstens ein Zusatzstoff enthalten ist. Zusatzstoffe können, wie zuvor beschrieben, bereits bei der radikalische Polymerisation in Schritt B) oder bei der Bereitstellung der fließfähigen zur Folienbildung befähigten Zusammensetzungen in den Schritten a1), a3), a5), etc. zugegeben werden. Ob die Zugabe bereits in Schritt B) oder erst bei der Bereitstellung der fließfähigen, zur Folienbildung befähigten Zusammensetzungen erfolgt, ergibt sich in Abhängigkeit von der Art und Wirkung des jeweiligen Zusatzstoffes.

Bei den Zusatzstoffen kann es sich um Hilfsstoffe zur Einstellung der Eigenschaften der fließfähigen, zur Folienbildung befähigten Zusammensetzungen, um typische Zusatzstoffe für den Einsatzzweck der Mehrschichtfolien oder Mischungen davon handeln. Für den Einsatzzweck der Mehrschichtfolien typische Zusatzstoffe sind speziell ausgewählt unter Zusatzstoffen für Waschmittel, Reinigungsmittel, Geschirrspülmittel, Klarspüler, Hygieneprodukte, Desinfektionsmittel, Körperpflegemittel, Körperreinigungsmittel, kosmetische Mittel, pharmazeutische Mittel, Pflanzenschutzmittel, Köderfallen, Netzmitteln, etc.

Bevorzugt sind Mehrschichtfolien, bei denen wenigstens eine der Schichten einen Zusatzstoff aufweist. Besonders bevorzugt sind Mehrschichtfolien, bei denen wenigstens eine der Schichten einen Zusatzstoff aufweist, wobei es sich um einen für Wasch- und Reinigungsmittel üblichen Inhaltsstoff handelt. Bevorzugt ist der Zusatzstoff dann ausgewählt unter nichtionischen, anionischen, kationischen und amphoteren Tensiden, Buildern, Komplexbildner, wie Methylglycindiessigsäure, Glutamindiessigsäure, Glutaminsäurediessigsäure und Citronensäure und ihre Natrium- und Kaliumsalze, Bleichmitteln, Enzymen, Enzymstabilisatoren, Basen, Korrosionsinhibitoren, Entschäumern und Schauminhibitoren, Netzmitteln, Farbstoffen, Pigmenten, Duftstoffen, Füllstoffen, Tablettierhilfsmitteln, Desintegrationsmitteln, Verdickern, Löslichkeitsvermittlern, organischen Lösemitteln, Elektrolyten, pH-Stellmitteln, Parfümträgern, Bitterstoffen, Fluoreszenzmitteln, Hydrotropen, Antiredepositionsmitteln, optischen Aufhellern, Vergrauungsinhibitoren, Einlaufverhinderern, Knitterschutzmitteln, Farbübertragungsinhibitoren, antimikrobiellen Wirkstoffen, Antioxidantien, Anti-Vergilbungsmitteln, Korrosionsinhibitoren, Antistatika, Bügelhilfsmitteln, Phobier- und Imprägniermitteln, Quell- und Schiebefestmitteln, Weichmachern, Scavengern, von den Polymerzusammensetzungen P1) und den Polymeren P2) verschiedenen Polymeren, Mittel zur Modifikation der Gasdurchlässigkeit und Wasserdampfdurchlässigkeit, Antistatikmitteln, Gleitmitteln, Slipmitteln, UV-Absorbern und Mischungen davon.

In einer bevorzugten Ausführungsform enthält eine Schicht der erfindungsgemäßen Mehrschichtfolie als Zusatzstoff wenigstens ein Enzym und gegebenenfalls wenigstens einen Enzymstabilisator. Geeignete Enzyme und Enzymstabilisatoren sind die im Folgenden als Komponente E1) genannten.

Geeignete Bitterstoffe sind die im Folgenden als Komponente E6) genannten.

Manche Zusatzstoffe können mehrere Funktionen erfüllen, z. B. als Lösungsmittel LM1) und als Weichmacher.

Um die erfindungsgemäßen Mehrschichtfolien flexibler zu machen, können ihnen bei der Herstellung Weichmacher zugegeben werden. Bevorzugt werden zur Herstellung der fließfähigen, zur Folienbildung befähigten Zusammensetzungen 0,5 bis 30 Gew.-%, besonders bevorzugt 2 bis 20 Gew.-%, insbesondere 3 bis 15 Gew.-% Weichmacher, bezogen auf das Gesamtgewicht der Zusammensetzung, verwendet.

Geeignete Weichmacher sind Alkylenamine, Alkanolamine, Polyole, wie Alkylenglycole und Oligoalkylenglycole, z. B. 2-Methyl-1,3-propandiol, 3-Methyl-1,5-Pentandiol, Hydroxypropylglycerin, Neopentylglycol, alkoxyliertes Glycerin (wie z. B. Voranol ® von Dow Chemicals), wasserlösliche Polyesterpolyole (wie z. B. TriRez von Geo Specialty Chemicals) und Mischungen davon. Geeignete Weichmacher sind weiterhin Polyetherpolyole, die unter der Bezeichnung Lupranol® von BASF SE erhältlich sind. Der Begriff "Alkylenamine" bezeichnet Kondensationsprodukte von Alkanolaminen mit Ammoniak oder primären Aminen, z. B. werden Ethylenamine durch Umsetzung von Monoethanolamin mit Ammoniak in Gegenwart eines Katalysators erhalten. Dabei resultieren als Hauptkomponenten: Ethylendiamin, Piperazin, Diethylentriamin und Aminoethylethanolamin.

Bevorzugt sind die Weichmacher ausgewählt unter Glycerin, Diglycerin, Propylenglycolen mit einem gewichtsmittleren Molekulargewicht von bis zu 400, Ethylenglycol, Polyethylenglykole mit einem gewichtsmittleren Molekulargewicht von bis zu 400, Diethylenglycol, Triethylenglykol, Tetraethylenglykol, Zuckeralkoholen wie Sorbitol, Mannitol, Xylitol, Isomalt, Lactitol, Isopentyldiol, Neopentylglykol, , Trimethylolpropan, Diethylentriamin, Triethylenpentamin, Triethanolamin und Mischungen davon.

Um die erfindungsgemäßen Mehrschichtfolien resistenter gegenüber aggressiven Inhaltsstoffen zu machen (wie z. B. Chlor freisetzende Verbindungen, wie sie im Bereich der Desinfektion von Wasser, etc. verwendet werden), können sogenannte "Scavenger" (Fängermoleküle) der Folie hinzugefügt werden. Geeignete Scavenger sind Polyamine, polymere Polyamine, wie Polyethylenimine, Poly(amidoamine) und Polyamide. Darüber hinaus können auch Ammoniumsulfat, primäre und sekundäre Amine mit einem geringen Dampfdruck, wie Ethanolamine, Aminosäure und deren Salze, sowie Polyaminosäure und deren Salze, Fettamine, Glucoseamine und andere aminierte Zucker verwendet werden. Des Weiteren können Reduktionsmittel wie Sulfite, Bisulfite, Thiosulfite, Thiosulfate, lodide, Nitrite und Antioxidanzien wie Carbamate, Ascorbate und Mischungen davon verwendet werden.

Zur Herstellung der erfindungsgemäßen Mehrschichtfolien können der Polymerzusammensetzung P1) und/oder den Polymeren P2) weitere Zusatzstoffe in Form von Polymeren vor und/oder während der Folienherstellung zugesetzt werden. Typischerweise werden 0,05 bis 20 Gew.-%, bevorzugt 0,1 bis 15 Gew.-%, besonders bevorzugt 0,2 bis 10 Gew.-% Polymere (bezogen auf das Gesamtgewicht der Polymerzusammensetzung P1), Polymere P2) und zusätzliche Polymere) verwendet. Solche Zusatzstoffe können gleichzeitig die Wascheigenschaften der Mehrschichtfolie verbessern, die mechanischen Eigenschaften der Mehrschichtfolie verbessern, und die Beständigkeit der Mehrschichtfolie gegen Waschmittelkomponenten erhöhen. Geeignete weitere Polymere sind z. B. Oligosaccharide und Polysaccharide, Stärke, abgebaute Stärken (Maltodextrine), Celluloseether, speziell Hydroxyethylcellulose, Hydroxypropylcellulose, Methylcellulose, Ethylcellulose, Hydroxypropylmethylcellulose, Hydroxypropylethylcellulose, mikrokristalline Cellulose, Inulin, Carboxymethylcellulose, z. B. in Form der Natriumsalze, Alginsäure und Alginate, Pektinsäure und Pektine, Polyethylenimine, alkoxylierte, insbesondere ethoxylierte Polyethylenimine, Pfropfpolymere von Vinylacetat auf Polyalkylenglykole, insbesondere auf Polyethylenglykole, Homopolymere von N-Vinylpyrrolidon, Copolymere von N-Vinylpyrrolidon und N-Vinylimidazol, Copolymere von N-Vinylpyrrolidon mit Vinylacetat oder mit Vinylcaprolactam, Polyalkylenoxide, Polyvinylalkohol, Polyvinylalkohole mit Anteilen an nicht hydrolysiertem Vinylacetat, Verdicker, wie beispielsweise Xanthan Gum, Guar Gum, Gelatine, Agar-agar und Mischungen davon.

Es ist weiterhin möglich, wenigstens eine Oberfläche oder beide Oberflächen der erfindungsgemäßen Mehrschichtfolien einer zumindest teilweisen Beschichtung mit wenigstens einem Zusatzstoff zu unterziehen. Eine solche Behandlung kann z.B. dazu dienen, die Oberfläche mit bestimmten Eigenschaften, wie einer Antihaft-Wirkung, Antistatik-Wirkung, hydrophilen oder hydrophoben Eigenschaften, etc. zu versehen. Somit können die Mehrschichtenfolien beispielsweise mit besseren Ablöseeigenschaften vom bei der Herstellung eingesetzten Trägermaterial, besseren Abrolleigenschaften, besseren Gleiteigenschaften, einer verringerten Klebrigkeit, einer besseren Verträglichkeit gegenüber bestimmten damit umhüllten oder beschichteten Komponenten, etc. versehen werden. Das Aufbringen kann je nach Art und Zubereitung des Zusatzstoffes nach üblichen Verfahren erfolgen, z.B. durch Besprühen, Tauchen, Pulverauftrag, etc. Geeignete Zusatzstoffe zur Beschichtung der Oberfläche der erfindungsgemäßen Mehrschichtfolien sind z.B. Talkum, Tenside, wie silikonhaltige Tenside, Wachse, etc.

Auch ein Bedrucken oder Prägen der erfindungsgemäßen Mehrschichtfolien ist möglich, z.B. um diese mit Mustern, Motiven, oder Schriftzügen zu versehen. Das Bedrucken kann im Anschluss an die Herstellung der Mehrschichtfolie oder in einem Zwischenschritt während des Aufbaus der Schichten erfolgen. Bevorzugt erfolgt dieser Druckschritt direkt im Anschluss an die Folienherstellung inline, in einem separaten Druck- bzw. Convertingprozess oder inline mit der Podherstellung. Geeignete Druckmethoden sind Tintenstrahldruck, sowie Tief- und Flachdruckverfahren wie Flexodruck, Gravurdruck, Offsetdruck oder Inkjetdruck.

Wie zuvor ausgeführt, unterliegt das Folienherstellungsverfahren keinen besonderen Beschränkungen und der Fachmann kann jedes beliebige Herstellungsverfahren anwenden, das ihm aufgrund seiner Fachkenntnis bekannt ist. Das gilt zur Herstellung von Mehrschichtfolien, die als solche für die Verwendung als Waschmittel oder als Reinigungsmittel eingesetzt werden sollen. Das Gleiche gilt zur Herstellung von Umhüllungen und Beschichtungen auf Basis einer erfindungsgemäßen Mehrschichtfolie. Besonders geeignet sind Rakelverfahren, Gießverfahren, Walzenauftragsverfahren und Extrusionsverfahren.

Die erfindungsgemäßen Mehrschichtfolien sind in der Regel thermoplastisch und können einer Umformung durch Thermoformen (d. h. Warmformen, Tiefziehen oder Vakuumtiefziehen) unterzogen werden. Ein Verfahren zur Herstellung von wasserlöslichen Folienverpackungen durch ein Thermoformverfahren, das einen Warmform- oder Tiefziehschritt umfasst, ist in der WO 00/55044 beschrieben.

Zur Herstellung von Folienportionen kann die erfindungsgemäße Mehrschichtfolie in geeigneter Weise konfektioniert werden, z. B. durch Schneiden in eine geeignete Größe und/oder Falten zur Bildung von Kompartimenten. Anschließend können die Kanten nach üblichen Versiegelungsverfahren, wie Heißsiegeln, Flüssigsiegeln oder Drucksiegeln verschlossen werden.

Wie zuvor ausgeführt, kann die erfindungsgemäße Mehrschichtfolie vorzugsweise aus 2 bis 20 Schichten, besonders bevorzugt 2 bis 15 Schichten, insbesondere 2 bis 10 Schichten bestehen. Dazu zählen speziell Mehrschichtfolien, die aus 2, 3, 4, 5, 6, 7 oder 8 Schichten bestehen. Die Abfolge der Schichten der erfindungsgemäßen Mehrschichtfolien richtet sich nach dem gewünschten Verwendungszweck.

Erfindungsgemäß enthält eine Schicht oder enthalten mehrere Schichten der erfindungsgemäßen Mehrschichtfolie eine Polymerzusammensetzung P1). In einer speziellen Ausführung besteht eine Schicht der erfindungsgemäßen Mehrschichtfolie aus einer Polymerzusammensetzung P1).

In einer bevorzugten Ausführungsform enthält eine Schicht oder enthalten mehrere Schichten der erfindungsgemäßen Mehrschichtfolie ein Homo- oder Copolymer P2), das Wiederholungseinheiten enthält, die sich von Vinylalkohol, Vinylestern oder Mischungen davon ableiten. Bevorzugt als Polymere P2) sind Polyvinylalkohole, die einen Verseifungsgrad von 50 bis 99 mol-%, besonders bevorzugt von 70 bis 98 mol-%, aufweisen.

In einer speziellen Ausführungsform enthält eine Schicht oder enthalten mehrere Schichten der erfindungsgemäßen Mehrschichtfolie einen kaltwasserlöslichen Polyvinylalkohol P2) mit einem Hydrolysegrad von höchstens 90 mol%.

In einer weiteren speziellen Ausführungsform enthält eine Schicht oder enthalten mehrere Schichten der erfindungsgemäßen Mehrschichtfolie einen heißwasserlöslichen Polyvinylalkohol P2) mit einem Hydrolysegrad von ca. 90 bis ca. 99 mol%.

In einer weiteren bevorzugten Ausführungsform enthält eine Schicht oder enthalten mehrere Schichten der erfindungsgemäßen Mehrschichtfolie wenigstens einen Celluloseether P2). Bevorzugte Celluloseether sind ausgewählt unter Alkylcellulosen, Hydroxyalkylcellulosen, (Hydroxyalkyl)alkylcellulosen, Carboxyalkylcellulosen und Salzen davon, (Carboxyalkyl)alkylcellulosen und Salzen davon, (Carboxyalkyl)(hydroxyalkyl)cellulosen und Salzen davon, (Carboxyalkyl)(hydroxyalkyl)alkylcellulosen und Salzen, Sulfoalkylcellulosen und Salzen davon. Besonders bevorzugte Celluloseether sind ausgewählt unter Carboxymethylcellulosen. Dabei können die Carboxyalkylreste auch in Salzform vorliegen.

In einer weiteren bevorzugten Ausführungsform enthält eine Schicht oder enthalten mehrere Schichten der erfindungsgemäßen Mehrschichtfolie wenigstens ein Homo- oder Copolymer, das wenigstens ein Monomer einpolymerisiert enthält, das ausgewählt ist unter N-Vinylpyrrolidon, N-Vinylcaprolactam, N-Vinylimidazol, 2-Vinylpyridin, 4-Vinylpyridin, Salzen der drei letztgenannten Monomere, Vinylpyridin-N-oxid, N-carboxymethyl-4-vinylpyridiumhalogeniden und Mischungen davon.

In einer speziellen Ausführungsform enthält eine Schicht oder enthalten mehrere Schichten der erfindungsgemäßen Mehrschichtfolie ein Polyvinylpyrrolidon-Homopolymer.

In einer weiteren speziellen Ausführungsform enthält eine Schicht oder enthalten mehrere Schichten der erfindungsgemäßen Mehrschichtfolie ein Copolymer, das Vinylpyrrolidon und Vinylimidazol einpolymerisiert enthält.

### Wasch-, Reinigungs- und Geschirrspülmittel

Die erfindungsgemäßen Mehrschichtfolien eignen sich als solche für die Verwendung als Waschmittel oder als Reinigungsmittel oder als Geschirrspülmittel. Die Bezeichnung "Geschirrspülmittel" erfasst dabei auch Klarspüler. Da wenigstens eine Schicht der Mehrschichtfolien eine Polymerzusammensetzung P1) aufweist, zeichnen sie sich durch dispergierende, belagsinhibierende, emulgierende und/oder tensidische Eigenschaften aus, so dass auch die Polymerzusammensetzung P1) zur Wasch- und Reinigungsleistung beiträgt. Die erfindungsgemäßen Mehrschichtfolien verbessern nicht nur die Waschkraft, d.h. sie helfen aktiv mit Schmutz vom Gewebe oder von harten Oberflächen wie Keramik, Glas, Plastik und Metall zu entfernen, sondern sie verhindern auch die Wiederablagerung von abgelöstem Schmutz auf mitgewaschenem Gewebe oder harten Oberflächen, d.h. sie wirken vergrauungsinhibierend und belagsinhibierend. Sie eignen sich aufgrund ihrer Wasch- und Reinigungswirkung speziell zur Formulierung von Waschmitteln und Geschirrspülmitteln. Auch in dieser Ausführungsform liegen die erfindungsgemäßen Mehrschichtfolien als ein selbsttragendes, flächiges Gebilde vor, das wenigstens zwei Folienschichten aufweist.

Die maximale Dicke der erfindungsgemäßen Mehrschichtfolien für die Verwendung als Waschmittel oder als Reinigungsmittel oder als Geschirrspülmittel beträgt vorzugsweise höchstens 30 mm, besonders bevorzugt höchstens 20 mm, insbesondere höchstens 15 mm.

Vorzugsweise ist die Dicke der Mehrschichtfolien für die Verwendung als Waschmittel oder als Reinigungsmittel oder als Geschirrspülmittel um einen Faktor von wenigstens 2, besonders bevorzugt wenigstens 5, insbesondere wenigstens 10, kleiner als die Länge der größten Längsachse.

Vorzugsweise weisen Mehrschichtfolien für die Verwendung als Waschmittel oder als Reinigungsmittel oder als Geschirrspülmittel eine Fläche in der Ebene der Polymerschichten von wenigstens 1 cm², besonders bevorzugt von wenigstens 2 cm², insbesondere von wenigstens 3 cm³, auf.

Vorzugsweise weisen die Mehrschichtfolien für die Verwendung als Waschmittel oder als Reinigungsmittel oder als Geschirrspülmittel eine Fläche in der Ebene der Polymerschichten von 1 bis 500 cm², besonders bevorzugt von 2 bis 400 cm², insbesondere von 3 bis 300 cm², auf.

Vorzugsweise weisen die Mehrschichtfolien für die Verwendung als Waschmittel oder als Reinigungsmittel oder als Geschirrspülmittel ein Volumen von 1 bis 100 cm³, besonders bevorzugt von 2 bis 80 cm³, insbesondere von 3 bis 60 cm³, auf.

Die äußere Form der Mehrschichtfolien für die Verwendung als Waschmittel oder als Reinigungsmittel oder als Geschirrspülmittel ist in der Regel unkritisch. Geeignet sind Gebilde mit im Wesentlichen runder, elliptischer oder rechteckiger Grundfläche. Aus ästhetischen Aspekten können auch andere Formen, wie Blätter, Blüten, Tiere, etc. gewählt werden.

Die erfindungsgemäßen Mehrschichtfolien eignen sich weiterhin vorteilhaft für die Verwendung zur portionsweisen Verpackung von Wasch-, Reinigungs- und Geschirrspülmitteln. Sie eignen sich zum einen speziell zur Herstellung einer Umhüllung, die feste oder flüssige oder gelförmige Wasch-, Reinigungs- oder Geschirrspülmittel oder wenigstens eine deren Komponenten enthält. Die erfindungsgemäßen Mehrschichtfolien eignen sich weiterhin zur Herstellung einer Beschichtung auf einem festen Wasch-, Reinigungs- oder Geschirrspülmittel oder auf wenigstens einer festen Komponente davon. Die Mehrschichtfolien lösen sich zu Beginn der jeweiligen Anwendung (z. B. im Wasch- und Spülwasser) auf, setzen somit die Inhaltsstoffe der Wasch- und Reinigungsmittel frei und tragen in aufgelöster Form aufgrund ihrer dispergierenden, belagsinhibierenden, emulgierenden und tensidischen Eigenschaften zur Wasch- und Reinigungsleistung in erheblichem Maße bei. Die erfindungsgemäßen Mehrschichtfolien verbessern nicht nur die Waschkraft, d.h. sie helfen aktiv mit Schmutz vom Gewebe oder von harten Oberflächen wie Keramik, Glas, Plastik und Metall zu entfernen, sondern sie verhindern auch die (Wieder)ablagerung von abgelöstem Schmutz und schwerlöslichen Salzen der Wasserhärteionen auf mitgewaschenem Gewebe oder harten Oberflächen, d.h. sie wirken vergrauungsinhibierend und belagsinhibierend. Sie verhindern insbesondere die Wiederablagerung von partikulärem Schmutz, wie z.B. Clay-Partikeln, Ruß-Partikeln und Farb-Pigmenten und die Ablagerung von schwerlöslichen Salzen der Wasserhärteionen, wie den Carbonaten und Silikaten von Calcium(II)- und Magnesium(II)-ionen. Sie eignen sich aufgrund ihrer Waschwirkung speziell zur Formulierung von Waschmitteln.

Die erfindungsgemäßen Waschmittel- oder Reinigungsmittelportionen enthalten als Umhüllung und/oder Beschichtung wenigstens eine erfindungsgemäße wasch- oder reinigungsaktive Mehrschichtfolie. Dabei können die Schichten der Mehrschichtfolie als Zusatzstoffe waschaktive oder reinigungsaktive Komponenten enthalten. Weiterhin enthalten die erfindungsgemäßen Waschmittel- oder Reinigungsmittelportionen im Inneren der Umhüllung oder Beschichtung abgemessene Mengen wenigstens einer waschaktiven oder reinigungsaktiven Zusammensetzung. Dabei ist es möglich, dass die Waschmittel- oder Reinigungsmittelportionen nur eine einzelne wasch- oder reinigungsaktive Zusammensetzung enthalten. Es ist auch möglich, dass die erfindungsgemäßen Waschmittel- oder Reinigungsmittelportionen zwei oder mehr als zwei unterschiedliche wasch- oder reinigungsaktive Zusammensetzungen enthalten. Die verschiedenen Zusammensetzungen können von gleicher oder verschiedener Umhüllung und/oder Beschichtung umgeben sein. Dabei umfasst wenigstens eine der Umhüllungen und/oder Beschichtungen eine erfindungsgemäße wasch- oder reinigungsaktive Mehrschichtfolie. Die verschiedenen Zusammensetzungen können hinsichtlich der Konzentration der einzelnen Komponenten (quantitativ) und/oder hinsichtlich der Art der einzelnen Komponenten (qualitativ) unterschiedlich sein. Besonders bevorzugt ist, dass die Komponenten hinsichtlich Art und Konzentration an die Aufgaben angepasst sind, die die Wirkstoffportionspackungen im Wasch- oder Reinigungsvorgang zu erfüllen haben.

Die erfindungsgemäßen Mehrschichtfolien eignen sich auch vorteilhaft zur Herstellung von sogenannten Mehrkammersystemen. Mehrkammersysteme weisen 2, 3, 4, 5 oder mehr als 5 Kammern auf, die jeweils einen einzelnen oder mehrere Komponenten eines Wasch- oder Reinigungsmittels enthalten. Dabei kann es sich grundsätzlich um einen einzelnen wasch- oder reinigungsaktiven Wirkstoff, einen einzelnen Hilfsstoff oder eine beliebige Mischung von zwei oder mehr als zwei Wirkstoffen und/oder Hilfsstoffen handeln. Die Inhalte der einzelnen Kammern können jeweils flüssig, gelförmig oder fest sein. Mehrkammersysteme bieten sich beispielsweise an, um nicht oder weniger kompatible Komponenten eines Wasch- oder Reinigungsmittels voneinander zu trennen. So kann z. B. eine Kammer ein oder mehrere Enzym(e) und eine andere Kammer wenigstens ein Bleichmittel enthalten. Mehrkammersysteme bieten sich beispielsweise auch an, um eine kontrollierte Freisetzung (controlled release) einer bestimmten Komponente z. B. zu einem bestimmten Zeitpunkt des Wasch- oder Reinigungsvorgangs zu ermöglichen. Dazu können z. B. Folienmaterialien unterschiedlicher Materialstärke eingesetzt werden. Des Weiteren können einzelne Kammern unter Verwendung einer erfindungsgemäßen Mehrschichtfolie und andere unter Verwendung einer davon verschiedenen konventionellen Folie hergestellt werden.

Soweit im Folgenden Angaben zur qualitativen und quantitativen Zusammensetzung von Wasch- und Reinigungsmitteln gemacht werden, sollen diese immer die Gesamtformulierung aus Mehrschichtfolie und umhüllten oder beschichteten Komponenten umfassen. Bei einer Formulierung dieser Zusammensetzung als Mehrkammersystem können die Kammern jeweils eine einzelne oder mehrere Komponenten der Formulierung enthalten oder die Gesamtmenge einer Komponente kann auf zwei oder mehr als zwei Kammern verteilt sein.

Die erfindungsgemäßen Waschmittel- oder Reinigungsmittel- oder Geschirrspülmittelportionen enthalten im Inneren wenigstens eine wasch- oder reinigungsaktive Zusammensetzung. Bei diesen Zusammensetzungen kann es sich um beliebige im Zusammenhang mit einem Wasch- oder Reinigungsvorgang relevante Substanzen oder Substanzgemische handeln. Dies sind in erster Linie die eigentlichen Waschmittel oder Reinigungsmittel mit ihren im Folgenden näher erläuterten Einzelkomponenten.

Unter Waschmitteln versteht man dabei im Rahmen der vorliegenden Erfindung solche Mittel, die zum Reinigen von flexiblen Materialien mit hoher Saugfähigkeit verwendet werden, z. B. von Materialien mit einem textilen Charakter, während man unter Reinigungsmitteln im Rahmen der vorliegenden Erfindung solche Mittel versteht, die zum Reinigen von Materialien mit geschlossener Oberfläche, d. h. mit einer Oberfläche, die keine oder nur wenige und kleine Poren hat und infolgedessen keine oder nur eine geringe Saugfähigkeit aufweist, eingesetzt werden.

Beispiele für flexible Materialien mit hoher Saugfähigkeit sind solche, die natürliche, synthetische oder halbsynthetische Fasermaterialien enthalten oder daraus bestehen und die demzufolge in der Regel zumindest teilweise einen textilen Charakter aufweisen. Die faserhaltigen oder aus Fasern bestehenden Materialien können prinzipiell in jeder im Gebrauch oder der Herstellung und Verarbeitung vorkommenden Form vorliegen. Beispielsweise können Fasern ungeordnet in Form von Flocke oder Haufwerk, geordnet in Form von Fäden, Garnen, Zwirnen, oder in Form von Flächengebilden wie Vliesen, Lodenstoffen oder Filz, Geweben, Gewirken in allen denkbaren Bindungsarten vorliegen. Bei den Fasern kann es sich um Rohfasern oder um Fasern in beliebigen Verarbeitungsstadien handeln. Beispiele sind natürliche Eiweiß- oder Zellulosefasern, wie Wolle, Seide, Baumwolle, Sisal, Hanf oder Kokosfasern, oder synthetische Fasern, wie beispielsweise Polyester-, Polyamid- oder Polyacrylnitrilfasern.

Beispiele für Materialien, die keine oder nur wenige und kleine Poren haben und keine oder nur eine geringe Saugfähigkeit aufweisen, sind Metall, Glas, Email oder Keramik. Typische Objekte aus diesen Materialien sind z. B. metallene Spülbecken, Bestecke, Glas- und Porzellangeschirr, Badewannen, Waschbecken, Kacheln, Fliesen, ausgehärtete Kunstharze, wie z. B. dekorative Melaminharzoberflächen auf Küchenmöbeln oder lackierte Metallflächen, wie z. B. Kühlschränke und Autokarosserien, gedruckte Schaltungen (printed circuit boards), Mikrochips, versiegelte oder lackierte Hölzer, z. B. Parkett oder Wandverkleidungen, Fensterrahmen, Türen, Kunststoffbeläge, wie Fußbodenbeläge aus PVC oder Hartgummi, oder Hart- oder Weichschaumstoffe mit weitgehend geschlossenen Oberflächen.

Beispiele für Reinigungsmittel, die die erfindungsgemäße wasch- und reinigungsaktive Mehrschichtfolie enthalten können, umfassen Wasch- und Reinigungsmittel, Geschirrspülmittel, wie Handgeschirrspülmittel oder Maschinengeschirrspülmittel (= Geschirrspülmittel für die Geschirrspülmaschine), Metallentfetter, Glasreiniger, Fußbodenreiniger, Allzweckreiniger, Hochdruckreiniger, Neutralreiniger, alkalische Reiniger, saure Reiniger, Spritzentfetter, Molkereireiniger, Großküchenreiniger, Apparatereiniger in der Industrie, insbesondere der chemischen Industrie, Reiniger für die Autowäsche und auch Haushalts-Allzweckreiniger.

Bei den erfindungsgemäßen Wasch-, Reinigungs- oder Geschirrspülmitteln kann es sich um Mittel handeln, die eine erfindungsgemäße Polymerzusammensetzung P1) in der Umhüllung oder Beschichtung enthalten. Bei den erfindungsgemäßen Wasch-, Reinigungs- oder Geschirrspülmitteln kann es sich auch um in Beuteln verpackte Portionen fester, flüssiger oder gelförmiger Wasch- oder Reinigungsmittel handeln. In einer speziellen Ausführung handelt es sich um sogenannte pouches (liquid tabs). Weiterhin kann es sich um verpresste Formkörper, wie Tabletten ("Tabs"), Blöcke, Briketts, etc., handeln. In einer speziellen Ausführung handelt es sich um tablettenförmige Wasch- oder Reinigungsmittel. In einer weiteren besonders bevorzugten Ausführung handelt es sich dann um tablettenförmige Geschirrspülmittel, insbesondere um tablettenförmige Maschinengeschirrspülmittel.

Bei tablettenförmigen Geschirrspülmitteln kann es sich um einfache Tabs oder auch um sogenannte "2 in 1"-, "3 in 1"-, "5 in 1"- oder "7 in 1"-Produkte (multifunktionelle Produkte) handeln. Näheres zu diesen Formulierungen findet sich in Hermann G. Hauthal, G. Wagner (Hrsg.), Reinigungs- und Pflegemittel im Haushalt, Verlag für chemische Industrie, H. Ziolkowsky GmbH, Augsburg 2003, Kapitel 4.2, Seiten 161-184. "2 in 1"-Produkte enthalten neben den üblichen Bestandteilen von Maschinengeschirrspülmitteln zusätzlich einen Klarspüler. "3 in 1"-Produkte enthalten außerdem einen Wasserenthärter. "5 in 1"-Produkte enthalten in der Regel außerdem ein Glasschutzmittel und ein Spülkraftverstärkungsmittel. "7 in 1"-Produkte enthalten außerdem ein Edelstahlglanzmittel und ein Entkrustungsmittel. In diesen tablettenförmigen Geschirrspülmitteln kann die erfindungsgemäße Polymerzusammensetzung P1) im Klarspülkern enthalten sein oder sie ist als Feststoff im tablettenförmigen Geschirrspülmittel enthalten.

### Wasch- und Reinigungsmittel

Das erfindungsgemäße Wasch- oder Reinigungsmittel umfasst vorzugsweise folgende Bestandteile:
A) wenigstens eine Umhüllung und/oder Beschichtung, enthaltend eine oder bestehend aus einer erfindungsgemäßen wasch- und reinigungsaktive(n) Mehrschichtfolie,
B) wenigstens ein Tensid,
C) gegebenenfalls wenigstens einen Builder,
D) gegebenenfalls wenigstens ein Bleichsystem,
E) gegebenenfalls wenigstens einen weiteren Zusatzstoff, der vorzugsweise ausgewählt ist unter Enzymen, Enzymstabilisatoren, Basen, Korrosionsinhibitoren, Entschäumern und Schauminhibitoren, Farbstoffen, Duftstoffen, Füllstoffen, Tablettierhilfsmitteln, Desintegrationsmitteln, Verdickern, Löslichkeitsvermittlern, organischen Lösemitteln, Elektrolyten, pH-Stellmitteln, Parfümträgern, Bitterstoffen, Fluoreszenzmitteln, Hydrotropen, Antiredepositionsmitteln, optischen Aufhellern, Vergrauungsinhibitoren, Einlaufverhinderern, Knitterschutzmitteln, Farbübertragungsinhibitoren, antimikrobiellen Wirkstoffen, Antioxidantien, Anti-Vergilbungsmitteln, Korrosionsinhibitoren, Antistatika, Bügelhilfsmitteln, Phobier- und Imprägniermitteln, Quell- und Schiebefestmitteln und UV-Absorbern, und
F) gegebenenfalls Wasser.

Im Rahmen der vorliegenden Erfindung umfasst der Builder C) auch als Sequestrierungsmittel, Gerüststoff, Komplexbildner, Chelator, Chelatisierungsmittel oder Enthärter bezeichnete Verbindungen.

Die Bleichsysteme D) enthalten neben Bleichmitteln gegebenenfalls noch Bleichaktivatoren, Bleichkatalysatoren und/oder Bleichstabilisatoren.

Besonders bevorzugt umfasst das erfindungsgemäße Wasch- und Reinigungsmittel als Zusatzstoff E) wenigstens ein Enzym.

Eine bevorzugte Ausführungsform betrifft flüssige oder gelförmige Wasch- oder Reinigungsmittel, enthaltend:
A) 0,1 bis 20 Gew.-% wenigstens einer Umhüllung und/oder Beschichtung, enthaltend eine oder bestehend aus einer erfindungsgemäßen wasch- und reinigungsaktive(n) Mehrschichtfolie,
B) 1 bis 80 Gew.-% wenigstens eines Tensids,
C) 0,1 bis 50 Gew.-% wenigstens eines Builders,
D) 0 bis 20 Gew.-% eines Bleichsystems,
E) 0,1 bis 60 Gew.-% wenigstens eines weiteren Zusatzstoffs, der vorzugsweise ausgewählt ist unter Enzymen, Enzymstabilisatoren, Basen, Korrosionsinhibitoren, Entschäumern und Schauminhibitoren, Farbstoffen, Duftstoffen, Füllstoffen, Tablettierhilfsmitteln, Desintegrationsmitteln, Verdickern, Löslichkeitsvermittlern, organischen Lösemitteln, Elektrolyten, pH-Stellmitteln, Parfümträgern, Bitterstoffen, Fluoreszenzmitteln, Hydrotropen, Antiredepositionsmitteln, optischen Aufhellern, Vergrauungsinhibitoren, Einlaufverhinderern, Knitterschutzmitteln, Farbübertragungsinhibitoren, antimikrobiellen Wirkstoffen, Antioxidantien, Anti-Vergilbungsmitteln, Korrosionsinhibitoren, Antistatika, Bügelhilfsmitteln, Phobier- und Imprägniermitteln, Quell- und Schiebefestmitteln und UV-Absorbern, und
F) 0 bis 98,7 Gew.-% Wasser.

Die Gew.-%-Angaben beziehen sich dabei auf das Gesamtgewicht des Wasch- und Reinigungsmittels. Die Gewichtsmengen von A) bis F) ergänzen sich zu 100 Gew.-%.

Bevorzugt enthalten die flüssigen oder gelförmigen Wasch- oder Reinigungsmittel bis zu 70 Gew.-% Wasser, besonders bevorzugt bis zu 50 Gew.-% Wasser, insbesondere bis zu 30 Gew.-% Wasser.

Eine weitere bevorzugte Ausführungsform betrifft feste Wasch- oder Reinigungsmittel, enthaltend:
A) 0,1 bis 20 Gew.-% wenigstens einer Umhüllung und/oder Beschichtung, enthaltend eine oder bestehend aus einer erfindungsgemäßen wasch- und reinigungsaktive(n) Mehrschichtfolie,
B) 1 bis 50 Gew.-% wenigstens eines Tensids,
C) 0,1 bis 70 Gew.-% wenigstens eines Builders,
D) 0 bis 30 Gew.-% eines Bleichsystems,
E) 0,1 bis 70 Gew.-% wenigstens eines weiteren Zusatzstoffs, der vorzugsweise ausgewählt ist unter Enzymen, Enzymstabilisatoren, Basen, Korrosionsinhibitoren, Entschäumern und Schauminhibitoren, Farbstoffen, Duftstoffen, Füllstoffen, Tablettierhilfsmitteln, Desintegrationsmitteln, Verdickern, Löslichkeitsvermittlern, organischen Lösemitteln, Elektrolyten, pH-Stellmitteln, Parfümträgern, Bitterstoffen, Fluoreszenzmitteln, Hydrotropen, Antiredepositionsmitteln, optischen Aufhellern, Vergrauungsinhibitoren, Einlaufverhinderern, Knitterschutzmitteln, Farbübertragungsinhibitoren, antimikrobiellen Wirkstoffen, Antioxidantien, Anti-Vergilbungsmitteln, Korrosionsinhibitoren, Antistatika, Bügelhilfsmitteln, Phobier- und Imprägniermitteln, Quell- und Schiebefestmitteln und UV-Absorbern, und
F) gegebenenfalls Wasser.

Die Gew.-%-Angaben beziehen sich dabei auf das Gesamtgewicht des Wasch- und Reinigungsmittels. Die Gewichtsmengen von A) bis F) ergänzen sich zu 100 Gew.-%.

### Komponente A)

Bezüglich geeigneter und bevorzugter erfindungsgemäßer wasch- und reinigungsaktiver Mehrschichtfolien wird auf die vorstehenden Ausführungen verwiesen.

### Komponente B)

Die erfindungsgemäßen Wasch- und Reinigungsmittel enthalten als Komponente B) wenigstens ein Tensid. Geeignete Tenside B) sind nichtionische, anionische, kationische oder amphotere Tenside.

Als Tenside B) können im Rahmen der vorliegenden Erfindung beispielsweise nichtionische Tenside (Niotenside, NIS) eingesetzt werden. Als nichtionische Tenside werden vorzugsweise alkoxylierte Alkohole eingesetzt. Bevorzugt sind alkoxilierte primäre Alkohole. Bevorzugte alkoxylierte Alkohole sind ethoxylierte Alkohole mit vorzugsweise 8 bis 18 C-Atomen im Alkylrest und durchschnittlich 1 bis 12 Mol Ethylenoxid (EO) pro Mol Alkohol. Der Alkoholrest kann linear oder bevorzugt in 2-Stellung methylverzweigt sein oder kann lineare und methylverzweigte Reste im Gemisch enthalten, so wie sie üblicherweise in Oxoalkoholresten vorliegen. Insbesondere bevorzugt sind Alkoholethoxilate mit linearen oder verzweigten Resten aus Alkoholen nativen oder petrochemischen Ursprungs mit 12 bis 18 C-Atomen, zum Beispiel aus Kokos-, Palm-, Talgfett- oder Oleylalkohol, und durchschnittlich 2 bis 8 EO pro Mol Alkohol.

Die ethoxilierten Alkohole sind vorzugsweise ausgewählt unter:
- C₁₂C₁₄-Alkoholen mit 3 EO, 5 EO, 7 EO oder 9 EO,
- C₉C₁₁-Alkoholen mit 7 EO,
- C₁₃-Oxoalkoholen mit 3 EO, 5 EO, 7 EO oder 9 EO,
- C₁₃C₁₅-Alkoholen mit 3 EO, 5 EO, 7 EO oder 9 EO,
- C₁₂C₁₈-Alkoholen mit 3 EO, 5 EO, 7 EO oder 9 EO und Mischungen davon,
- 2-Propylheptanol mit 3 EO, 4 EO, 5 EO, 6 EO, 7 EO, 8 EO und 9 EO
und Mischungen aus zwei oder mehr als zwei der zuvor genannten ethoxylierten Alkohole.

Eine bevorzugte Mischung nichtionischer Tenside ist eine Mischung aus C₁₂C₁₄-Alkohol (Laurylalkohol/Myristylalkohol) mit 3 EO und C₁₂C₁₈-Alkohol (Laurylalkohol/Myristylalkohol/Cetylalkohol/Stearylalkohol)mit 7 EO. Bevorzugt sind weiterhin Mischungen aus kurzkettigen Alkoholethoxilaten (z. B. 2-Propylheptanol mit 7 EO) und langkettigen Alkoholethoxilaten (z. B. C₁₆C₁₈ mit 7 EO).

Die angegebenen Ethoxylierungsgrade stellen statistische Mittelwerte (Zahlenmittel, Mn) dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die Ethylenoxid (EO)- und Propylenoxid (PO)-Gruppen zusammen im Molekül enthalten, sind einsetzbar. Hierbei können Blockcopolymere mit EO-PO-Blockeinheiten bzw. PO-EO-Blockeinheiten eingesetzt werden, aber auch EO-PO-EO-Copolymere bzw. PO-EO-PO-Copolymere. Selbstverständlich sind auch gemischt alkoxylierte Niotenside einsetzbar, in denen EO- und PO-Einheiten nicht blockweise, sondern statistisch verteilt sind. Solche Produkte sind durch gleichzeitige Einwirkung von Ethylenoxid und Propylenoxid auf Fettalkohole erhältlich.

Als Komponente B) geeignete Tenside sind weiterhin Polyetherole, vorzugsweise mit einem zahlenmittleren Molekulargewicht von wenigstens 200 g/mol.

Geeignete Polyetherole können linear oder verzweigt, vorzugsweise linear sein. Geeignete Polyetherole weisen im Allgemeinen ein zahlenmittleres Molekulargewicht im Bereich von etwa 200 bis 100000 g/mol, bevorzugt 300 bis 50000 g/mol, besonders bevorzugt 500 bis 40000 g/mol, auf. Geeignete Polyetherole sind beispielsweise wasserlösliche oder wasserdispergierbare nichtionische Polymere, die Alkylenoxid-Wiederholungseinheiten aufweisen. Vorzugsweise beträgt der Anteil an Alkylenoxid-Wiederholungseinheiten mindestens 30 Gew.-%, bezogen auf das Gesamtgewicht der Verbindung. Geeignete Polyetherole sind Polyalkylenglycole, wie Polyethylenglycole, Polypropylenglycole, Polytetrahydrofurane und Alkylenoxidcopolymere. Geeignete Alkylenoxide zur Herstellung von Alkylenoxidcopolymeren sind z. B. Ethylenoxid, Propylenoxid, Epichlorhydrin, 1,2- und 2,3-Butylenoxid. Geeignet sind beispielsweise Copolymerisate aus Ethylenoxid und Propylenoxid, Copolymerisate aus Ethylenoxid und Butylenoxid sowie Copolymerisate aus Ethylenoxid, Propylenoxid und mindestens einem Butylenoxid. Die Alkylenoxidcopolymere können die Alkylenoxideinheiten statistisch verteilt oder in Form von Blöcken einpolymerisiert enthalten. Vorzugsweise beträgt in den Ethylenoxid/Propylenoxid-Copolymeren der Anteil an von Ethylenoxid abgeleiteten Wiederholungseinheiten 40 bis 99 Gew.-%. Besonders bevorzugt sind Ethylenoxid-Homopolymere und Ethylenoxid/Propylenoxid-Copolymere.

Außerdem können als weitere nichtionische Tenside auch Alkylglykoside der allgemeinen Formel (IV)

R¹⁰O(G)ᵢ (IV)

eingesetzt werden, worin
- R¹⁰: für einen primären geradkettigen oder methylverzweigten aliphatischen Rest mit 8 bis 22 C-Atomen steht,
- G: für eine Glykosideinheit mit 5 oder 6 C-Atomen steht, und
- i: eine beliebige Zahl zwischen 1 und 10 bedeutet.

In den Verbindungen der Formel (IV) steht R¹⁰ bevorzugt für einen in 2-Stellung methylverzweigten aliphatischen Rest mit 8 bis 22, vorzugsweise 12 bis 18 C-Atomen.

G steht vorzugsweise für Glucose.

Der Oligomerisierungsgrad i, der die Verteilung von Monoglykosiden und Oligoglykosiden angibt, liegt vorzugsweise in einem Bereich von 1,2 bis 1,4.

Eine weitere Klasse im Rahmen der vorliegenden Erfindung bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette. Insbesondere bevorzugt sind Fettsäuremethylester, wie sie beispielsweise in der japanischen Patentanmeldung JP 58/217598 beschrieben sind oder die vorzugsweise nach dem in der internationalen Patentanmeldung WO 90/13533 beschriebenen Verfahren hergestellt werden.

Als nichtionische Tenside eignen sich weiterhin Aminoxide, beispielsweise N-Cocosalkyl-N,N-dimethylaminoxid und N-Talgalkyl-N,N-dihydroxyethylaminoxid sowie Fettsäurealkanolamide. Diese nichtionischen Tenside werden vorzugsweise als Mischung mit alkoxilierten Alkoholen eingesetzt. Bevorzugt ist die Mischung mit ethoxilierten Fettalkoholen. Die Gewichtsmenge dieser nichtionischen Tenside beträgt vorzugsweise nicht mehr als die der ethoxilierten Fettalkohole, insbesondere nicht mehr als die Hälfte davon.

Weitere geeignete Tenside B) sind Polyhydroxyfettsäureamide der Formel (V) 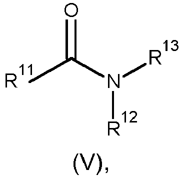 worin die Gruppe R¹¹-C(=O) für einen aliphatischen Acylrest mit 6 bis 22 Kohlenstoffatomen steht, R¹² für Wasserstoff, einen Alkylrest mit 1 bis 4 Kohlenstoffatomen oder einen Hydroxyalkylrest mit 1 bis 4 Kohlenstoffatomen steht und R¹³ für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können. Zur Gruppe der Polyhydroxyfettsäureamide gehören in diesem Zusammenhang auch Verbindungen der Formel (VI) 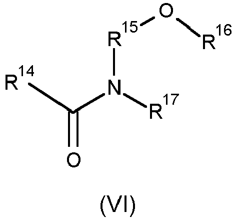 worin R¹⁴ für einen linearen oder verzweigten Alkyl- oder Alkenylrest mit 7 bis 12 Kohlenstoffatomen, R¹⁵ für einen linearen, verzweigten oder cyclischen Alkylenrest mit 2 bis 8 Kohlenstoffatomen oder einen Arylenrest mit 6 bis 8 Kohlenstoffatomen, und R¹⁶ für einen linearen, verzweigten oder cyclischen Alkylrest oder einen Arylrest oder einen Oxy-Alkylrest mit 1 bis 8 Kohlenstoffatomen steht, wobei C₁-C₄-Alkyl- oder Phenylreste bevorzugt sind, und R¹⁷ für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes. R¹⁷ wird vorzugsweise durch reduktive Aminierung eines Zuckers erhalten, beispielsweise Glucose, Fructose, Maltose, Lactose, Galactose, Mannose oder Xylose. Die N-Alkoxy- oder N-Aryloxy-substituierten Verbindungen können dann beispielweise gemäß WO 95/07331 durch Umsetzung mit Fettsäuremethylestern in Gegenwart eines Alkoxids als Katalysator in die gewünschten Polyhydroxyfettsäureamide überführt werden.

Geeignete Tenside B) sind auch anionische Tenside (Aniontenside). Typische Beispiele für anionische Tenside sind Seifen, Alkylsulfonate, Alkylbenzolsulfonate, Olefinsulfonate, Methylestersulfonate, Sulfofettsäuren, Alkylsulfate, Mono- und Dialkylsulfosuccinate, Mono- und Dialkylsulfosuccinamate, Sulfotriglyceride, Amidseifen, Ethercarbonsäuren und deren Salze, Fettsäureisethionate, Fettsäuresarcosinate, Fettsäuretauride, N-Acylaminosäuren, wie beispielsweise Acyllactylate, Acyltartrate, Acylglutamate und Acylaspartate, Alkyloligoglucosidsulfate, Alkylglucosecarboxylate, Proteinfettsäurekondensate und Alkyl(ether)phosphate.

Eine erste bevorzugte Ausführung sind anionische Tenside vom Typ der Sulfonate und Sulfate. Bevorzugte Tenside vom Sulfonat-Typ sind C₉-C₁₃-Alkylbenzolsulfonate, Olefinsulfonate, d. h. Gemische aus Alken- und Hydroxyalkansulfonaten, sowie Disulfonate, wie man sie beispielsweise aus C₁₂-C₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält. Geeignet sind auch Alkansulfonate, die aus C₁₂-C₁₈-Alkanen beispielsweise durch Sulfochlorierung oder Sulfoxidation mit anschließender Hydrolyse bzw. Neutralisation gewonnen werden. Ebenso sind auch die Ester von α-Sulfofettsäuren (Estersulfonate) geeignet, zum Beispiel die α-sulfonierten Methylester der hydrierten Kokos-, Palmkern- oder Talgfettsäuren. Weitere geeignete anionische Tenside sind sulfierte Fettsäureglycerinester. Unter Fettsäureglycerinestern sind unter anderem die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Bevorzugte Alk(en)ylsulfate sind die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoalkohole und die Halbester sekundärer C₁₀-C₂₀-Alkohole. Weiterhin bevorzugt sind Alk(en)ylsulfate, welche einen synthetischen, auf petrochemischer Basis hergestellten geradkettigen C₁₀-C₂₀-Alkylrest enthalten. Diese besitzen ein analoges Abbauverhalten wie die adäquaten Verbindungen auf der Basis von fettchemischen Rohstoffen. Aus waschtechnischem Interesse sind die C₁₂-C₁₆-Alkylsulfate und C₁₂-C₁₅-Alkylsulfate sowie C₁₄-C₁₅-Alkylsulfate bevorzugt. Auch 2,3-Alkylsulfate, welche beispielsweise gemäß den US-Patentschriften 3,234,258 oder 5,075,041 hergestellt werden und als Handelsprodukte der Shell Oil Company unter dem Namen DAN® erhalten werden können, sind geeignete Aniontenside. Auch die Schwefelsäuremonoester der mit 1 bis 6 Mol Ethylenoxid ethoxylierten geradkettigen oder verzweigten C₇-C₂₁-Alkohole, wie 2-Methyl-verzweigte C₉-C₁₁-Alkohole mit im Durchschnitt 3,5 Mol Ethylenoxid (EO) oder C₁₂-C₁₈-Fettalkohole mit 1 bis 4 EO, sind unter anderem geeignet. Sie werden üblicherweise in Reinigungsmitteln aufgrund ihres hohen Schaumverhaltens nur in relativ geringen Mengen, beispielsweise in Mengen von 1 bis 5 Gew.-%, eingesetzt. Weitere geeignete Aniontenside sind im Rahmen der vorliegenden Erfindung auch die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈-C₁₈-Fettalkoholreste oder Mischungen aus diesen. Insbesondere bevorzugte Sulfosuccinate enthalten einen Fettalkoholrest, der sich von ethoxylierten Fettalkoholen ableitet. Dabei sind wiederum Sulfosuccinate, deren Fettalkohol-Reste sich von ethoxylierten Fettalkoholen mit enger Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Insbesondere bevorzugte anionische Tenside sind Seifen. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Geeignete Tenside B) sind auch kationische Tenside. Besonders bevorzugte kationische Tenside sind:
- C₇-C₂₅-Alkylamine;
- N,N-Dimethyl-N-(hydroxy-C₇-C₂₅-alkyl)ammoniumsalze;
- mit Alkylierungsmitteln quaternisierte Mono- und Di-(C₇-C₂₅-alkyl)dimethylammoniumverbindungen;
- Esterquats, insbesondere quaternäre veresterte Mono-, Di- und Trialkanolamine, die mit C₈-C₂₂-Carbonsäuren verestert sind;
- Imidazolinquats, insbesondere 1-Alkylimidazoliniumsalze der Formeln VII oder VIII 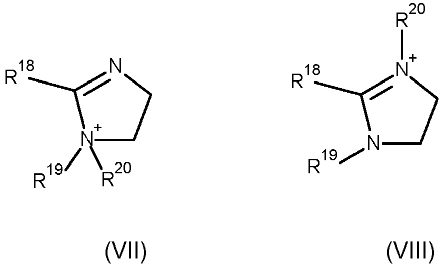 wobei die Variablen folgende Bedeutung haben:
   - R¹⁸: C₁-C₂₅-Alkyl oder C2-C25-Alkenyl,
   - R¹⁹: C₁-C₄-Alkyl oder Hydroxy-C₁-C₄-alkyl,
   - R²⁰: C₁-C₄-Alkyl, Hydroxy-C₁-C₄-alkyl oder ein Rest R²¹-(CO)-R²²-(CH₂)ᵣ-, wobei R²¹ für H oder C₁-C₄-Alkyl steht, R²² für -O- oder -NH- steht und r für 2 oder 3 steht,
   wobei mindestens ein Rest R¹⁸ ein C₇-C₂₂-Alkylrest ist.

Die Tenside B) können auch amphotere Tenside sein. Geeignete amphotere Tenside sind Alkylbetaine, Alkylamidobetaine, Alkylsulfobetaine, Aminopropionate, Aminoglycinate und amphotere Imidazoliumverbindungen. Beispielsweise können Cocodimethylsulfopropylbetain, Laurylbetain, Cocamidopropylbetain, Natriumcocamphopropionat oder Tetradecyldimethylaminoxid eingesetzt werden.

Der Gehalt an Tensiden in flüssigen und gelförmigen Wasch- und Reinigungsmittelzusammensetzungen beträgt vorzugsweise 2 bis 75 Gew.-% und insbesondere 5 bis 65 Gew.-%, jeweils bezogen auf die gesamte Zusammensetzung.

Der Gehalt an Tensiden in festen Wasch- und Reinigungsmittelzusammensetzungen beträgt vorzugsweise 2 bis 40 Gew.-% und insbesondere 5 bis 35 Gew.-%, jeweils bezogen auf die gesamte Zusammensetzung.

### Komponente C)

Builder, die teilweise auch als Sequestrierungsmittel, Gerüststoff, Komplexbildner, Chelator, Chelatisierungsmittel oder Enthärter bezeichnet werden, binden Erdalkalimetalle und andere wasserlösliche Metallsalze, ohne zu präzipitieren. Sie helfen Schmutz aufzubrechen, dispergieren Schmutzteilen, helfen Schmutz abzulösen und haben teilweise eine eigene Waschwirkung.

Geeignete Builder können sowohl organischer als auch anorganischer Natur sein. Beispiele sind Alumosilikate, Carbonate, Phosphate und Polyphosphate, Polycarbonsäuren, Polycarboxylate, Hydroxycarbonsäuren, Phosphonsäuren, z. B. Hydroxyalkylphosphonsäuren, Phosphonate, Aminopolycarbonsäuren und deren Salze und polymere carbonsäuregruppenhaltige Verbindungen und deren Salze.

Geeignete anorganische Builder sind beispielsweise kristalline oder amorphe Alumosilikate mit ionenaustauschenden Eigenschaften, wie Zeolithe. Verschiedene Typen von Zeolithen sind geeignet, insbesondere Zeolithe A, X, B, P, MAP und HS in ihrer Na-Form oder in Formen, in denen Na teilweise gegen andere Kationen wie Li, K, Ca, Mg oder Ammonium ausgetauscht ist. Geeignete Zeolithe sind beispielsweise in der US-A-4604224 beschrieben. Als Builder geeignete kristalline Silikate sind beispielsweise Disilikate oder Schichtsilikate, z. B. 5-Na₂Si₂O₅ oder B-Na₂Si₂O₅ (SKS 6 bzw. SKS 7). Die Silikate können in Form ihrer Alkalimetall-, Erdalkalimetall- oder Ammoniumsalze eingesetzt werden, vorzugsweise als Na-, Li- und Mg-Silikate. Amorphe Silikate, wie beispielsweise Natriummetasilikat, welches eine polymere Struktur aufweist, oder amorphes Disilikat (Britesil® H 20 Hersteller: Akzo) sind ebenfalls verwendbar. Bevorzugt ist hierunter Natriumdisilikat.

Geeignete anorganische Buildersubstanzen auf Carbonat-Basis sind Carbonate und Hydrogencarbonate. Diese können in Form ihrer Alkalimetall-, Erdalkalimetall- oder Ammoniumsalze eingesetzt werden. Vorzugsweise werden Na-, Li- und Mg-Carbonate bzw. -Hydrogencarbonate, insbesondere Natriumcarbonat und/oder Natriumhydrogencarbonat, eingesetzt.

Übliche, als anorganische Builder eingesetzte Phosphate sind Alkalimetallorthophosphate und/oder -polyphosphate wie z. B. Pentanatriumtriphosphat.

Geeignete organische Builder sind beispielsweise C₄-C₃₀-Di-, -Tri- und -Tetracarbonsäuren, wie z. B. Bernsteinsäure, Propantricarbonsäure, Butantetracarbonsäure, Cyclopentantetracarbonsäure und Alkyl- und Alkenylbernsteinsäuren mit C₂-C₂₀-Alkyl- bzw. -Alkenyl-Resten.

Geeignete organische Builder sind weiterhin Hydroxycarbonsäuren und Polyhydroxycarbonsäuren (Zuckersäuren). Dazu zählen C₄-C₂₀-Hydroxycarbonsäuren wie z. B. Äpfelsäure, Weinsäure, Gluconsäure, Schleimsäure, Milchsäure, Glutarsäure, Zitronensäure, Tartronsäure, Glucoheptonsäure, Lactobionsäure und Saccharosemono-, -di- und -tricarbonsäure. Bevorzugt sind hierunter Zitronensäure und ihre Salze.

Geeignete organische Builder sind weiterhin Phosphonsäuren, wie z. B. Hydroxyalkylphosphonsäuren, Aminophosphonsäuren und die Salze davon. Dazu zählen z. B. Phosphonobutantricarbonsäure, Aminotris-methylenphosphonsäure, Ethylendiamintetraethylenphosphonsäure, Hexamethylendiamintetramethylenphosphonsäure, Diethylentriaminpentamethylenphosphonsäure, Morpholino-methandiphosphonsäure, 1-Hydroxy-C₁- bis C₁₀-alkyl-1,1-diphosphonsäuren wie 1-Hydroxyethan-1,1-diphosphonsäure. Bevorzugt ist hierunter 1-Hydroxyethan-1,1-diphosphonsäure und deren Salze.

Geeignete organische Builder sind weiterhin Aminopolycarbonsäuren, wie Nitrilotriessigsäure (NTA), Nitrilomonoessigdipropionsäure, Nitrilotripropionsäure, β-Alanindiessigsäure (β-ADA), Ethylendiamintetraessigsäure (EDTA), Diethylentriaminpentaessigsäure, 1,3-Propylendiamintetraessigsäure, 1,2-Propylendiamintetraessigsäure, N-(Alkyl)-ethylendiamintriessigsäure, N-(Hydroxyalkyl)-ethylendiamintriessigsäure, Ethylendiamintriessigsäure, Cyclohexylen-1,2-diamintetraessigsäure, Iminodibernsteinsäure, Hydroxyiminodibernsteinsäure, Ethylendiamindibernsteinsäure, Serindiessigsäure, Isoserindiessigsäure, L-Asparagindiessigsäure, L-Glutamindiessigsäure, Glutaminsäurediessigsäure, Methylglycindiessigsäure (MGDA) und die Salze der zuvorgenannten Aminopolycarbonsäuren. Bevorzugt sind Methylglycindiessigsäure, Glutaminsäurediessigsäure und deren Salze. Die Salze der Methylglycindiessigsäure können als Racemat vorliegen, d. h. D- und L-Enantiomere liegen in äquimolarer Mischung vor, oder ein Enantiomer, z. B. das L-Enantiomer, kann im Überschuss vorliegen.

Geeignete organische Builder sind weiterhin polymere carbonsäuregruppenhaltige Verbindungen, wie Acrylsäure-Homopolymere. Diese weisen vorzugsweise ein zahlenmittleres Molekulargewicht im Bereich von 800 bis 70000 g/mol, besonders bevorzugt von 900 bis 50000 g/mol, insbesondere von 1000 bis 20000 g/mol, speziell 1000 bis 10000 g/mol, auf. Der Begriff Acrylsäure-Homopolymer umfasst dabei auch Polymere, in denen die Carbonsäuregruppen teilweise oder vollständig neutralisiert vorliegen. Dazu zählen Acrylsäure-Homopolymere, in denen die Carbonsäuregruppen teilweise oder vollständig in Form von Alkalimetallsalzen oder Ammoniumsalzen vorliegen. Bevorzugt sind Acrylsäure-Homopolymere, in denen die Carbonsäuregruppen protoniert sind oder in denen die Carbonsäuregruppen teilweise oder vollständig in Form von Natriumsalzen vorliegen.

Geeignete polymere carbonsäuregruppenhaltige Verbindungen sind auch Oligomaleinsäuren, wie sie beispielsweise in EP-A451 508 und EP-A 396 303 beschrieben sind.

Geeignete polymere carbonsäuregruppenhaltige Verbindungen sind auch Terpolymere ungesättigter C₄-C₈-Dicarbonsäuren, wobei als Comonomere monoethylenisch ungesättigte Monomere aus der unten angegebenen Gruppe (i) in Mengen von bis zu 95 Gew.-%, aus der Gruppe (ii) in Mengen von bis zu 60 Gew.-% und aus der Gruppe (iii) in Mengen von bis zu 20 Gew.-% einpolymerisiert sein können. Als ungesättigte C₄-C₈-Dicarbonsäuren sind hierbei beispielsweise Maleinsäure, Fumarsäure, Itaconsäure und Citraconsäure geeignet. Bevorzugt wird Maleinsäure. Die Gruppe (i) umfasst monoethylenisch ungesättigte C₃-C₈-Monocarbonsäuren wie z. B. Acrylsäure, Meth-acrylsäure, Crotonsäure und Vinylessigsäure. Bevorzugt werden aus der Gruppe (i) Acrylsäure und Methacrylsäure eingesetzt. Die Gruppe (ii) umfasst monoethylenisch ungesättigte C₂-C₂₂-Olefine, Vinylalkylether mit C₁-C₈-Alkylgruppen, Styrol, Vinylester von C₁-C₈-Carbonsäuren, (Meth)acrylamid und Vinylpyrrolidon. Bevorzugt werden aus der Gruppe (ii) C₂-C₆-Olefine, Vinylalkylether mit C₁-C₄-Alkylgruppen, Vinylacetat und Vinylpropionat eingesetzt. Falls die Polymeren der Gruppe (ii) Vinylester einpolymerisiert enthalten, können diese auch teilweise oder vollständig zu Vinylalkohol-Struktureinheiten hydrolysiert vorliegen. Geeignete Co- und Terpolymere sind beispielsweise aus US-A 3887806 sowie DE-A 4313909 bekannt. Die Gruppe (iii) umfasst (Meth)acrylester von C₁-C₈-Alkoholen, (Meth)acrylnitril, (Meth)acrylamide von C₁-C₈-Aminen, N-Vinylformamid und N-Vinylimidazol.

Geeignete polymere carbonsäuregruppenhaltige Verbindungen sind auch Homopolymere der monoethylenisch ungesättigten C₃-C₈-Monocarbonsäuren wie z. B. Acrylsäure, Methacrylsäure, Crotonsäure und Vinylessigsäure, insbesondere der Acrylsäure und Methacrylsäure, Copolymere von Dicarbonsäuren, wie z. B. Copolymere von Maleinsäure oder Itaconsäure und Acrylsäure im Gewichtsverhältnis 10 : 90 bis 95 : 5, besonders bevorzugt solche im Gewichtsverhältnis 30 : 70 bis 90 : 10 mit Molmassen von 1000 bis 150000 g/mol; Terpolymere aus Maleinsäure, Acrylsäure und einem Vinylester einer C₁-C₃- Carbonsäure im Gewichtsverhältnis 10 (MaleinsäurE) :90 (Acrylsäure + Vinylester) bis 95 (Maleinsäure) :10 (Acrylsäure + Vinylester), wobei das Gew.-Verhältnis von Acrylsäure zum Vinylester im Bereich von 30 : 70 bis 70 : 30 variieren kann; Copolymere von Maleinsäure mit C₂-C₈-Olefinen im Molverhältnis 40 : 60 bis 80 : 20, wobei Copolymere von Maleinsäure mit Ethylen, Propylen oder Isobuten im Molverhältnis 50 : 50 besonders bevorzugt sind.

Geeignete polymere carbonsäuregruppenhaltige Verbindungen sind weiterhin Copolymere von 50 bis 98 Gew.-% ethylenisch ungesättigter schwacher Carbonsäuren mit 2 bis 50 Gew.-% ethylenisch ungesättigter Sulfonsäuren, wie sie beispielsweise in der EP-A-0877002 beschrieben sind. Geeignete schwache ethylenisch ungesättigte Carbonsäuren sind insbesondere C₃-C₆-Monocarbonsäuren, wie Acrylsäure und Methacrylsäure. Geeignete ethylenisch ungesättigte Sulfonsäuren sind 2-Acetylamidomethyl-1-propansulfonsäure, 2-Methacrylsäureamido-2-methyl-1-propansulfonsäure, 2-Methacrylamido-2-hydroxypropansulfonsäure, Allylsulfonsäure, Methallylsulfonsäure, Allyloxybenzolsulfonsäure, Methallyloxybenzolsulfonsäure, 2-Hydroxy-3-(2-propenyloxy)propansulfonsäure, 2-Methyl-2-propen-1-sulfonsäure, Styrolsulfonsäure, Vinylsulfonsäure, 3-Sulfopropylacrylat, 3-Sulfopropylmethacrylat, Sulfomethylacrylamid, Sulfomethylmethacrylamid und Salze dieser Säuren. Die Copolymere können weiterhin 0 bis 30 Gew.-% ethylenisch ungesättigter C₄-C₈-Dicarbonsäuren, wie Maleinsäure, sowie 0 bis 30 Gew.-% wenigstens eines Monomers, das mit den zuvor genannten Monomeren copolymerisierbar ist, einpolymerisiert enthalten. Bei letzterem handelt es sich beispielsweise um C₁-C₄-Alkylester von (Meth)Acrylsäure, C₁-C₄-Hydroxyalkylester von (Meth)Acrylsäure, Acrylamid, Alkyl-substituiertes Acrylamid, N,N-Dialkyl-substituiertes Acrylamid, Vinylphosphonsäure, Vinylacetat, Allylalkohole, sulfonierte Allylalkohole, Styrol und andere Vinylaromaten, Acrylonitril, N-Vinylpyrrolidon, N-Vinylformamid, N-Vinylimidazol oder N-Vinylpyridin. Das gewichtsmittlere Molekulargewicht dieser Copolymere liegt im Bereich von 3000 bis 50000 Dalton. Besonders geeignet sind Copolymere mit etwa 77 Gew.-% wenigstens einer ethylenisch ungesättigten C₃-C₆-Monocarbonsäure und etwa 23 Gew.-% wenigstens einer ethylenisch ungesättigten Sulfonsäure.

Pfropfpolymere ungesättigter Carbonsäuren auf niedermolekulare Kohlenhydrate oder hydrierte Kohlenhydrate, vgl. US-A 5227446, DE-A 4415623 und DE-A 4313909, eignen sich ebenfalls. Geeignete ungesättigte Carbonsäuren sind hierbei beispielsweise Maleinsäure, Fumarsäure, Itaconsäure, Citraconsäure, Acrylsäure, Methacrylsäure, Crotonsäure und Vinylessigsäure sowie Mischungen aus Acrylsäure und Maleinsäure, die in Mengen von 40 bis 95 Gew.-%, bezogen auf die zu pfropfende Komponente, aufgepfropft werden. Zur Modifizierung können zusätzlich bis zu 30 Gew.-%, bezogen auf die zu pfropfende Komponente, weitere monoethylenisch ungesättigte Monomere einpolymerisiert vorliegen. Geeignete modifizierende Monomere sind die oben genannten Monomere der Gruppen (ii) und (iii). Als Pfropfgrundlage sind abgebaute Polysaccharide wie z. B. sauer oder enzymatisch abgebaute Stärken, Inuline oder Zellulose, Eiweisshydrolysate und reduzierte (hydrierte oder hydrierend aminiertE) abgebaute Polysaccharide wie z. B. Mannit, Sorbit, Aminosorbit und N-Alkylglucamin geeignet sowie auch Polyalkylenglykole mit Molmassen mit bis zu M_{w} = 5000 wie z. B. Polyethylenglykole, Ethylenoxid/Propylenoxidbzw. Ethylenoxid/Butylenoxid bzw. Ethylenoxid/-Propylenoxid/Butylenoxid-Blockcopolymere und alkoxylierte ein- oder mehrwertige C₁-C₂₂-Alkohole.(vgl. US-A-5756456).

Ebenfalls geeignet sind Polyglyoxylsäuren, wie sie beispielsweise in EP-B-001004, US-A-5399286, DE-A-4106355 und EP-A-656914 beschrieben sind. Die Endgruppen der Polyglyoxylsäuren können unterschiedliche Strukturen aufweisen.

Weiterhin sind Polyamidocarbonsäuren und modifizierte Polyamidocarbonsäuren geeignet; diese sind beispielsweise aus EP-A-454126, EP-B-511037, WO-A94/01486 und EP-A-581452 bekannt.

Auch Polyasparaginsäuren und ihre Alkalisalze oder Cokondensate der Asparaginsäure mit weiteren Aminosäuren, z.B. mit Glycin, Glutaminsäure oder Lysin, C₄-C₂₅-Mono- oder -Dicarbonsäuren und/oder C₄-C₂₅-Mono- oder -Diaminen können als polymere carbonsäuregruppenhaltige Verbindungen eingesetzt werden.

Unter den polymeren carbonsäuregruppenhaltigen Verbindungen sind Polyacrylsäuren auch in teilweise oder vollständig neutralisierter Form, bevorzugt.

Als organische Builder eignen sich weiterhin Iminodibernsteinsäure, Oxydibernsteinsäure, Aminopolycarboxylate, Alkylpolyaminocarboxylate, Aminopolyalkylenphosphonate, Polyglutamate, hydrophob modifizierte Citronensäure wie z. B. Agaricinsäure, Poly-[alpha]-hydroxyacrylsäure, N-Acylethylendiamintriacetate wie Lauroylethylendiamintriacetat und Alkylamide der Ethylendiamintetraessigsäure wie EDTA-Talgamid.

Weiterhin können auch oxidierte Stärken als organische Builder verwendet werden.

### Komponente D)

Die Bleichsysteme D) enthalten wenigstens ein Bleichmittel und gegebenenfalls wenigstens eine weitere Komponente, ausgewählt unter Bleichaktivatoren, Bleichkatalysatoren und Bleichstabilisatoren.

Geeignete Bleichmittel sind beispielsweise Percarbonsäuren, z. B. Diper-oxododecandicarbonsäure, Phthalimidopercapronsäure oder Monoperoxophthalsäure oder -terephthalsäure, Salze der Percarbonsäuren, z. B. Natriumpercarbonat, Addukte von Wasserstoffperoxid an anorganische Salze, z. B. Natriumperborat-Monohydrat, Natriumperborat-Tetrahydrat, Natriumcarbonat-Perhydrat oder Natriumphosphat-Perhydrat, Addukte von Wasserstoffperoxid an organische Verbindungen, z. B. Harnstoff-Perhydrat, oder von anorganischen Peroxosalzen, z. B. Alkalimetallpersulfaten, oder -peroxodisulfaten.

Als Bleichaktivatoren eignen sich beispielsweise polyacylierte Zucker, z. B. Pentaacetylglucose; Acyloxybenzolsulfonsäuren und deren Alkali- und Erdalkaiimetallsalze, z. B. Natrium-p-nonanoyloxybenzolsulfonat oder Natrium-p-benzoyloxybenzolsulfonat; - N,N-diacylierte und N,N,N',N'-tetraacylierte Amine, z. B. N,N,N',N'-Tetraacetyl-methylendiamin und -ethylendiamin (TAED), N,N-Diacetylanilin, N,N-Diacetyl-ptoluidin oder 1,3-diacylierte Hydantoine wie 1,3-Diacetyl-5,5-dimethylhydantoin; N-Alkyl-N-sulfonylcarbonamide, z. B. N-Methyl-N-mesylacetamid oder N-MethylN-mesylbenzamid; N-acylierte cyclische Hydrazide, acylierte Triazole oder Urazole, z. B. Monoacetylmaleinsäurehydrazid; O,N,N-trisubstituierte Hydroxylamine, z. B. O-Benzoyl-N,N-succinylhydroxylamin, O-Acetyl-N,N-succinylhydroxylamin oder O,N,N-Triacetyl-hydroxylamin; N,N'-Diacylsulfurylamide, z. B. N,N'-Dimethyl-N,N'-diacetylsulfurylamid oder N,N'-Diethyl-N,N'-dipropionylsulfurylamid; acylierte Lactame wie beispielsweise Acetylcaprolactam, Octanoylcaprolactam, Benzoylcaprolactam oder Carbonylbiscaprolactam; Anthranilderivate wie z. B. 2-Methylanthranil oder 2-Phenylanthranil; Triacylcyanurate, z. B. Triacetylcyanurat oder Tribenzoylcyanurat; Oximester und Bisoximester wie z. B. O-Acetylacetonoxim oder Bisisopropyliminocarbonat; Carbonsäureanhydride, z. B. Essigsäureanhydrid, Benzoesäureanhydrid, m-Chlorbenzoesäureanhydrid oder Phthalsäureanhydrid; Enolester wie z. B. Isopropenylacetat; 1,3-Diacyl-4,5-diacyloxy-imidazoline, z. B. 1,3-Diacetyl-4,5-diacetoxyimidazolin; Tetraacetylglycoluril und Tetrapropionylglycoluril; diacylierte 2,5-Diketopiperazine, z. B. 1,4-Diacetyl-2,5-diketopiperazin; ammoniumsubstituierte Nitrile wie z.B. N-Methylmorpholiniumacetonitrilmethylsulfat; Acylierungsprodukte von Propylendiharnstoff und 2,2-Dimethyl-propylendiharnstoff, z. B. Tetraacetylpropylendiharnstoff; α-Acyloxypolyacylmalonamide, z. B. α-Acetoxy-N,N'-diacetylmalonamid; Diacyl-dioxohexahydro-1,3,5-triazine, z. B. 1,5-Diacetyl-2,4-dioxohexahydro1,3,5-triazin; Benz-(4H)1,3-oxazin-4-one mit Alkylresten, z. B. Methyl, oder aromatischen Resten z. B. Phenyl, in der 2-Position.

Ein Bleichsystem aus Bleichmitteln und Bleichaktivatoren kann gegebenenfalls noch Bleichkatalysatoren enthalten. Geeignete Bleichkatalysatoren sind beispielsweise quaternierte Imine und Sulfonimine, die beispielsweise in US-A 5 360 569 und EP-A 453 003 beschrieben sind. Besonders wirksame Bleichkatalysatoren sind Mangankomplexe, die beispielsweise in der WO-A 94/21777 beschrieben sind. Solche Verbindungen werden im Falle ihres Einsatzes in den Wasch- und Reinigungsmitteln höchstens in Mengen bis 1,5 Gew.-%, insbesondere bis 0,5 Gew.-%, im Falle von sehr aktiven Mangankomplexen in Mengen bis zu 0,1 Gew.-%, eingearbeitet. Neben dem beschriebenen Bleichsystem aus Bleichmitteln, Bleichaktivatoren und gegebenenfalls Bleichkatalysatoren ist für die erfindungsgemäßen Wasch- und Reinigungsmittel auch die Verwendung von Systemen mit enzymatischer Peroxidfreisetzung oder von photoaktivierten Bleichsystemen möglich.

### Komponente E)

Geeignete Enzyme (= Komponente E1) sind solche, wie sie üblicherweise als industrielle Enzyme eingesetzt werden. Dazu zählen sowohl Enzyme mit optimaler Aktivität im neutralen bis alkalischen pH-Bereich, als auch Enzyme mit optimaler Aktivität im sauren pH-Bereich. In einer speziellen Ausführung, umfasst die Komponente E1) zusätzlich wenigstens einen Enzymstabilisator. Geeignete Enzymstabilisatoren E1) sind solche, wie sie üblicherweise eingesetzt werden.

Die Enzyme sind vorzugsweise ausgewählt unter Aminopeptidasen, Amylasen, Arabinasen, Carbohydrasen, Carboxypeptidasen, Catalasen, Cellulasen, Chitinasen, Cutinasen, Cyclodextringlycosyltransferasen, Deoxyribonucleasen, Esterasen, Galactanasen, Alpha-Galactosidasen, Beta-Galactosidasen, Glucanasen, Glucoamylasen, Alpha-Glucosidasen, Beta-Glucosidasen, Haloperoxidasen, Hydrolaseinvertasen, Isomerasen, Keratinasen, Laccasen, Lipasen, Mannanasen, Mannosidasen, Oxidasen, pectinolytischen Enzymen, Peptidoglutaminasen, Peroxidasen, Peroxygenasen, Phytasen, Polyphenoloxidasen, proteolytischen Enzymen, Ribonucleasen, Transglutaminasen, Transferasen, Xylanasen und Mischungen davon

Die Enzyme sind speziell ausgewählt unter Hydrolasen, wie Proteasen, Esterasen, Glucosidasen, Lipasen, Amylasen, Cellulasen, Mannanasen, anderen Glykosylhydrolasen und Gemischen der zuvor genannten Enzyme. Alle diese Hydrolasen tragen zur Schmutzauflösung und -entfernung von protein-, fett- oder stärkehaltigen Verschmutzungen bei. Zur Bleiche können auch Oxireduktasen eingesetzt werden. Besonders gut geeignet sind aus Bakterienstämmen oder Pilzen wie Bacillus subtilis, Bacillus licheniformis, Streptomyceus griseus und Humicola insolens gewonnene enzymatische Wirkstoffe.

Bevorzugte Enzyme werden im Folgenden genauer beschrieben:

### Proteasen:

Geeignete proteolytische Enzyme (Proteasen) können grundsätzlich tierischen, pflanzlichen oder mikrobiellen Ursprungs sein. Bevorzugt sind proteolytische Enzyme mikrobiellen Ursprungs. Dazu zählen auch chemisch oder genetisch modifizierte Mutanten.

### Lipasen:

Geeignete Lipasen können grundsätzlich von Bakterien oder Pilzen stammen. Dazu zählen auch chemisch oder genetisch modifizierte Mutanten.

### Amylasen:

Grundsätzlich sind alle α- und/oder β-Amylasen geeignet. Geeignete Amylasen können grundsätzlich von Bakterien oder Pilzen stammen. Dazu zählen auch chemisch oder genetisch modifizierte Mutanten.

### Cellulasen:

Grundsätzlich sind alle Cellullasen geeignet. Geeignete Cellulasen können grundsätzlich von Bakterien oder Pilzen stammen. Dazu zählen auch chemisch oder genetisch modifizierte Mutanten.

### Peroxidasen/Oxidasen:

Geeignete Peroxidasen/Oxidasen können grundsätzlich von Pflanzen, Bakterien oder Pilzen stammen. Dazu zählen auch chemisch oder genetisch modifizierte Mutanten.

### Lyasen:

Grundsätzlich sind alle Lyasen geeignet. Geeignete Lyasen können grundsätzlich von Bakterien oder Pilzen stammen. Dazu zählen auch chemisch oder genetisch modifizierte Mutanten.

Erfindungsgemäße Mittel können weitere Enzyme enthalten, die unter dem Begriff Hemicellulasen zusammengefasst werden. Hierzu gehören beispielsweise Mannanasen, Xanthanlyasen, Pektinylasen (= Pektinasen), Pektinesterasen, Xyloglucanasen (=Xylanasen), Pullulanasen und β-Glucanasen.

Vorzugsweise enthält das erfindungsgemäße Wasch- oder Reinigungsmittel wenigstens ein Enzym, das ausgewählt ist unter Proteasen, Amylasen, Mannanasen, Cellulasen, Lipasen, Pektinlyasen und Mischungen davon.

Vorzugsweise enthält das erfindungsgemäße Wasch- oder Reinigungsmittel wenigstens eine Protease und/oder Amylase.

Vorzugsweise enthält das erfindungsgemäße Wasch-, Reinigungs- und Geschirrspülmittel eine Enzymmischung. Bevorzugt sind beispielsweise Enzymmischungen, die folgende Enzyme enthalten oder aus ihnen bestehen:
- Protease und Amylase,
- Protease und Lipase (bzw. lipolytisch wirkenden Enzymen),
- Protease und Cellulase,
- Amylase, Cellulase und Lipase (bzw. lipolytisch wirkenden Enzymen),
- Protease, Amylase und Lipase (bzw. lipolytisch wirkenden Enzymen),
- Protease, Lipase (bzw. lipolytisch wirkenden Enzymen) und Cellulase.

Die Enzyme können an Trägerstoffe adsorbiert sein, um sie gegen vorzeitige Zersetzung zu schützen.

Gegebenenfalls kann das erfindungsgemäße Wasch- oder Reinigungsmittel noch Enzymstabilisatoren E1) enthalten. Dazu zählen z. B. Calciumpropionat, Natriumformiat, Borsäuren, Boronsäuren und deren Salze, wie 4-Formylphenylboronsäure, Peptide und Peptidderivate, wie z. B. Peptidaldehyde, Polyole, wie 1,2-Propandiol, und Mischungen davon.

Die erfindungsgemäßen Wasch- oder Reinigungsmittel enthalten die Enzyme vorzugsweise in einer Menge von 0,1 bis 5 Gew.-%, besonders bevorzugt 0,12 bis 2,5 Gew.-%, bezogen auf das Gesamtgewicht der Wasch- oder Reinigungsmittel.

Um flüssigen und speziell wässrigen Zusammensetzungen die erwünschte Viskosität zu verleihen, kann zusätzlich als Komponente E) wenigstens ein Verdicker (= Komponente E2) eingesetzt werden.

Geeignet sind grundsätzlich jedwede bekannten Verdicker (Rheologiemodifizierungsmittel), sofern sie keinen negativen Einfluss auf die Wirkung des Wasch- und Reinigungsmittels ausüben. Geeignete Verdicker können sowohl natürlichen Ursprungs als auch synthetischer Natur sein.

Beispiele für Verdicker natürlichen Ursprungs sind Xanthan, Johannisbrotkernmehl, Guarmehl, Carrageen, Agar, Tragant, Gummi arabicum, Alginate, modifizierte Stärken, wie Hydroxyethylstärke, Stärkephosphatester oder Stärkeacetate, Dextrine, Pektine und Cellulosederivate, wie Carboxymethylcellulose, Hydroxyethylcellulose, Hydroxypropylcellulose, Hydroxypropylmethylcellulose, Methylcellulose und dergleichen.

Verdicker natürlichen Ursprungs sind auch anorganische Verdicker, wie Polykieselsäuren und Tonmineralien, z. B. Schichtsilikate, wie auch die bei den Buildern genannten Silikate.

Beispiele für synthetische Verdicker sind Polyacryl- und Polymethacrylverbindungen, wie (teil)vernetzte Homopolymere der Acrylsäure, beispielsweise mit einem Allylether von Saccharose oder Pentaerythrit oder mit Propylen vernetzte Homopolymere der Acrylsäure (Carbomer), z. B. die Carbopol®-Marken von BF Goodridge (z. B. Carbopol® 676, 940, 941, 934 und dgl.) oder die Polygel®-Marken von 3V Sigma (z. B. Polygel® DA), Copolymere ethylenisch ungesättigter Mono- oder Dicarbonsäuren, beispielsweise Terpolymere von Acrylsäure, Methacrylsäure oder Maleinsäure mit Methyl- oder Ethylacrylat und einem (Meth)Acrylat, das sich von langkettigen ethoxylierten Alkoholen ableitet, beispielsweise die Acusol®-Marken von Rohm & Haas (z. B. Acusol® 820 oder 1206A), Copolymere von zwei oder mehr Monomeren, die ausgewählt sind unter Acrylsäure, Methacrylsäure und ihren C₁-C₄-Alkylestern, z. B. Copolymere von Methacrylsäure, Butylacrylat und Methylmethacrylat oder von Butylacrylat und Methylmethacrylat, z. B. die Aculyn®- und Acusol®-Marken von Rohm & Haas (z. B. Aculyn® 22, 28 oder 33 und Acusol® 810, 823 und 830), oder vernetzte hochmolekulare Acrylsäurecopolymere, beispielsweise mit einem Allylether von Saccharose oder Pentaerythrit vernetzte Copolymere von C₁₀-C₃₀-Alkylacrylaten mit einem oder mehreren Comonomeren, die ausgewählt sind unter Acrylsäure, Methacrylsäure und ihren C₁-C₄-Alkylestern (z. B. Carbopol® ETD 2623, Carbopol® 1382 oder Carbopol® AQUA 30 von Rohm & Haas).

Beispiele für synthetische Verdicker sind weiterhin Umsetzungsprodukte von Maleinsäurepolymeren mit ethoxylierten langkettigen Alkoholen, z. B. die Surfonic L-Serie von Texaco Chemical Co. oder Gantrez AN-119 von ISP; Polyethylenglykole, Polyamide, Polyimine und Polycarbonsäuren.

Geeignet sind auch Gemische der o. g. Verdicker.

### Bevorzugte Verdicker sind Xanthane und die oben genannten Polyacryl- und Polymethacrylverbindungen

Geeignete organische Lösungsmittel (= Komponente E3) sind ausgewählt unter ein- oder mehrwertigen Alkoholen, Alkanolaminen oder Glykolethern. Vorzugsweise sind sie ausgewählt unter Ethanol, n- oder i-Propanol, Butanolen, Glykol, Propan- oder Butandiol, Glycerin, Diglykol, Propyl- oder Butyldiglykol, Hexylenglycol, Ethylenglykolmethylether, Ethylenglykolethylether, Ethylenglykolpropylether, Ethylenglykolmono-n-butylether, Diethylenglykol-methylether, Diethylenglykolethylether, Propylenglykolmethyl-, -ethyl- oder -propylether, Dipropylenglykolmonomethyl- oder - ethylether, Di-isopropylenglykolmonomethyl- oder -ethylether, Methoxy-, Ethoxy- oder Butoxytriglykol, i-Butoxyethoxy-2-propanol, 3-Methyl-3-methoxybutanol, Propylen-glykol-t-butylether sowie Mischungen dieser Lösemittel.

Als Schauminhibitoren oder Entschäumer (= Komponente E4) kommen beispielsweise Seifen, Paraffine oder Silikonöle in Betracht, die gegebenenfalls auf Trägermaterialien aufgebracht sein können.

Geeignete Basen (= Komponente E5) sind Alkalimetallhydroxide, Erdalkalimetallhydroxide, Alkalimetallcarbonate, Erdalkalimetallcarbonate, Ammoniumcarbonat Alkalimetallhydrogencarbonate, Erdalkalimetallhydrogencarbonate, Ammoniumhydrogencarbonat und Mischungen davon. Vorzugsweise werden Na-, Li- und Mg-Carbonate bzw. -Hydrogencarbonate, insbesondere Natriumcarbonat und/oder Natriumhydrogencarbonat, eingesetzt.

Zusätzlich können die erfindungsgemäßen Wasch- oder Reinigungsmittel weitere Zusatzstoffe E6) enthalten, die die anwendungstechnischen und/oder ästhetischen Eigenschaften weiter verbessern. In der Regel enthalten bevorzugte Mittel zusätzlich zu den zuvor genannten Komponenten wenigstens einen weiteren Zusatzstoff, der ausgewählt ist unter Elektrolyten, pH-Stellmitteln, Parfümträgern, Bitterstoffen, Fluoreszenzmitteln, Hydrotropen, Antiredepositionsmitteln, optischen Aufhellern, Vergrauungsinhibitoren, Einlaufverhinderern, Knitterschutzmitteln, Farbübertragungsinhibitoren, antimikrobiellen Wirkstoffen, Antioxidantien, Anti-Vergilbungsmitteln, Korrosionsinhibitoren, Antistatika, Bügelhilfsmitteln, Phobier- und Imprägniermitteln, Quell- und Schiebefestmitteln sowie UV-Absorbern.

Als Farbübertragungsinhibitoren eignen sich insbesondere Homo- oder Copolymere, die wenigstens ein Monomer einpolymerisiert enthalten, das ausgewählt ist unter N Vinylpyrrolidon, N-Vinylcaprolactam, N-Vinylimidazol, 2-Vinylpyridin, 4-Vinylpyridin, Salzen der drei letztgenannten Monomere, 4-Vinylpyridin-N-oxid, N-carboxymethyl-4-vinylpyridiniumhalogeniden und Mischungen davon.

Als Vergrauungsinhibitor und/oder Waschkraftverstärker eignen sich insbesondere:
- Carboxymethylcellulose,
- Pfropfpolymere von Vinylacetat auf Kohlenhydrate, z. B. auf abgebaute Stärke,
- Pfropfpolymere von Vinylacetat auf Polyethylenglykol,
- Alkoxylierte Oligo- und Polyamine, z. B. ethoxyliertes Hexamethylendiamin, das zusätzlich noch in quaternierter und/oder sulfatierter Form vorliegen kann, oder alkoxyliertes Polyethylenimin mit 16 bis 24 EO pro NH,
- Copolymere auf Basis von Styrol und Maleinsäure, die zusätzlich noch mit endgruppenverschlossenem Polyethylenglykol modifiziert sein können,
- Copolymere auf Basis von Styrol und Acrylsäure.

Um den ästhetischen Eindruck der erfindungsgemäßen Wasch-, Reinigungs- oder Geschirrspülmittel zu verbessern, können sie mit geeigneten Farbstoffen eingefärbt werden. Bevorzugte Farbstoffe, deren Auswahl dem Fachmann keinerlei Schwierigkeit bereitet, besitzen eine hohe Lagerstabilität und Unempfindlichkeit gegenüber den übrigen Inhaltsstoffen der Mittel und gegen Licht sowie keine ausgeprägte Substantivität gegenüber Textilfasern, um diese nicht anzufärben.

Die erfindungsgemäßen Wasch-, Reinigungs- oder Geschirrspülmittel können wenigstens einen Bitterstoff enthalten. Bitterstoffe werden speziell verwendet um ein versehentliches Verschlucken der Mittel, z.B. durch Kleinkinder, zu verhindern. Geeignete Bitterstoffe sind dem Fachmann bekannt. Dazu zählt z.B. Denatoniumbenzoat (Benzyldiethyl(2,6-xylylcarbamoyl)-methylammoniumbenzoat), die am bittersten schmeckende Substanz, die man heute überhaupt kennt, und die kommerziell unter der Bezeichnung Bitrex® vertrieben wird.

### Geschirrspülmittel

Die zuvor beschriebenen erfindungsgemäßen Mehrschichtfolien eignen sich auch besonders vorteilhaft zur zumindest teilweisen Beschichtung oder Umhüllung von Geschirrreinigungsmitteln, insbesondere von Geschirrreinigungsmitteln für maschinelle Geschirrreinigungsverfahren (automatic dish washing, ADW). Die in den Mehrschichtfolien enthaltene Polymerzusammensetzung P1) übt in Geschirrreinigungsmitteln eine dispergierende, belagsinhibierende, emulgierende und/oder tensidische Wirkung aus. Zusätzlich sorgen sie für eine gute klarspülende und/oder Trocknungsleistung. Beispiele für erfindungsgemäße Formulierungen für die Geschirrreinigung umfassen Maschinengeschirrspülmittel, Klarspülmittel und Maschinengeschirrspülmittel mit Klarspülfunktion.

Maschinelle Geschirrreinigungsverfahren im häuslichen und im gewerblichen Bereich umfassen mehrere aufeinanderfolgende Schritte, wobei der erste das mechanische Abtragen loser anhaftender Speisereste umfasst, der zweite den eigentlichen Reinigungsvorgang mit Hilfe einer Geschirrspülmaschine darstellt und der dritte in der Regel aus einem Klarspülschritt besteht, an den sich das Trocknen des gereinigten Geschirrs anschließt. Diese Vorgänge werden mehr oder weniger automatisiert durchgeführt, wobei als zentrale Einheit eine Geschirrspülmaschine zum Einsatz kommt, in der zumindest der Reinigungsschritt und in der Regel auch der anschließende Klarspülschritt und/oder der Trocknungsschritt durchgeführt werden.

In Geschirrspülmaschinen für den häuslichen Bereich erfolgt die Reinigung des verschmutzten Geschirrs in der Regel in einer einzelnen Kammer, wobei die zuvor genannten Behandlungsschritte programmgesteuert nacheinander ablaufen. Frischwasser gelangt über die Enthärtungseinheit zum Pumpensumpf und wird mittels bewegter Sprüharme über dem zu spülenden Gut versprüht. Abgespülte wasserunlösliche Stoffe werden am Pumpensumpf herausgefiltert. Beim zweiten Spülgang wird ein in der Regel alkalisches Reinigungsmittel dem Spülwasser zugesetzt, auf die eingestellte Temperatur erhitzt und auf dem zu spülenden Gut verteilt. Beim letzten Spülgang wird der Behandlungsflüssigkeit ein Klarspülmittel zugesetzt, das die Oberflächenspannung reduziert, wodurch die Behandlungsflüssigkeit leichter vom Spülgut abläuft. Nach dem letzten Spülgang wird der Inhalt getrocknet. Die im Spülvorgang eingesetzten Komponenten, wie Wasseraufbereiter, Reinigungsmittel, Klarspülmittel, etc., können entweder in Form von Einzelkomponenten oder in Mehrkomponentenformulierungen eingesetzt werden. Solche multifunktionalen Reiniger enthalten Tenside für das Klarspülen und ein Polymer für die Wasserenthärtung. In die Geschirrspülmaschine muss dann nicht separat ein Klarspülmittel und ein Salz für die Wasserenthärtung gegeben werden.

Gewerbliche Geschirrspülmaschinen bestehen im Prinzip aus stationären Bädertanks, aus denen eine im Wesentlichen wässrige Reinigungslösung auf das Geschirr aufgedüst oder -gesprüht wird, das sich auf einem Laufband über diesen Bädern vorbeibewegt, so dass die gebrauchte Lösung wieder in die Bädertanks zurück gelangt. Dabei tritt Wasser in den letzten Bädertank ein, fließt durch Überläufe kaskadenartig durch alle anderen Tanks und verlässt die Maschine durch den Überlauf des ersten Tanks. Das Aufbringen einer in der Regel hochalkalischen Reinigungslösung findet in der Regel mit Hilfe dafür vorgesehener Düsen oder einer speziellen Sprühanlage statt, die normalerweise im mittleren Bereich der Maschine angeordnet ist.

Die erfindungsgemäßen Mehrschichtfolien eignen sich zur zumindest teilweisen Beschichtung oder Umhüllung von Geschirrspülmitteln für die maschinelle Geschirrreinigung, die sich insbesondere durch eine hervorragende belagsinhibierende Wirkung auszeichnen. Bevorzugte Geschirrspülmittelformulierungen wirken dabei sowohl gegenüber anorganischen als auch gegenüber organischen Belägen inhibierend. Bei den anorganischen Belägen handelt es sich insbesondere um Calcium- und Magnesiumphosphat, -carbonat, -silikat und/oder -phosphonat, die aus den im Wasser enthaltenen Calcium- und Magnesiumsalzen und den in üblichen Geschirrspülmitteln enthaltenen Buildern entstehen. Bei den organischen Belägen handelt es sich insbesondere um Schmutzbestandteile aus der Spülflotte, wie z. B. Eiweiß-, Stärke- und Fettbeläge. Die erfindungsgemäß eingesetzten Formulierungen für die maschinelle Geschirrreinigung sind auch gegenüber sogenannten Carry-Over-Belägen wirksam, die aus der Restwassermenge im Sumpf der Spülmaschine stammen und u. a. Geschirrspülmittelreste und eventuell auch noch Schmutzreste aus dem vorhergehenden Waschgang der Geschirrspülmaschine enthalten.

Das erfindungsgemäße Geschirrspülmittel umfasst vorzugsweise folgende Bestandteile:
Ga) wenigstens eine Umhüllung und/oder Beschichtung, enthaltend eine oder bestehend aus einer erfindungsgemäße(n) Mehrschichtfolie,
Gb) gegebenenfalls wenigstens einen Komplexbildner,
Gc) wenigstens einen Builder und/oder Co-Builder,
Gd) wenigstens ein nichtionisches Tensid,
Ge) gegebenenfalls wenigstens eine Komponente, ausgewählt unter Bleichmitteln, Bleichaktivatoren und Bleichkatalysatoren,
Gf) gegebenenfalls wenigstens ein Enzym,
Gg) gegebenenfalls wenigstens einen weiteren Zusatzstoff, der vorzugsweise ausgewählt ist unter anionischen oder zwitterionischen Tensiden, Alkaliträgern, polymeren Dispergiermitteln, Korrosionsinhibitoren, Entschäumern und Schauminhibitoren, Farbstoffen, Duftstoffen, Bitterstoffen, Füllstoffen, Tablettensprengmitteln, organischen Lösungsmitteln, Tablettierhilfsmitteln, Disintegrationsmitteln, Verdickern und Löslichkeitsvermittlern,
Gh) gegebenenfalls Wasser.

Ein bevorzugtes erfindungsgemäßes Geschirrspülmittel umfasst:
Ga) 0,1 bis 30 Gew.-%wenigstens einer Umhüllung und/oder Beschichtung, enthaltend eine oder bestehend aus einer erfindungsgemäße(n) Mehrschichtfolie,
Gb) 0 bis 50 Gew.-% wenigstens eines Komplexbildners,
Gc) 0,1 bis 80 Gew.-% wenigstens eines Builders und/oder Co-Builders,
Gd) 0,1 bis 20 Gew.-% wenigstens eines nichtionischen Tensids,
Ge) 0 bis 30 Gew.-% wenigstens einer Komponente, ausgewählt unter Bleichmitteln, Bleichaktivatoren und Bleichkatalysatoren,
Gf) 0 bis 8 Gew.-% wenigstens eines Enzyms,
Gg) 0 bis 50 Gew.-% wenigstens eines weiteren Zusatzstoffs, der vorzugsweise ausgewählt ist unter anionischen oder zwitterionischen Tensiden, Alkaliträgern, polymeren Dispergiermitteln, Korrosionsinhibitoren, Entschäumern und Schauminhibitoren, Farbstoffen, Duftstoffen, Bitterstoffen, Füllstoffen, Tablettensprengmitteln, organischen Lösungsmitteln, Tablettierhilfsmitteln, Disintegrationsmitteln, Verdickern und Löslichkeitsvermittlern, und
Gh) 0 bis 99,7 Gew.-% Wasser,
mit der Maßgabe, dass sich die Gewichtsmengen der Komponenten zu 100 Gew.-% ergänzen.

Bezüglich geeigneter und bevorzugter Mehrschichtfolien Ga) wird auf die allgemeinen Ausführungen zu geeigneten und bevorzugten Mehrschichtfolien verwiesen.

Als Komplexbildner Gb) können beispielsweise eingesetzt werden: Nitrilotriessigsäure, Ethylendiamintetraessigsäure, Diethylentriaminpentaessigsäure, Hydroxyethylethylendiamintriessigsäure, Methylglycindiessigsäure, Glutaminsäurediessigsäure, Iminodibernsteinsäure, Hydroxyiminodibernsteinsäure, Ethylendiamindibernsteinsäure, Asparaginsäurediessigsäure, sowie jeweils deren Salze. Bevorzugte Komplexbildner Gb) sind Methylglycindiessigsäure und Glutaminsäurediessigsäure und deren Salze. Besonders bevorzugte Komplexbildner Gb) sind Methylglycindiessigsäure und deren Salze, insbesondere deren Mono-, Di- und Tri- Natrium-, Kalium-, Lithium- und Ammoniumsalze. Die Salze der Methylglycindiessigsäure können als Racemat vorliegen, d.h. D- und L-Enantiomere liegen in äquimolarer Mischung vor oder ein Enantiomer, z.B. das L-Enantiomer, kann im Überschuss vorliegen. Bevorzugt sind erfindungsgemäß 3 bis 50 Gew% Komplexbildner Gb).

Als Builder und/oder Co-Builder Gc) können insbesondere wasserlösliche oder wasserunlösliche Substanzen, deren Hauptaufgabe im Binden von Calcium- und Magnesiumionen besteht, eingesetzt werden. Dies können niedermolekulare Carbonsäuren sowie deren Salze wie Alkalicitrate sein, insbesondere wasserfreies Trinatriumcitrat oder Trinatriumcitratdihydrat, Alkalisuccinate, Alkalimalonate, Fettsäuresulfonate, Oxydisuccinat, Alkyl- oder Alkenyldisuccinate, Gluconsäuren, Oxadiacetate, Carboxymethyloxysuccinate, Tartratmonosuccinat, Tartratdisuccinat, Tartratmonoacetat, Tartratdiacetat und α-Hydroxypropionsäure.

Eine weitere Substanzklasse mit Cobuildereigenschaften, welche in den erfindungsgemäßen Geschirrspülmitteln enthalten sein können, stellen die Phosphonate dar. Dabei handelt es sich insbesondere um Hydroxyalkan- bzw. Aminoalkanphosphonate. Unter den Hydroxyalkanphosphonaten ist das 1-Hydroxyethan-1,1-diphosphonat (HEDP) von besonderer Bedeutung als Cobuilder. Es wird vorzugsweise als Natriumsalz eingesetzt, wobei das Dinatriumsalz neutral und das Tetranatriumsalz alkalisch (pH 9) reagiert. Als Aminoalkanphosphonate kommen vorzugsweise Ethylendiamintetramethylenphosphonat (EDTMP), Diethylentriaminpentamethylenphosphonat (DTPMP) sowie deren höhere Homologe in Frage. Sie werden vorzugsweise in Form der neutral reagierenden Natriumsalze, z.B. als Hexanatriumsalz der EDTMP bzw. als Hepta- und Octa-Natriumsalz der DTPMP, eingesetzt. Als Builder wird dabei aus der Klasse der Phosphonate bevorzugt HEDP verwendet. Die Aminoalkanphosphonate besitzen zudem ein ausgeprägtes Schermetallbindevermögen. Dementsprechend kann es, insbesondere wenn die Mittel auch Bleiche enthalten, bevorzugt sein, Aminoalkanphosphonate, insbesondere DTPMP, einzusetzen, oder Mischungen aus den genannten Phosphonaten zu verwenden.

Unter anderem können als Builder Silikate eingesetzt werden. Enthalten sein können kristalline schichtförmige Silikate mit der allgemeinen Formel NaMSiₓO₂ₓ₊₁ yH₂O, wobei M Natrium oder Wasserstoff bedeutet, x eine Zahl von 1,9 bis 22, vorzugsweise von 1,9 bis 4, wobei besonders bevorzugte Werte für x 2, 3 oder 4 sind und y eine Zahl von 0 bis 33, vorzugsweise 0 bis 20 ist. Daneben können amorphe Natriumsilikate mit einem SiO₂ : Na₂O-Verhältnis von 1 bis 3,5, vorzugsweise von 1,6 bis 3 und insbesondere von 2 bis 2,8 zum Einsatz kommen.

Weiterhin können als Builder und/oder Co-Builder Gc) im Zusammenhang mit dem erfindungsgemäßen Geschirrspülmittel Carbonate und Hydrogencarbonate eingesetzt werden, unter welchen die Alkalisalze, insbesondere Natriumsalze, bevorzugt werden.

Weiterhin können als Cobuilder Homo- und Copolymere der Acrylsäure oder der Methacrylsäure eingesetzt werden, die bevorzugt eine gewichtsmittlere Molmasse von 2.000 bis 50.000 g/mol aufweisen. Als Comonomere eignen sich insbesondere monoethylenisch ungesättigte Dicarbonsäuren wie Maleinsäure, Fumarsäure und Itaconsäure sowie deren Anhydride wie Maleinsäureanhydrid. Es eignen sich auch Sulfonsäuregruppen haltige Comonomere wie 2-Acrylamido-2-methylpropansulfonsäure, Allylsulfonsäure und Methansulfonsäure. Auch hydrophobe Comonomere sind geeignet wie beispielsweise Isobuten, Diisobuten, Styrol, alpha-Olefine mit 10 oder mehr Kohlenstoffatomen. Hydrophile Monomere mit Hydroxyfunktion oder Alkylenoxidgruppen können ebenfalls als Comonomere verwendet werden. Beispielsweise seien genannt: Allylalkohol und Isoprenol sowie deren Alkoxylate und Methoxypolyethylenglykol(meth)acrylat.

Die erfindungsgemäßen Geschirrspülmittel enthalten bevorzugt Builder und/oder Co-Builder Gc) in einer Menge von 5 bis 80 Gew%, besonders bevorzugt 10 bis 75 Gew%, speziell 15 bis 70 Gew%, spezieller 15 bis 65 Gew%, bezogen auf das Gesamtgewicht des Geschirrspülmittels.

Geeignete nichtionische Tenside Gd) sind beispielsweise schwach oder niedrig schäumende nichtionische Tenside. Die erfindungsgemäßen Geschirrspülmittel enthalten nichtionische Tenside bevorzugt in einer Menge von von 0,1 bis 20 Gew%, besonders bevorzugt von 0,1 bis 15 Gew%, insbesondere von 0,25 bis 10 Gew%, speziell von 0,5 bis 10 Gew%, bezogen auf das Gesamtgewicht des Geschirrspülmittels. Geeignete nichtionische Tenside umfassen unter anderem Tenside der allgemeinen Formel (IX)

R³¹-O-(CH₂CH₂O)ₐ-(CHR³²CH₂O)_{b}-R³³ (IX),

worin R³¹ ein linearer oder verzweigter Alkylrest mit 8 bis 22 C-Atomen ist,

R³² und R³³ unabhängig voneinander Wasserstoff oder ein linearer oder verzweigter Alkylrest mit 1 bis 10 C-Atomen oder H sind, wobei R³² bevorzugt Methyl ist, und a und b unabhängig voneinander 0 bis 300 sind. Bevorzugt ist a = 1 - 100 und b = 0 - 30.

Auch geeignet im Sinne der vorliegenden Erfindung sind Tenside der Formel (X)

R³⁴-O-[CH₂CH(CH₃)O]_{c}[CH₂CH₂O]_{d}[CH₂CH(CH₃)O]ₑCH₂CH(OH)R³⁵ (X),

worin R³⁴ für einen linearen oder verzweigten aliphatischen Kohlenwasserstoffrest mit 4 bis 22 Kohlenstoffatomen oder Mischungen hieraus steht,
R³⁵ einen linearen oder verzweigten Kohlenwasserstoffrest mit 2 bis 26 Kohlenstoffatomen oder Mischungen hieraus bezeichnet,
c und e für Werte zwischen 0 und 40 stehen, und
d für einen Wert von mindestens 15 steht.

Auch geeignet im Sinne der vorliegenden Erfindung sind Tenside der Formel (XI)

R³⁶O-(CH₂CHR³⁷O)_{f}(CH₂CH₂O)_{g}(CH₂CHR³⁸O)ₕ-CO-R³⁹ (XI),

worin R³⁶ ein verzweigter oder unverzweigter Alkylrest mit 8 bis 16 Kohlenstoffatomen ist,
R³⁷, R³⁸ unabhängig voneinander H oder ein verzweigter oder unverzweigter Alkylrest mit 1 bis 5 Kohlenstoffatomen sind,
R³⁹ ein unverzweigter Alkylrest mit 5 bis 17 Kohlenstoffatomen ist,
f, h unabhängig voneinander eine Zahl von 1 bi 5 sind, und
g eine Zahl von 13 bis 35 ist.

Die Tenside der Formeln (IX), (X) und (XI) können sowohl statistische Copolymere als auch Block-Copolymere sein, bevorzugt sind sie als Block-Copolymere. Weiterhin können im Zusammenhang mit der vorliegenden Erfindung Di- und Multiblockcopolymerisate, aufgebaut aus Ethylenoxid und Propylenoxid, eingesetzt werden, die beispielsweise unter der Bezeichnung Pluronic® (BASF SE) oder Tetronic® (BASF Corporation) kommerziell erhältlich sind. Weiterhin können Umsetzungsprodukte aus Sorbitanestern mit Ethylenoxid und/oder Propylenoxid verwendet werden. Ebenfalls eignen sich Aminoxide oder Alkylglycoside. Eine Übersicht geeigneter nichtionischer Tenside sind in EP-A 851 023 sowie in DE-A 198 19 187 offenbart. Es können auch Gemische mehrerer verschiedener nichtionischer Tenside enthalten sein. Die erfindungsgemäßen Geschirrspülmittel können weiterhin anionische oder zwitterionische Tenside enthalten, bevorzugt in Mischung mit nichtionischen Tensiden. Geeignete anionische und zwitterionischer Tenside sind ebenfalls in EP-A 851 023 sowie DE-A 198 19 187 genannt.

Als Bleichmittel und Bleichaktivatoren Ge) können im Zusammenhang mit den erfindungsgemäßen Geschirrspülmitteln dem Fachmann bekannte Vertreter eingesetzt werden. Bleichmittel unterteilen sich in Sauerstoffbleichmittel und chlorhaltige Bleichmittel. Verwendung als Sauerstoffbleichmittel finden Alkalimetallperborate und deren Hydrate sowie Alkalimetallpercarbonate. Bevorzugte Bleichmittel sind hierbei Natriumperborat in Form des Mono- oder Tetrahydrats, Natriumpercarbonat oder die Hydrate von Natriumpercarbonat. Ebenfalls als Sauerstoffbleichmittel einsetzbar sind Persulfate und Wasserstoffperoxid. Typische Sauerstoffbleichmittel sind auch organische Persäuren wie beispielsweise Perbenzoesäure, Peroxy-alpha-Naphthoesäure, Peroxylaurinsäure, Peroxystearinsäure, Phthalimidoperoxycapronsäure, 1,12-Diperoxydodecandisäure, 1,9-Diperoxyazelainsäure, Diperoxoisophthalsäure oder 2-Decyldiperoxybutan-1,4-disäure. Außerdem können auch folgende Sauerstoffbleichmittel in der Geschirrspülmittel Verwendung finden: Kationische Peroxysäuren, die in den Patentanmeldungen US 5,422,028, US 5,294,362 sowie US 5,292,447 beschrieben sind, und Sulfonylperoxysäuren, die in der Patentanmeldung US 5,039,447 beschrieben sind. Sauerstoffbleichmittel können in Mengen von im Allgemeinen 0,1 bis 30 Gew%, bevorzugt von 1 bis 20 Gew%, besonders bevorzugt von 3 bis 15 Gew%, bezogen auf die gesamte Geschirrspülmittel, eingesetzt werden.

Chlorhaltige Bleichmittel sowie die Kombination von chlorhaltigen Bleichmittel mit peroxidhaltigen Bleichmitteln können im Zusammenhang mit den erfindungsgemäßen Geschirrspülmitteln ebenfalls verwendet werden. Bekannte chlorhaltige Bleichmittel sind beispielsweise 1,3-Dichloro-5,5-dimethylhydantoin, N-Chlorosulfamid, Chloramin T, Dichloramin T, Chloramin B, N,N'-Dichlorbenzoylharnstoff, p-Toluolsulfondichloroamid oder Trichlorethylamin. Bevorzugte chlorhaltige Bleichmittel sind hierbei Natriumhypochlorit, Calciumhypochlorit, Kaliumhypochlorit, Magnesiumhypochlorit, Kaliumdichloroisocyanurat oder Natriumdichloroisocyanurat. Chlorhaltige Bleichmittel können in diesem Zusammenhang in Mengen von 0,1 bis 30 Gew.-%, bevorzugt von 0,1 bis 20 Gew.-%, bevorzugt von 0,2 bis 10 Gew.-%, besonders bevorzugt von 0,3 bis 8 Gew.-%, bezogen auf das gesamte Geschirrspülmittel, eingesetzt werden.
Weiterhin können in geringen Mengen Bleichmittelstabilisatoren wie beispielsweise Phosphonate, Borate, Metaborate, Metasilikate oder Magnesiumsalze zugegeben werden.

Bleichaktivatoren können im Rahmen der vorliegenden Erfindung Verbindungen sein, welche unter Perhydrolysebedingungen aliphatische Peroxocarbonsäuren mit vorzugsweise 1 bis 10 Kohlenstoffatomen, insbesondere 2 bis 4 Kohlenstoffatomen, und/oder substituierte Perbenzoesäure ergeben. Geeignet sind hierbei unter anderem Verbindungen, die eine oder mehrere N- bzw. O-Acylgruppen und/oder gegebenenfalls substituierte Benzoylgruppen enthalten, beispielsweise Substanzen aus der Klasse der Anhydride, Ester, Imide, acylierten Imidazole oder Oxime. Beispiele sind Tetraacetylethylendiamin (TAED), Tetraacetylmethylendiamin (TAMD), Tetraacetylglykoluril (TAGU), Tetraacetylhexylendiamin (TAHD), N-Acylimide, wie beispielsweise N-Nonanoylsuccinimid (NOSI), acylierte Phenolsulfonate, wie beispielsweise n-Nonanoyl- oder Isononanoyloxybenzolsulfonate (n- bzw. iso-NOBS), Pentaacetylglucose (PAG), 1,5-Diacetyl-2,2-dioxohexahydro-1,3,5-triazin (DADHT) oder Isatosäureanhydrid (ISA). Ebenfalls als Bleichaktivatoren eignen sich Nitrilquats wie beispielsweise N-Methyl-Morpholinium-Acetonitril-Salze (MMA-Salze) oder Trimethylammoniumacetonitril-Salze (TMAQ-Salze). Bevorzugt eignen sich Bleichaktivatoren aus der Gruppe bestehend aus mehrfach acylierten Alkylendiaminen, besonders bevorzugt TAED, N-Acylimide, besonders bevorzugt NOSI, acylierte Phenolsulfonate, besonders bevorzugt n- oder iso-NOBS, MMA, und TMAQ. Bleichaktivatoren können im Zusammenhang mit der vorliegenden Erfindung in Mengen von 0,1 bis 30 Gew.-%, bevorzugt von 0,1 bis 10 Gew.-%, bevorzugt von 1 bis 9 Gew.-%, besonders bevorzugt von 1,5 bis 8 Gew.-%, bezogen auf das gesamte Geschirrspülmittel eingesetzt werden.

Zusätzlich zu den konventionellen Bleichaktivatoren oder an deren Stelle können auch sogenannte Bleichkatalysatoren in Klarspülerpartikel eingearbeitet werden. Bei diesen Stoffen handelt es sich um bleichverstärkende Übergangsmetallsalze bzw. Übergangsmetallkomplexe wie beispielsweise Mangan-, Eisen-, Cobalt-, Ruthenium- oder Molybdän-Salenkomplexe oder carbonylkomplexe. Auch Mangan-, Eisen-, Cobalt-, Ruthenium-, Molybdän-, Titan-, Vanadium- und Kupfer-Komplexe mit stickstoffhaltigen Tripod-Liganden sowie Cobalt-, Eisen-, Kupfer- und Ruthenium-Aminkomplexe sind als Bleichkatalysatoren verwendbar.

Als Komponente Gf) können die erfindungsgemäßen Geschirrspülmittel 0 bis 8 Gew.-% Enzyme enthalten. Falls die Geschirrspülmittel Enzyme enthalten, enthalten sie diese bevorzugt in Mengen von 0,1 bis 8 Gew.-%. Dem Spülmittel können Enzyme zugesetzt werden, um die Reinigungsleistung zu steigern oder unter milderen Bedingungen (z.B. bei niedrigen Temperaturen) die Reinigungsleistung in gleicher Qualität zu gewährleisten. Eingesetzt werden können die Enzyme in freier oder auf einem Träger chemisch oder physikalisch immobilisierter Form oder in verkapselter Form. Zu den am häufigsten verwendeten Enzymen gehören in diesem Zusammenhang Lipasen, Amylasen, Cellulasen und Proteasen. Weiterhin können beispielsweise auch Esterasen, Pectinasen, Lactasen und Peroxidasen eingesetzt werden. Bevorzugt werden erfindungsgemäß Amylasen und Proteasen eingesetzt. Als Zusatzstoffe Gg) können im Zusammenhang mit den erfindungsgemäßen Geschirrspülmitteln beispielsweise anionische oder zwitterionische Tenside, Alkaliträger, polymere Dispergiermittel, Korrosionsinhibitoren, Entschäumer, Farbstoffe, Duftstoffe, Füllstoffe, Tablettensprengmittel, organische Lösungsmittel, Tablettierhilfsmittel, Disintegrationsmittel, Verdicker, Löslichkeitsvermittler, oder Wasser eingesetzt werden. Als Alkaliträger können beispielsweise neben den bereits bei den Buildersubstanzen genannten Ammonium- oder Alkalimetallcarbonaten, Ammonium- oder Alkalimetallhydrogencarbonaten und Ammonium- oder Alkalimetallsesquicarbonaten auch Ammonium- oder Alkalimetallhydroxide, Ammonium- oder Alkalisilikate und Ammonium- oder Alkalimetasilikate sowie Gemische der vorgenannten Stoffe eingesetzt werden.

Als Korrosionsinhibitoren können unter anderem Silberschutzmittel aus der Gruppe der Triazole, der Benzotriazole, der Bisbenzotriazole, der Aminotriazole, der Alkylaminotriazole und der Übergangsmetallsalze oder- komplexe eingesetzt werden. Zur Verhinderung von Glaskorrosion, welche sich durch Trübungen, Irisieren, Schlieren und Linien auf den Gläsern bemerkbar macht, werden bevorzugt Glaskorrosionsinhibitoren eingesetzt. Bevorzugte Glaskorrosionsinhibitoren sind beispielsweise Magnesium-, Zink und Bismuth-Salze und -Komplexe und Polyethylenimine.

Paraffinöle und Silikonöle können erfindungsgemäß optional als Entschäumer und zum Schutz von Kunststoff- und Metalloberflächen eingesetzt werden. Entschäumer werden bevorzugt in Anteilen von 0,001 Gew.-% bis 5 Gew.-% eingesetzt. Außerdem können Farbstoffe wie beispielsweise Patentblau, Konservierungsmittel wie beispielsweise Kathon CG, Parfüme und sonstige Duftstoffe der erfindungsgemäßen Reinigungsformulierung zugesetzt werden.

Ein geeigneter Füllstoff im Zusammenhang mit den erfindungsgemäßen Spülmittelzusammensetzungen ist beispielsweise Natriumsulfat.
Als weitere mögliche Zusatzstoffe im Zusammenhang mit der vorliegenden Erfindung sind amphotere und kationische Polymere zu nennen.

Um den ästhetischen Eindruck der erfindungsgemäßen Wasch-, Reinigungs- oder Geschirrspülmittel zu verbessern, können sie mit geeigneten Farbstoffen eingefärbt werden. Bevorzugte Farbstoffe, deren Auswahl dem Fachmann keinerlei Schwierigkeit bereitet, besitzen eine hohe Lagerstabilität und Unempfindlichkeit gegenüber den übrigen Inhaltsstoffen der Mittel und gegen Licht sowie keine ausgeprägte Substantivität gegenüber Textilfasern, um diese nicht anzufärben.

### I & I-Reiniger

Die erfindungsgemäßen Mehrschichtfolien eignen sich auch zur zumindest teilweisen Beschichtung oder Umhüllung für industrielle und institutionelle Reiniger (I & I-Reiniger). Industrielle und institutionelle Reiniger sind typischerweise Waschmittel, Allzweckreiniger, Schaumreiniger, CIP-Reiniger (cleaning in place-Reiniger) für professionelle und in der Regel automatisierte Reinigungsvorgänge, z. B. in Großwäschereien, Molkereien, Brauereien, der Nahrungsmittel- oder Getränkeindustrie, der Pharmaindustrie bzw. der Galenik oder Sanitärreiniger.

Die Reiniger können stark basisch mit hohem Elektrolytgehalt sein und bei Bedarf Bleichmittel (wie Wasserstoffperoxid, Natriumhypochlorit) oder Desinfektionsmittel sowie Entschäumer enthalten (z. B. in der Flaschenreinigung). Auch die gängigen zuvor genannten Enzyme können in den industriellen und institutionellen Reinigern enthalten sein. Hinsichtlich der Reinigungsarten, für die sich die erfindungsgemäßen Formulierungen eignen, herrscht große Vielfalt. Beispielhaft seien Reinigungsbäder (stationär oder bewegt), Sprühreinigung, Ultraschall-, Dampfstrahl- und Hochdruckreinigung erwähnt, gegebenenfalls in Kombination mit mechanischer Reinigung, z. B. durch rotierende Bürsten.

Die genannten Formulierungen für die Reinigung schließen solche für die Industrie, das Verkehrswesen, Handel und Gewerbe und für den privaten Sektor ein. Im Einzelnen seien beispielhaft genannt: professionelle Wäschereien, professionelles Reinigungsgewerbe, erzaufbereitende Industrie, Metall- und metallverarbeitende Industrie, Automobil- und Automobilzulieferindustrie, Elektroindustrie, Elektronikindustrie, Photoindustrie und -gewerbe, Freizeitindustrie und -gewerbe, Baustoffindustrie, Brauindustrie und -gewerbe; Nahrungsmittelindustrie (z. B. Verarbeitung oder Herstellung von Fleisch-, Geflügel-, Milch- und Fischprodukten) Tiernahrungsmittelindustrie, Kosmetika-Industrie, Pharmaindustrie, Agroindustrie, Gastronomie, Gesundheitswesen, Handwerksbetriebe, und öffentliches Verkehrswesen. Beispiele für zu reinigende Objekte sind Anstaltswäsche, Klinikwäsche, Wäsche aus Wäschereiannahmen, Gebäude mit Wohn-, Büro- oder Geschäftsräumen der verschiedensten Art sowie Sanitärräumen, Lagerhäuser, Brauereien, Einzelhandelsgeschäfte, wie Bäckereien, Metzgereien und Supermärkte; Krankenhäuser, Pflegeheime, Altersheime, Verwaltungsgebäude, Fabrikgebäude, Arztpraxen; weiterhin Kraftfahrzeuge (PKW und LKW), Autobusse, Straßentankfahrzeuge (innen und außen), Eisenbahnkesselwagen, Personen- und Güterwagen sowie Luftfahrzeuge und Schiffe; ferner Gebäudefassaden, gekachelte oder gestrichene Wände, Fußböden aus Holz (Parkett, Dielen) mit Estrich oder textilen Belägen oder Kunststoffbelägen, Signal- und Beleuchtungseinrichtungen, Möbel, Geländer, Schildbrücken, Schilder, Warnbaken, Begrenzungspfähle, Kessel, Geschirr, Glasscheiben, Straßen und Wege, Hofbefestigungen, Straßen- und Eisenbahntunnel.

### Saurer Sanitärreiniger

Die erfindungsgemäßen Mehrschichtfolien eignen sich auch zur zumindest teilweisen Beschichtung oder Umhüllung von Reinigern für den Sanitärbereich, die wenigstens eine organische Säure enthalten. Saure Sanitärreiniger eignen sich insbesondere zur WC-Reinigung, zur Reinigung von Waschbecken, Duschkabinen, Duschwannen und Schwimmbecken sowie Spülbecken im Küchenbereich. Sie sind beispielsweise wirksam bei der Entfernung von Kalk- und Urinsteinablagerungen und bei der Entfernung von Bakterien die sich üblicherweise auf den Kalk- und Urinsteinablagerungen bilden. Sie sorgen für Sauberkeit und beugen schlechten Gerüchen wirksam vor. Überraschenderweise wurde nun gefunden, dass die erfindungsgemäßen Mehrschichtfolien eine hohe Verträglichkeit mit sauren Tensidzusammensetzungen aufweisen und sich besonders vorteilhaft für den Einsatz in sauren Sanitärreinigern eignen.

Ein bevorzugter saurer Sanitärreiniger umfasst vorzugsweise folgende Bestandteile:
- wenigstens eine Umhüllung und/oder Beschichtung, enthaltend eine oder bestehend aus einer erfindungsgemäße(n) Mehrschichtfolie, wie zuvor definiert, oder erhältlich durch ein Verfahren, wie zuvor definiert,
- wenigstens eine organische Säure,
- gegebenenfalls Wasser,
- gegebenenfalls wenigstens einen Verdicker, und
- gegebenenfalls wenigstens einen weiteren Zusatzstoff,

Der saure Sanitärreiniger kann fest, flüssig oder gelförmig vorliegen. Der saure Sanitärreiniger liegt vorzugsweise flüssig oder speziell gelförmig vor.

Geeignete organische Säuren sind Ameisensäure, Essigsäure, Citronensäure oder Methansulfonsäure. Besonders bevorzugt sind Essigsäure oder Citronensäure. Der erfindungsgemäße Reiniger enthält die organische Säure vorzugsweise in einer Menge von 1 bis 40 Gew.-%, insbesondere von 5 bis 15 Gew.-%, bezogen auf das Gesamtgewicht des Reinigers.

Der erfindungsgemäße Reiniger enthält vorzugsweise wenigstens ein Tensid in einer Menge von 0,5 bis 50 Gew.-%, insbesondere von 1 bis 15 Gew.-%, bezogen auf das Gesamtgewicht des Reinigers.

Geeignete Verdicker sind die zuvor bei den erfindungsgemäßen Wasch- und Reinigungsmitteln als Komponente E) genannten, auf die hier in vollem Umfang Bezug genommen wird.

Geeignete Zusatzstoffe sind die zuvor bei den erfindungsgemäßen Wasch- und Reinigungsmitteln als Komponente E) genannten, auf die hier in vollem Umfang Bezug genommen wird. Dazu zählen speziell Stabilisatoren, Farbstoffe und Duftstoffe.

### Kosmetische und pharmazeutische Mittel

Die erfindungsgemäßen Mehrschichtfolien eignen sich auch zur zumindest teilweisen Beschichtung oder Umhüllung von kosmetischen und pharmazeutischen Produkten.

Die kosmetischen und pharmazeutischen Produkte können fest, flüssig oder gelförmig vorliegen. Speziell liegen die kosmetischen und pharmazeutischen Produkte als wässrige Formulierung vor.

Ein weiterer Gegenstand der Erfindung ist eine kosmetische oder pharmazeutische Zusammensetzung, enthaltend
a) wenigstens eine Umhüllung und/oder Beschichtung, enthaltend eine oder bestehend aus einer erfindungsgemäße(n) Mehrschichtfolie, wie zuvor definiert, oder erhältlich durch ein Verfahren, wie zuvor definiert,
b) wenigstens einen kosmetisch oder pharmazeutisch akzeptablen Wirkstoff, und
c) gegebenenfalls wenigstens einen von den Komponenten a) und b) verschiedenen kosmetisch oder pharmazeutisch akzeptablen Hilfsstoff.

Bevorzugt umfasst die Komponente c) wenigstens einen kosmetisch oder pharmazeutisch akzeptablen Träger.

Vorzugsweise ist die Träger-Komponente c) ausgewählt unter
i) Wasser,
ii) wassermischbaren organischen Lösungsmitteln, vorzugsweise C₂-C₄-Alkanolen, insbesondere Ethanol,
iii) Ölen, Fetten, Wachsen,
iv) von iii) verschiedenen Estern von C₆-C₃₀-Monocarbonsäuren mit ein-, zwei- oder dreiwertigen Alkoholen,
v) gesättigten acyclischen und cyclischen Kohlenwasserstoffen,
vi) Fettsäuren,
vii) Fettalkoholen,
viii) Treibgasen,
und Mischungen davon.

Geeignete hydrophile Komponenten c) sind die zuvor genannten organischen Lösungsmittel, Öle und Fette.

Speziell geeignete kosmetisch verträgliche Öl- bzw. Fettkomponenten c) sind in Karl-Heinz Schrader, Grundlagen und Rezepturen der Kosmetika, 2. Auflage, Verlag Hüthig, Heidelberg, S. 319 - 355 beschrieben, worauf hier Bezug genommen wird.

Bei den erfindungsgemäßen kosmetischen Mitteln kann es sich um hautkosmetische, haarkosmetische, dermatologische, hygienische oder pharmazeutische Mittel handeln.

Die erfindungsgemäßen Mittel können in jedweder Form vorliegen, die sich zu einer Umhüllung und/oder Beschichtung durch eine erfindungsgemäße Mehrschichtfolie eignet. Vorzugsweise liegen die erfindungsgemäßen Mittel in Form eines Gels, einer Salbe, Creme, Emulsion, Suspension, Lotion, Milch oder Paste vor. Gewünschtenfalls können auch Liposomen oder Mikrosphären eingesetzt werden.

Die erfindungsgemäßen kosmetischen Mittel können zusätzlich kosmetisch und/oder dermatologisch aktive Wirk- und Effektstoffe sowie Hilfsstoffe enthalten. Vorzugsweise enthalten die erfindungsgemäßen kosmetischen Mittel als Umhüllung und/oder Beschichtung wenigstens eine erfindungsgemäße Mehrschichtfolie, wie vorstehend definiert, wenigstens einen wie vorstehend definierten Träger C) und wenigstens einen davon verschiedenen Bestandteil, der vorzugsweise ausgewählt ist unter kosmetisch aktiven Wirkstoffen, Emulgatoren, Tensiden, Konservierungsmitteln, Parfümölen, Bitterstoffen, zusätzlichen Verdickern, Haarpolymeren, Haar- und Hautconditionern, Pfropfpolymeren, wasserlöslichen oder dispergierbaren silikonhaltigen Polymeren, Lichtschutzmitteln, Bleichmitteln, Gelbildnern, Pflegemitteln, Tönungsmitteln, Bräunungsmitteln, Farbstoffen, Pigmenten, Konsistenzgebern, Feuchthaltemitteln, Rückfettern, Collagen, Eiweißhydrolysaten, Lipiden, Antioxidantien, Anti-Vergilbungsmitteln, Entschäumern, Antistatika, Emollienzien und Weichmachern.

Die kosmetischen Mittel können wenigstens ein konventionelles Verdickungsmittel enthalten. Dazu zählen z.B. Polysaccharide und organische Schichtmineralien wie Xanthan Gum® (Kelzan® der Fa. Kelco), Rhodopol® 23 (Rhone Poulenc) oder Veegum® (Firma R. T. Vanderbilt) oder Attaclay® (Firma Engelhardt). Geeignete Verdickungsmittel sind auch organische natürliche Verdickungsmittel (Agar-Agar, Carrageen, Tragant, Gummi arabicum, Alginate, Pektine, Polyosen, Guar-Mehl, Johannisbrotbaumkernmehl, Stärke, Dextrine, Gelatine, Casein) und anorganische Verdickungsmittel (Polykieselsäuren, Tonmiheralien wie Montmorillonite, Zeolithe, Kieselsäuren). Weitere Verdickungsmittel sind Polysaccharidgummen, beispielsweise Gummi arabicum, Agar, Alginate, Carrageene und ihre Salze, Guar, Guaran, Traganth, Gellan, Ramsan, Dextran oder Xanthan und ihre Derivate, z. B. propoxyliertes Guar, sowie ihre Mischungen. Andere Polysaccharidverdicker sind beispielsweise Stärken verschiedensten Ursprungs und Stärkederivate, z. B. Hydroxyethylstärke, Stärkephosphat- ester oder Stärkeacetate, oder Carboxymethylcellulose bzw. ihr Natriumsalz, Methyl-, Ethyl-, Hydroxyethyl-, Hydroxypropyl-, Hydroxypropyl-methyl- oder Hydroxyethyl-methyl- cellulose oder Celluloseacetat. Als Verdickungsmittel können weiterhin Schichtsilikate eingesetzt werden. Hierzu zählen beispielsweise die unter dem Handelsnamen Laponite ® erhältlichen Magnesium-oder Natrium-Magnesium-Schichtsilikate der Firma Solvay Alkali sowie die Magnesiumsilikate der Firma Süd-Chemie.

Geeignete kosmetisch und/oder dermatologisch aktive Wirkstoffe sind z. B. Haut- und Haarpigmentierungsmittel, Bräunungsmittel, Bleichmittel, Keratin-härtende Stoffe, antimikrobielle Wirkstoffe, Lichtfilterwirkstoffe, Repellentwirkstoffe, hyperemisierend wirkende Stoffe, keratolytisch und keratoplastisch wirkende Stoffe, Antischuppenwirkstoffe, Antiphlogistika, keratinisierend wirkende Stoffe, antioxidativ bzw. als Radikalfänger aktive Wirkstoffe, hautbefeuchtende oder -feuchthaltende Stoffe, rückfettende Wirkstoffe, desodorierende Wirkstoffe, sebostatische Wirkstoffe, Pflanzenextrakte, antierythimatös oder antiallergisch aktive Wirkstoffe und Mischungen davon.

Künstlich hautbräunende Wirkstoffe, die geeignet sind, die Haut ohne natürliche oder künstliche Bestrahlung mit UV-Strahlen zu bräunen, sind z. B. Dihydroxyaceton, Alloxan und Walnussschalenextrakt. Geeignete Keratin-härtende Stoffe sind in der Regel Wirkstoffe, wie sie auch in Antitranspirantien eingesetzt werden, wie z. B. Kaliumaluminiumsulfat, Aluminiumhydroxychlorid, Aluminiumlactat, etc. Antimikrobielle Wirkstoffe werden eingesetzt, um Mikroorganismen zu zerstören bzw. ihr Wachstum zu hemmen und dienen somit sowohl als Konservierungsmittel als auch als desodorierend wirkender Stoff, welcher die Entstehung oder die Intensität von Körpergeruch vermindert. Dazu zählen z. B. übliche, dem Fachmann bekannte Konservierungsmittel, wie p-Hydroxybenzoesäureester, Imidazolidinyl-Harnstoff, Formaldehyd, Sorbinsäure, Benzoesäure, Salicylsäure, etc. Derartige desodorierend wirkende Stoffe sind z. B. Zinkricinoleat, Triclosan, Undecylensäurealkylolamide, Citronensäuretriethylester, Chlorhexidin etc. Geeignete Lichtfilterwirkstoffe sind Stoffe, die UV-Strahlen im UV-Bund/oder UV-A-Bereich absorbieren. Geeignete UV-Filter sind die zuvor genannten. Geeignet sind weiterhin p-Aminobenzoesäureester, Zimtsäureester, Benzophenone, Campherderivate sowie UV-Strahlen abhaltende Pigmente, wie Titandioxid, Talkum und Zinkoxid. Geeignete Repellentwirkstoffe sind Verbindungen, die in der Lage sind, bestimmte Tiere, insbesondere Insekten, vom Menschen abzuhalten oder zu vertreiben. Dazu gehört z. B. 2-Ethyl-1,3-hexandiol, N,N-Diethyl-m-toluamid etc. Geeignete hyperemisierend wirkende Stoffe, welche die Durchblutung der Haut anregen, sind z. B. ätherische Öle, wie Latschenkiefer, Lavendel, Rosmarin, Wacholderbeere, Rosskastanienextrakt, Birkenblätterextrakt, Heublumenextrakt, Ethylacetat, Campher, Menthol, Pfefferminzöl, Rosmarinextrakt, Eukalyptusöl, etc. Geeignete keratolytisch und keratoplastisch wirkende Stoffe sind z. B. Salicylsäure, Kalziumthioglykolat, Thioglykolsäure und ihre Salze, Schwefel, etc. Geeignete Antischuppen-Wirkstoffe sind z. B. Schwefel, Schwefelpolyethylenglykolsorbitanmonooleat, Schwefelricinolpolyethoxylat, Zinkpyrithion, Aluminiumpyrithion, etc. Geeignete Antiphlogistika, die Hautreizungen entgegenwirken, sind z. B. Allantoin, Bisabolol, Dragosantol, Kamillenextrakt, Panthenol, etc.

Die erfindungsgemäßen kosmetischen Mittel können als kosmetischen Wirkstoff (wie auch gegebenenfalls als Hilfsstoff) wenigstens ein kosmetisch oder pharmazeutisch akzeptables Polymer enthalten. Dazu zählen ganz allgemein anionische, kationische, amphotere und neutrale Polymere.

Beispiele für anionische Polymere sind Copolymere von Acrylsäure und Acrylamid und deren Salze; Natriumsalze von Polyhydroxycarbonsäuren, wasserlösliche oder wasserdispergierbare Polyester, Polyurethane, z. B. Luviset PUR® der Fa. BASF, und Polyharnstoffe. Besonders geeignete Polymere sind Copolymere aus t-Butylacrylat, Ethylacrylat, Methacrylsäure (z. B. Luvimer® 100P), Copolymere aus Ethylacrylat und Methacrylsäure (z. B. Luvimer® MAE), Copolymere aus N-tert.-Butylacrylamid, Ethylacrylat, Acrylsäure (Ultrahold® 8, strong), Copolymere aus Vinylacetat, Crotonsäure und gegebenenfalls weitere Vinylester (z. B. Luviset®-Marken), Maleinsäureanhydridcopolymere, gegebenenfalls mit Alkohol umgesetzt, anionische Polysiloxane, z. B. carboxyfunktionelle, t-Butylacrylat, Methacrylsäure (z. B. Luviskol® VBM), Copolymere von Acrylsäure und Methacrylsäure mit hydrophoben Monomeren, wie z. B. C₄-C₃₀-Alkylester der (Meth)acrylsäure, C₄-C₃₀-Alkylvinylester, C₄-C₃₀-Alkylvinylether und Hyaluronsäure. Ein Beispiel für ein anionisches Polymer ist weiterhin das unter der Bezeichnung Luviset® Shape (INCI Name: Polyacrylate-22) erhältliche Methylmethacrylat/Methacrylsäure/Acrylsäure/Urethanacrylat-Copolymer. Beispiele für anionische Polymere sind weiterhin Vinylacetat/Crotonsäure-Copolymere, wie sie beispielsweise unter den Bezeichnungen Resyn® (National Starch) und Gafset® (GAF) im Handel sind und Vinylpyrrolidon/Vinylacrylat-Copolymere, erhältlich beispielsweise unter dem Warenzeichen Luviflex® (BASF). Weitere geeignete Polymere sind das unter der Bezeichnung Luviflex® VBM-35 (BASF) erhältliche Vinylpyrrolidon/Acrylat-Terpolymer und Natriumsulfonat-haltige Polyamide oder Natriumsulfonat-haltige Polyester. Weiterhin geeignet sind Vinylpyrrolidon/Ethylmethacrylat/Methacrylsäure-Copolymere wie sie von der Fa. Stepan unter den Bezeichnungen Stepanhold-Extra und -R1 vertrieben werden und die Carboset®-Marken der Fa. BF Goodrich.

Geeignete kationische Polymere sind z. B. kationische Polymere mit der Bezeichnung Polyquaternium nach INCI, z. B. Copolymere aus Vinylpyrrolidon/N-Vinylimidazoliumsalzen (Luviquat® FC, Luviquat® HM, Luviquat® MS, Luviset Clear ®, Luviquat Supreme ®, Luviquat® Care), Copolymere aus N-Vinylpyrrolidon/Dimethylaminoethylmethacrylat, quaternisiert mit Diethylsulfat (Luviquat® PQ 11), Copolymere aus N-Vinylcaprolactam/N-Vinylpyrrolidon/N-Vinylimidazoliumsalzen (Luviquat® Hold); kationische Cellulosederivate (Polyquaternium-4 und -10), Acrylamidocopolymere (Polyquaternium-7) und Chitosan. Geeignete kationische (quaternisierte) Polymere sind auch Merquat® (Polymer auf Basis von Dimethyldiallylammoniumchlorid), Gafquat® (quaternäre Polymere, die durch Reaktion von Polyvinylpyrrolidon mit quaternären Ammoniumverbindungen entstehen), Polymer JR (Hydroxyethylcellulose mit kationischen Gruppen) und kationische Polymere auf pflanzlicher Basis, z. B. Guarpolymere, wie die Jaguar®-Marken der Fa. Rhodia.

Ganz besonders geeignete Polymere sind neutrale Polymere, wie Polyvinylpyrrolidone, Copolymere aus N-Vinylpyrrolidon und Vinylacetat und/oder Vinylpropionat, Polysiloxane, Polyvinylcaprolactam und andere Copolymere mit N-Vinylpyrrolidon, Polyethylenimine und deren Salze, Polyvinylamine und deren Salze, Cellulosederivate, Polyasparaginsäuresalze und Derivate. Dazu zählt beispielsweise Luviflex® Swing (teilverseiftes Copolymerisat von Polyvinylacetat und Polyethylenglykol, Fa. BASF).

Geeignete Polymere sind auch nichtionische, wasserlösliche bzw. wasserdispergierbare Polymere oder Oligomere, wie Polyvinylcaprolactam, z. B. Luviskol® Plus (BASF SE), oder Polyvinylpyrrolidon und deren Copolymere, insbesondere mit Vinylestern, wie Vinylacetat, z. B. Luviskol® VA 37, VA 55, VA 64, VA 73 (BASF SE); Polyamide, z. B. auf Basis von Itaconsäure und aliphatischen Diaminen, wie sie z. B. in der DE-A-43 33 238 beschrieben sind.

Geeignete Polymere sind auch amphotere oder zwitterionische Polymere, wie die unter den Bezeichnungen Amphomer® (National Starch) erhältlichen Octylacrylamid/Methylmethacrylat/tert.-Butylaminoethylmethacrylat/2-Hydroxypropylmethacrylat-Copolymere sowie zwitterionische Polymere, wie sie beispielsweise in den deutschen Patentanmeldungen DE 39 29 973, DE 21 50 557, DE 28 17 369 und DE 37 08 451 offenbart sind. Acrylamidopropyltrimethylammoniumchlorid/Acrylsäure- bzw. - Methacrylsäure-Copolymerisate und deren Alkali- und Ammoniumsalze sind bevorzugte zwitterionische Polymere. Weiterhin geeignete zwitterionische Polymere sind Methacroylethylbetain/Methacrylat-Copolymere, die unter der Bezeichnung Amersette® (AMERCHOL) im Handel erhältlich sind, und Copolymere aus Hydroxyethylmethacrylat, Methylmethacrylat, N,N-Dimethylaminoethylmethacrylat und Acrylsäure (Jordapon®).

Geeignete Polymere sind auch nichtionische, siloxanhaltige, wasserlösliche oder -dispergierbare Polymere, z. B. Polyethersiloxane, wie Tegopren® (Fa. Goldschmidt) oder Belsil® (Fa. Wacker).

In einer speziellen Ausführung enthalten die erfindungsgemäßen Zusammensetzungen wenigstens ein Polymer, das als Verdicker wirkt.

Geeignete polymere Verdicker sind beispielsweise gegebenenfalls modifizierte polymere Naturstoffe (Carboxymethylcellulose und andere Celluloseether, Hydroxyethyl- und -propylcellulose und dergleichen) sowie synthetische polymere Verdicker (Polyacryl- und Polymethacryl-Verbindungen, Vinylpolymere, Polycarbonsäuren, Polyether, Polyimine, Polyamide). Dazu zählen die zum Teil bereits zuvor genannten Polyacryl- und Polymethacryl-Verbindungen, beispielsweise die hochmolekularen mit einem Polyalkenylpolyether, insbesondere einem Allylether von Saccharose, Pentaerythrit oder Propylen, vernetzten Homopolymere der Acrylsäure (INCI-Bezeichnung: Carbomer). Solche Polyacrylsäuren sind u. a. von der Fa. BF Goodrich unter dem Handelsnamen Carbopol ® erhältlich, z. B. Carbopol 940 (Molekulargewicht ca. 4000000 Dalton), Carbopol 941 (Molekulargewicht ca. 1250000 Dalton) oder Carbopol 934 (Molekulargewicht ca. 3000000 Dalton). Weiterhin fallen darunter Acrylsäure-Copolymere, die beispielsweise von der Fa. Rohm & Haas unter den Handelsnamen Aculyn ® und Acusol ® erhältlich sind, z. B. die anionischen, nichtassoziativen Polymere Aculyn 22, Aculyne 28, Aculyn 33 (vernetzt), Acusol 810, Acusol 823 und Acusol 830 (CAS 25852-37-3). Speziell geeignet sind auch assoziative Verdicker, z.B. auf Basis modifizierter Polyurethane (HEUR) oder hydrophob modifizierter Acryl- oder Methacrylsäure-Copolymere (HASE-Verdicker, High Alkali Swellable Emulsion).

Nach einer bevorzugten Ausführungsform handelt es sich bei den erfindungsgemäßen Mitteln um ein Hautreinigungsmittel.

Bevorzugte Hautreinigungsmittel sind Seifen von flüssiger bis gelförmiger Konsistenz, wie Transparentseifen, Luxusseifen, Deoseifen, Cremeseifen, Babyseifen, Hautschutzseifen, Abrasivseifen und Syndets, pasteuse Seifen, Schmierseifen und Waschpasten, flüssige Wasch-, Dusch- und Badepräparate, wie Waschlotionen, Duschbäder und -gele, Schaumbäder, Ölbäder und Scrub-Präparate, Rasierschäume, -lotionen und -cremes.

Nach einer weiteren bevorzugten Ausführungsform handelt es sich bei den erfindungsgemäßen Mitteln um kosmetische Mittel zur Pflege und zum Schutz der Haut, Nagelpflegemittel oder Zubereitungen für die dekorative Kosmetik.

Bei den erfindungsgemäßen Hautpflegemitteln handelt es sich insbesondere um W/O- oder O/W-Hautcremes, Tag- und Nachtcremes, Augencremes, Gesichtscremes, Antifaltencremes, Feuchthaltecremes, Bleichcremes, Vitamincremes, Hautlotionen, Pflegelotionen und Feuchthaltelotionen.

Hautkosmetische und dermatologische Mittel enthalten vorzugsweise wenigstens eine erfindungsgemäße Mehrschichtfolie in einem Anteil von etwa 0,1 bis 50 Gew.-%, vorzugsweise 0,1 bis 20 Gew.-%, bezogen auf das Gesamtgewicht des Mittels.

Die erfindungsgemäßen Hautpflegemittel können in jedweder Form vorliegen, die sich zu einer Umhüllung und/oder Beschichtung durch eine erfindungsgemäße Mehrschichtfolie eignet, z. B. als Creme, Schaum, Gel, Stift, Mousse, Milch oder Lotion.

Die hautkosmetischen Zubereitungen können neben den erfindungsgemäßen Polymerzusammensetzungen P1) und geeigneten Trägern noch weitere in der Hautkosmetik übliche Wirkstoffe und Hilfsstoffe, wie zuvor beschrieben, enthalten. Dazu zählen vorzugsweise Emulgatoren, Konservierungsmittel, Parfümöle, kosmetische Wirkstoffe wie Phytantriol, Vitamin A, E und C, Retinol, Bisabolol, Panthenol, Lichtschutzmittel, Bleichmittel, Bräunungsmittel, Collagen, Eiweißhydrolysate, Stabilisatoren, pH-Wert-Regulatoren, Farbstoffe, Salze, Verdicker, Gelbildner, Konsistenzgeber, Silicone, Feuchthaltemittel, Rückfetter und weitere übliche Additive.

Bevorzugte Öl- und Fettkomponenten der hautkosmetischen und dermatologischen Mittel sind die zuvor genannten mineralischen und synthetischen Öle, wie z. B. Paraffine, Siliconöle und aliphatische Kohlenwasserstoffe mit mehr als 8 Kohlenstoffatomen, tierische und pflanzliche Öle, wie z. B. Sonnenblumenöl, Kokosöl, Avocadoöl, Olivenöl, Lanolin, oder Wachse, Fettsäuren, Fettsäureester, wie z. B. Triglyceride von C₆-C₃₀-Fettsäuren, Wachsester, wie z. B. Jojobaöl, Fettalkohole, Vaseline, hydriertes Lanolin und acetyliertes Lanolin sowie Mischungen davon.

Man kann die erfindungsgemäße Polymerzusammensetzung P1) auch mit herkömmlichen Polymeren, wie zuvor beschrieben, abmischen, falls spezielle Eigenschaften eingestellt werden sollen.

Zur Einstellung bestimmter Eigenschaften wie z. B. Verbesserung der Haptik, des Spreitverhaltens, der Wasserresistenz und/oder der Bindung von Wirk- und Hilfsstoffen, wie Pigmenten, können die hautkosmetischen und dermatologischen Zubereitungen zusätzlich auch konditionierende Substanzen auf Basis von Siliconverbindungen enthalten. Geeignete Siliconverbindungen sind beispielsweise Polyalkylsiloxane, Polyarylsiloxane, Polyarylalkylsiloxane, Polyethersiloxane oder Siliconharze.

Die Herstellung der kosmetischen oder dermatologischen Zubereitungen erfolgt nach üblichen, dem Fachmann bekannten Verfahren.

Nach einer weiteren bevorzugten Ausführungsform handelt es sich bei den erfindungsgemäßen Mitteln um ein Duschgel, eine Shampoo-Formulierung oder ein Badepräparat.

Solche Formulierungen enthalten wenigstens eine erfindungsgemäße Mehrschichtfolie als Umhüllung und/oder Beschichtung sowie üblicherweise anionische Tenside als Basistenside und amphotere und/oder nichtionische Tenside als Cotenside. Weitere geeignete Wirkstoffe und/oder Hilfsstoffe sind im Allgemeinen ausgewählt unter Lipiden, Parfümölen, Farbstoffen, organischen Säuren, Konservierungsstoffen und Antioxidantien sowie Verdickern/Gelbildnern, Hautkonditioniermitteln und Feuchthaltemitteln.

Diese Formulierungen enthalten vorzugsweise 2 bis 50 Gew.-%, bevorzugt 5 bis 40 Gew.-%, besonders bevorzugt 8 bis 30 Gew.-% Tenside, bezogen auf das Gesamtgewicht der Formulierung.

In den Wasch-, Dusch- und Badepräparaten können alle in Körperreinigungsmitteln üblicherweise eingesetzten anionischen, neutralen, amphoteren oder kationischen Tenside verwendet werden.

Geeignete Tenside sind die zuvor genannten.

Weiterhin können die Duschgel-/Shampoo-Formulierungen zusätzliche Verdicker, wie z. B. Kochsalz, PEG-55, Propylenglykol-Oleat, PEG-120-Methylglucosedioleat und andere, sowie Konservierungsmittel, weitere Wirk- und Hilfsstoffe und Wasser enthalten.

Nach einer weiteren bevorzugten Ausführungsform handelt es sich bei den erfindungsgemäßen Mitteln um ein Haarbehandlungsmittel. Erfindungsgemäße Haarbehandlungsmittel enthalten vorzugsweise wenigstens eine erfindungsgemäße Mehrschichtfolie in einer Menge im Bereich von etwa 0,1 bis 50 Gew.-%, bevorzugt 0,1 bis 20 Gew.-%, bezogen auf das Gesamtgewicht des Mittels.

Vorzugsweise liegen die erfindungsgemäßen Haarbehandlungsmittel in Form eines Haarmousses, Haargels, Shampoos, Spitzenfluids, Egalisierungsmittels für Dauerwellen oder "Hot-Oil-Treatments" vor. Je nach Anwendungsgebiet können die haarkosmetischen Zubereitungen als Gel, Creme, Lotion oder Wachs appliziert werden.

Die erfindungsgemäßen Mehrschichtfolien eignen sich insbesondere als Umhüllung und/oder Beschichtung für Haarstyling-Zubereitungen, insbesondere Haarschäumen und Haargelen.

Als Emulgatoren können alle in Haarschäumen üblicherweise eingesetzten Emulgatoren verwendet werden. Geeignete Emulgatoren können nichtionisch, kationisch bzw. anionisch oder amphoter sein.

Die erfindungsgemäßen Mehrschichtfolien eignen sich auch für Styling-Gele. Als zusätzliche Gelbildner können alle in der Kosmetik üblichen Gelbildner eingesetzt werden. Hierzu wird auf die zuvor genannten konventionellen Verdicker Bezug genommen.

Die erfindungsgemäßen Mehrschichtfolien eignen sich auch für Shampooformulierungen, die zusätzlich übliche Tenside enthalten.

In den Shampooformulierungen können zur Erzielung bestimmter Effekte übliche Konditioniermittel eingesetzt werden. Hierzu zählen beispielsweise die zuvor genannten kationischen Polymere mit der Bezeichnung Polyquaternium nach INCI, insbesondere Copolymere aus Vinylpyrrolidon/N-Vinylimidazoliumsalzen (Luviquat® FC, Luviquat® HM, Luviquat® MS, Luviquat® Care), Copolymere aus N-Vinylpyrrolidon/Dimethylaminoethylmethacrylat, quaternisiert mit Diethylsulfat (Luviquat® PQ 11), Copolymere aus N-Vinylcaprolactam/N-Vinylpyrrolidon/N-Vinylimidazoliumsalzen (Luviquat® Hold); kationische Cellulosederivate

(Polyquaternium-4 und -10), Acrylamidcopolymere (Polyquaternium-7). Ferner können Eiweißhydrolysate verwendet werden, sowie konditionierende Substanzen auf Basis von Silikonverbindungen, beispielsweise Polyalkylsiloxane, Polyarylsiloxane, Polyarylalkylsiloxane, Polyethersiloxane oder Silikonharze. Weitere geeignete Silikonverbindungen sind Dimethicon Copolyole (CTFA) und aminofunktionelle Silikonverbindungen wie Amodimethicone (CTFA). Ferner können kationische Guarderivate wie Guarhydroxypropyltrimoniumchlorid (INCI) verwendet werden.

Die erfindungsgemäßen Mehrschichtfolien eignen sich ebenso für die Verwendung als Umhüllung und/oder Beschichtung für pharmazeutische Zubereitungen jeder Art und im Überzug solcher pharmazeutischer Zubereitungen.

Typische pharmazeutische Zusammensetzungen enthalten
A) wenigstens eine Umhüllung und/oder Beschichtung, enthaltend eine oder bestehend aus einer wasch- und reinigungsaktive(n) Mehrschichtfolie, wie zuvor definiert, oder erhältlich durch ein Verfahren, wie zuvor definiert,
B) wenigstens einen pharmazeutisch akzeptablen Wirkstoff und
C) gegebenenfalls wenigstens einen weiteren, von A) und B) verschiedenen pharmazeutisch akzeptablen Hilfsstoff.

Pharmazeutisch akzeptable Hilfsstoffe C) sind die im Bereich der Pharmazie, der Lebensmitteltechnologie und angrenzenden Gebieten bekanntermaßen verwendbaren Hilfsstoffe, insbesondere die in einschlägigen Arzneibüchern (z. B. DAB, Ph. Eur., BP, NF) gelisteten sowie andere Hilfsstoffe, deren Eigenschaften einer physiologischen Anwendung nicht entgegenstehen.

Geeignete Hilfsstoffe C) können sein: Gleitmittel, Netzmittel, emulgierende und suspendierende Mittel, konservierende Mittel, Antioxidantien, Antireizstoffe, Chelatbildner, Emulsionsstabilisatoren, Filmbildner, Gelbildner, Geruchsmaskierungsmittel, Bitterstoffe, Harze, Hydrokolloide, Lösemittel, Lösungsvermittler, Neutralisierungsmittel, Permeationsbeschleuniger, Pigmente, quaternäre Ammoniumverbindungen, Rückfettungs- und Überfettungsmittel, Salben-, Creme- oder Öl-Grundstoffe, Siliconderivate, Stabilisatoren, Sterilantien, Treibmittel, Trocknungsmittel, Trübungsmittel, zusätzliche Verdicker, Wachse, Weichmacher, Weißöle. Eine diesbezügliche Ausgestaltung beruht auf fachmännischem Wissen, wie sie beispielsweise in Fiedler, H. P. Lexikon der Hilfsstoffe für Pharmazie, Kosmetik und angrenzende Gebiete, 4. Aufl., Aulendorf: ECV-Editio-Kantor-Verlag, 1996, dargestellt sind.

Zur Herstellung von erfindungsgemäßen pharmazeutischen Mitteln können die Wirkstoffe mit einem geeigneten Exzipienten vermischt oder verdünnt werden. Exzipienten können feste, halb feste oder flüssige Materialien sein, die als Vehikel, Träger oder Medium für den Wirkstoff dienen können. Die Zumischung weiterer Hilfsstoffe erfolgt gewünschtenfalls in der dem Fachmann bekannten Weise. Insbesondere handelt es sich dabei um wässrige Lösungen bzw. Solubilisate zur oralen oder zur parenteralen Applikation. Des Weiteren eignen sich die erfindungsgemäß zu verwendenden Copolymere auch zum Einsatz in oralen Darreichungsformen wie Tabletten, Kapseln, Pulvern, Lösungen. Hier können sie den schwerlöslichen Arzneistoff mit einer erhöhten Bioverfügbarkeit zur Verfügung stellen. Bei der parenteralen Applikation können neben Solubilisaten auch Emulsionen, beispielsweise Fettemulsionen eingesetzt werden.

Pharmazeutische Formulierungen der oben genannten Art können durch Verarbeiten der erfindungsgemäßen Polymerzusammensetzung mit pharmazeutischen Wirkstoffen nach herkömmlichen Methoden und unter Einsatz bekannter und neuer Wirkstoffe erhalten werden.

Der Gehalt der pharmazeutischen Mittel an der wenigstens einen erfindungsgemäßen Mehrschichtfolie liegt vorzugsweise im Bereich von 0,1 bis 50 Gew.-%, bevorzugt 0,1 bis 20 Gew.-%, bezogen auf das Gesamtgewicht des Mittels.

Zur Herstellung der erfindungsgemäßen pharmazeutischen Mittel eignen sich prinzipiell alle pharmazeutischen Wirkstoffe und Pro-Drugs. Hierzu zählen Benzodiazepine, Antihypertensiva, Vitamine, Cytostatika - insbesondere Taxol, Anästhetika, Neuroleptika, Antidepressiva, Antibiotika, Antimykotika, Fungizide, Chemotherapeutika, Urologika, Thrombozytenaggregationshemmer, Sulfonamide, Spasmolytika, Hormone, Immunglobuline, Sera, Schilddrüsentherapeutika, Psychopharmaka, Parkinsonmittel und andere Antihyperkinetika, Ophthalmika, Neuropathiepräparate, Calciumstoffwechselregulatoren, Muskelrelaxantia, Narkosemittel, Lipidsenker, Lebertherapeutika, Koronarmittel, Kardiaka, Immuntherapeutika, regulatorische Peptide und ihre Hemmstoffe, Hypnotika, Sedativa, Gynäkologika, Gichtmittel, Fibrinolytika, Enzympräparate und Transportproteine, Enzyminhibitoren, Emetika, durchblutungsfördernde Mittel, Diuretika, Diagnostika, Corticoide, Cholinergika, Gallenwegstherapeutika, Antiasthmatika, Broncholytika, Betarezeptorenblocker, Calciumantagonisten, ACE-Hemmer, Arteriosklerosemittel, Antiphlogistika, Antikoagulantia, Antihypotonika, Antihypoglykämika, Antihypertonika, Antifibrinolytika, Antiepileptika, Antiemetika, Antidota, Antidiabetika, Antiarrhythmika, Antianämika, Antiallergika, Anthelmintika, Analgetika, Analeptika, Aldosteronantagonisten, Abmagerungsmittel. Beispiele für geeignete pharmazeutische Wirkstoffe sind die insbesondere die in den Absätzen 0105 bis 0131 der US 2003/0157170 genannten Wirkstoffe.

Neben der Anwendung in der Kosmetik und in der Pharmazie eignen sich die erfindungsgemäßen Mehrschichtfolien auch als Umhüllung und/oder Beschichtung im Lebensmittelbereich. Zu den Lebensmittelzubereitungen sind im Rahmen der vorliegenden Erfindung auch Nahrungsergänzungsmittel wie z. B. Lebensmittelfarbstoffe enthaltende Zubereitungen und diätetische Lebensmittel zu verstehen. Darüber hinaus eigenen sich die erfindungsgemäßen Polymerzusammensetzungen P1) auch für Futtermittelzusätze für die Tierernährung.

Außerdem eignen sich die erfindungsgemäßen Mehrschichtfolien zur Herstellung von Zubereitungen von Nahrungsergänzungsmitteln wie wasserunlöslichen Vitaminen und Provitaminen wie Vitamin A, Vitamin A-Acetat, Vitamin D, Vitamin E, Tocopherol-Derivate wie Tocopherolacetat und Vitamin K.

### Pflanzenschutzmittel

Die erfindungsgemäße Mehrschichtfolie eignet sich weiterhin vorteilhaft zur Umhüllung und/oder Beschichtung von Pflanzenschutzmitteln. Überraschenderweise wurde gefunden, dass die erfindungsgemäße gelförmige Polymerzusammensetzung P1) eine hohe Verträglichkeit mit einer Vielzahl an Pflanzenschutzwirkstoffen und Adjuvantien aufweist.

Ein bevorzugtes Pflanzenschutzmittel umfasst vorzugsweise folgende Bestandteile:
- wenigstens eine Umhüllung und/oder Beschichtung, enthaltend eine oder bestehend aus einer wasch- und reinigungsaktive(n) Mehrschichtfolie, wie zuvor definiert, oder erhältlich durch ein Verfahren, wie zuvor definiert,
- wenigstens einen Wirkstoff,
- gegebenenfalls wenigstens ein Adjuvans,
- gegebenenfalls Wasser,
- gegebenenfalls wenigstens einen Verdicker, und
- gegebenenfalls wenigstens einen weiteren Zusatzstoff,

Geeignete Wirkstoffe zur Anwendung in den erfindungsgemäßen Pflanzenschutzmitteln sind beispielsweise solche, die zur Gruppe der Herbizide, Fungizide, Insektizide, Wachstumsregulatoren, Safener, Acarizide, Molluskizide und Nematizide gehören.
In vielen Fällen ist der Zusatz von Adjuvantien, beispielsweise von Ölen, speziellen Solventien, Tensiden oder Tensidgemischen vorteilhaft. Adjuvantien sind im Pflanzenschutz Hilfsstoffe, welche die Aktivität eines Wirkstoffs (hier: Pflanzenschutzmittel) und/oder seine Selektivität in Bezug auf die erwünschte Wirkung (z.B. fungizide, insektizide, herbizide, bakterizide, nematizide, wachstumsregulatorische Wirkung) erhöhen, die jedoch für sich genommen keine oder nur eine sehr geringe Wirkung bezüglich der Pflanzenschutzwirkung aufweisen. Die Wirkung von Adjuvantien beruht vielfach auf ihrer Grenzflächenaktivität, die den Kontakt der Applikationsform des Wirkstoffs mit der Pflanzenoberfläche verbessert sowie durch Verringerung der Oberflächenspannung das Eindringen der Applikationsform und damit des Wirkstoffs in das Erdreich verbessert.

Das erfindungsgemäße Pflanzenschutzmittel kann fest, flüssig oder gelförmig vorliegen.
Das erfindungsgemäße Pflanzenschutzmittel kann zusätzlich wenigstens einen Verdicker enthalten. Geeignete Verdicker sind die zuvor bei den Wasch- und Reinigungsmitteln als Komponente E) genannten, worauf hier in vollem Umfang Bezug genommen wird. Das erfindungsgemäße Pflanzenschutzmittel enthält die erfindungsgemäße Mehrschichtfolie vorzugsweise in einer Menge von 0,1 bis 50 Gew.-%, besonders bevorzugt von 0,1 bis 20 Gew.-%, bezogen auf das Gesamtgewicht des Pflanzenschutzmittels.

Das erfindungsgemäße Pflanzenschutzmittel kann weitere Komponenten enthalten. Hierzu gehören beispielsweise Dispergiermittel, Entschäumer, Konservierungsmittel, Biozide, organische Lösungsmittel, Frostschutzmittel und dergleichen.

Geeignete Dispergiermittel oder oberflächenaktive Mittel sind vorzugsweise nicht ionisch. Grundsätzlich können sie von ähnlicher Natur wie die oben beschriebenen Adjuvantien sein, wobei sie sich von diesen durch ein in der Regel höheres Molekulargewicht unterscheiden. Geeignete Molekulargewichte für Dispergiermittel bewegen sich im Rahmen von ca.1000 g/mol (z.B. phosphatiertes Tristyrylphenolethoxylat, wie Soprophor 3D33 von Rhodia) bis zu mehreren tausend g/mol bei Kammpolymeren (z.B. Atlox 4913 von Croda). Entschäumer sind vorzugsweise Silikon-basierte Entschäumer. Ein geeignetes Konservierungsmittel ist beispielsweise Dichlorophen. Geeignete Biozide sind beispielsweise Isothiazolinone, wie Benzylisothiazolinon und Methylisothiazolinon. Geeignete Frostschutzmittel sind beispielsweise Glycerin, Ethylenglycol und Propylenglycol.

In gleicher Weise können auch veterinärmedizinische Darreichungsformen, insbesondere Rumen-stabile Formen, sowie Darreichungsformen mit Vitaminen, Carotinoiden, Spurenelementen, Nutraceuticals, Aminosäuren und Nahrungsergänzungsstoffen hergestellt werden. Letztere können auch als Lebensmittel oder Supplements gelten.

Die Erfindung wird anhand der im Folgenden beschriebenen Beispiele näher erläutert. Dabei sollen die Beispiele nicht als einschränkend für die Erfindung verstanden werden.

### BEISPIELE

Alle Beispiele zur Herstellung einer Polymerzusammensetzung P1) wurden mit der gleichen allgemeinen Herstellungsvorschrift erstellt. Im Folgenden werden die im Einzelnen hergestellten erfindungsgemäßen Polymerzusammensetzungen mit P1-1) bis P1-6) bezeichnet.

Allgemeine Herstellungsvorschrift für eine Polymerzusammensetzung P1)

Die Vorlage wurde unter Rühren mit 100 Upm auf 75 °C erwärmt. Dann wurden die Zuläufe 1, 2 und 3 in 4 h zudosiert und das Reaktionsgemisch eine weitere Stunde nachpolymerisiert. Anschließend ließ man auf Raumtemperatur abkühlen. Die Polymerzusammensetzung fällt in Form einer transparenten und dickflüssigen Lösung an.

Das gewichtsmittlere Molekulargewicht M_{w} der erhaltenen Polymerzusammensetzung P1) wurde mittels Gelpermeationschromatographie (GPC) in wässriger Lösung unter Verwendung von neutralisierter Polyacrylsäure als Polymerstandard bestimmt. Bei dieser Art der Molekulargewichtsbestimmung werden die Komponenten der Polymerzusammensetzung erfasst, welche die zuvor genannten Monomere M) einpolymerisiert enthalten.
- Standard: neutralisierte Polyacrylsäure. Die Kalibrierung erfolgte mit eng verteilten Na-PAA-Standards der Fa. PSS (Polymer Standards Service GmbH) mit Molekulargewichten von M = 1.250 bis M = 1.100.000 g/mol. Zusätzlich wurden PAA-Standards der Fa. American Polymer Standards Corporation mit Molekulargewicht M = 1.770 sowie M = 900 g/mol verwendet. Die Werte außerhalb dieses Elutionsbereiches wurden extrapoliert.
- Elutionsmittel: 0,01 mol/l Phosphatpuffer pH=7,4 in destilliertem Wasser mit 0,01 M NaN₃
- Fluss: 0.8 mL/min
- Injektionsmenge: 100 µL
- Konzentration: 1.5 mg/mL
- Die Probelösungen wurden über Millipore IC Millex-LG Filter (0,2 µm) filtriert.
- Säulenbezeichnung: TSKgel GMPWXL
- Säulensatz: 2 Trennsäulen (Länge = je 30 cm), Ausschlußgrenze 1.000 - 8.000.000 g/mol
Detektor: DRI Agilent 1200 UV Agilent 1200 VWD [260nm]

### Herstellung der Polymerzusammensetzung P1-1)

| | Einsatzstoff | Menge (Gew.-%) | Gehalt (%) |
|---|---|---|---|
| Vorlage | Polyethylenglykol Mw 1000 g/mol. | 24,48 | 100,00 |
| | Wasser^{a}) | 16,78 | 100,00 |
| Zulauf 1 | Acrylsäure | 48,95 | 100,00 |
| Zulauf 2 | Initiator^{b}) | 0,35 | 100,00 |
| | Wasser^{a}) | 4,55 | 100,00 |
| Zulauf 3 | 2-Mercaptoethanol | 0,49 | 100,00 |
| | Natriumhypophosphit | 1,34 | 55,00 |
| | Wasser^{a}) | 3,07 | 100,00 |

| | | | |
|---|---|---|---|
| a) vollentsalztes Wasser b) 2,2'-Azobis(2-methylpropionamidine)dihydrochloride (CAS-Nr. 2997-92-4) | | | |

Das gewichtsmittlere Molekulargewicht Mw der erhaltenen Polymerzusammensetzung P1-1) betrug 11800 g/mol.

### Herstellung der Polymerzusammensetzung P1-2)

| | Einsatzstoff | Menge (Gew.-%) | Gehalt (%) |
|---|---|---|---|
| Vorlage | Beidseitig endständig CxH_{2X+1} / C_{y}H_{2y+1} - terminiertes Polyethylenoxid mit einer freien OH-Gruppe und x, y = 6 bis 14 | 24,48 | 100,00 |
| | Wasser^{a}) | 16,78 | 100,00 |
| Zulauf 1 | Acrylsäure | 48,95 | 100,00 |
| Zulauf 2 | Initiator^{b}) | 0,35 | 100,00 |
| | Wasser^{a}) | 4,55 | 100,00 |
| Zulauf 3 | 2-Mercaptoethanol | 0,49 | 100,00 |
| | Natriumhypophosphit | 1,34 | 55,00 |
| | Wasser^{a}) | 3,07 | 100,00 |

| | | | |
|---|---|---|---|
| a) vollentsalztes Wasser b) 2,2'-Azobis(2-methylpropionamidine)dihydrochloride (CAS-Nr. 2997-92-4) | | | |

Das gewichtsmittlere Molekulargewicht Mw der erhaltenen Polymerzusammensetzung P1-2) betrug 11100 g/mol.

### Herstellung der Polymerzusammensetzung P1-3)

| | Einsatzstoff | Menge (Gew.-%) | Gehalt (%) |
|---|---|---|---|
| Vorlage | C₁₃C₁₅-Alkohol + 9 EO + 2 BuO | 24,08 | 100,00 |
| | Wasser^{a}) | 18,12 | 100,00 |
| Zulauf 1 | Acrylsäure | 48,17 | 100,00 |
| Zulauf 2 | Initiator^{b}) | 0,34 | 100,00 |
| | Wasser^{a}) | 4,47 | 100,00 |
| Zulauf 3 | 2-Mercaptoethanol | 0,96 | 100,00 |
| | Natriumhypophosphit | 2,63 | 55,00 |
| | Wasser^{a}) | 1,23 | 100,00 |

| | | | |
|---|---|---|---|
| a) vollentsalztes Wasser b) 2,2'-Azobis(2-methylpropionamidine)dihydrochloride (CAS-Nr. 2997-92-4) | | | |

Das gewichtsmittlere Molekulargewicht Mw der erhaltenen Polymerzusammensetzung P1-3) betrug 6120 g/mol.

### Herstellung der Polymerzusammensetzung P1-4)

| | Einsatzstoff | Menge (Gew.-%) | Gehalt (%) |
|---|---|---|---|
| Vorlage | C₁₃C₁₅-Alkohol + 9 EO + 2 BuO | 17,98 | 100,00 |
| | Wasser^{a}) | 18,09 | 100,00 |
| Zulauf 1 | Acrylsäure | 53,94 | 100,00 |
| Zulauf 2 | Initiator^{b}) | 0,38 | 100,00 |
| | Wasser^{a}) | 4,61 | 100,00 |
| Zulauf 3 | 2-Mercaptoethanol | 1,08 | 100,00 |
| | Natriumhypophosphit | 2,94 | 55,00 |
| | Wasser^{a}) | 0,97 | 100,00 |

| | | | |
|---|---|---|---|
| a) vollentsalztes Wasser b) 2,2'-Azobis(2-methylpropionamidine)dihydrochloride (CAS-Nr. 2997-92-4) | | | |

Das gewichtsmittlere Molekulargewicht Mw der erhaltenen Polymerzusammensetzung P1-4) betrug 6270 g/mol.

### Herstellung der Polymerzusammensetzung P1-5)

| | Einsatzstoff | Menge (Gew.-%) | Gehalt (%) |
|---|---|---|---|
| Vorlage | Beidseitig endständig CXH2X+1 / CyH2y+1 - terminiertes Polyethylenoxid mit einer freien OH-Gruppe und x, y = 6 bis 14 | 24,48 | 100,00 |
| | Wasser^{a}) | 16,78 | 100,00 |
| Zulauf 1 | Acrylsäure | 32,38 | 100,00 |
| | Methacrylsäure | 16,58 | 100,00 |
| Zulauf 2 | Initiator^{b}) | 0,35 | 100,00 |
| | Wasser^{a}) | 4,55 | 100,00 |
| Zulauf 3 | 2-Mercaptoethanol | 0,49 | 100,00 |
| | Natriumhypophosphit | 1,34 | 55,00 |
| | Wasser^{a}) | 3,07 | 100,00 |

| | | | |
|---|---|---|---|
| a) vollentsalztes Wasser b) 2,2'-Azobis(2-methylpropionamidine)dihydrochloride (CAS-Nr. 2997-92-4) | | | |

Das gewichtsmittlere Molekulargewicht Mw der erhaltenen Polymerzusammensetzung P1-5) betrug 15700 g/mol.

### Herstellung der Polymerzusammensetzung P1-6

| | Einsatzstoff | Menge (Gew.-%) | Gehalt (%) |
|---|---|---|---|
| Vorlage | Beidseitig endständig CXH2X+1 / CyH2y+1 - terminiertes Polyethylenoxid mit einer freien OH-Gruppe und x, y = 6 bis 14 | 24,48 | 100,00 |
| | Wasser^{a}) | 4,00 | 100,00 |
| Zulauf 1 | 2-Acrylamido-2-methylpropansulfonsäure Na-Salz | 25,57 | 50,00 |
| | Acrylsäure | 36,17 | 100,00 |
| Zulauf 2 | Initiator^{b}) | 0,35 | 100,00 |
| | Wasser^{a}) | 4,55 | 100,00 |
| Zulauf 3 | 2-Mercaptoethanol | 0,49 | 100,00 |
| | Natriumhypophosphit | 1,34 | 55,00 |
| | Wasser^{a}) | 3,07 | 100,00 |

| | | | |
|---|---|---|---|
| a) vollentsalztes Wasser b) 2,2'-Azobis(2-methylpropionamidine)dihydrochloride (CAS-Nr. 2997-92-4) | | | |

Das gewichtsmittlere Molekulargewicht Mw der erhaltenen Polymerzusammensetzung P1-6) betrug 13000 g/mol.

### Herstellung einer Applikationslösung A1-A3 für Folienschichten aus Polyvinylalkohol (PVOH-Folien):

20 g eines festen Polyvinylalkohols wurden in 80 g deionisiertem Wasser bei 60°C unter Rühren gelöst. 5,0 g Glycerin wurden zu 100 g der so hergestellten Polyvinylalkohol-Lösung gegeben. Die Lösung wurde auf 80°C erwärmt. Anschließend wurde durch Zugabe von deionisiertem Wasser die Polyvinylalkohol-Konzentration der Lösung auf 18,0 Gew.-% eingestellt. Die Polyvinylalkohol-Applikationslösung wurde gut durchmischt und bei 80°C temperiert bis die eingerührte Luft komplett entwichen war.
A1: Polyvinyalkohol = Poval® 26-88 der Fa. Kuraray, nicht flüchtige Anteile: 97,5 %
A2: Polyvinyalkohol = Poval® 40-88 der Fa. Kuraray, nicht flüchtige Anteile: 97,5 %
A3: Polyvinyalkohol = Poval® 8-88 der Fa. Kuraray, nicht flüchtige Anteile: 97,5 %

### Herstellung einer Applikationslösung A4 für Folienschichten aus Polyvinylalkohol (PVOH-Folien):

20 g eines festen Polyvinylalkohols (Poval® 26-88 der Fa. Kuraray, nicht flüchtige Anteile: 97,5 %) wurden in 80 g deionisiertem Wasser bei 60°C unter Rühren gelöst. 2,0 g Glycerin und 0,20 g eines C₁₃C₁₅-Oxoalkohols mit 7 EO wurden zu 100 g der so hergestellten Polyvinylalkohol-Lösung gegeben. Die Lösung wurde auf 80°C erwärmt. Anschließend wurde durch Zugabe von deionisiertem Wasser die Polyvinylalkohol-Konzentration der Lösung auf 18,0 Gew.-% eingestellt. Die Polyvinylalkohol-Applikationslösung wurde gut durchmischt und bei 80°C temperiert bis die eingerührte Luft komplett entwichen war.

### Herstellen einer Applikationslösung B1 für Folienschichten der Polymerzusammensetzung P1-1):

100 g der Polymerzusammensetzung P1-1) wurden auf 80°C erwärmt. Nach Zugabe von 4,2 g Glycerin wurde die Konzentration der Polymerzusammensetzung mit deionisiertem Wasser auf 65 Gew.-% verdünnt. Die Applikationslösung wurde gut durchmischt und bei 60°C temperiert bis die eingerührte Luft komplett entwichen war.

### Herstellen einer Applikationslösung B2 für Folienschichten der Polymerzusammensetzung P1-2):

100 g der Polymerzusammensetzung P1-2) wurden auf 80°C erwärmt. Danach wurde die Konzentration der Polymerzusammensetzung mit deionisiertem Wasser auf 73 Gew.-% verdünnt. Die Applikationslösung wurde gut durchmischt und bei 60°C temperiert bis die eingerührte Luft komplett entwichen war.

### Herstellen einer Applikationslösung B3 für Folienschichten der Polymerzusammensetzung P1-3):

100 g der Polymerzusammensetzung P1-3) wurden auf 80°C erwärmt. Nach Zugabe von 4,2 g Glycerin wurde die Konzentration der Polymerzusammensetzung mit deionisiertem Wasser auf 65 Gew.-% verdünnt. Die Applikationslösung wurde gut durchmischt und bei 60°C temperiert bis die eingerührte Luft komplett entwichen war.

### Herstellen einer Applikationslösung B4 für Folienschichten der Polymerzusammensetzung P1-4):

100 g der Polymerzusammensetzung P1-4) wurden auf 80°C erwärmt. Nach Zugabe von 7,0 g Glycerin wurde die Konzentration der Polymerzusammensetzung mit deionisiertem Wasser auf 65 Gew.-% verdünnt. Die Applikationslösung wurde gut durchmischt und bei 60°C temperiert bis die eingerührte Luft komplett entwichen war.

### Herstellen einer Applikationslösung B5 für Folienschichten der Polymerzusammensetzung P1-5):

100 g der Polymerzusammensetzung P1-5) wurden auf 80°C erwärmt. Nach Zugabe von 7,0 g Glycerin wurde die Konzentration der Polymerzusammensetzung mit deionisiertem Wasser auf 65 Gew.-% verdünnt. Die Applikationslösung wurde gut durchmischt und bei 60°C temperiert bis die eingerührte Luft komplett entwichen war.

### Herstellen einer Applikationslösung B6 für Folienschichten der Polymerzusammensetzung P1-6):

100 g der Polymerzusammensetzung P1-6) wurden auf 80°C erwärmt. Danach wurde die Konzentration der Polymerzusammensetzung mit deionisiertem Wasser auf 73 Gew.-% verdünnt. Die Applikationslösung wurde gut durchmischt und bei 60°C temperiert bis die eingerührte Luft komplett entwichen war.

### Herstellung von Mehrschichtfolien

Bei den folgenden Beispielen zur Herstellung von Mehrschichtfolien erfolgte die Beschichtung nass auf trocken.

### Beispiele 1a-c

2-schichtige Folie: 1. Schicht aus Polyvinylalkohol, 2. Schicht aus Polymerzusammensetzung P1-1)

### Beispiel 1a

Zur Herstellung der Mehrschichtfolie wurde ein automatisches Filmziehgerät sowie ein Universalapplikator der Firma Zehntner verwendet. Die Applikationslösung A1 wurde auf die Oberfläche eines zuvor mit Ethanol entfetteten Metallträgers aus verzinktem Stahlblech aufgebracht. Die Spaltbreite des Rakels wurde dabei so gewählt, dass die Schicht nach Trocknung bei Raumtemperatur eine Stärke von 54 µm aufweist. Nach Trocknung der Polyvinylalkohol-Schicht wurde die auf 60°C erwärmte Applikationslösung B1 aufgebracht. Die Einstellung der Spaltbreite des Rakels erfolgte so, dass nach der Trocknung bei Raumtemperatur die Gesamtschichtdicke der Folie 184 µm beträgt.

Beispiel 1b wurde analog dem Beispiel 1a ausgeführt. Zur Anwendung kamen die Applikationslösungen A2 und B1. Schichtdicke PVOH-Schicht: 76 µm, Gesamtschichtdicke 196 µm.

Beispiel 1c wurde analog dem Beispiel 1a ausgeführt. Zur Anwendung kamen die Applikationslösungen A3 und B1. Schichtdicke PVOH-Schicht: 47 µm, Gesamtschichtdicke 197 µm.

### Beispiele 1d

### 2-schichtige Folie: 1. Schicht aus Polyvinylalkohol, 2. Schicht aus Polymerzusammensetzung P1-2)

Zur Herstellung der Mehrschichtfolie wurde ein automatisches Filmziehgerät sowie ein Universalapplikator der Firma Zehntner verwendet. Die Applikationslösung A1 wurde auf die Oberfläche eines zuvor mit Ethanol entfetteten Metallträgers aus verzinktem Stahlblech aufgebracht. Die Spaltbreite des Rakels wurde dabei so gewählt, dass die Schicht nach Trocknung bei Raumtemperatur eine Stärke von 48 µm aufweist. Nach Trocknung der Polyvinylalkohol-Schicht wurde die auf 60°C erwärmte Applikationslösung B2 aufgebracht. Die Einstellung der Spaltbreite des Rakels erfolgte so, dass nach der Trocknung bei Raumtemperatur die Gesamtschichtdicke der Folie 169 µm beträgt.

### Beispiele 1e

### 2-schichtige Folie: 1. Schicht aus Polyvinylalkohol, 2. Schicht aus Polymerzusammensetzung P1-3)

Zur Herstellung der Mehrschichtfolie wurde ein automatisches Filmziehgerät sowie ein Universalapplikator der Firma Zehntner verwendet. Die Applikationslösung A1 wurde auf die Oberfläche eines zuvor mit Ethanol entfetteten Metallträgers aus verzinktem Stahlblech aufgebracht. Die Spaltbreite des Rakels wurde dabei so gewählt, dass die Schicht nach Trocknung bei Raumtemperatur eine Stärke von 49 µm aufweist. Nach Trocknung der Polyvinylalkohol-Schicht wurde die auf 60°C erwärmte Applikationslösung B3 aufgebracht. Die Einstellung der Spaltbreite des Rakels erfolgte so, dass nach der Trocknung bei Raumtemperatur die Gesamtschichtdicke der Folie 185 µm beträgt.

### Beispiele 1f

### 2-schichtige Folie: 1. Schicht aus Polyvinylalkohol, 2. Schicht aus Polymerzusammensetzung P1-4)

Zur Herstellung der Mehrschichtfolie wurde ein automatisches Filmziehgerät sowie ein Universalapplikator der Firma Zehntner verwendet. Die Applikationslösung A1 wurde auf die Oberfläche eines zuvor mit Ethanol entfetteten Metallträgers aus verzinktem Stahlblech aufgebracht. Die Spaltbreite des Rakels wurde dabei so gewählt, dass die Schicht nach Trocknung bei Raumtemperatur eine Stärke von 46 µm aufweist. Nach Trocknung der Polyvinylalkohol-Schicht wurde die auf 60°C erwärmte Applikationslösung B4 aufgebracht. Die Einstellung der Spaltbreite des Rakels erfolgte so, dass nach der Trocknung bei Raumtemperatur die Gesamtschichtdicke der Folie 196 µm beträgt.

### Beispiele 1g

### 2-schichtige Folie: 1. Schicht aus Polyvinylalkohol, 2. Schicht aus Polymerzusammensetzung P1-5)

Zur Herstellung der Mehrschichtfolie wurde ein automatisches Filmziehgerät sowie ein Universalapplikator der Firma Zehntner verwendet. Die Applikationslösung A1 wurde auf die Oberfläche eines zuvor mit Ethanol entfetteten Metallträgers aus verzinktem Stahlblech aufgebracht. Die Spaltbreite des Rakels wurde dabei so gewählt, dass die Schicht nach Trocknung bei Raumtemperatur eine Stärke von 52 µm aufweist. Nach Trocknung der Polyvinylalkohol-Schicht wurde die auf 60°C erwärmte Applikationslösung B5 aufgebracht. Die Einstellung der Spaltbreite des Rakels erfolgte so, dass nach der Trocknung bei Raumtemperatur die Gesamtschichtdicke der Folie 299 µm beträgt.

### Beispiele 1h

### 2-schichtige Folie: 1. Schicht aus Polyvinylalkohol, 2. Schicht aus Polymerzusammensetzung P1-6)

Zur Herstellung der Mehrschichtfolie wurde ein automatisches Filmziehgerät sowie ein Universalapplikator der Firma Zehntner verwendet. Die Applikationslösung A1 wurde auf die Oberfläche eines zuvor mit Ethanol entfetteten Metallträgers aus verzinktem Stahlblech aufgebracht. Die Spaltbreite des Rakels wurde dabei so gewählt, dass die Schicht nach Trocknung bei Raumtemperatur eine Stärke von 50 µm aufweist. Nach Trocknung der Polyvinylalkohol-Schicht wurde die auf 60°C erwärmte Applikationslösung B6 aufgebracht. Die Einstellung der Spaltbreite des Rakels erfolgte so, dass nach der Trocknung bei Raumtemperatur die Gesamtschichtdicke der Folie 211 µm beträgt.

### Beispiel 2

### 3-schichtige Folie: 1. Schicht aus Polyvinylalkohol, 2. Schicht aus Polymerzusammensetzung P1-1), 3. Schicht aus Polyvinylalkohol

Zur Herstellung der Mehrschichtfolie wurde ein automatisches Filmziehgerät sowie ein Universalapplikator der Firma Zehntner verwendet. Die Applikationslösung A4 wurde auf die Oberfläche eines zuvor mit Ethanol entfetteten Metallträgers aus verzinktem Stahlblech aufgebracht. Die Spaltbreite des Rakels wurde dabei so gewählt, dass die Schicht nach Trocknung bei Raumtemperatur eine Stärke von 28 µm aufweist. Nach Trocknung der Polyvinylalkohol-Schicht wurde die auf 60°C erwärmte Applikationslösung B1 aufgebracht. Die Einstellung der Spaltbreite des Rakels erfolgte so, dass nach der Trocknung bei Raumtemperatur die Gesamtschichtdicke der Folie 192 µm beträgt. Anschließend wurde erneut die Applikationslösung A4 aufgebracht. Die Einstellung der Spaltbreite der Rakel erfolgte so, dass nach der Trocknung bei Raumtemperatur die Gesamtschichtdicke der Folie 227 µm beträgt.

### Vergleichsbeispiel A (Einlagenfolie)

Zur Herstellung der Einlagenfolie wird ein automatisches Filmziehgerät sowie ein Universalapplikator der Firma Zehntner verwendet. Die auf 60 °C erwärmte Applikationslösung B1 wird auf die Oberfläche eines Silikonpapiers aufgebracht. Die Einstellung der Spaltbreite der Rakel erfolgt so, dass nach der Trocknung bei Raumtemperatur die Gesamtschichtdicke der Folie 155 µm beträgt.

### Vergleichsbeispiel B (Einlagenfolie)

Zur Herstellung der Einlagenfolie wird ein automatisches Filmziehgerät sowie ein Universalapplikator der Firma Zehntner verwendet. Die auf 60 °C erwärmte Applikationslösung B3 wird auf die Oberfläche eines Silikonpapiers aufgebracht. Die Einstellung der Spaltbreite der Rakel erfolgt so, dass nach der Trocknung bei Raumtemperatur die Gesamtschichtdicke der Folie 154 µm beträgt.

### Vergleichsbeispiel C (Einlagenfolie)

Zur Herstellung der Einlagenfolie wird ein automatisches Filmziehgerät sowie ein Universalapplikator der Firma Zehntner verwendet. Die auf 60 °C erwärmte Applikationslösung B4 wird auf die Oberfläche eines Silikonpapiers aufgebracht. Die Einstellung der Spaltbreite der Rakel erfolgt so, dass nach der Trocknung bei Raumtemperatur die Gesamtschichtdicke der Folie 152 µm beträgt.

### Dickenmessung:

Foliendicken wurden über eine digitale Messuhr (Mitutoyo Absolute Digimatic Messuhr Modell ID-H) mit einem flachen, kreisrunden Taster von 5 mm Durchmesser bestimmt. Die Dickenmessung erfolgte über eine Mittelung von mindestens 10 Messpositionen je Folie. Die Schichtdickenschwankungen bewegen sich in einem Bereich von ± 10%.

### Zugversuche:

Zur Untersuchung der mechanischen Folieneigenschaften wurden Zugversuche von Folienstreifen in einer Universalprüfmaschine (Zwick GmbH, Modell TMTC-FR2.5TN.D09) durchgeführt. Ziel war die Bestimmung der verbesserten mechanischen Eigenschaften aufgrund des Schichtaufbaus der mehrlagigen Folie. Die hergestellten Folien waren nach mehrtägiger Lagerung im Sorptionsgleichgewicht mit der Umgebungsfeuchte (35-40% relative Feuchte bei 20-25°C). Aus den Folien wurden 20mm breite Streifen geschnitten und mit einem Klemmenabstand (= Anfangslänge L₀) von 30mm in die Prüfmaschine eingespannt. Die Zugversuche wurden mit einer Anfangsgeschwindigkeit von 2,0mm/min kraftgesteuert bei Umgebungsbedingungen durchgeführt. Zu jedem Folientyp wurden mindestens 3 unabhängige Zugversuche durchgeführt. Aus den Versuchen können charakteristische Größen, wie z.B. die maximale Kraft und die Dehnung (Längenänderung / Anfangslänge) zur Beurteilung der mechanischen Eigenschaften ermittelt werden. Weitere Informationen zu Zugversuchen findet man in den Normen ISO 527-1 und ASTM D882-12.

### Ergebnis

| | Zugfestigkeit [1 N/mm² = 1000kPa] | Dehnung [%] | max. Zugkraft [N] |
|---|---|---|---|
| Beispiel 1a | 7,047 | 272 | 22,6 |
| Beispiel 1b | 7,206 | 327 | 30,3 |
| Beispiel 1c | 5,603 | 278 | 22,4 |
| Beispiel 1d | 8,053 | 244 | 29,0 |
| Beispiel 1e | 6,743 | 226 | 28,3 |
| Beispiel 1f | 5,664 | 251 | 24,9 |
| Beispiel 1g | 7,078 | 320 | 38,2 |
| Beispiel 1h | 6,163 | 190 | 23,4 |
| Beispiel 2 | 5,736 | 285 | 24,1 |
| Beispiel A | 0,766 | 23 | 2,5 |
| Beispiel B | 0,872 | 11 | 2,8 |
| Beispiel C | 1,183 | 23 | 3,6 |

### Geschirrspülmaschinentest:

Die erfindungsgemäßen Folien wurden in der folgenden phosphatfreien Spülmittelformulierung getestet:

### Spülmittelformulierung

| Bestandteil | Gew.-% |
|---|---|
| Protease | 2,5 |
| Amylase | 1,0 |
| Nichtionisches Tensid | 3,5 |
| Folie | 7,5 |
| Natriumpercarbonat | 10,2 |
| Tetraacetylethylendiamin | 4 |
| Natriumdisilikat | 2 |
| Natriumcarbonat | 23,7 |
| Natriumcitrat-Dihydrat | 35 |
| Methylglycindiessigsäure, Na-Salz | 10 |
| Hydroxyethan-(1,1-diphosphonsäure) | 0,6 |

Angaben in Gew.-% bezogen auf die Gesamtmenge aller Komponenten

### Dabei wurden folgende Versuchsbedingungen eingehalten:

| | |
|---|---|
| Geschirrspüler | Miele G 1222 SCL |
| Programm | 65 °C (mit Vorspülen) |
| Spülgut | • 3 Messer (Nickelchrommesser Karina, Solex Germany GmbH, D-75239 Eisingen) |
| | • 3 Trinkgläser Amsterdam 0,2L |
| | • 3 Frühstücksteller "OCEAN BLAU" (Melamin) |
| | • 3 Porzellanteller: Fahnenteller flach 19 cm |
| Anordnung | • Messer in der Besteckschublade, |
| | • Gläser im oberen Korb, |
| | • Teller im unteren Korb einsortiert |
| Geschirrspülmittel | 18 g |
| Schmutzzugabe | 50 g Ballastschmutz wird mit der Formulierung nach dem Vorspülen dosiert, Zusammensetzung siehe unten |
| Klarspültemperatur | 65 °C |
| Wasserhärte | 21 °dH (Ca/Mg):HCO3 (3:1):1.35 |
| Spülzyklen | 15; dazwischen jeweils 1 h Pause (10 min geschlossene Tür, 50 min geöffnete Tür) |
| Auswertung | Visuell nach 15 Spülzyklen |

Die Bewertung des Spülguts erfolgte nach 15 Zyklen in einer abgedunkelten Kammer unter Licht hinter einer Lochblende unter Verwendung einer Notenskala von 10 (sehr gut) bis 1 (sehr schlecht). Vergeben wurden sowohl Noten von 1 - 10 für Spotting (sehr viele, intensive Spots = 1, bis keine Spots = 10) als auch für Belag (1 = sehr starker Belag, 10 = kein Belag).

### Zusammensetzung des Ballastschmutzes:

| | |
|---|---|
| Stärke: | 0,5 % Kartoffelstärke, 2,5 % Bratensoße |
| Fett: | 10,2 % Margarine |
| Protein: | 5,1 % Eigelb, 5,1 % Milch |
| Andere: | 2,5 % Tomatenketchup, 2,5 % Senf, 0,1 % Benzoesäure, 71,5 % Wasser |

### Ergebnis:

Die Formulierungen mit erfindungsgemäßer Folie zeichneten sich insbesondere durch ihre sehr hohe belagsinhibierende Wirkung gegenüber anorganischen und organischen Ablagerungen auf Glas und Messern aus. Weiterhin erhöhten sie die Reinigungskraft des Geschirrspülmittels und begünstigten das Ablaufen des Wassers vom Spülgut, so dass besonders klare Gläser und glänzende Metallbesteckteile erhalten wurden. In der nachfolgenden Tabelle sind die addierten Noten für Belagsbildung (B) und Spotting (S) auf Messern und Trinkgläsern aufgeführt.

### Testergebnisse der Spülmittelprüfformulierung

| Polymer | Messer (B+S) | Gläser (B+S) |
|---|---|---|
| ohne Folie | 10,7 | 9,7 |
| Folie aus Bsp. 1d | 15,7 | 15,3 |
| Folie aus Bsp. 1e | 14,7 | 14,7 |
| Folie aus Bsp. 1f | 16,3 | 14,0 |

## Patentansprüche

1. Mehrschichtfolie, umfassend wenigstens eine Schicht, enthaltend eine oder bestehend aus einer Polymerzusammensetzung P1), erhältlich durch radikalische Polymerisation einer Monomerzusammensetzung M1), die wenigstens ein Monomer A) enthält, das ausgewählt ist unter α,β-ethylenisch ungesättigten Mono- und Dicarbonsäuren, Salzen α,β-ethylenisch ungesättigter Mono- und Dicarbonsäuren, Anhydriden α,β-ethylenisch ungesättigter Mono- und Dicarbonsäuren und Mischungen davon, in Gegenwart wenigstens einer Polyetherkomponente PE), die ausgewählt ist unter Polyetherolen mit einem zahlenmittleren Molekulargewicht von wenigstens 200 g/mol, Mono- und Di-(C₁-C₆-alkyl)ethern solcher Polyetherole, Polyethergruppen-haltigen Tensiden und Mischungen davon.

2. Mehrschichtfolie nach Anspruch 1, die wenigstens eine weitere Schicht umfasst, die wenigstens ein Polymer P2) enthält oder aus wenigstens einem Polymer P2) besteht, das ausgewählt ist unter
- natürlichen und modifizierten Polysacchariden,
- Homo- und Copolymeren, die Wiederholungseinheiten enthalten, die sich von Vinylalkohol, Vinylestern, alkoxylierten Vinylalkoholen oder Mischungen davon ableiten,
- Homo- und Copolymeren, die wenigstens ein Monomer einpolymerisiert enthalten, das ausgewählt ist unter N-Vinylpyrrolidon, N-Vinylcaprolactam, N-Vinylimidazol, 2-Vinylpyridin, 4-Vinylpyridin, Salzen der drei letztgenannten Monomere, Vinylpyridin-N-oxid, N-carboxymethyl-4-vinylpyridiumhalogeniden und Mischungen davon,
- Homo- und Copolymeren der Acrylsäure und/oder Methacrylsäure, insbesondere Copolymeren, die wenigstens ein Acrylsäuremonomer, ausgewählt unter Acrylsäure, Acrylsäuresalzen und Mischungen davon, und wenigstens ein Maleinsäuremonomer, ausgewählt unter Maleinsäure, Maleisäureanhydrid, Maleinsäuresalzen und Mischungen davon, einpolymerisiert enthalten,
- Copolymeren, die wenigstens ein (Meth)acrylsäuremonomer, ausgewählt unter Acrylsäure, Methacrylsäure, ihren Salzen und Mischungen davon und wenigstens ein hydrophobes Monomer, ausgewählt unter C₁-C₈-Alkylestern der (Meth)acrylsäure, C₂-C₁₀-Olefinen, Styrol und α-Methylstyrol einpolymerisiert enthalten,
- Copolymeren, die wenigstens ein Maleinsäuremonomer, ausgewählt unter Maleinsäure, Maleinsäureanhydrid, Maleinsäuresalzen und Mischungen davon und wenigstens ein C₂-C₈-Olefin einpolymerisiert enthalten,
- Homo- und Copolymeren des Acrylamids und/oder Methacrylamids,
- Polyaminosäuren,
- wasserlöslichen oder wasserdispergierbaren Polyamiden,
- Polyalkylenglykolen, Mono- oder Diethern von Polyalkylenglykolen, und
- Mischungen davon.

3. Mehrschichtfolie nach einem der vorhergehenden Ansprüche, wobei die Monomerzusammensetzung M1) zusätzlich zu dem wenigstens einen Monomer A) wenigstens ein Monomer B) enthält, das ausgewählt ist unter olefinisch ungesättigten Sulfonsäuren, Salzen olefinisch ungesättigter Sulfonsäuren, olefinisch ungesättigten Phosphonsäuren, Salzen olefinisch ungesättigter Phosphonsäuren und Mischungen davon.

4. Mehrschichtfolie nach einem der vorhergehenden Ansprüche, wobei die Monomerzusammensetzung M1) zusätzlich wenigstens ein Comonomer C) enthält, das ausgewählt ist unter
C1) Stickstoffheterocyclen mit einer radikalisch polymerisierbaren α,β-ethylenisch ungesättigten Doppelbindung,
C2) Verbindungen der allgemeinen Formeln (I.a) und (I.b) 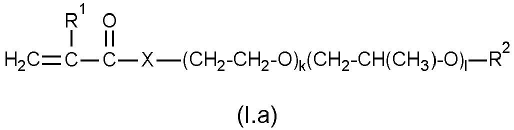 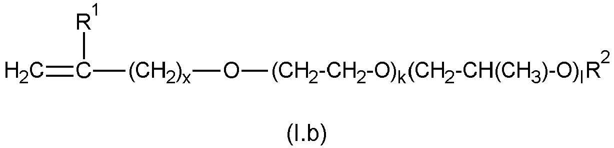 worin
die Reihenfolge der Alkylenoxideinheiten beliebig ist,
x für 0, 1 oder 2 steht,
k und l unabhängig voneinander für eine ganze Zahl von 0 bis 100 stehen, wobei die Summe aus k und I mindestens 2 beträgt, vorzugsweise mindestens 5 beträgt,
R¹ für Wasserstoff oder C₁-C₈-Alkyl steht,
R² für Wasserstoff, C₁-C₃₀-Alkyl, C₂-C₃₀-Alkenyl oder C₅-C₈-Cycloalkyl steht, und
X für O oder eine Gruppe der Formel NR³ steht, worin R³ für H, Alkyl, Alkenyl, Cycloalkyl, Heterocycloalkyl, Aryl oder Hetaryl steht;
C3) Vinylaromaten,
C4) ungesättigten Kohlenwasserstoffen, die ausgewählt sind unter C₂-C₁₀-Monoolefinen und nichtaromatischen Kohlenwasserstoffen mit wenigstens zwei konjugierten Doppelbindungen,
C5) Estern α,β-ethylenisch ungesättigter Mono- und Dicarbonsäuren mit C₁-C₃₀-Alkanolen,
C6) Verbindungen mit einer radikalisch polymerisierbaren α,β-ethylenisch ungesättigten Doppelbindung und wenigstens einer kationogenen und/oder kationischen Gruppe pro Molekül,
C7) Estern von Vinylalkohol oder Allylalkohol mit C₁-C₃₀-Monocarbonsäuren,
C8) Estern α,β-ethylenisch ungesättigter Mono- und Dicarbonsäuren mit C₂-C₃₀-Alkandiolen und Amiden α,β-ethylenisch ungesättigter Mono- und Dicarbonsäuren mit C₂-C₃₀-Aminoalkoholen mit einer primären oder sekundären Aminogruppe,
C9) Amidgruppen-haltigen Monomeren, die von I.a, C6) und C8) verschieden sind;
C10) α,β-ethylenisch ungesättigten Nitrilen,
C11) Vinylhalogeniden, Vinylidenhalogeniden,
C12) ethylenisch ungesättigten Monomeren mit Harnstoffgruppen,
und Mischungen aus zwei oder mehr als zwei der zuvor genannten Monomere C1) bis C12).

5. Mehrschichtfolie nach einem der vorhergehenden Ansprüche, wobei die Monomerzusammensetzung M1) Acrylsäure und gegebenenfalls wenigstens ein Comonomer enthält, das ausgewählt ist unter von Acrylsäure verschiedenen α,β-ethylenisch ungesättigten Mono- oder Dicarbonsäuren, Salzen, Anhydriden, Estern und Amiden solcher von Acrylsäure verschiedenen α,β-ethylenisch ungesättigten Mono- oder Dicarbonsäuren, olefinisch ungesättigten Sulfonsäuren, Salzen olefinisch ungesättigter Sulfonsäuren, Stickstoffheterocyclen mit einer radikalisch polymerisierbaren α,β-ethylenisch ungesättigten Doppelbindung, C₂-C₁₀-Monoolefinen, nichtaromatischen Kohlenwasserstoffen mit wenigstens zwei konjugierten Doppelbindungen, Vinylaromaten, N-Vinyllactamen und Mischungen davon,

6. Mehrschichtfolie nach einem der vorhergehenden Ansprüche, wobei die Monomerzusammensetzung M1) Acrylsäure und wenigstens ein Comonomer enthält, das ausgewählt ist unter, Isobuten, Diisobuten, Methacrylsäure, 2-Acrylamido-2-methylpropansulfonsäure, Maleinsäure, Maleinsäureanhydrid, Itaconsäure, N-Vinylpyrrolidon, N-Vinylcaprolactam, N-Vinylimidazol, Styrol und Mischungen davon.

7. Mehrschichtfolie nach einem der Ansprüche 1 bis 6, wobei die Monomerzusammensetzung M1) bezogen auf das Gesamtgewicht weniger als 0,1 Gew.-%, bevorzugt weniger als 0,05 Gew.-%, insbesondere weniger als 0,001 Gew.-%, vernetzend wirkenden Monomere enthält, die zwei oder mehr als zwei radikalisch polymerisierbare α,β-ethylenisch ungesättigte Doppelbindungen pro Molekül aufweisen, oder
wobei die Monomerzusammensetzung M1) keine vernetzend wirkenden Monomere enthält, die zwei oder mehr als zwei radikalisch polymerisierbare α,β-ethylenisch ungesättigte Doppelbindungen pro Molekül aufweisen,
wobei bevorzugt die Monomerzusammensetzung M1) zu mindestens 80 Gew-%, besonders bevorzugt zu mindestens 90 Gew.-%, insbesondere zu mindestens 95 Gew.-%, bezogen auf das Gesamtgewicht der Monomerzusammensetzung M1), aus Acrylsäure besteht.

8. Mehrschichtfolie nach einem der vorhergehenden Ansprüche, wobei die Polyetherkomponente PE) wenigstens ein Polyetherol mit einem zahlenmittleres Molekulargewicht im Bereich von etwa 200 bis 100000 g/mol oder einen Mono- oder Di-(C₁-C₂-alkyl)-ether davon umfasst,
wobei bevorzugt die Polyetherkomponente PE) wenigstens ein Polyetherol oder einen Mono- oder Di-(C₁-C₂-alkyl)-ether davon umfasst oder aus wenigstes einem Polyetherol oder einem Mono- oder Di-(C₁-C₂-alkyl)-ether davon besteht, das als Alkylenoxideinheiten ausschließlich Ethylenoxideinheiten eingebaut enthält.

9. Mehrschichtfolie nach einem der vorhergehenden Ansprüche, wobei die Polyetherkomponente PE) wenigstens ein Polyethergruppen-haltiges Tensid umfasst, ausgewählt unter Alkylpolyoxyalkylenethern, Arylpolyoxyalkylenethern, Alkylarylpolyoxyalkylenethern, alkoxylierten tierischen und/oder pflanzlichen Fette und/oder Ölen, Fettaminalkoxylaten, Fettsäureamidalkoxylaten, Fettsäurediethanolamidalkoxylaten, Polyoxyethylensorbitanfettsäureestern, Alkylpolyethersulfaten, Arylpolyethersulfaten, Alkylarylpolyethersulfaten, Alkylpolyethersulfonaten, Arylpolyethersulfonaten, Alkylarylpolyethersulfonaten, Alkylpolyetherphosphaten, Arylpolyetherphosphaten, Alkylarylpolyetherphosphaten, Glycerinethersulfonaten, Glycerinethersulfaten, Monoglycerid(ether)sulfaten, Fettsäureamidethersulfaten, Polyoxyalkylensorbitanfettsäureestern und Mischungen davon.

10. Mehrschichtfolie nach einem der vorhergehenden Ansprüche, wobei die Polyetherkomponente PE) wenigstens ein Polyethergruppen-haltiges Tensid umfasst, ausgewählt unter:
- Alkylpolyoxyalkylenethern der allgemeinen Formel (VI)
R¹⁰-O-(CH₂CH₂O)ₓ-(CHR¹¹CH₂O)_{y}-R¹² (VI)
worin
R¹⁰ ein linearer oder verzweigter Alkylrest mit 8 bis 22 C-Atomen ist,
R¹¹ und R¹² unabhängig voneinander Wasserstoff oder ein linearer oder verzweigter Alkylrest mit 1 bis 10 C-Atomen sind, wobei R¹² bevorzugt Methyl ist, und
x und y unabhängig voneinander 0 bis 300 sind, wobei die Summe aus x und y > 0 ist;
- hydroxylgruppenhaltigen Tensiden der allgemeinen Formel (VII)
R¹³-O-(CH₂CH₂O)ₛ-(CH₂CH₂CH₂O)ₜ-(CH₂CH₂CH₂CH₂O)ᵤ-(CH₂CHR¹⁴O)ᵥ-CH₂CH(OH)R¹⁵ (VII)
wobei
in den Verbindungen der Formel (VII) die Reihenfolge der Alkylenoxideinheiten beliebig ist,
s, t, u und v unabhängig voneinander für eine ganze Zahl von 0 bis 500 stehen, wobei die Summe aus s, t, u und v > 0 ist,
R¹³ und R¹⁵ unabhängig voneinander für einen geradkettigen oder verzweigten, gesättigten C₁-C₄₀-Alkylrest oder einen ein- oder mehrfach ungesättigten C₂-C₄₀-Alkenylrest stehen, und
R¹⁴ ausgewählt ist unter Methyl, Ethyl, n-Propyl, Isopropyl und n-Butyl;
- Fettalkoholpolyoxyalkylenester der allgemeinen Formel (VIII)
R¹⁶-O-(CH₂CH₂O)ₚ-(CH₂CHR¹⁷O)_{q}-C(=O)R¹⁸ (VIII)
wobei
in den Verbindungen der Formel (VIII) die Reihenfolge der Alkylenoxideinheiten beliebig ist,
p und q unabhängig voneinander für eine ganze Zahl von 0 bis 500 stehen, wobei die Summe aus p und q > 0 ist,
R¹⁶ und R¹⁸ unabhängig voneinander für einen geradkettigen oder verzweigten, gesättigten C₁-C₄₀-Alkylrest oder einen ein- oder mehrfach ungesättigten C₂-C₄₀-Alkenylrest stehen, und
R¹⁷ ausgewählt ist unter Methyl, Ethyl, n-Propyl, Isopropyl und n-Butyl.

11. Mehrschichtfolie nach einem der vorhergehenden Ansprüche, wobei zumindest eine der Schichten wenigstens einen Zusatzstoff enthält und/oder zwischen wenigstens zwei Schichten wenigstens ein Zusatzstoff enthalten ist, der vorzugsweise ausgewählt ist unter nichtionischen, anionischen, kationischen und amphoteren Tensiden, Buildern, Komplexbildner, wie Methylglycindiessigsäure, Glutamindiessigsäure, Glutaminsäurediessigsäure und Citronensäure und ihre Natrium- und Kaliumsalze, Bleichmitteln, Enzymen, Enzymstabilisatoren, Basen, Korrosionsinhibitoren, Entschäumern und Schauminhibitoren, Netzmitteln, Farbstoffen, Pigmenten, Duftstoffen, Füllstoffen, Tablettierhilfsmitteln, Desintegrationsmitteln, Verdickern, Löslichkeitsvermittlern, organischen Lösemitteln, Elektrolyten, pH-Stellmitteln, Parfümträgern, Bitterstoffen, Fluoreszenzmitteln, Hydrotropen, Antiredepositionsmitteln, optischen Aufhellern, Vergrauungsinhibitoren, Einlaufverhinderern, Knitterschutzmitteln, Farbübertragungsinhibitoren, antimikrobiellen Wirkstoffen, Antioxidantien, Anti-Vergilbungsmitteln, Korrosionsinhibitoren, Antistatika, Bügelhilfsmitteln, Phobier- und Imprägniermitteln, Quell- und Schiebefestmitteln, Weichmachern, Scavengern, von den Polymerzusammensetzungen P1) und den Polymeren P2) verschiedenen Polymeren, Mittel zur Modifikation der Gasdurchlässigkeit und Wasserdampfdurchlässigkeit, Antistatikmitteln, Gleitmitteln, Slipmitteln und UV-Absorbern und Mischungen davon.

12. Verfahren zur Herstellung einer Mehrschichtfolie wie in einem der Ansprüche 1 bis 11 definiert, bei dem man
a1) auf ein Trägermaterial eine erste fließfähige zur Folienbildung befähigte Zusammensetzung unter Erhalt einer ersten Schicht aufträgt,
a2) gegebenenfalls die auf das Trägermaterial aufgetragene erste Schicht einer Viskositätserhöhung unterzieht,
a3) auf die in Schritt a1) oder die in Schritt a2) erhaltene erste Schicht eine zweite fließfähige zur Folienbildung befähigte Zusammensetzung unter Erhalt einer zweiten Schicht aufträgt,
a4) gegebenenfalls die zweite Schicht einer Viskositätserhöhung unterzieht,
a5) gegebenenfalls den Schritt a3) mit einer weiteren zur Folienbildung befähigten Zusammensetzung unter Erhalt einer weiteren Schicht wiederholt und gegebenenfalls anschließend den Schritt a4) wiederholt, wobei die Schritte a3) und a4) einfach oder mehrfach wiederholt werden können,
a6) gegebenenfalls die auf das Trägermaterial aufgetragenen Schichten einer weiteren Viskositätserhöhung unterzieht,
a7) gegebenenfalls die erhaltene Mehrschichtfolie von dem Trägermaterial ablöst,
mit der Maßgabe, dass die fließfähigen Zusammensetzungen jeweils eine zur Folienbildung befähigte Komponente enthalten, die unabhängig voneinander ausgewählt ist unter wenigstens einer Polymerzusammensetzung P1), wenigstens einem Polymer P2) oder einer Mischung davon, und mit der Maßgabe, dass wenigstens eine der fließfähigen Zusammensetzungen und/oder das Trägermaterial eine Polymerzusammensetzung P1) enthält oder aus einer Polymerzusammensetzung P1) besteht, die wie in einem der Ansprüche 1 bis 16 definiert ist.

13. Verwendung einer Mehrschichtfolie, wie in einem der Ansprüche 1 bis 11 definiert, oder erhältlich durch ein Verfahren, wie in Anspruch 12 definiert,
- als Wasch- und Reinigungsmittel,
- zur zumindest teilweisen Beschichtung oder Umhüllung von Wasch- und Reinigungsmitteln;
- als Geschirrspülmittel oder als Klarspüler,
- zur zumindest teilweisen Beschichtung oder Umhüllung von Geschirrspülmitteln oder zur zumindest teilweisen Beschichtung oder Umhüllung von Klarspülern,
- als Hygieneprodukte,
- zur zumindest teilweisen Beschichtung oder Umhüllung von Hygieneprodukten,
- als Desinfektionsmittel,
- zur zumindest teilweisen Beschichtung oder Umhüllung von Desinfektionsmitteln,
- zur zumindest teilweisen Beschichtung oder Umhüllung von Körperpflegemitteln,
- zur zumindest teilweisen Beschichtung oder Umhüllung von Körperreinigungsmitteln,
- zur zumindest teilweisen Beschichtung oder Umhüllung von kosmetischen Mitteln,
- als pharmazeutische Mittel,
- zur zumindest teilweisen Beschichtung oder Umhüllung von pharmazeutischen Mitteln,
- als Pflanzenschutzmittel,
- zur zumindest teilweisen Beschichtung oder Umhüllung von Pflanzenschutzmitteln,
- zur zumindest teilweisen Beschichtung oder Umhüllung von Köderfallen,
- als Lebens- oder Futtermittelverpackungen,
- als Netzmittel,
- zur zumindest teilweisen Beschichtung oder Umhüllung von Netzmitteln,
- als Verpackung für Textilien,
- als Kaschierfolien,
- in Verbundsystemen (Laminaten), wie Verbundglas.

14. Umhüllung oder Beschichtung für eine Waschmittel-, Reinigungsmittel- oder Geschirrspülmittelportion, umfassend oder bestehend aus einer Mehrschichtfolie, wie in einem der Ansprüche 1 bis 11 definiert, oder erhältlich durch ein Verfahren, wie in Anspruch 12 definiert.

15. Wasch- oder Reinigungsmittel, umfassend:
A) wenigstens eine Umhüllung und/oder Beschichtung, enthaltend eine oder bestehend aus einer wasch- und reinigungsaktive(n) Mehrschichtfolie, wie in einem der Ansprüche 1 bis 11 definiert, oder erhältlich durch ein Verfahren, wie in Anspruch 12 definiert,
B) wenigstens ein Tensid,
C) gegebenenfalls wenigstens einen Builder,
D) gegebenenfalls wenigstens ein Bleichsystem,
E) gegebenenfalls wenigstens einen weiteren Zusatzstoff, der vorzugsweise ausgewählt ist unter Enzymen, Enzymstabilisatoren, Basen, Korrosionsinhibitoren, Entschäumern und Schauminhibitoren, Farbstoffen, Duftstoffen, Füllstoffen, Tablettierhilfsmitteln, Desintegrationsmitteln, Verdickern, Löslichkeitsvermittlern, organischen Lösemitteln, Elektrolyten, pH-Stellmitteln, Parfümträgern, Bitterstoffen, Fluoreszenzmitteln, Hydrotropen, Antiredepositionsmitteln, optischen Aufhellern, Vergrauungsinhibitoren, Einlaufverhinderern, Knitterschutzmitteln, Farbübertragungsinhibitoren, antimikrobiellen Wirkstoffen, Antioxidantien, Anti-Vergilbungsmitteln, Korrosionsinhibitoren, Antistatika, Bügelhilfsmitteln, Phobier- und Imprägniermitteln, Quell- und Schiebefestmitteln und UV-Absorbern, und
F) gegebenenfalls Wasser.

16. Geschirrspülmittel, umfassend:
Ga) wenigstens eine Umhüllung und/oder Beschichtung, enthaltend eine oder bestehend aus einer erfindungsgemäße(n) Mehrschichtfolie,
Gb) gegebenenfalls wenigstens einen Komplexbildner,
Gc) wenigstens einen Builder und/oder Co-Builder,
Gd) wenigstens ein nichtionisches Tensid,
Ge) gegebenenfalls wenigstens eine Komponente, ausgewählt unter Bleichmitteln, Bleichaktivatoren und Bleichkatalysatoren,
Gf) gegebenenfalls wenigstens ein Enzym,
Gg) gegebenenfalls wenigstens einen weiteren Zusatzstoff, der vorzugsweise ausgewählt ist unter anionischen oder zwitterionischen Tensiden, Alkaliträgern, polymeren Dispergiermitteln, Korrosionsinhibitoren, Entschäumern und Schauminhibitoren, Farbstoffen, Duftstoffen, Bitterstoffen, Füllstoffen, Tablettensprengmitteln, organischen Lösungsmitteln, Tablettierhilfsmitteln, Disintegrationsmitteln, Verdickern und Löslichkeitsvermittlern,
Gh) gegebenenfalls Wasser.

## Claims

1. A multilayer film comprising at least one layer comprising or consisting of a polymer composition P1) obtainable by free-radical polymerization of a monomer composition M1) comprising at least one monomer A) selected from α,β-ethylenically unsaturated mono- and dicarboxylic acids, salts of α,β-ethylenically unsaturated mono- and dicarboxylic acids, anhydrides of α,β-ethylenically unsaturated mono- and dicarboxylic acids and mixtures thereof, in the presence of at least one polyether component PE) selected from polyetherols having a number-average molecular weight of at least 200 g/mol, mono- and di(C₁-C₆-alkyl) ethers of such polyetherols, surfactants containing polyether groups, and mixtures thereof.

2. The multilayer film according to claim 1 comprising at least one further layer comprising or consisting of at least one polymer P2) selected from
- natural and modified polysaccharides,
- homo- and copolymers comprising repeat units which derive from vinyl alcohol, vinyl esters, alkoxylated vinyl alcohols or mixtures thereof,
- homo- and copolymers comprising at least one copolymerized monomer selected from N-vinylpyrrolidone, N-vinylcaprolactam, N-vinylimidazole, 2-vinylpyridine, 4-vinylpyridine, salts of the three latter monomers, vinylpyridine N-oxide, N-carboxymethyl-4-vinylpyridium halides and mixtures thereof,
- homo- and copolymers of acrylic acid and/or methacrylic acid, especially copolymers comprising at least one copolymerized acrylic monomer selected from acrylic acid, acrylic salts and mixtures thereof, and at least one copolymerized maleic monomer selected from maleic acid, maleic anhydride, maleic salts and mixtures thereof,
- copolymers comprising at least one copolymerized (meth)acrylic monomer selected from acrylic acid, methacrylic acid, salts thereof and mixtures thereof and at least one copolymerized hydrophobic monomer selected from C₁-C₈-alkyl esters of (meth) acrylic acid, C₂-C₁₀ olefins, styrene and α-methylstyrene,
- copolymers comprising at least one copolymerized maleic monomer selected from maleic acid, maleic anhydride, maleic salts and mixtures thereof and at least one copolymerized C₂-C₈ olefin,
- homo- and copolymers of acrylamide and/or methacrylamide,
- polyamino acids,
- water-soluble or water-dispersible polyamides,
- polyalkylene glycols, mono- or diethers of polyalkylene glycols, and
- mixtures thereof.

3. The multilayer film according to either of the preceding claims, wherein the monomer composition M1) comprises, in addition to the at least one monomer A), at least one monomer B) selected from olefinically unsaturated sulfonic acids, salts of olefinically unsaturated sulfonic acids, olefinically unsaturated phosphonic acids, salts of olefinically unsaturated phosphonic acids and mixtures thereof.

4. The multilayer film according to any of the preceding claims, wherein the monomer composition M1) additionally comprises at least one comonomer C) selected from
C1) nitrogen heterocycles having a free-radically polymerizable α,β-ethylenically unsaturated double bond,
C2) compounds of the general formulae (I.a) and (I.b) 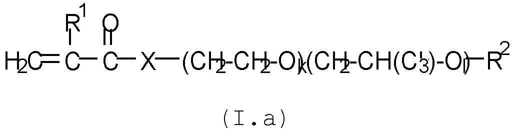 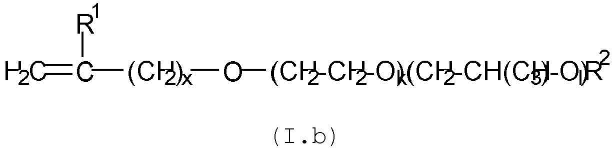 in which
the sequence of the alkylene oxide units is arbitrary,
x is 0, 1 or 2,
k and l are independently an integer from 0 to 100, where the sum of k and l is at least 2, preferably at least 5,
R¹ is hydrogen or C₁-C₈-alkyl,
R² is hydrogen, C₁-C₃₀-alkyl, C₂-C₃₀-alkenyl or C₅-C₈-cycloalkyl, and
X is O or a group of the formula NR³ in which R³ is H, alkyl, alkenyl, cycloalkyl, heterocycloalkyl, aryl or hetaryl;
C3) vinylaromatics,
C4) unsaturated hydrocarbons selected from C₂-C₁₀ monoolefins and nonaromatic hydrocarbons having at least two conjugated double bonds,
C5) esters of α,β-ethylenically unsaturated mono- and dicarboxylic acids with C₁-C₃₀-alkanols,
C6) compounds having one free-radically polymerizable α,β-ethylenically unsaturated double bond and at least one cationogenic and/or cationic group per molecule,
C7) esters of vinyl alcohol or allyl alcohol with C₁-C₃₀-monocarboxylic acids,
C8) esters of α,β-ethylenically unsaturated mono- and dicarboxylic acids with C₂-C₃₀-alkanediols, and amides of α,β-ethylenically unsaturated mono- and dicarboxylic acids with C₂-C₃₀ amino alcohols having a primary or secondary amino group,
C9) monomers containing amide groups other than I.a, C6) and C8);
C10) α,β-ethylenically unsaturated nitriles,
C11) vinyl halides, vinylidene halides,
C12) ethylenically unsaturated monomers having urea groups,
and mixtures of two or more than two of the aforementioned monomers C1) to C12).

5. The multilayer film according to any of the preceding claims, wherein the monomer composition M1) comprises acrylic acid and optionally at least one comonomer selected from α,β-ethylenically unsaturated mono- and dicarboxylic acids other than acrylic acid, salts, anhydrides, esters and amides of such α,β-ethylenically unsaturated mono- and dicarboxylic acids other than acrylic acid, olefinically unsaturated sulfonic acids, salts of olefinically unsaturated sulfonic acids, nitrogen heterocycles having a free-radically polymerizable α,β-ethylenically unsaturated double bond, C₂-C₁₀ monoolefins, nonaromatic hydrocarbons having at least two conjugated double bonds, vinyl aromatics, N-vinyllactams and mixtures thereof.

6. The multilayer film according to any of the preceding claims, wherein the monomer composition M1) comprises acrylic acid and at least one comonomer selected from isobutene, diisobutene, methacrylic acid, 2-acrylamido-2-methylpropanesulfonic acid, maleic acid, maleic anhydride, itaconic acid, N-vinylpyrrolidone, N-vinylcaprolactam, N-vinylimidazole, styrene and mixtures thereof.

7. The multilayer film according to any of claims 1 to 6, wherein the monomer composition M1), based on the total weight, comprises less than 0.1% by weight, preferably less than 0.05% by weight, especially less than 0.001% by weight, of crosslinking monomers having two or more than two free-radically polymerizable α,β-ethylenically unsaturated double bonds per molecule, or
wherein the monomer composition M1) does not comprise any crosslinking monomers having two or more than two free-radically polymerizable α,β-ethylenically unsaturated double bonds per molecule,
wherein preferably the monomer composition M1) consists to an extent of at least 80% by weight, particularly preferably to an extent of at least 90% by weight, especially to an extent of at least 95% by weight, based on the total weight of the monomer composition M1), of acrylic acid.

8. The multilayer film according to any of the preceding claims, wherein the polyether component PE) comprises at least one polyetherol having a number-average molecular weight in the range from about 200 to 100 000 g/mol or a mono- or di-(C₁-C₂-alkyl) ether thereof,
wherein preferably the polyether component PE) comprises or consists of at least one polyetherol or one mono- or di- (C₁-C₂-alkyl) ether thereof incorporating exclusively ethylene oxide units as alkylene oxide units.

9. The multilayer film according to any of the preceding claims, wherein the polyether component PE) comprises at least one surfactant containing polyether groups, selected from alkyl polyoxyalkylene ethers, aryl polyoxyalkylene ethers, alkylaryl polyoxyalkylene ethers, alkoxylated animal and/or vegetable fats and/or oils, fatty amine alkoxylates, fatty acid amide alkoxylates, fatty acid diethanolamide alkoxylates, polyoxyethylene sorbitan fatty acid esters, alkyl polyether sulfates, aryl polyether sulfates, alkylaryl polyether sulfates, alkyl polyether sulfonates, aryl polyether sulfonates, alkylaryl polyether sulfonates, alkyl polyether phosphates, aryl polyether phosphates, alkylaryl polyether phosphates, glyceryl ether sulfonates, glyceryl ether sulfates, monoglyceride (ether) sulfates, fatty acid amide ether sulfates, polyoxyalkylene sorbitan fatty acid esters and mixtures thereof.

10. The multilayer film according to any of the preceding claims, wherein the polyether component PE) comprises at least one surfactant containing polyether groups, selected from:
- alkyl polyoxyalkylene ethers of the general formula (VI)
R¹⁰-O-(CH₂CH₂O)ₓ-(CHR¹¹CH₂O)_{y}-R¹² (VI)
in which
R¹⁰ is a linear or branched alkyl radical having 8 to 22 carbon atoms,
R¹¹ and R¹² are independently hydrogen or a linear or branched alkyl radical having 1 to 10 carbon atoms, where R¹² is preferably methyl, and
x and y are independently 0 to 300, where the sum of x and y is > 0;
- surfactants which contain hydroxyl groups and are of the general formula (VII)
R¹³-O-(CH₂CH₂O)ₛ-(CH₂CH₂CH₂O)ₜ-(CH₂CH₂CH₂CH₂O)ᵤ-(CH₂CHR¹⁴O)ᵥ-CH₂CH(OH)R¹⁵ (VII)
where
the sequence of the alkylene oxide units in the compounds of the formula (VII) is arbitrary,
s, t, u and v are independently an integer from 0 to 500, where the sum of s, t, u and v is > 0,
R¹³ and R¹⁵ are independently a straight-chain or branched saturated C₁-C₄₀-alkyl radical or a mono- or polyunsaturated C₂-C₄₀-alkenyl radical, and
R¹⁴ is selected from methyl, ethyl, n-propyl, isopropyl and n-butyl;
- fatty alcohol polyoxyalkylene esters of the general formula (VIII)
R¹⁶-O-(CH₂CH₂O)ₚ-(CH₂CHR¹⁷O)_{q}-C(=O) R¹⁸ (VIII)
where
the sequence of the alkylene oxide units in the compounds of the formula (VIII) is arbitrary,
p and q are independently an integer from 0 to 500, where the sum of p and q is > 0,
R¹⁶ and R¹⁸ are independently a straight-chain or branched saturated C₁-C₄₀-alkyl radical or a mono- or polyunsaturated C₂-C₄₀-alkenyl radical, and
R¹⁷ is selected from methyl, ethyl, n-propyl, isopropyl and n-butyl.

11. The multilayer film according to any of the preceding claims, wherein at least one of the layers comprises at least one additive and/or at least one additive is present between at least two layers, said additive preferably being selected from nonionic, anionic, cationic and amphoteric surfactants, builders, complexing agents such as methylglycinediacetic acid, glutaminediacetic acid, glutamic acid diacetic acid and citric acid and the sodium and potassium salts thereof, bleaches, enzymes, enzyme stabilizers, bases, corrosion inhibitors, defoamers and foam inhibitors, wetting agents, dyes, pigments, fragrances, fillers, tableting aids, disintegrants, thickeners, solubilizers, organic solvents, electrolytes, pH modifiers, perfume carriers, bitter substances, fluorescers, hydrotropes, antiredeposition agents, optical brighteners, graying inhibitors, antishrink agents, anticrease agents, dye transfer inhibitors, antimicrobial active ingredients, antioxidants, anti-yellowing agents, corrosion inhibitors, antistats, ironing aids, hydrophobizing and impregnating agents, antiswell and antislip agents, plasticizers, scavengers, polymers other than the polymer compositions P1) and the polymers P2), agents for modification of gas permeability and water vapor permeability, antistats, glidants, slip agents and UV absorbers and mixtures thereof.

12. A process for producing a multilayer film as defined in any of claims 1 to 11, in which
a1) a first free-flowing composition capable of film formation is applied to a carrier material to obtain a first layer,
a2) the first layer applied to the carrier material is optionally subjected to an increase in viscosity,
a3) a second free-flowing composition capable of film formation is applied to the first layer obtained in step a1) or in step a2) to obtain a second layer,
a4) the second layer is optionally subjected to an increase in viscosity,
a5) step a3) is optionally repeated with a further composition capable of film formation to obtain a further layer and step a4) is optionally then repeated, it being possible to repeat steps a3) and a4) once or more than once,
a6) the layers applied to the carrier material are optionally subjected to a further increase in viscosity,
a7) the multilayer film obtained is optionally detached from the carrier material,
with the proviso that the free-flowing compositions each comprise a component which is capable of film formation and is independently selected from at least one polymer composition P1), at least one polymer P2) or a mixture thereof, and with the proviso that at least one of the free-flowing compositions and/or the carrier material comprises or consists of a polymer composition P1) as defined in any of claims 1 to 16.

13. The use of a multilayer film as defined in any of claims 1 to 11 or obtainable by a process as defined in claim 12
- as a washing and cleaning composition,
- for at least partial coating or ensheathing of washing and cleaning compositions,
- as a dishwashing composition or as a rinse aid,
- for at least partial coating or ensheathing of dishwashing compositions or for at least partial coating or ensheathing of rinse aids,
- as hygiene products,
- for at least partial coating or ensheathing of hygiene products,
- as disinfectants,
- for at least partial coating or ensheathing of disinfectants,
- for at least partial coating or ensheathing of personal care compositions,
- for at least partial coating or ensheathing of personal cleansing compositions,
- for at least partial coating or ensheathing of cosmetic compositions,
- as pharmaceutical compositions,
- for at least partial coating or ensheathing of pharmaceutical compositions,
- as crop protection compositions,
- for at least partial coating or ensheathing of crop protection compositions,
- for at least partial coating or ensheathing of bait traps,
- as food or animal feed packaging,
- as wetting agents,
- for at least partial coating or ensheathing of wetting agents,
- as packaging for textiles,
- as lamination films,
- in composite systems (laminates) such as composite glass.

14. A sheath or coating for a washing composition portion, cleaning composition portion or dishwashing composition portion, comprising or consisting of a multilayer film as defined in any of claims 1 to 11 or obtainable by a process as defined in claim 12.

15. A washing or cleaning composition comprising:
A) at least one sheath and/or coating comprising or consisting of a washing- and cleaning-active multilayer film as defined in any of claims 1 to 11 or obtainable by a process as defined in claim 12,
B) at least one surfactant,
C) optionally at least one builder,
D) optionally at least one bleach system,
E) optionally at least one further additive, preferably selected from enzymes, enzyme stabilizers, bases, corrosion inhibitors, defoamers and foam inhibitors, dyes, fragrances, fillers, tableting aids, disintegrants, thickeners, solubilizers, organic solvents, electrolytes, pH modifiers, perfume carriers, bitter substances, fluorescers, hydrotropes, antiredeposition agents, optical brighteners, graying inhibitors, antishrink agents, anticrease agents, dye transfer inhibitors, antimicrobial active ingredients, antioxidants, anti-yellowing agents, corrosion inhibitors, antistats, ironing aids, hydrophobizing and impregnating agents, antiswell and antislip agents and UV absorbers, and
F) optionally water.

16. A dishwashing composition comprising:
Ga) at least one sheath and/or coating comprising or consisting of a multilayer film of the invention,
Gb) optionally at least one complexing agent,
Gc) at least one builder and/or cobuilder,
Gd) at least one nonionic surfactant,
Ge) optionally at least one component selected from bleaches, bleach activators and bleach catalysts,
Gf) optionally at least one enzyme,
Gg) optionally at least one further additive, preferably selected from anionic or zwitterionic surfactants, alkali carriers, polymeric dispersants, corrosion inhibitors, defoamers and foam inhibitors, dyes, fragrances, bitter substances, fillers, tablet disintegrants, organic solvents, tableting aids, disintegrants, thickeners and solubilizers,
Gh) optionally water.

## Revendications

1. Film multicouche, comprenant au moins une couche, contenant ou constituée par une composition de polymère P1), pouvant être obtenue par polymérisation radicalaire d'une composition de monomères M1), qui contient au moins un monomère A), qui est choisi parmi les acides mono- et dicarboxyliques α,β-éthyléniquement insaturés, les sels d'acides mono- et dicarboxyliques α,β-éthyléniquement insaturés, les anhydrides d'acides mono- et dicarboxyliques α,β-éthyléniquement insaturés et les mélanges de ceux-ci, en présence d'au moins un composant polyéther PE), qui est choisi parmi les polyétherols ayant un poids moléculaire moyen en nombre d'au moins 200 g/mol, les éthers mono- et di-(alkyliques en C₁-C₆) de tels polyétherols, les tensioactifs contenant des groupes polyéther et les mélanges de ceux-ci.

2. Film multicouche selon la revendication 1, qui comprend au moins une couche supplémentaire, qui contient au moins un polymère P2) ou est constituée par au moins un polymère P2), qui est choisi parmi :
- les polysaccharides naturels et modifiés,
- les homo- et copolymères, qui contiennent des unités de répétition qui dérivent d'alcool vinylique, d'esters de vinyle, d'alcools vinyliques alcoxylés ou de mélanges de ceux-ci,
- les homo- et copolymères, qui contiennent au moins un monomère sous forme polymérisée, qui est choisi parmi la N-vinylpyrrolidone, le N-vinylcaprolactame, le N-vinylimidazole, la 2-vinylpyridine, la 4-vinylpyridine, les sels des trois derniers monomères cités, la vinylpyridine N-oxyde, les halogénures de N-carboxyméthyl-4-vinylpyridium et les mélanges de ceux-ci,
- les homo- et copolymères de l'acide acrylique et/ou de l'acide méthacrylique, notamment les copolymères qui contiennent au moins un monomère acide acrylique, choisi parmi l'acide acrylique, les sels de l'acide acrylique et les mélanges de ceux-ci, et au moins un monomère acide maléique, choisi parmi l'acide maléique, l'anhydride de l'acide maléique, les sels de l'acide maléique et les mélanges de ceux-ci, sous forme polymérisée,
- les copolymères, qui contiennent au moins un monomère acide (méth)acrylique, choisi parmi l'acide acrylique, l'acide méthacrylique, leurs sels et les mélanges de ceux-ci, et au moins un monomère hydrophobe, choisi parmi les esters alkyliques en C₁-C₈ de l'acide (méth) acrylique, les oléfines en C₂-C₁₀, le styrène et l'α-méthylstyrène, sous forme polymérisée,
- les copolymères, qui contiennent au moins un monomère acide maléique, choisi parmi l'acide maléique, l'anhydride de l'acide maléique, les sels de l'acide maléique et les mélanges de ceux-ci, et au moins une oléfine en C₂-C₈, sous forme polymérisée,
- les homo- et copolymères de l'acrylamide et/ou du méthacrylamide,
- les polyamino-acides,
- les polyamides solubles dans l'eau ou dispersibles dans l'eau,
- les polyalkylène glycols, les mono- ou diéthers de polyalkylène glycols, et
- les mélanges de ceux-ci.

3. Film multicouche selon l'une quelconque des revendications précédentes, dans lequel la composition de monomères M1) contient, en plus dudit au moins un monomère A), au moins un monomère B), qui est choisi parmi les acides sulfoniques oléfiniquement insaturés, les sels d'acides sulfoniques oléfiniquement insaturés, les acides phosphoniques oléfiniquement insaturés, les sels d'acides phosphoniques oléfiniquement insaturés et les mélanges de ceux-ci.

4. Film multicouche selon l'une quelconque des revendications précédentes, dans lequel la composition de monomères M1) contient en outre au moins un comonomère C), qui est choisi parmi :
C1) les hétérocycles azotés contenant une double liaison α,β-éthyléniquement insaturée polymérisable par voie radicalaire,
C2) les composés des formules générales (I.a) et (I.b) : 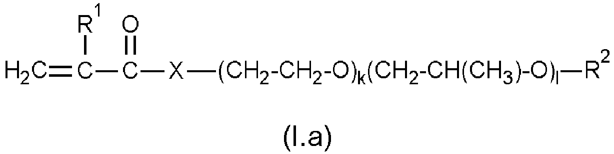 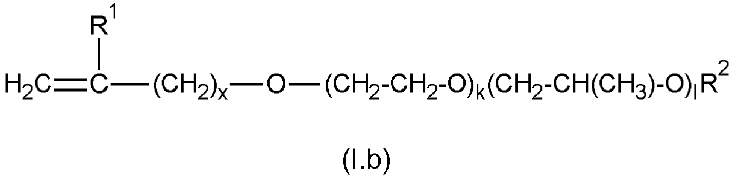 où
l'ordre des unités oxyde d'alkylène est quelconque,
x représente 0, 1 ou 2,
k et 1 représentent indépendamment l'un de l'autre un nombre entier de 0 à 100,
la somme de k et 1 valant au moins 2,
de préférence valant au moins 5,
R¹ représente hydrogène ou alkyle en C₁-C₈,
R² représente hydrogène, alkyle en C₁-C₃₀, alcényle en C₂-C₃₀ ou cycloalkyle en C₅-C₈, et
X représente O ou un groupe de la formule NR³, où R³ représente H, alkyle, alcényle, cycloalkyle, hétérocycloalkyle, aryle ou hétaryle ;
C3) les composés aromatiques de vinyle,
C4) les hydrocarbures insaturés, qui sont choisis parmi les monooléfines en C₂-C₁₀ et les hydrocarbures non aromatiques contenant au moins deux doubles liaisons conjuguées,
C5) les esters d'acides mono- et dicarboxyliques α, β-éthyléniquement insaturés avec des alcanols en C₁-C₃₀,
C6) les composés contenant une double liaison α, β-éthyléniquement insaturée polymérisable par voie radicalaire et au moins un groupe cationogène et/ou cationique par molécule,
C7) les esters de l'alcool vinylique ou de l'alcool allylique avec des acides monocarboxyliques en C₁-C₃₀,
C8) les esters d'acides mono- et dicarboxyliques α, β-éthyléniquement insaturés avec des alcane-diols en C₂-C₃₀ et les amides d'acides mono- et dicarboxyliques α, β-éthyléniquement insaturés avec des aminoalcools en C₂-C₃₀ contenant un groupe amino primaire ou secondaire,
C9) les monomères contenant des groupes amide, qui sont différents de I.a, C6) et C8) ;
C10) les nitriles α,β-éthyléniquement insaturés,
C11) les halogénures de vinyle, les halogénures de vinylidène,
C12) les monomères éthyléniquement insaturés contenant des groupes urée,
et les mélanges de deux ou plus de deux des monomères C1) à C12) cités précédemment.

5. Film multicouche selon l'une quelconque des revendications précédentes, dans lequel la composition de monomères M1) contient de l'acide acrylique et éventuellement au moins un comonomère, qui est choisi parmi les acides mono- et dicarboxyliques α, β-éthyléniquement insaturés différents de l'acide acrylique, les sels, les anhydrides, les esters et les amides de tels acides mono- et dicarboxyliques α, β-éthyléniquement insaturés différents de l'acide acrylique, les acides sulfoniques oléfiniquement insaturés, les sels d'acides sulfoniques oléfiniquement insaturés, les hétérocycles azotés contenant une double liaison α,β-éthyléniquement insaturée polymérisable par voie radicalaire, les monooléfines en C₂-C₁₀, les hydrocarbures non aromatiques contenant au moins deux doubles liaisons conjuguées, les composés aromatiques de vinyle, les N-vinyllactames et les mélanges de ceux-ci.

6. Film multicouche selon l'une quelconque des revendications précédentes, dans lequel la composition de monomères M1) contient de l'acide acrylique et au moins un comonomère, qui est choisi parmi l'isobutène, le diisobutène, l'acide méthacrylique, l'acide 2-acrylamido-2-méthylpropane-sulfonique, l'acide maléique, l'anhydride de l'acide maléique, l'acide itaconique, la N-vinylpyrrolidone, le N-vinylcaprolactame, le N-vinylimidazole, le styrène et les mélanges de ceux-ci.

7. Film multicouche selon l'une quelconque des revendications 1 à 6, dans lequel la composition de monomères M1) contient, par rapport au poids total, moins de 0,1 % en poids, de préférence moins de 0,05 % en poids, notamment moins de 0,001 % en poids, de monomères à activité réticulante, qui comprennent deux ou plus de deux doubles liaisons α,β-éthyléniquement insaturées polymérisables par voie radicalaire par molécule, ou
dans lequel la composition de monomères M1) ne contient pas de monomères à activité réticulante, qui comprennent deux ou plus de deux doubles liaisons α, β-éthyléniquement insaturées polymérisables par voie radicalaire par molécule,
dans lequel la composition de monomères M1) est de préférence constituée à hauteur d'au moins 80 % en poids, de manière particulièrement préférée à hauteur d'au moins 90 % en poids, notamment à hauteur d'au moins 95 % en poids, par rapport au poids total de la composition de monomères M1), par de l'acide acrylique.

8. Film multicouche selon l'une quelconque des revendications précédentes, dans lequel le composant polyéther PE) comprend au moins un polyétherol ayant un poids moléculaire moyen en nombre dans la plage allant d'environ 200 à 100 000 g/mol ou un éther mono- ou di-(alkylique en C₁-C₂) de celui-ci,
dans lequel, de préférence, le composant polyéther PE) comprend au moins un polyétherol ou un éther mono- ou di-(alkylique en C₁-C₂) de celui-ci ou est constitué par au moins un polyétherol ou un éther mono- ou di-(alkylique en C₁-C₂) de celui-ci, qui contient en tant qu'unités oxyde d'alkylène exclusivement des unités oxyde d'éthylène sous forme incorporée.

9. Film multicouche selon l'une quelconque des revendications précédentes, dans lequel le composant polyéther PE) comprend au moins un tensioactif contenant des groupes polyéther, choisi parmi les éthers alkyliques de polyoxyalkylène, les éthers aryliques de polyoxyalkylène, les éthers alkylaryliques de polyoxyalkylène, les graisses et/ou huiles animales et/ou végétales alcoxylées, les alcoxylates d'amines grasses, les alcoxylates d'amides d'acides gras, les alcoxylates de diéthanolamides d'acides gras, les esters de polyoxyéthylène-sorbitane d'acides gras, les polyéther-sulfates d'alkyle, les polyéther-sulfates d'aryle, les polyéther-sulfates d'alkylaryle, les polyéther-sulfonates d'alkyle, les polyéther-sulfonates d'aryle, les polyéther-sulfonates d'alkylaryle, les polyéther-phosphates d'alkyle, les polyéther-phosphates d'aryle, les polyéther-phosphates d'alkylaryle, les éther-sulfonates de glycérine, les éther-sulfates de glycérine, les (éther)sulfates de monoglycérides, les éther-sulfates d'amides d'acides gras, les esters de polyoxyalkylène-sorbitane d'acides gras et les mélanges de ceux-ci.

10. Film multicouche selon l'une quelconque des revendications précédentes, dans lequel le composant polyéther PE) comprend au moins un tensioactif contenant des groupes polyéther, choisi parmi :
- les éthers alkyliques de polyoxyalkylène de la formule générale (VI) :
R¹⁰-O-(CH₂CH₂O)ₓ-(CHR¹¹CH₂O)_{y}-R¹² (VI)
où
R¹⁰ est un radical alkyle linéaire ou ramifié de 8 à 22 atomes C,
R¹¹ et R¹² sont indépendamment l'un de l'autre l'hydrogène ou un radical alkyle linéaire ou ramifié de 1 à 10 atomes C, R¹² étant de préférence méthyle, et
x et y sont indépendamment l'un de l'autre 0 à 300, la somme de x et y étant > 0 ;
- les tensioactifs contenant des groupes hydroxyle de la formule générale (VII) :
R¹³-O-(CH₂CH₂O)ₛ-(CH₂CH₂CH₂O)ₜ-(CH₂CH₂CH₂CH₂O)ᵤ-(CH₂CHR¹⁴O)ᵥ-CH₂CH(OH)R¹⁵ (VII)
où
dans les composés de la formule (VII), l'ordre des unités oxyde d'alkylène est quelconque,
s, t, u et v représentent indépendamment les uns des autres un nombre entier de 0 à 500, la somme de s, t, u et v étant > 0,
R¹³ et R¹⁵ représentent indépendamment l'un de l'autre un radical alkyle en C₁-C₄₀ saturé, à chaîne linéaire ou ramifié, ou un radical alcényle en C₂-C₄₀ mono- ou polyinsaturé, et
R¹⁴ est choisi parmi méthyle, éthyle, n-propyle, isopropyle et n-butyle ;
- les esters de polyoxyalkylène d'alcools gras de la formule générale (VIII) :
R¹⁶-O-(CH₂CH₂O)ₚ-(CH₂CHR¹⁷O)_{q}-C(=O)R¹⁸ (VIII)
où
dans les composés de la formule (VIII), l'ordre des unités oxyde d'alkylène est quelconque,
p et q représentent indépendamment l'un de l'autre un nombre entier de 0 à 500,
la somme de p et q étant > 0,
R¹⁶ et R¹⁸ représentent indépendamment l'un de l'autre un radical alkyle en C₁-C₄₀ saturé, à chaîne linéaire ou ramifié, ou un radical alcényle en C₂-C₄₀ mono- ou polyinsaturé, et
R¹⁷ est choisi parmi méthyle, éthyle, n-propyle, isopropyle et n-butyle.

11. Film multicouche selon l'une quelconque des revendications précédentes, dans lequel au moins une des couches contient au moins un additif et/ou au moins un additif est contenu entre au moins deux couches, qui est de préférence choisi parmi les tensioactifs non ioniques, anioniques, cationiques et amphotères, les adjuvants pour détergents, les complexants, tels que l'acide méthylglycine-diacétique, l'acide glutamine-diacétique, l'acide glutamique-diacétique et l'acide citrique et leurs sels de sodium et de potassium, les agents blanchissants, les enzymes, les stabilisateurs enzymatiques, les bases, les inhibiteurs de corrosion, les antimousses et les inhibiteurs de moussage, les agents mouillants, les colorants, les pigments, les parfums, les charges, les adjuvants de pastillage, les agents de désintégration, les épaississants, les promoteurs de solubilité, les solvants organiques, les électrolytes, les agents d'ajustement du pH, les supports de parfums, les substances amères, les agents fluorescents, les hydrotropes, les agents anti-redéposition, les azurants optiques, les inhibiteurs de grisonnement, les inhibiteurs de rétrécissement, les agents antifroissement, les inhibiteurs du transfert de couleurs, les agents actifs antimicrobiens, les antioxydants, les agents anti-jaunissement, les inhibiteurs de corrosion, les antistatiques, les adjuvants de repassage, les agents répulsifs et d'imprégnation, les agents antigonflement et antiglisse, les plastifiants, les capteurs, les polymères différents des compositions de polymère P1) et des polymères P2), les agents pour la modification de la perméabilité aux gaz et de la perméabilité à la vapeur d'eau, les agents antistatiques, les agents glissants, les lubrifiants et les absorbeurs UV et les mélanges de ceux-ci.

12. Procédé de fabrication d'un film multicouche tel que défini dans l'une quelconque des revendications 1 à 11, selon lequel
a1) une première composition fluide apte à la formation d'un film est appliquée sur un matériau support avec obtention d'une première couche,
a2) la première couche appliquée sur le matériau support est éventuellement soumise à une augmentation de viscosité,
a3) une deuxième composition fluide apte à la formation d'un film est appliquée sur la première couche obtenue dans l'étape a1) ou dans l'étape a2) avec obtention d'une deuxième couche,
a4) la deuxième couche est éventuellement soumise à une augmentation de viscosité,
a5) l'étape a3) est éventuellement répétée avec une composition supplémentaire apte à la formation d'un film avec obtention d'une couche supplémentaire et l'étape a4) est ensuite éventuellement répétée, les étapes a3) et a4) pouvant être répétées une fois ou plusieurs fois,
a6) les couches appliquées sur le matériau support sont éventuellement soumises à une augmentation de viscosité supplémentaire,
a7) le film multicouche obtenu est éventuellement détaché du matériau support,
à condition que les compositions fluides contiennent chacune un composant apte à la formation d'un film, qui est choisi indépendamment parmi au moins une composition de polymère P1), au moins un polymère P2) ou un mélange de ceux-ci, et à condition qu'au moins une des compositions fluides et/ou le matériau support contiennent une composition de polymère P1) ou soient constitués par une composition de polymère P1), qui est telle que définie dans l'une quelconque des revendications 1 à 16.

13. Utilisation d'un film multicouche, tel que défini dans l'une quelconque des revendications 1 à 11, ou pouvant être obtenu par un procédé tel que défini dans la revendication 12,
- en tant qu'agents lavants et détergents,
- pour le revêtement ou l'enrobage au moins partiel d'agents lavants et détergents ;
- en tant qu'agents pour lave-vaisselle ou en tant qu'agents de rinçage,
- pour le revêtement ou l'enrobage au moins partiel d'agents pour lave-vaisselle ou pour le revêtement ou l'enrobage au moins partiel d'agents de rinçage,
- en tant que produits d'hygiène,
- pour le revêtement ou l'enrobage au moins partiel de produits d'hygiène,
- en tant qu'agents désinfectants,
- pour le revêtement ou l'enrobage au moins partiel d'agents désinfectants,
- pour le revêtement ou l'enrobage au moins partiel d'agents pour le soin du corps,
- pour le revêtement ou l'enrobage au moins partiel d'agents lavants pour le corps,
- pour le revêtement ou l'enrobage au moins partiel d'agents cosmétiques,
- en tant qu'agents pharmaceutiques,
- pour le revêtement ou l'enrobage au moins partiel d'agents pharmaceutiques,
- en tant qu'agents pour la protection de plantes,
- pour le revêtement ou l'enrobage au moins partiel d'agents pour la protection de plantes,
- pour le revêtement ou l'enrobage au moins partiel de pièges à appât,
- en tant qu'emballages de produits alimentaires ou d'aliments pour animaux,
- en tant qu'agents mouillants,
- pour le revêtement ou l'enrobage au moins partiel d'agents mouillants,
- en tant qu'emballage pour textiles,
- en tant que films de contre-collage,
- dans des sytèmes composites (stratifiés), tels que du verre composite.

14. Enrobage ou revêtement pour une portion d'agent lavant, d'agent détergent ou d'agent pour lave-vaisselle, comprenant ou constitué par un film multicouche, tel que défini dans l'une quelconque des revendications 1 à 11, ou pouvant être obtenu par un procédé tel que défini dans la revendication 12.

15. Agent lavant ou détergent, comprenant :
A) au moins un enrobage et/ou revêtement, contenant ou constitué par un film multicouche à activité lavante et détergente, tel que défini dans l'une quelconque des revendications 1 à 11, ou pouvant être obtenu par un procédé tel que défini dans la revendication 12,
B) au moins un tensioactif,
C) éventuellement au moins un adjuvant pour détergents,
D) éventuellement au moins un système blanchissant,
E) éventuellement au moins un additif supplémentaire, qui est de préférence choisi parmi les enzymes, les stabilisateurs enzymatiques, les bases, les inhibiteurs de corrosion, les antimousses et les inhibiteurs de moussage, les colorants, les parfums, les charges, les adjuvants de pastillage, les agents de désintégration, les épaississants, les promoteurs de solubilité, les solvants organiques, les électrolytes, les agents d'ajustement du pH, les supports de parfums, les substances amères, les agents fluorescents, les hydrotropes, les agents anti-redéposition, les azurants optiques, les inhibiteurs de grisonnement, les inhibiteurs de rétrécissement, les agents antifroissement, les inhibiteurs du transfert de couleurs, les agents actifs antimicrobiens, les antioxydants, les agents anti-jaunissement, les inhibiteurs de corrosion, les antistatiques, les adjuvants de repassage, les agents répulsifs et d'imprégnation, les agents antigonflement et antiglisse, et les absorbeurs UV, et
F) éventuellement de l'eau.

16. Agent pour lave-vaisselle, comprenant :
Ga) au moins un enrobage et/ou revêtement, contenant ou constitué par un film multicouche selon l'invention,
Gb) éventuellement au moins un complexant,
Gc) au moins un adjuvant pour détergents et/ou co-adjuvant pour détergents,
Gd) au moins un tensioactif non ionique,
Ge) éventuellement au moins un composant, choisi parmi les agents blanchissants, les activateurs de blanchiment et les catalyseurs de blanchiment,
Gf) éventuellement au moins une enzyme,
Gg) éventuellement au moins un additif supplémentaire, qui est de préférence choisi parmi les tensioactifs anioniques ou zwitterioniques, les supports d'alcalis, les agents dispersants polymères, les inhibiteurs de corrosion, les antimousses et les inhibiteurs de moussage, les colorants, les parfums, les substances amères, les charges, les agents désagrégeants pour comprimés, les solvants organiques, les adjuvants de pastillage, les agents de désintégration, les épaississants et les promoteurs de solubilité,
Gh) éventuellement de l'eau.
